(19) Europäisches Patentamt
European Patent Office
Office européen des brevets

(11) **EP 4 502 779 A1**

(12) **EUROPEAN PATENT APPLICATION**
published in accordance with Art. 153(4) EPC

(43) Date of publication:
**05.02.2025 Bulletin 2025/06**

(21) Application number: **23845389.8**

(22) Date of filing: **18.07.2023**

(51) International Patent Classification (IPC):
**G06F 3/14** (2006.01)

(52) Cooperative Patent Classification (CPC):
**G06F 3/0481; G06F 3/0484; G06F 3/14; G06F 3/16**

(86) International application number:
**PCT/CN2023/107991**

(87) International publication number:
**WO 2024/022177 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.07.2022  CN 202210911043**
**30.07.2022  CN 202210912601**
**29.12.2022  CN 202211716573**

(71) Applicant: **Huawei Technologies Co., Ltd.**
**Shenzhen, Guangdong 518129 (CN)**

(72) Inventors:
• **ZHOU, Xingchen**
**Shenzhen, Guangdong 518129 (CN)**

• **YU, Ping**
**Shenzhen, Guangdong 518129 (CN)**
• **JIN, Wei**
**Shenzhen, Guangdong 518129 (CN)**
• **DING, Ning**
**Shenzhen, Guangdong 518129 (CN)**
• **XU, Liang**
**Shenzhen, Guangdong 518129 (CN)**
• **FENG, Sumei**
**Shenzhen, Guangdong 518129 (CN)**

(74) Representative: **Huawei European IPR**
**Huawei Technologies Duesseldorf GmbH**
**Riesstraße 25**
**80992 München (DE)**

(54) **CONTROL METHOD AND ELECTRONIC DEVICE**

(57)    This application provides a control method and an electronic device. According to the method, efficient intelligent interface display that meets user requirements and habits can be provided for a user in a multi-task scenario. In this application, when receiving an operation performed by the user for interface transfer, an electronic device like an in-vehicle terminal determines, by analyzing a specific intention of the operation, whether to perform cross-screen transfer or one-screen transfer, to provide a better intelligent interface display service for the user. For example, when it is determined that the intention is to perform the cross-screen transfer, based on an actual display situation before transfer of a first interface and/or an interface display situation on a second screen, an interface transferred from an original screen may be displayed on a target screen in an appropriate display type after the transfer. According to this method, a current focused task on the target screen is not interrupted, and a task interface transferred from the original screen is displayed with an eye-catching display effect. This provides the user with more user-friendly interface transfer experience.

EP 4 502 779 A1

S1001

An in-vehicle terminal displays one or more first task interfaces through a first screen

S1002

The in-vehicle terminal receives a first operation performed by a user on a first interface, where the first interface is one of the plurality of first task interfaces, and the first operation is used to transfer the first interface

The first operation is used to transfer the first interface to a second screen across screens

The first operation is used to transfer the first interface on one screen

S1003-1

The in-vehicle terminal determines that a target screen is the second screen

S1003-2

The in-vehicle terminal determines a target location

S1004-1

The in-vehicle terminal displays the first interface through the second screen in a first display type, where the first display type is related to task information before the transfer of the first interface and/or screen task information of the second screen

S1004-2

The in-vehicle terminal displays the first interface at the target location based on screen task information of the first screen in a second display type, where the second display type is related to the screen task information of the first screen

FIG. 10

**Description**

**CROSS-REFERENCE TO RELATED APPLICATIONS**

This application claims priority to Chinese Patent Application No. 202210911043.X, filed with the China National Intellectual Property Administration on July 29, 2022 and entitled "IN-VEHICLE INTERFACE TRANSFER METHOD AND IN-VEHICLE TERMINAL", which is incorporated herein by reference in its entirety; this application claims priority to Chinese Patent Application No. 202210912601.4, filed with the China National Intellectual Property Administration on July 30, 2022 and entitled "AUDIO CONTROL METHOD AND ELECTRONIC DEVICE", which is incorporated herein by reference in its entirety; and this application claims priority to Chinese Patent Application No. 202211716573.5, filed with the China National Intellectual Property Administration on December 29, 2022 and entitled "CONTROL METHOD AND ELECTRONIC DEVICE", which is incorporated herein by reference in its entirety.

**TECHNICAL FIELD**

This application relates to the field of in-vehicle device technologies, and in particular, to a control method and an electronic device.

**BACKGROUND**

With rapid development of intelligent vehicle technologies, more displays are configured in a vehicle to provide a user with more personalized and human-cultural use experience. For example, the displays configured in the vehicle include not only a central control display ("central display screen" for short below) but also a front passenger display ("front passenger screen" for short below) and a display disposed in another location, for example, a rear left seat display ("rear left screen" or "rear-row left screen" for short below) or a rear right seat display ("rear right screen" or "rear-row right screen" for short below). When riding the vehicle, a passenger can watch videos, play games, or the like through a display at a seat of the passenger. In addition, interaction such as interface transfer and a collaborative operation may also be performed between a driver and a passenger or between passengers through displays.

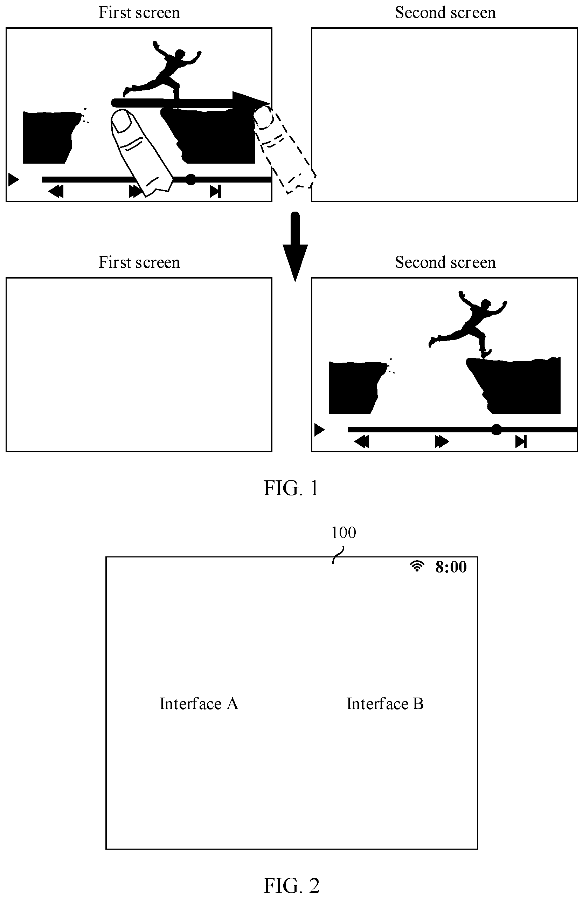

Interaction between in-vehicle displays supported by an existing intelligent in-vehicle terminal ("in-vehicle terminal" for short below) is usually full-screen cross-screen transfer. For example, as shown in FIG. 1, an in-vehicle terminal may transfer, to a second screen (for example, a front passenger screen) based on a user operation indicating interface transfer (as shown in FIG. 1, an operation of sliding a video playing window on a first screen toward the second screen with a finger), the video playing window displayed in full screen on the first screen (for example, a driver screen). However, in practice, the in-vehicle display usually displays a plurality of interfaces of tasks that are ongoing in parallel. For example, a video call screen is usually displayed on the in-vehicle display together with a navigation interface, a music interface, and the like. In this case, how to perform interface transfer to provide the user with intelligent display that meets user requirements and habits is a problem to be studied.

**SUMMARY**

This application provides a control method and an electronic device, to provide, in a multi-task scenario, a user with efficient intelligent interface display that meets user requirements and habits.

According to a first aspect, an embodiment of this application provides a control method. The method may be applied to an interface transfer process of an electronic device like an in-vehicle terminal, where the in-vehicle terminal includes a plurality of displays (for example, including a first screen (or referred to as a first display) and a second screen (or referred to as a second display)). The method includes: When receiving a first operation for transferring a first interface that is on the first screen, the in-vehicle terminal transfers the first interface based on an intention of the first operation, where the transfer includes one-screen transfer and cross-screen transfer; and during the cross-screen transfer of the first interface, after the transfer of the first interface is completed, a display type of the first interface on the second screen is related to task information before the transfer of the first interface and/or screen task information of the second screen.

The task information before the transfer of the first interface indicates a display type and/or classification information of the first interface before the transfer of the first interface, and the classification information indicates whether the first interface is a preset focused application interface of the first screen. The screen task information of the second screen indicates a display type and/or classification information of a task interface on the second screen before the transfer of the first interface, and the classification information indicates whether an interface is a preset focused application interface of a screen.

According to the solution provided in the first aspect, when receiving an operation performed by a user for interface transfer, the in-vehicle terminal determines, by analyzing a specific intention of the operation, whether to perform cross-screen transfer or one-screen transfer, to provide a better intelligent interface display service for the user. For example, when determining that the intention of the first operation is to perform the cross-screen transfer, the in-vehicle terminal may display, on a target screen in an appropriate display type after the interface transfer based on an actual display situation before the transfer of the first interface and/or an interface display situation on the second screen, a task interface transferred from an original screen. According to the method, the task interface transferred from the original screen may be displayed with a most eye-catching display effect without interrupting a task currently concerned by the user on the target screen. This reduces subsequent operations of the user and provides the user with more user-friendly interface transfer experience.

In a possible design, the display type includes any one of an application window, a floating window, a floating icon, a floating bubble, picture-in-picture, a widget, a control, or a notification. The solution provided in this application is applicable to transfer of first interfaces of various display types, and a display type of an interface on the second screen before the transfer is not limited. Regardless of a scenario, the solution provided in this application may be used to display, with the most eye-catching display effect without affecting the task currently concerned by the user on the target screen, the task interface transferred from the original screen. Applicability and practicability are high.

In a possible design, the first operation is an operation that one or more fingers leave after sliding on the first interface at a sliding speed greater than a preset threshold, and the first operation is used to transfer the first interface across screens. It may be understood that a one-finger or multi-finger sliding operation complies with operation habits of most users, and helps the users memorize and perform the operation. Therefore, specific interface transfer intentions such as a cross-screen transfer intention and a one-screen transfer intention are identified based on different sliding speeds (or sliding accelerations). This facilitates memory and operation of the user, and can further improve performance of interaction between the in-vehicle terminal and the user, to improve user experience.

In a possible design, that the in-vehicle terminal transfers the first interface based on an intention of the first operation includes: The in-vehicle terminal determines, based on a sliding direction of the first operation and location relationships between the first screen and the plurality of displays, that the second screen is a target screen for the cross-screen transfer, where the sliding direction points to the second screen; and the in-vehicle terminal transfers the first interface to the second screen across screens. When the in-vehicle terminal includes the plurality of displays (for example, the first screen and the second screen), the in-vehicle terminal definitely knows relative location relationships between the plurality of displays. Similarly, when the plurality of displays (for example, the first screen and the second screen) belong to different in-vehicle terminals, an in-vehicle terminal to which the first screen belongs may know the relative location relationships between the plurality of displays. For example, the in-vehicle terminal stores specific locations of the plurality of displays. In view of this, in this embodiment of this application, the in-vehicle terminal may determine, based on the sliding direction of the finger of the user and the relative location relationships between the plurality of displays, the target screen for the cross-screen transfer of the first interface.

In a possible design, a display type of the first interface after the transfer is the same as a display type of the first interface before the transfer. For example, if the first interface is displayed in full screen before the transfer, the first interface may be kept displayed in full screen after the interface transfer, to ensure eye-catching display of the first interface. For another example, if the first interface is displayed in a floating window before the transfer, the first interface may be kept displayed in a floating window after the interface transfer. This does not affect an interface on the target screen. In view of this, same interface display experience before and after the interface transfer can be maintained.

In a possible design, the display type of the first interface on the first screen before the transfer of the first interface is full-screen display; and after the transfer of the first interface is completed, the display type of the first interface on the second screen is full-screen display. In view of this, same eye-catching interface display experience before and after the interface transfer can be maintained.

In a possible design, the display type of the first interface after the transfer is related to the classification information of the first interface before the transfer, where the first interface before the transfer is a preset focused application interface of the first screen; and after the transfer of the first interface is completed, the display type of the first interface on the second screen is full-screen display. It may be understood that, the first interface before the transfer is the preset focused application interface of the first screen, which indicates that the interface is relatively highly concerned by the user or is of relatively high importance and that display of the interface needs to be preferentially ensured. In view of this, displaying the first interface in full screen after the transfer can ensure eye-catching display of the first interface, to help a user operation.

In a possible design, the display type of the first interface after the transfer is also related to the screen task information of the second screen, where before the transfer of the first interface, the task interface is not displayed, or the task interface is not displayed in full screen, or a preset focused application interface of the second display is not displayed on the second screen. It may be understood that, if the task interface is not displayed, the task interface is not displayed in full screen, or the preset focused application interface of the second screen is not displayed on the second screen before the transfer, it indicates that the second screen does not execute a task that is relatively highly concerned by the user or is of relatively high importance. In view of this, displaying the first interface in full screen after the transfer can ensure eye-catching display of the first interface, to help the user operation.

In a possible design, the display type of the first interface after the transfer is related to the screen task information of the second screen, where before the transfer of the first interface, the task interface is not displayed, or the task interface is not displayed in full screen, or a preset focused application interface of the second screen is not displayed on the second screen; and after the transfer of the first interface is completed, the display type of the first interface is full-screen display. It may be understood that, if the task interface is not displayed, the task interface is not displayed in full screen, or the preset focused application interface of the second screen is not displayed on the second screen before the transfer, it indicates that the second screen does not execute a task that is relatively highly concerned by the user or is of relatively high importance. In view of this, displaying the first interface in full screen after the transfer can ensure eye-catching display of the first interface, to help the user operation.

In a possible design, the display type of the first interface after the transfer is related to the screen task information of the second screen, where before the transfer of the first interface, the task interface is displayed in full screen or a preset focused application interface of the second screen is displayed on the second screen; and after the transfer of the first interface is completed, the first interface and another task interface on the second screen are displayed in split screen. It may be understood that, before the transfer, the task interface is displayed in full screen or the preset focused application interface of the second screen is displayed on the second screen, which indicates that the second screen is executing a task that is relatively highly concerned by the user or is of relatively high importance. In view of this, the first interface is displayed in split screen after the transfer, to avoid interrupting the task interface that is being focused on by the user on the second screen, and provide the user with more user-friendly transfer experience.

In a possible design, the display type of the first interface after the transfer is related to the screen task information of the second screen and the task information before the transfer of the first interface, where before the transfer of the first interface, the display type of the first interface is full-screen display or the first interface is a preset focused application interface of the first screen; the task interface is displayed in full screen or a preset focused application interface of the second screen is displayed on the second screen; and after the transfer of the first interface is completed, the first interface and another task interface on the second screen are displayed in split screen. It may be understood that, before the transfer, the first interface is displayed in full screen or the first interface is the preset focused application interface of the first screen, which indicates that the interface is relatively highly concerned by the user or is of relatively high importance. In addition, the task interface is displayed in full screen or the preset focused application interface of the second screen is displayed on the second screen, which indicates that the second screen is executing the task that is relatively highly concerned by the user or is of relatively high importance. In view of this, displaying the first interface in split screen after the transfer can ensure eye-catching display of the first interface, to avoid interrupting the task interface that is being focused on by the user on the second screen, and provide the user with more user-friendly transfer experience.

In a possible design, the display type of the first interface after the transfer is related to the screen task information of the second screen, where before the transfer of the first interface, the task interface is displayed in full screen or a preset focused application interface of the second screen is displayed on the second screen; and after the transfer of the first interface is completed, the display type of the first interface is split-screen display, a floating window, a floating icon, a floating bubble, picture-in-picture, a widget, or a control. It may be understood that, before the transfer, the task interface is displayed in full screen or the preset focused application interface of the second screen is displayed on the second screen, which indicates that the second screen is executing the task that is relatively highly concerned by the user or is of relatively high importance. In view of this, after the transfer, the first interface is displayed in a form of non-full screen (for example, in a form of floating window or in a form of picture-in-picture), to avoid interrupting the task interface that is being focused on by the user on the second screen, and provide the user with more user-friendly transfer experience.

In a possible design, the display type of the first interface after the transfer is the same as the display type of the first interface before the transfer. For example, the first interface before the transfer is displayed on the first screen in a form of floating window, and the first interface after the transfer may be displayed on the second screen in a form of floating window.

In a possible design, after the transfer of the first interface is completed, a floating window, a floating icon, a floating bubble, an application icon, or a widget corresponding to the first interface is displayed on the first screen. This can help a user of the first screen still view the first interface or perform an operation on the first interface, and can avoid interference of the first interface to another focused task on the first screen.

In a possible design, when the transfer is the one-screen transfer, the first operation is an operation that one or more fingers leave after sliding for a distance on the first interface at a sliding speed less than or equal to a preset threshold, and the first operation is used to transfer the first interface on one screen. This complies with operation habits of most users, helps the user memorize and perform the operation to trigger the one-screen transfer, and can improve performance of interaction between the in-vehicle terminal and the user when helping the user memorize and perform an operation, to improve user experience.

In a possible design, that the in-vehicle terminal transfers the first interface based on an intention of the first operation includes: The in-vehicle terminal transfers the first interface to a target location on one screen, where the target location is an end location of the first operation on the first screen, or the target location is obtained by the in-vehicle terminal through calculation based on the first operation, or the target location is a preset location on an edge of the first screen. This can implement one-screen transfer functions of pinning (pinning) the first interface to a location on a screen, moving a location of the first interface, and the like, to meet diversified requirements of the user.

In a possible design, before the transfer of the first interface, the first screen displays the first interface and a second interface in split screen, and the first operation is an operation that one or more fingers of a user leave after sliding for a distance on the first interface at a sliding speed less than or equal to the preset threshold toward the second interface; and after the transfer of the first interface is completed, the in-vehicle terminal exchanges locations of the first interface and the second interface. This can conveniently and quickly exchange locations of split-screen interfaces.

In a possible design, after the first interface is transferred to the second screen across screens, the method further includes: When receiving an operation for transferring the first interface to the first screen across screens, the in-vehicle terminal transfers the first interface back to the first screen across screens, where after the first interface is transferred back to the first screen across screens, a display type of the first interface is related to task information of the first interface displayed on the second display, and/or screen task information of the first screen when the in-vehicle terminal receives the first operation. This application supports any transfer of an interface between a plurality of screens, including reverse transfer.

In a possible design, the in-vehicle terminal further includes a third screen, and after the first interface is transferred to the second screen across screens, the method further includes: When receiving an operation for transferring the first interface to the third screen across screens, the in-vehicle terminal transfers the first interface to the third screen across screens, where after the first interface is transferred to the third screen across screens, a display type of the first interface is related to task information of the first interface displayed on the second display and/or screen task information of the third screen when the in-vehicle terminal receives the first operation. This application supports any transfer of an interface between a plurality of screens, including relay transfer.

In a possible design, when the first operation performed by the user for transferring the first interface on the first screen is received, one or more first task interfaces are displayed on the first screen, and the one or more first task interfaces include the first interface. The solutions provided in this application are applicable to a multi-task scenario.

In a possible design, the first screen is any one of the following screens of a vehicle: a driver screen, a front passenger screen, a rear left screen, or a rear right screen. In an example, the solution provided in this application is applicable to interface transfer on any screen of the driver screen, the front passenger screen, the rear left screen, or the rear right screen in the vehicle.

In a possible design, the second screen is any one of the following screens of the vehicle: the driver screen, the front passenger screen, the rear left screen, or the rear right screen, and the second screen is different from the first screen. In an example, the solution provided in this application is applicable to transferring an interface to any screen in the vehicle.

According to a second aspect, an embodiment of this application provides a control method. In the method, a plurality of displays may collaboratively display an image, to provide a user with immersive viewing experience. The method may be applied to an electronic device including a first display, a second display, and a third display, where the second display and the third display are respectively located on two sides of the first display. The method may include: when displaying a first interface on the first display, displaying a second interface on the second display, and displaying a third interface on the third display, where the second interface is an interface obtained after first effect processing is performed on a partial interface that is of the first interface and that is close to a side of the second display, the third interface is an interface obtained after the first effect processing is performed on a partial interface that is of the first interface and that is close to a side of the third display, and the first effect processing is any one of Gaussian blur processing, solid color gradient processing, or particle animation processing.

In the method, when the electronic device having a plurality of displays displays the first interface on the first display, the second display and the third display can be controlled to simultaneously display different special effect interfaces related to the first interface by displaying, on the second display, a special effect interface corresponding to the partial interface that is of the first interface and that is close to the side of the second display and displaying, on the third display, a special effect interface corresponding to the partial interface that is of the first interface and that is close to the third display, so that one interface can be collaboratively displayed by using the plurality of displays, to further provide richer display effects and improve immersive viewing experience of the user.

In a possible design, sizes of the second interface and the third interface may be the same or may be different.

In the method, a size relationship between the second interface and the third interface may be flexibly set, which helps improve flexibility of interface display.

In a possible design, the method further includes: when receiving a first operation for transferring the first interface on the first display, transferring the first interface based on an intention of the first operation, where the transfer includes one-screen transfer and cross-screen transfer. After the first operation for transferring the first interface on the first display is received, the method further includes: when determining that the transfer is the cross-screen transfer, skipping displaying the second interface on the second display, and skipping displaying the third interface on the third display.

In the method, when the first interface displayed on the first display is transferred across screens, the electronic device may stop displaying, on displays on the two sides of the first display, special effect interfaces related to the first interface, so that special effects can be disabled in a timely manner, to avoid unnecessary power consumption.

In a possible design, the first electronic device includes a first OS and a second OS, the first OS is used to control the first display, and the second OS is used to control the second display. The displaying a second interface on the second display includes: determining a fourth interface by using the first OS, where the fourth interface is the first interface, or the partial interface that is of the first interface and that is close to the side of the second display, or an interface obtained after a part or all of a process of the first effect processing is performed on the partial interface that is of the first interface and that is close to the side of the second display; storing the fourth interface into a first memory by using the first OS; obtaining the fourth interface from the first memory by using the second OS; determining the second interface based on the fourth interface by using the second OS; and displaying the second interface on the second display by using the second OS.

In the method, different displays may be controlled by different OSes. When a special effect interface corresponding to the first interface is displayed, a process of generating the special effect interface may be completed by an OS to which any display belongs, or may be jointly completed by different OSes. Therefore, flexibility of the method is relatively high, and an OS that performs the process of generating the special effect interface can be flexibly selected based on processing capabilities or processing pressure of different OSes, thereby improving processing efficiency. In addition, different OSes may share a memory, and each OS may read data from the shared memory, or may store processed data into the shared memory. This can provide relatively high access efficiency, and save data storage space.

In a possible design, the determining the second interface based on the fourth interface by using the second OS includes: when the fourth interface is the first interface, determining, by using the second OS based on the fourth interface, the partial interface that is of the first interface and that is close to the side of the second display, and performing the first effect processing on the partial interface that is of the first interface and that is close to the side of the second display, to obtain the second interface; or when the fourth interface is the partial interface that is of the first interface and that is close to the side of the second display, performing the first effect processing on the fourth interface by using the second OS, to obtain the second interface; or when the fourth interface is an interface obtained after a part of the process of the first effect processing is performed on the partial interface that is of the first interface and that is close to the side of the second display, performing the remaining part of the process of the first effect processing on the fourth interface by using the second OS, to obtain the second interface; or when the fourth interface is an interface obtained after all of the process of the first effect processing is performed on the partial interface that is of the first interface and that is close to the side of the second display, determining the fourth interface as the second interface by using the second OS.

In the method, if an interface that is from the first OS and that is obtained by the second OS is an original interface on which special effect processing is not performed, the second OS may perform complete special effect processing on the interface. If the interface that is from the first OS and that is obtained by the second OS is an interface on which partial special effect processing is performed, the second OS may perform the remaining special effect processing on the interface. If the interface that is from the first OS and that is obtained by the second OS is an interface on which complete special effect processing is performed, the second OS may directly use the interface. Therefore, the second OS may perform corresponding subsequent processing based on the processing progress of the first OS, and flexibility is relatively high. When the processing pressure of the first OS is relatively high, the second OS may undertake a part or all of special effect processing tasks. This can improve processing efficiency.

In a possible design, the first display, the second display, and the third display belong to a same OS.

In the method, the first display, the second display, and the third display belong to the same OS. In this case, the OS can directly and quickly control the three displays, thereby improving control efficiency.

According to a third aspect, an embodiment of this application provides a control method. In the method, a plurality of displays may collaboratively display an image, to provide a user with immersive viewing experience. The method may be applied to an electronic device including a first display, a second display, and a third display, and the second display and the third display are respectively located on two sides of the first display. The method may include: when displaying the first interface on the first display, displaying a second interface on the second display, and displaying the second interface on the third display, where the second interface is an interface obtained after particle animation processing is performed on the first interface.

In the method, when displaying the first interface on the first display, the electronic device having a plurality of displays can collaboratively display one interface on the plurality of displays by displaying a special effect interface corresponding to the first interface on both the second display and the third display, to further provide richer display effects and improve immersive viewing experience of the user.

In a possible design, the method further includes: when receiving a first operation for transferring the first interface on the first display, transferring the first interface based on an intention of the first operation, where the transfer includes one-screen transfer and cross-screen transfer. After the first operation for transferring the first interface on the first display is received, the method further includes: when the transfer is the cross-screen transfer, skipping displaying the second interface on the second display, and skipping displaying the second interface on the third display.

In the method, when the first interface displayed on the first display is transferred across screens, display of a special effect interface related to the first interface may be stopped on another display, so that special effects can be disabled in a timely manner, to avoid unnecessary power consumption.

In a possible design, the first electronic device includes a first OS and a second OS, where the first OS is used to control the first display, and the second OS is used to control the second display; and the displaying a second interface on the second display includes: determining a third interface by using the first OS, where the third interface is the first interface, or an interface obtained after a part or all of a process of the particle animation processing is performed on the first interface; storing the third interface into a first memory by using the first OS; obtaining the third interface from the first memory by using the second OS; determining the second interface based on the third interface by using the second OS; and displaying the second interface on the second display by using the second OS.

In the method, different displays may be controlled by different OSes. When a special effect interface corresponding to the first interface is displayed, a process of generating the special effect interface may be completed by an OS to which any display belongs, or may be jointly completed by different OSes. Therefore, flexibility of the method is relatively high, and an OS that performs the process of generating the special effect interface can be flexibly selected based on processing capabilities or processing pressure of different OSes, thereby improving processing efficiency. In addition, different OSes may share a memory, and each OS may read data from the shared memory, or may store processed data into the shared memory. This can provide relatively high access efficiency, and save data storage space.

In a possible design, the first display, the second display, and the third display belong to a same OS.

In the method, the first display, the second display, and the third display belong to the same OS. In this case, the OS can directly and quickly control the three displays, thereby improving control efficiency.

According to a fourth aspect, an embodiment of this application provides a control method. In the method, a content interface and a special effect interface corresponding to the content interface may be simultaneously displayed on a display, to provide a user with immersive viewing experience. The method may be applied to an electronic device including a first display, and the method may include: displaying a first interface in a first area on the first display, and displaying a second interface in a second area on the first display, where the second area is an area other than the first area on the first display, and the second interface is an interface obtained after particle animation processing is performed on the first interface.

In the method, when displaying the first interface on the first display, the electronic device displays, in the display area other than the first interface on the first display, a special effect interface corresponding to the first interface, so that the content interface and the special effect interface can be simultaneously displayed on a same display. Therefore, richer display effects can be provided, and the immersive viewing experience of the user can be improved.

In a possible design, the method further includes: when receiving a first operation for transferring the first interface on the first display, transferring the first interface based on an intention of the first operation, where the transfer includes one-screen transfer and cross-screen transfer. After the first operation for transferring the first interface on the first display is received, the method further includes: when the transfer is the cross-screen transfer, skipping displaying the second interface on the first display.

In the method, when the first interface displayed on the first display is transferred across screens, the first display may stop displaying a special effect interface related to the first interface, so that special effects can be disabled in a timely manner, to avoid unnecessary power consumption.

According to a fifth aspect, an embodiment of this application provides a control method. In the method, a plurality of displays may collaboratively display an image, to provide a user with immersive viewing experience. The method may be applied to a first electronic device including a first display and a second display. The method may include: displaying a first interface on the first display, and displaying a second interface on the second display; and sending a third interface to a second electronic device, so that the second electronic device displays the third interface on a third display, or sending a fourth interface to a second electronic device, so that the second electronic device generates a third display based on the fourth interface and then displays the third interface on the third display. The second electronic device includes the third display, the second display and the third display are respectively located on two sides of the first display, the second interface is an interface obtained after first effect processing is performed on a partial interface that is of the first interface and that is close to a side of the second display, the third interface is an interface obtained after the first effect processing is performed on a partial interface that is of the first interface and that is close to a side of the third display, the fourth interface is the partial interface that is of the first interface and that is close to the side of the third display or an interface obtained after a part or all of a process of the first effect processing is performed on the partial interface that is of the first interface and that is close to the side of the third display, and the first effect processing is any one of Gaussian blur processing, solid color gradient processing, or particle animation processing.

In the method, when displaying the first interface on the first display, the first electronic device may control the second display of the first electronic device to display a special effect interface corresponding to the first interface. In addition, the first electronic device sends the first interface or a first interface on which a part or all of special effect processing is performed to the second electronic device, so that the second electronic device can determine the special effect interface corresponding to the first interface, and then display the special effect interface corresponding to the first interface on the third display of the second electronic device. Therefore, the method can support the first electronic device and the second electronic device in collaboratively implementing an effect of displaying the first interface on the first display and displaying the special effect interface related to the first interface on the second display and the third display, to further provide richer display effects and improve immersive viewing experience of the user.

In a possible design, sizes of the second interface and the third interface may be the same or may be different.

In the method, a size relationship between the second interface and the third interface may be flexibly set, which helps improve flexibility of interface display.

According to a sixth aspect, an embodiment of this application provides a control method. In the method, a plurality of displays may collaboratively display an image, to provide a user with immersive viewing experience. The method may be applied to a first electronic device including a first display. The method may include: when displaying a first interface on the first display, sending a second interface and a third interface to a second electronic device, so that the second electronic device separately displays the second interface and the third interface on a second display and a third display; or when displaying a first interface on the first display, sending the first interface to a second electronic device, so that the second electronic device separately generates a second interface and a third interface based on the first interface and then separately displays the second interface and the third interface on a second display and a third display. The second electronic device includes the second display and the third display, the second display and the third display are respectively located on two sides of the first display, the second interface is an interface obtained after first effect processing is performed on a partial interface that is of the first interface and that is close to a side of the second display, the third interface is an interface obtained after the first effect processing is performed on a partial interface that is of the first interface and that is close to a side of the third display, and the first effect processing is any one of Gaussian blur processing, solid color gradient processing, or particle animation processing.

In the method, when displaying the first interface on the first display, the first electronic device sends the first interface or a first interface on which a part or all of special effect processing is performed to the second electronic device, so that the second electronic device can determine a special effect interface corresponding to the first interface, and display the special effect interface corresponding to the first interface on the second display and the third display of the second electronic device. Therefore, the method can support the first electronic device and the second electronic device in collaboratively implementing an effect of displaying the first interface on the first display and displaying the special effect interface related to the first interface on the second display and the third display, to further provide richer display effects and improve immersive viewing experience of the user.

In a possible design, sizes of the second interface and the third interface may be the same or may be different.

In the method, a size relationship between the second interface and the third interface may be flexibly set, which helps improve flexibility of interface display.

According to a seventh aspect, an embodiment of this application provides a control method. In the method, a plurality of displays may collaboratively display an image, to provide a user with immersive viewing experience. The method may be applied to a first electronic device including a first display. The method may include: when displaying a first interface on the first display, sending a second interface to a second electronic device, so that the second electronic device displays the second interface on a second display, or sending a third interface to a second electronic device, so that the second electronic device generates a second interface based on the third interface and then displays the second interface on a second display; and when displaying the first interface on the first display, sending a fourth interface to a third electronic device, so that the third electronic device displays the fourth interface on a third display, or sending a fifth interface to a third electronic device, so that the third electronic device generates a fourth interface based on the fifth interface and then displays the fourth interface on a third display. The second electronic device includes the second display, the third electronic device includes the third display, the second display and the third display are respectively located on two sides of the first display, the second interface is an interface obtained after first effect processing is performed on a partial interface that is of the first interface and that is close to a side of the second display, the third interface is the partial interface that is of the first interface and that is close to the side of the second display or an interface obtained after a part or all of a process of the first effect processing is performed on the partial interface that is of the first interface and that is close to the side of the second display, the fourth interface is an interface obtained after the first effect processing is performed on a partial interface that is of the first interface and that is close to a side of the third display, the fifth interface is the partial interface that is of the first interface and that is close to the side of the third display or an interface obtained after a part or all of the process of the first effect processing is performed on the partial interface that is of the first interface and that is close to the side of the third display, and the first effect processing is any one of Gaussian blur processing, solid color gradient processing, or particle animation processing.

In the method, when displaying the first interface on the first display, the first electronic device separately sends the first interface or a first interface on which a part or all of special effect processing is performed to the second electronic device and the third electronic device, so that the second electronic device and the third electronic device can determine a special effect interface corresponding to the first interface, and display the special effect interface corresponding to the first interface on the displays of the second electronic device and the third electronic device. Therefore, the method can support the first electronic device in collaborating with the second electronic device and the third electronic device to implement an effect of displaying the first interface on the first display and displaying the special effect interface related to the first interface on the second display and the third display, to further provide richer display effects and improve immersive viewing experience of the user.

In a possible design, sizes of the second interface and the third interface may be the same or may be different.

In the method, a size relationship between the second interface and the third interface may be flexibly set, which helps improve flexibility of interface display.

In a possible design, in the method according to any one of the second aspect to the seventh aspect, the method further includes: when displaying the first interface on the first display, adjusting, based on volume of an audio corresponding to the first interface, a control parameter of an air conditioning device in space in which the first display is located, where the control parameter is positively related to the volume, and the control parameter includes at least one of air exhaust vent volume, an air exhaust vent speed, or an air exhaust time.

In the method, the electronic device may determine the control parameter of the air conditioning device based on a displayed interface, and control an air conditioner based on the determined control parameter. Therefore, some auxiliary immersive experience can be provided by using the air conditioner when a content interface is displayed, to further provide more diversified immersive services, and then improve immersive experience of the user.

In a possible design, in the method according to any one of the second aspect to the seventh aspect, the method further includes: when displaying the first interface on the first display, determining, based on a preset correspondence between a picture scenario and a temperature, a target temperature corresponding to a picture scenario of the first interface; and adjusting, to the target temperature, a temperature of an air conditioning device in space in which the first display is located.

In the method, the electronic device may determine a temperature parameter of the air conditioning device based on a displayed interface, and adjust a temperature of an air conditioner based on the determined temperature parameter, so that the user feels a temperature corresponding to interface content seen by the user, to improve immersive experience of the user.

In a possible design, in the method according to any one of the second aspect to the seventh aspect, the method further includes: when displaying the first interface on the first display, determining a first target color based on at least one color on the first interface, where the first target color is any color of the at least one color, or the first target color is an average color of some or all colors of the at least one color; and adjusting, based on the first target color, a lighting color and/or brightness of a first lighting device in space in which the first display is located.

In the method, the electronic device may determine a control parameter like a color and brightness of a lighting device based on a displayed interface, and control the lighting device based on the determined control parameter. Therefore, when displaying a content interface, the electronic device can provide some auxiliary immersive experience by using the lighting device, to further provide more diversified immersive services, and improve immersive experience of the user.

According to an eighth aspect, an embodiment of this application provides a control method. The method can improve flexibility and practicability of controlling an audio output apparatus to play an audio in a multi-audio output apparatus scenario. The method may be applied to a first electronic device. The method may include: when displaying first content on a first display, playing a first audio corresponding to the first content by using a first audio output apparatus, where the first display is any display of a plurality of displays located in a first space area; displaying the first content on the first display, and displaying the first content on a second display in response to a received first operation, where the second display is included in the plurality of displays; and in response to the first operation, skipping playing the first audio by using the first audio output apparatus, and playing the first audio by using a second audio output apparatus, or continuing to play the first audio by using the first audio output apparatus, or playing the first audio by using an audio output apparatus of a specified type in the first space area. The first audio output apparatus is associated with a first sound zone, and the second audio output apparatus is associated with a second sound zone; the first sound zone is a candidate sound zone associated with the first display in a plurality of candidate sound zones, and the second sound zone is a candidate sound zone associated with the second display in the plurality of candidate sound zones; each candidate sound zone in the plurality of candidate sound zones is associated with one or more audio output apparatuses in the first space area; and/or the first audio output apparatus includes at least one audio output apparatus of a same type, and the second audio output apparatus includes at least one audio output apparatus of a same type, where the type includes at least one of a status type indicating a moving/static state of an audio output apparatus, a location type indicating a location range of an audio output apparatus, or a device type of an audio output apparatus. An interface on which the first content is located is a first interface.

In the method, in a scenario in which there are a plurality of displays and a plurality of audio output apparatuses in a space area, when displaying content on a display and playing a corresponding audio, an electronic device may select, from the plurality of sound zones, a sound zone associated with the display, and play the audio by using an audio output apparatus associated with the sound zone. When content on one display is transferred to another display for display, the electronic device may also flexibly select an audio output apparatus for playing an audio that is used after the transfer. In this manner, a control device may partition the displays and the audio output apparatuses in the space area by using a sound zone, and flexibly select, by using the sound zone as a reference, an audio output apparatus configured to play an audio corresponding to content on each display, without manual intervention. Therefore, control efficiency is relatively high. Audio control requirements in more common scenarios can also be met, and universality and practicability are relatively high.

In a possible design, if the first audio is a media-type audio or a call-type audio, or a service that provides the first audio is a media-type service or a call-type service, in response to the first operation, the first audio is not played by using the first audio output apparatus, and the first audio is played by using the second audio output apparatus.

In the method, when watching media-type/call-type content, a user has a relatively high requirement for listening to a corresponding audio. Therefore, when determining that content transferred from the first display to the second display is the media-type/call-type content, or determining that an audio corresponding to the content is a media-type/call-type audio, or determining that a service providing the audio is a media-type/call-type service, the electronic device may switch an audio output apparatus for playing the audio of the content. This can implement an effect that the media type/call-type audio is transferred along with an image, and improve audio listening experience of the user.

In a possible design, if the first audio is any one of the following audios: a navigation audio, a notification audio, a system audio, or an alarm audio, or if the service that provides the first audio is any one of the following services: a navigation service, a notification service, a system service, or an alarm service, or if a display type corresponding to the first content is any one of a floating window, picture-in-picture, a control, or a widget, in response to the first operation, the first audio continues to be played by using the first audio output apparatus.

In this method, the navigation audio, the notification audio, the system audio, and the alarm audio are generally mainly listened by the user at a driving location of a vehicle. Therefore, when content corresponding to this type of sound is transferred, this type of sound does not follow the transfer, which better meets an actual requirement of the user. Therefore, in this method, when the content corresponding to this type of sound is transferred, this type of sound does not follow the transfer, which is more applicable to an audio control scenario in the vehicle, and ensures relatively high listening experience of the user in a control process. When viewing content such as a floating window, picture-in-picture, a control, or a widget, the user has a relatively low requirement for listening to a corresponding audio, and a time for transferring the content may be relatively short. Therefore, when the content is transferred, the corresponding audio is not transferred along with the content, so that audio control complexity can be reduced, and impact on user experience is relatively small.

In a possible design, if the first audio is the call-type audio, in response to the first operation, the first audio is played by using all audio output apparatuses of the specified type in the first space area.

In the method, when determining that the audio corresponding to the content transferred from the first display to the second display is the call-type audio, the electronic device switches a playing manner of the audio to playing the audio by using an audio output apparatus of a specified type in the space area. For example, the electronic device switches a playing manner of the audio to playing the audio by using all or some audio output apparatuses of the specified type in the space area. For example, when a video call screen is transferred from a central display screen to a front passenger screen for display, a call audio may be played by using a full-vehicle loudspeaker. This can ensure that all users in a space area can listen to the call audio, thereby meeting a requirement of the users in the space area for participating in a call, and improving user experience. For another example, when a video call screen is transferred from a central display screen to a front passenger screen for display, front-row loudspeakers (a driver loudspeaker and a front passenger loudspeaker) may be used to play the call audio, to meet call experience of front-row users.

In a possible design, the method further includes: in response to a first voice indication of a first user, playing a third audio by using an audio output apparatus associated with the first sound zone, where a space area in which the first user is located is a space area associated with the first sound zone; and in response to a second voice indication of a second user, playing a fourth audio by using an audio output apparatus associated with the second sound zone, where a space area in which the second user is located is a space area associated with the second sound zone.

In the method, when the electronic device determines that a location of a user who sends a voice indication changes (for example, a user at a different location in the vehicle send a voice indication), an audio output apparatus may be switched to play an audio that responds to the user indication, so that continuity and smoothness of listening to the response audio by the user can be ensured, thereby improving user experience.

In a possible design, before the skipping displaying the first content on the first display, and displaying the first content on a second display in response to a received first operation, the method further includes: displaying a second content on the second display, and playing a second audio corresponding to the second content by using a third audio output apparatus, where the third audio output apparatus is associated with the second sound zone. The displaying the first content on the second display includes: displaying the first content and the second content on the second display in split screen; or displaying the first content in a first window on the second display, where the first window is overlaid on a window in which the second content is located, and a size of the first window is less than a size of the window in which the second content is located. After the skipping displaying the first content on the first display, and displaying the first content on the second display in response to the received first operation, the method further includes: continuing to play the second audio by using the third audio output apparatus.

In the method, before content on the first display is transferred to the second display, the second display may display the content and play a corresponding audio. After the content on the first display is transferred to the second display, the second display may display the transferred content in split screen or in a window. In this case, content originally displayed on the second display is still partially or completely visible, and the electronic device may continue to play the audio corresponding to the content. This can avoid a case in which an image does not match the audio and ensure video and audio consistency for the user.

In a possible design, before the skipping displaying the first content on the first display, and displaying the first content on a second display in response to a received first operation, the method further includes: displaying a second content on the second display, and playing a second audio corresponding to the second content by using a third audio output apparatus, where the third audio output apparatus is associated with the second sound zone. The displaying the first content on the second display includes: displaying the first content and skipping displaying the second content on the second display; and after the skipping displaying the first content on the first display, and displaying the first content on the second display in response to the received first operation, the method further includes: skipping playing the second audio by using the third audio output apparatus.

In the method, before content on the first display is transferred to the second display, the second display may display the content and play a corresponding audio. After the content on the first display is transferred to the second display, the second display may display the transferred content in full screen on the second display. In this case, content originally displayed on the second display is invisible to the user, and the electronic device stops playing the audio corresponding to the content. This can avoid a case in which an image does not match the audio and ensure video and audio consistency for the user.

In a possible design, after the skipping playing the second audio by using the third audio output apparatus, the method further includes: in response to a received second operation, skipping displaying the first content on the second display, and displaying the second content on the second display; and continuing to play the second audio by using the third audio output apparatus.

In the method, when the second display no longer displays the transferred content, the electronic device may continue to play, by using an audio output apparatus for playing the audio corresponding to the content on the second display before the content is transferred, the audio corresponding to the content originally displayed on the second display, to continue a service before the content is transferred, thereby improving continuity of content display and audio playing on the second display, and further improving user experience.

In a possible design, after the skipping playing the second audio by using the third audio output apparatus, the method further includes: in response to a received third operation, displaying the first content on the first display, skipping displaying the first content on the second display, and displaying the second content on the second display; and continuing to play the first audio by using the first audio output apparatus, and continuing to play the second audio by using the third audio output apparatus.

In the method, after the content on the first display is transferred to the second display for display, and after the content that is displayed on the second display and that comes from the first display exits display, the electronic device may switch back to an audio playing manner before the content is transferred, to continue a service before the content is transferred, thereby improving continuity of content display and audio playing on the second display, and improving user experience.

In a possible design, after the skipping displaying the first content on the first display, and displaying the first content on a second display in response to a received first operation, the method further includes: when a display area of the first content on the second display is a partial area of the second display, displaying the first content in full screen on the second display in response to a received fourth operation; and playing the first audio by using the audio output apparatus associated with the second sound zone, and skipping displaying the first audio by using the audio output apparatus associated with the first sound zone.

In the method, after the content on the first display is transferred to the second display and is not displayed in full screen, the electronic device may not switch the audio playing manner. After the content displayed in non-full screen on the second display changes to be displayed in full screen, the electronic device may switch the audio playing manner and play only audio corresponding to the content. Based on the method, audio control can be performed according to a change of a scenario. This improves flexibility of audio control and user experience.

In a possible design, before the playing a first audio corresponding to the first content by using a first audio output apparatus, the method further includes: determining the first audio output apparatus; and the determining the first audio output apparatus includes: determining the first sound zone based on the first display; and selecting an audio output apparatus with a highest priority from the at least one audio output apparatus as the first audio output apparatus. In the method, when displaying content on a display, the electronic device may play a corresponding audio by using an audio output apparatus with a highest priority in an associated sound zone on the display. Based on the method, the electronic device may flexibly select an audio output apparatus for playing an audio corresponding to content on different displays, without manual intervention. Therefore, control efficiency is relatively high.

In a possible design, the selecting an audio output apparatus with a highest priority from the at least one audio output apparatus as the first audio output apparatus includes: obtaining a priority order of the at least one audio output apparatus associated with the first sound zone; and selecting the audio output apparatus with the highest priority from the at least one audio output apparatus as the first audio output apparatus based on the priority order of the at least one audio output apparatus.

In a possible design, the determining the first sound zone based on the first display includes: selecting, from the plurality of candidate sound zones based on a specified association relationship between a display and a candidate sound zone, a candidate sound zone associated with the first display as the first sound zone; or determining the first sound zone based on a received sound zone selection operation, where the sound zone selection operation is used to select a candidate sound zone from the plurality of candidate sound zones as the first sound zone.

In the method, the electronic device may select, based on a preconfigured association relationship between a display and a candidate sound zone, a sound zone associated with the display, or may select, based on a user indication, a sound zone associated with the display. On one hand, manual intervention can be reduced and efficiency can be improved, and on the other hand, manual intervention is also allowed, and flexibility is relatively high.

In a possible design, the obtaining a priority order of the at least one audio output apparatus associated with the first sound zone includes: selecting, from a plurality of pieces of priority information based on a specified correspondence between an audio type and priority information, target priority information corresponding to an audio type of the first audio, where each of the plurality of pieces of priority information indicates a priority order of the at least one audio output apparatus associated with the first sound zone, and different priority information corresponds to different audio types; and determining the priority order of the at least one audio output apparatus based on the target priority information.

In the method, for at least one audio output apparatus associated with a same sound zone, when different types of audios are played, a priority order of the at least one audio output apparatus is different. Therefore, the electronic device may select, based on an audio type of a to-be-played audio, a more appropriate audio output apparatus to play the audio, thereby improving listening experience of the user, and performing audio control with relatively high flexibility.

In a possible design, before the skipping playing the first audio by using the first audio output apparatus, and playing the first audio by using a second audio output apparatus, the method further includes: determining the second audio output apparatus; and the determining the second audio output apparatus includes: determining the second sound zone based on the second display; and selecting an audio output apparatus with a highest priority from the at least one audio output apparatus associated with the second sound zone as the second audio output apparatus.

In a possible design, the selecting an audio output apparatus with a highest priority from the at least one audio output apparatus associated with the second sound zone as the second audio output apparatus includes: obtaining a priority order of the at least one audio output apparatus associated with the second sound zone; and selecting, based on the priority order of the at least one audio output apparatus associated with the second sound zone, an audio output apparatus with a highest priority from the at least one audio output apparatus associated with the second sound zone as the second audio output apparatus.

In a possible design, the first space area is a space area in a vehicle cockpit, and any audio output apparatus includes at least one of an in-vehicle loudspeaker, a headrest speaker, or a Bluetooth headset.

According to a ninth aspect, an embodiment of this application provides a control method. The method can improve flexibility and practicability of controlling an audio output apparatus to play an audio in a multi-audio output apparatus scenario. The method may be applied to a first electronic device. The method may include: when displaying first content on a first display, playing a first audio corresponding to the first content by using a first audio output apparatus, where the first display is any display of a plurality of displays located in a first space area; displaying the first content on the first display, and displaying the first content on a second display in response to a received first operation; or displaying first sub-content on the first display, and displaying second sub-content on a second display in response to a received second operation, where the first content includes the first sub-content and the second sub-content; and playing the first audio by using a second audio output apparatus and a third audio output apparatus; or playing the first audio by using an audio output apparatus of a specified type located in the first space area. The second display is included in the plurality of displays, the first audio output apparatus is associated with a first sound zone, the second audio output apparatus is associated with the first sound zone, the third audio output apparatus is associated with a second sound zone, the first sound zone is a candidate sound zone associated with the first display in a plurality of candidate sound zones, and the second sound zone is a candidate sound zone associated with the second display in the plurality of candidate sound zones; each candidate sound zone in the plurality of candidate sound zones is associated with one or more audio output apparatuses in the first space area; and/or the first audio output apparatus includes at least one audio output apparatus of a same type, the second audio output apparatus includes at least one audio output apparatus of a same type, and the third audio output apparatus includes at least one audio output apparatus of a same type, where the type includes at least one of a status type indicating a moving/static state of an audio output apparatus, a location type indicating a location range of an audio output apparatus, or a device type of an audio output apparatus. An interface on which the first content is located is a first interface.

In the method, in a scenario in which there are a plurality of displays and a plurality of audio output apparatuses in a space area, when displaying content on a display and playing a corresponding audio, an electronic device may select, from the plurality of sound zones, a sound zone associated with the display, and play the audio by using an audio output apparatus associated with the sound zone. When content on one display is copied or partially transferred to another display for display, the electronic device may also flexibly select an audio output apparatus for playing an audio that is used after the transfer. In this manner, a control device may partition the displays and the audio output apparatuses in the space area by using a sound zone, and flexibly select, by using the sound zone as a reference, an audio output apparatus configured to play an audio corresponding to content on each display, without manual intervention. Therefore, control efficiency is relatively high. Audio control requirements in more common scenarios can also be met, and universality and practicability are relatively high.

In a possible design, the second audio output apparatus is the same as the first audio output apparatus; and/or a type of the second audio output apparatus is the same as a type of the third audio output apparatus.

In the method, when the content on one display is partially transferred to the another display for display, the electronic device may continue to play an audio corresponding to the content by using an audio output apparatus used before the transfer, and at the same time, play the audio corresponding to the content by using an audio output apparatus corresponding to the display to which the content is transferred, which can ensure listening experience of users corresponding to different displays. Alternatively, the electronic device may switch to a new audio output apparatus of a same type for playing, to unify an audio playing effect and perform unified management.

In a possible design, after the displaying the first content on the first display, and displaying the first content on a second display in response to a received first operation, the method further includes: in response to a received third operation, skipping displaying the first content on the first display, and continuing to display the first content on the second display; and playing the first audio by using only an audio output apparatus associated with the second sound zone, and skipping playing the first audio by using an audio output apparatus associated with the first sound zone; or in response to a received fourth operation, continuing to display the first content on the first display, and skipping displaying the first content on the second display; and playing the first audio by using an audio output apparatus associated with the first sound zone, and skipping playing the first audio by using an audio output apparatus associated with the second sound zone.

In the method, in a scenario of displaying content in a copying manner, two displays display same content, and audio output apparatuses associated with the two displays play an audio corresponding to the content. When either of the displays no longer displays the content, the electronic device may disable an audio output apparatus associated with the display, and may continue to display the content by using the other display and continue to play the corresponding audio by using an audio output apparatus associated with the other display. This can meet a requirement of a user corresponding to each display, and improve user experience.

In a possible design, after the displaying first sub-content on the first display, and displaying second sub-content on a second display in response to a received second operation, the method further includes: in response to a received fifth operation, skipping displaying the second sub-content on the second display, and displaying the first content on the first display; and playing the first audio by using an audio output apparatus associated with the first sound zone, and skipping playing the first audio by using an audio output apparatus associated with the second sound zone; or in response to a received sixth operation, skipping displaying the first sub-content on the first display, and displaying the first content on the second display; and playing the first audio by using an audio output apparatus associated with the second sound zone, and skipping playing the first audio by using an audio output apparatus associated with the first sound zone.

In the method, in a scenario of displaying content in a splicing manner, two displays display same content in a splicing manner, and audio output apparatuses associated with the two displays play an audio corresponding to the content. When either of the displays no longer displays the content, the electronic device may disable an audio output apparatus associated with the display, and may display the complete content by using the other display and continue to play the corresponding audio by using an audio output apparatus associated with the other display. This can meet a requirement of a user corresponding to each display, and improve user experience.

In a possible design, before the playing a first audio corresponding to the first content by using a first audio output apparatus, the method further includes: determining the first audio output apparatus; and the determining the first audio output apparatus includes: determining the first sound zone based on the first display; and selecting an audio output apparatus with a highest priority from the at least one audio output apparatus as the first audio output apparatus.

In a possible design, the selecting an audio output apparatus with a highest priority from the at least one audio output apparatus as the first audio output apparatus includes: obtaining a priority order of the at least one audio output apparatus associated with the first sound zone; and selecting the audio output apparatus with the highest priority from the at least one audio output apparatus as the first audio output apparatus based on the priority order of the at least one audio output apparatus.

In a possible design, the determining the first sound zone based on the first display includes: selecting, from the plurality of candidate sound zones based on a specified association relationship between a display and a candidate sound zone, a candidate sound zone associated with the first display as the first sound zone; or determining the first sound zone based on a received sound zone selection operation, where the sound zone selection operation is used to select a candidate sound zone from the plurality of candidate sound zones as the first sound zone.

In a possible design, the obtaining a priority order of the at least one audio output apparatus associated with the first sound zone includes: selecting, from a plurality of pieces of priority information based on a specified correspondence between an audio type and priority information, target priority information corresponding to an audio type of the first audio, where each of the plurality of pieces of priority information indicates a priority order of the at least one audio output apparatus associated with the first sound zone, and different priority information corresponds to different audio types; and determining the priority order of the at least one audio output apparatus based on the target priority information.

In a possible design, before the playing the first audio by using a second audio output apparatus and a third audio output apparatus, the method further includes: determining the second audio output apparatus, and determining the third audio output apparatus; and the determining the third audio output apparatus includes: determining the second sound zone based on the second display; obtaining a priority order of the at least one audio output apparatus associated with the second sound zone; and selecting, based on the priority order of the at least one audio output apparatus associated with the second sound zone, an audio output apparatus with a highest priority from the at least one audio output apparatus associated with the second sound zone as the third audio output apparatus.

In a possible design, the first space area is a space area in a vehicle cockpit, and any audio output apparatus includes at least one of an in-vehicle loudspeaker, a headrest speaker, or a Bluetooth headset.

According to a tenth aspect, this application provides an electronic device. The electronic device includes a display, a memory, and one or more processors, where the memory is configured to store computer program code, and the computer program code includes computer instructions; and when the computer instructions are executed by one or more processors, the electronic device is enabled to perform the method according to any one of the first aspect to the ninth aspect or any possible design of any one of the first aspect to the ninth aspect.

According to an eleventh aspect, this application provides a computer-readable storage medium. The computer-readable storage medium stores a computer program, and when the computer program is run on a computer, the computer is enabled to perform the method according to any one of the first aspect to the ninth aspect or any possible design of any one of the first aspect to the ninth aspect.

According to a twelfth aspect, this application provides a computer program product. The computer program product includes a computer program or instructions. When the computer program or the instructions is/are run on a computer, the computer is enabled to perform the method according to any one of the first aspect to the ninth aspect or any possible design of any one of the first aspect to the ninth aspect.

According to a thirteenth aspect, this application provides a chip system. The chip system includes a processor and a memory, and the memory stores instructions. When the instructions are executed by the processor, the method according to any possible implementation of any one of the first aspect to the ninth aspect is implemented. The chip system may include a chip, or may include a chip and another discrete component.

For beneficial effects of the tenth aspect to the thirteenth aspect, refer to descriptions of beneficial effects of corresponding content in the first aspect to the ninth aspect. Details are not described herein again.

## BRIEF DESCRIPTION OF DRAWINGS

FIG. 1 is a diagram of a full-screen cross-screen transfer process according to an embodiment of this application;
FIG. 2 is a diagram of displaying a plurality of task interfaces in split screen according to an embodiment of this application;
FIG. 3 is a diagram of displaying a task interface in full screen according to an embodiment of this application;
FIG. 4 is a diagram of displaying a task interface in a form of floating window according to an embodiment of this application;
FIG. 5 is a diagram of displaying a task interface in a form of floating icon according to an embodiment of this application;
FIG. 6 is a diagram of displaying a task interface in a form of picture-in-picture according to an embodiment of this application;
FIG. 7 is a diagram of displaying a task interface in a form of widget according to an embodiment of this application;
FIG. 8 is a diagram of displaying two task interfaces in a form of notification according to an embodiment of this application;
FIG. 9A is a diagram of a hardware structure of an electronic device according to an embodiment of this application;

FIG. 9B is a diagram of distribution of in-vehicle terminal displays according to an embodiment of this application;

FIG. 9C is a diagram of a software structure of an electronic device according to an embodiment of this application;

FIG. 10 is a flowchart of an in-vehicle interface transfer method according to an embodiment of this application;

FIG. 11 is a diagram of a process in which a display displays a plurality of task interfaces according to an embodiment of this application;

FIG. 12 is a diagram of another process in which a display displays a plurality of task interfaces according to an embodiment of this application;

FIG. 13 is a diagram of a gesture for indicating an interface transfer intention according to an embodiment of this application;

FIG. 14A is a diagram of a process in which an in-vehicle terminal obtains related information of a sliding event according to an embodiment of this application;

FIG. 14B is a diagram of a correspondence between a sliding direction and a target screen according to an embodiment of this application;

FIG. 14C is a diagram of a scenario indicating an interface transfer intention according to an embodiment of this application;

FIG. 14D is a diagram of another scenario indicating an interface transfer intention according to an embodiment of this application;

FIG. 15 is a diagram 1 of cross-screen transfer according to an embodiment of this application;

FIG. 16 is a diagram 2 of cross-screen transfer according to an embodiment of this application;

FIG. 17 is a diagram 3 of cross-screen transfer according to an embodiment of this application;

FIG. 18 is a diagram 4 of cross-screen transfer according to an embodiment of this application;

FIG. 19 is a diagram 5 of cross-screen transfer according to an embodiment of this application;

FIG. 20 is a diagram 6 of cross-screen transfer according to an embodiment of this application;

FIG. 21 is a diagram 7 of cross-screen transfer according to an embodiment of this application;

FIG. 22 is a diagram 8 of cross-screen transfer according to an embodiment of this application;

FIG. 23 is a diagram 9 of cross-screen transfer according to an embodiment of this application;

FIG. 24 is a diagram 10 of cross-screen transfer according to an embodiment of this application;

FIG. 25 is a diagram 11 of cross-screen transfer according to an embodiment of this application;

FIG. 26 is a diagram 12 of cross-screen transfer according to an embodiment of this application;

FIG. 27 is a diagram 13 of cross-screen transfer according to an embodiment of this application;

FIG. 28A is a diagram 15 of cross-screen transfer according to an embodiment of this application;

FIG. 28B is a diagram 16 of cross-screen transfer according to an embodiment of this application;

FIG. 29 is a diagram 17 of cross-screen transfer according to an embodiment of this application;

FIG. 30 is a diagram 18 of cross-screen transfer according to an embodiment of this application;

FIG. 31 is a diagram 19 of cross-screen transfer according to an embodiment of this application;

FIG. 32 is a diagram 20 of cross-screen transfer according to an embodiment of this application;

FIG. 33 is a diagram 21 of cross-screen transfer according to an embodiment of this application;

FIG. 34 is a diagram 1 of one-screen transfer according to an embodiment of this application;

FIG. 35 is a diagram 2 of one-screen transfer according to an embodiment of this application;

FIG. 36 is a diagram 3 of one-screen transfer according to an embodiment of this application;

FIG. 37 is a diagram 1 of reverse transfer according to an embodiment of this application;

FIG. 38 is a diagram 2 of reverse transfer according to an embodiment of this application;

FIG. 39 is a diagram 22 of cross-screen transfer according to an embodiment of this application;

FIG. 40 is a diagram of touch areas of different users who perform touch operations according to an embodiment of this application;

FIG. 41 is a diagram of an application scenario of a multi-screen collaborative display method according to an embodiment of this application;

FIG. 42 is a diagram of an architecture of a control system according to an embodiment of this application;

FIG. 43 is a diagram of a multi-screen collaboration display method according to an embodiment of this application;

FIG. 44 is a diagram of an architecture of a control system according to an embodiment of this application;

FIG. 45A and FIG. 45B are a diagram of a multi-screen collaboration display method according to an embodiment of this application;

FIG. 46 is a diagram of an architecture of a control system according to an embodiment of this application;

FIG. 47A and FIG. 47B are a diagram of a multi-screen collaboration display method according to an embodiment of this application;

FIG. 48 is a diagram of a Gaussian blur processing method according to an embodiment of this application;

FIG. 49 is a diagram of an interface for Gaussian blur processing according to an embodiment of this application;

FIG. 50 is a diagram of a solid color gradient processing method according to an embodiment of this application;

EP 4 502 779 A1

FIG. 51 is a diagram of an interface for solid color gradient processing according to an embodiment of this application;
FIG. 52 is a diagram of a particle animation processing method according to an embodiment of this application;
FIG. 53 is a diagram of an interface for particle animation processing according to an embodiment of this application;
FIG. 54 is a diagram of an interface for particle animation processing according to an embodiment of this application;
FIG. 55 is a diagram of an interface for particle animation processing according to an embodiment of this application;
FIG. 56 is a diagram of an architecture of a control system according to an embodiment of this application;
FIG. 57 is a diagram of division of sound zones in a vehicle cockpit according to an embodiment of this application;
FIG. 58 is a diagram of an architecture of function layers of a control device according to an embodiment of this application;
FIG. 59 is a schematic flowchart of an audio control method according to an embodiment of this application;
FIG. 60 is a diagram of an audio playing manner according to an embodiment of this application;
FIG. 61 is a diagram of an impact factor of audio control according to an embodiment of this application;
FIG. 62(a) and FIG. 62(b) are a diagram of an audio control scenario and a control manner according to an embodiment of this application;
FIG. 63(a) and FIG. 63(b) are a diagram of an audio control scenario and a control manner according to an embodiment of this application;

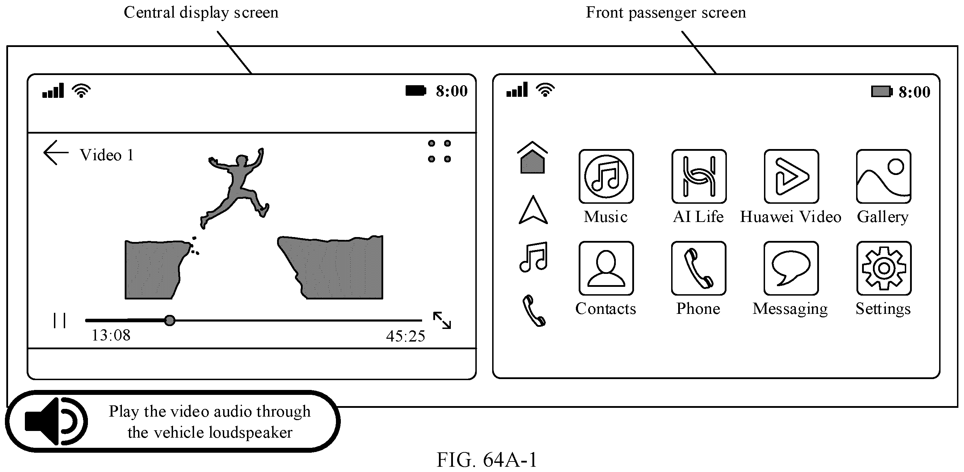

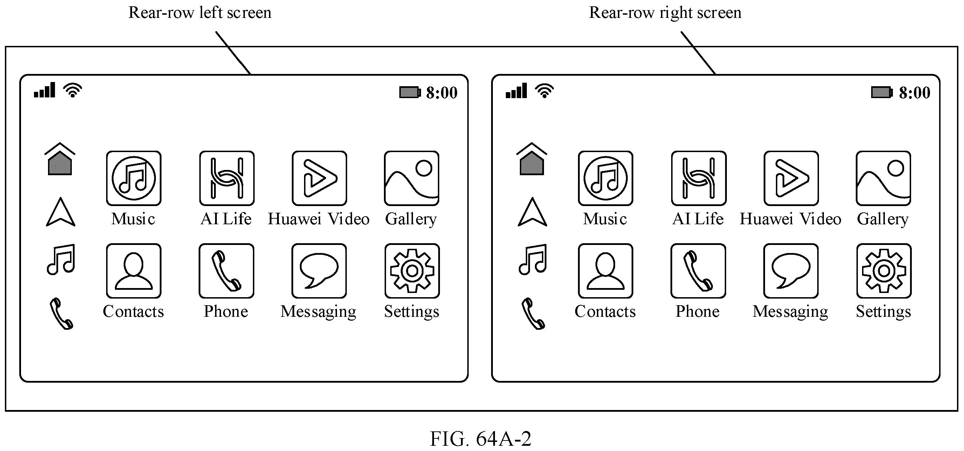

FIG. 64A-1 and FIG. 64A-2 are a diagram of an audio control scenario and a control manner according to an embodiment of this application;

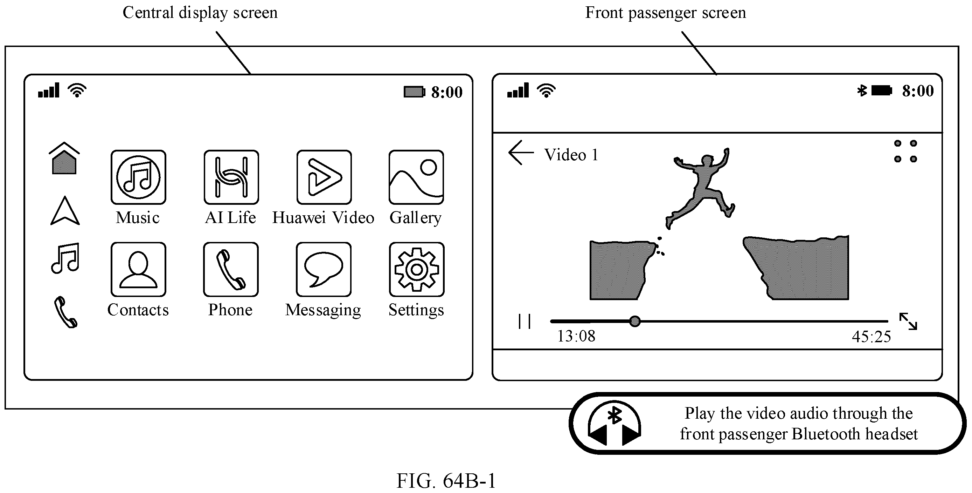

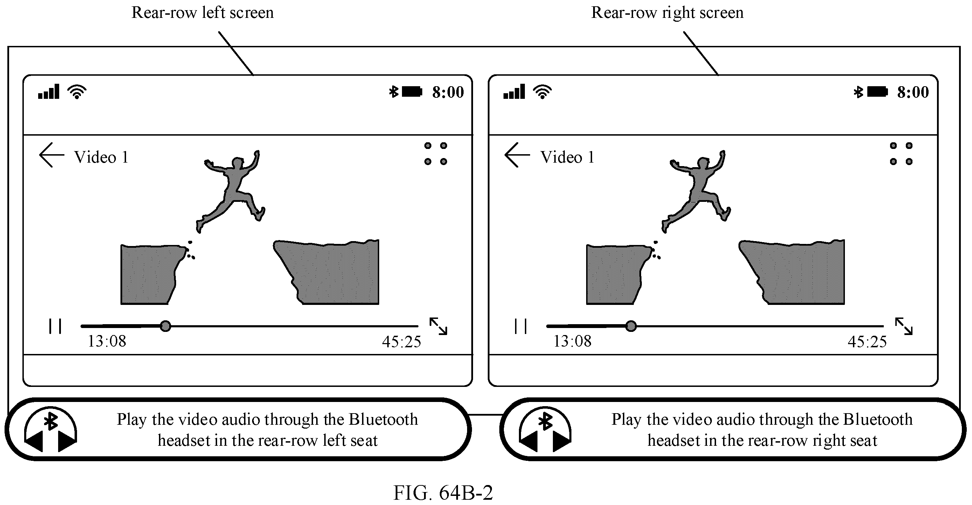

FIG. 64B-1 and FIG. 64B-2 are a diagram of an audio control scenario and a control manner according to an embodiment of this application;

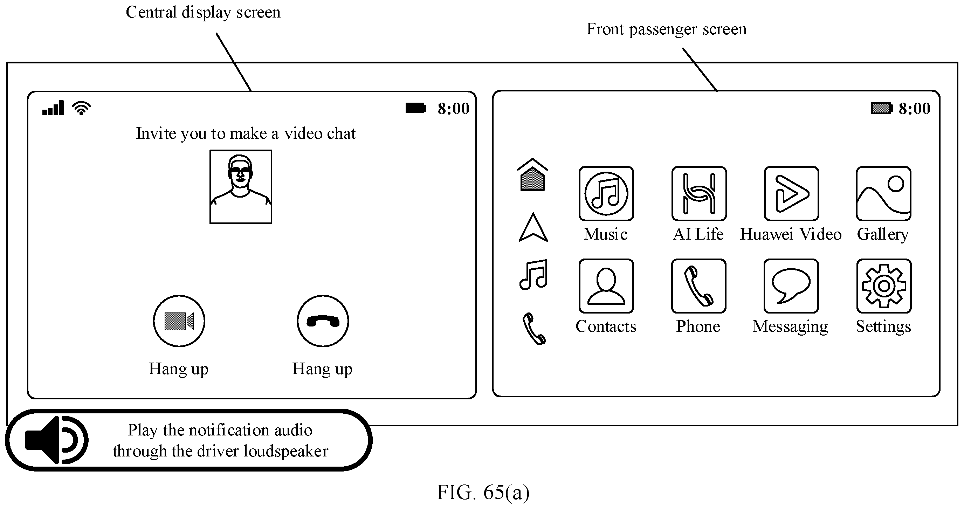

FIG. 65(a) to FIG. 65(c) are a diagram of an audio control scenario and a control manner according to an embodiment of this application;

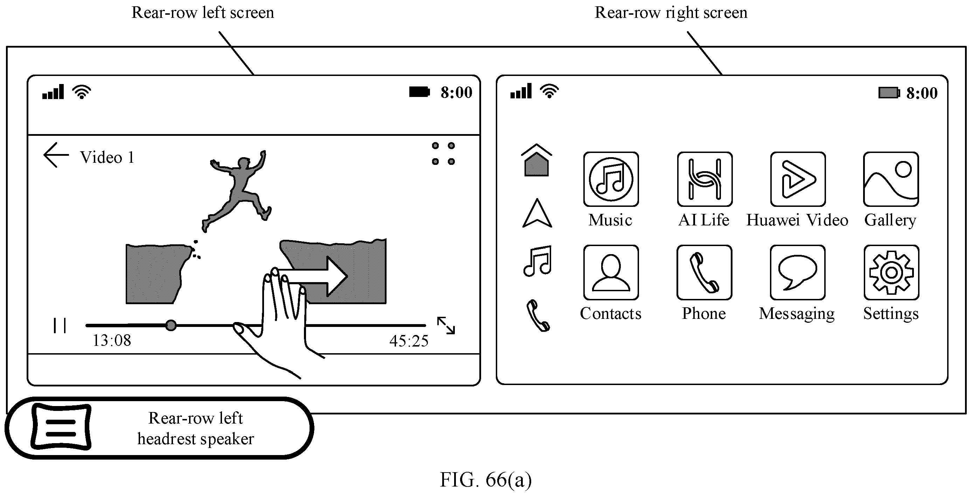

FIG. 66(a) to FIG. 66(c) are a diagram of an audio control scenario and a control manner according to an embodiment of this application;

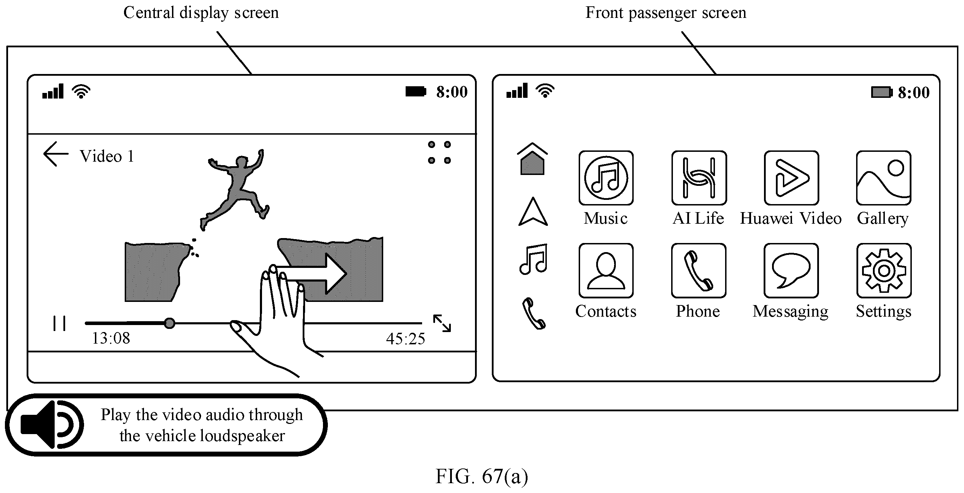

FIG. 67(a) to FIG. 67(c) are a diagram of an audio control scenario and a control manner according to an embodiment of this application;

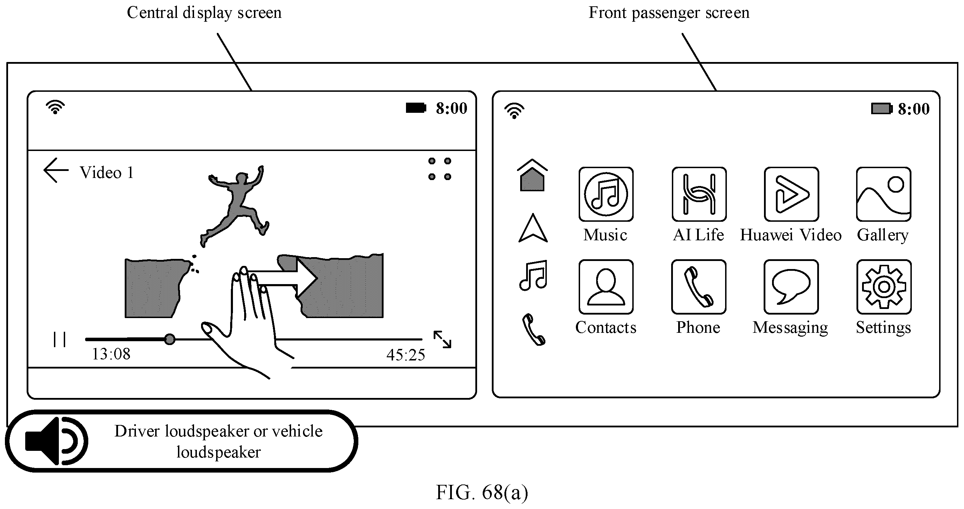

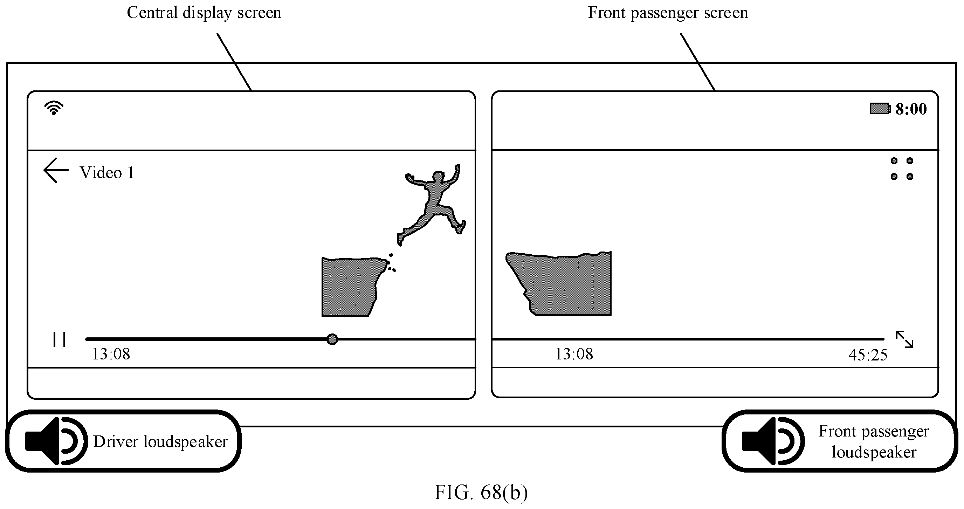

FIG. 68(a) and FIG. 68(b) are a diagram of an audio control scenario and a control manner according to an embodiment of this application;

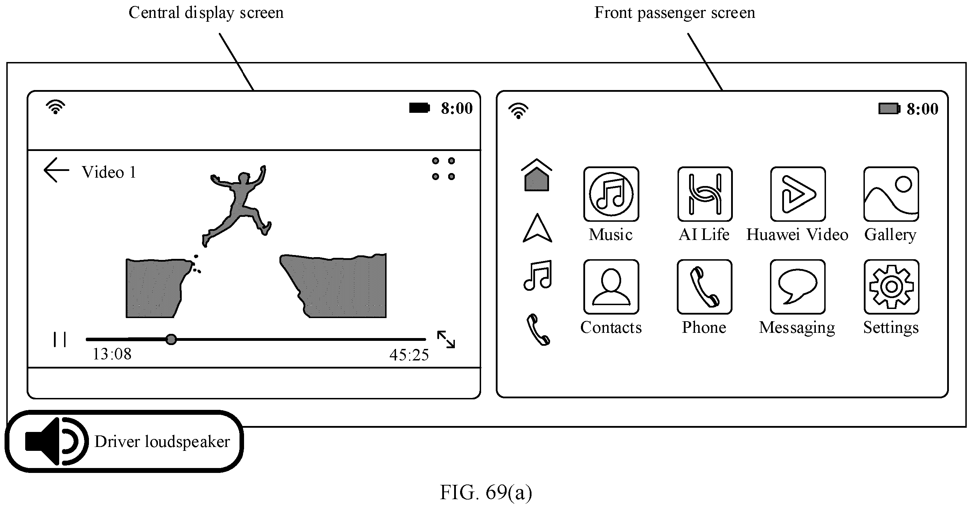

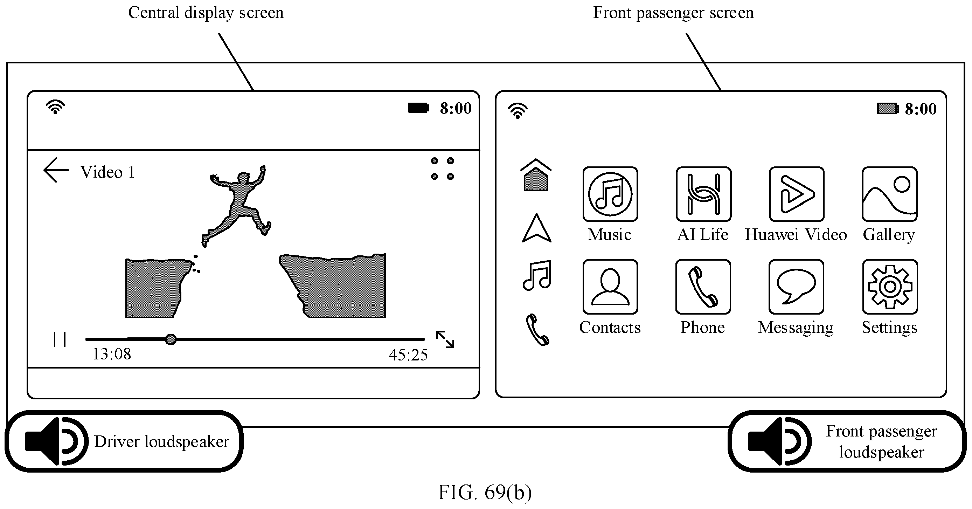

FIG. 69(a) and FIG. 69(b) are a diagram of an audio control scenario and a control manner according to an embodiment of this application;

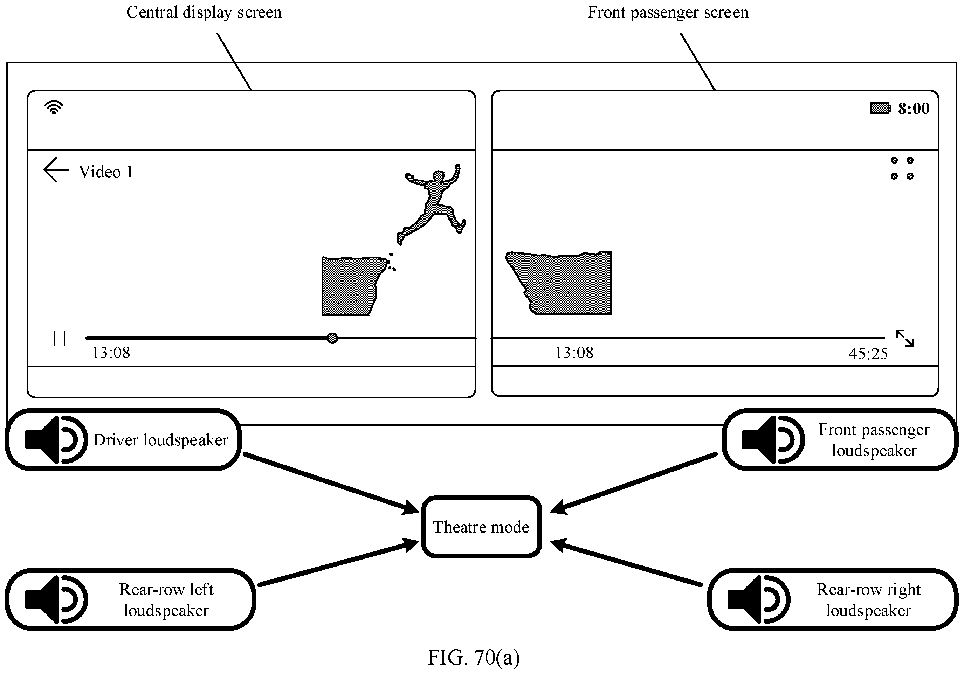

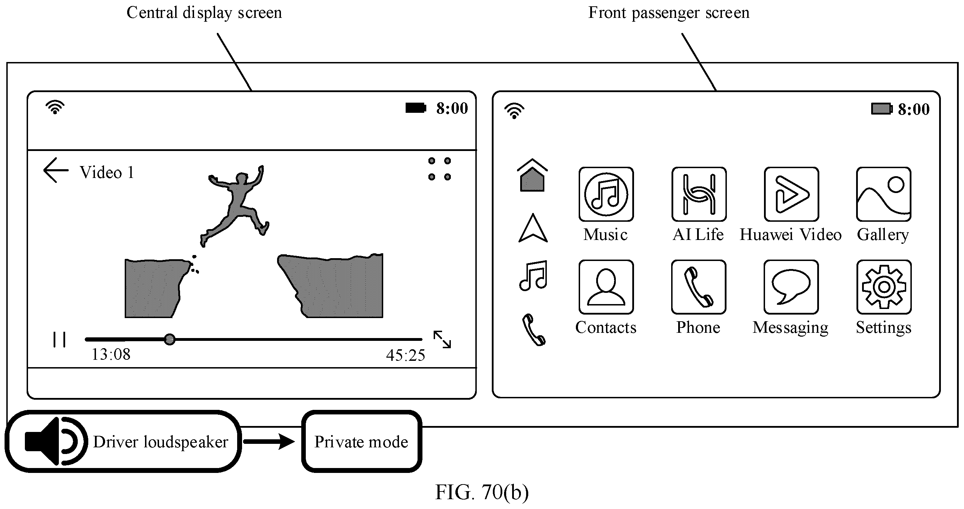

FIG. 70(a) and FIG. 70(b) are a diagram of an audio control scenario and a control manner according to an embodiment of this application;

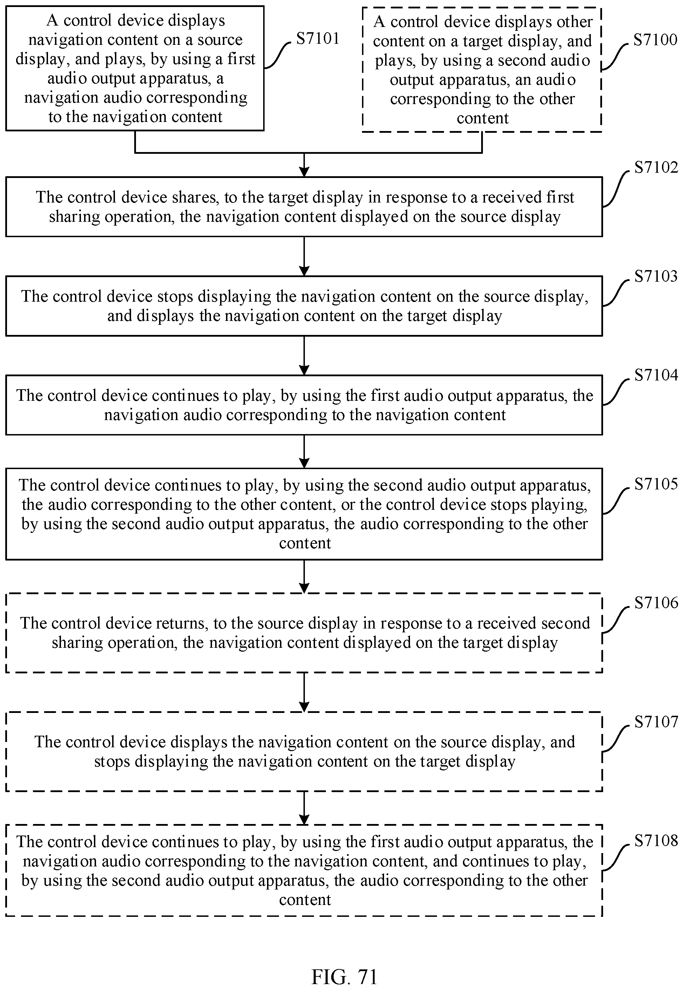

FIG. 71 is a schematic flowchart of an audio control method according to an embodiment of this application;

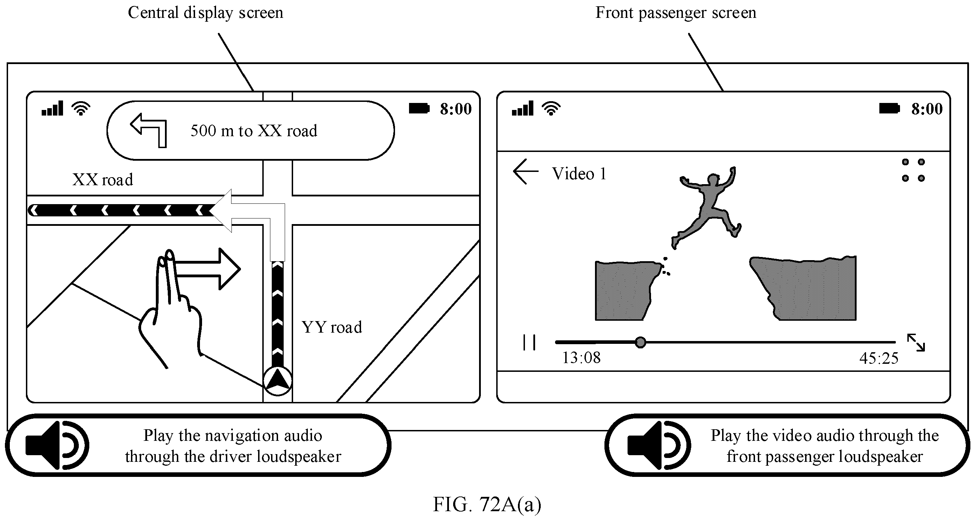

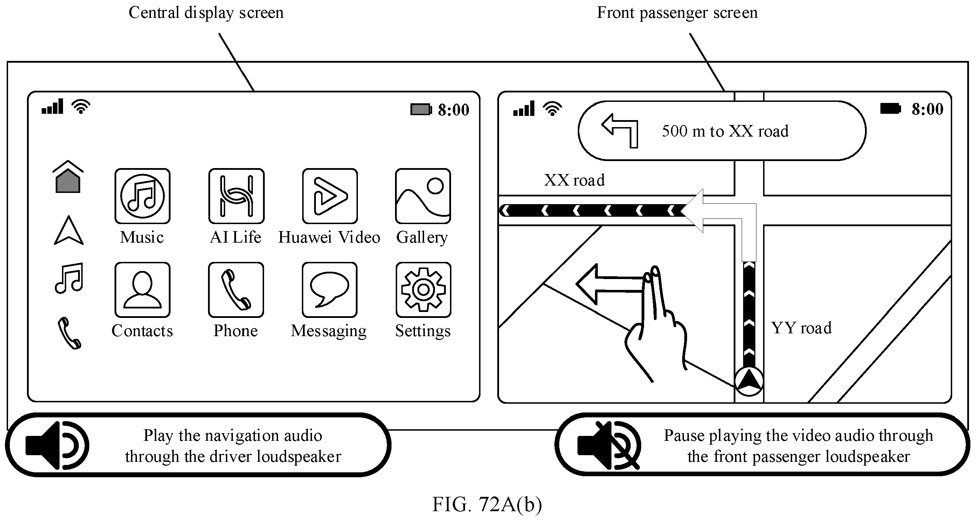

FIG. 72A(a) and FIG. 72A(b) are a diagram of an audio control scenario and a control manner according to an embodiment of this application;

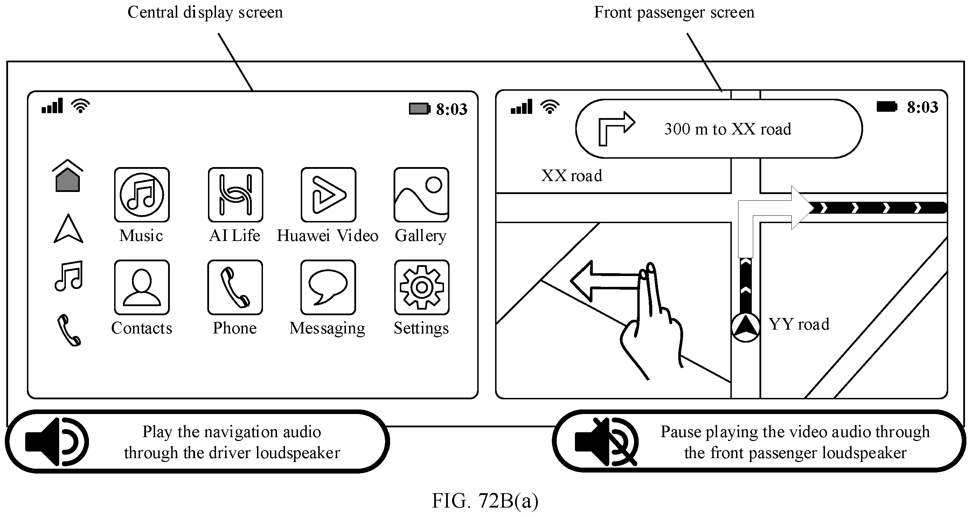

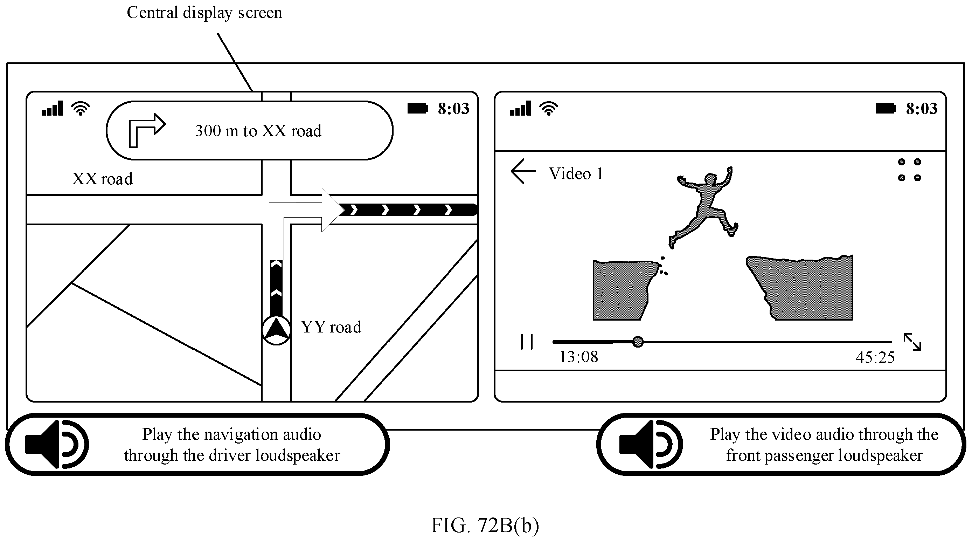

FIG. 72B(a) and FIG. 72B(b) are a diagram of an audio control scenario and a control manner according to an embodiment of this application;

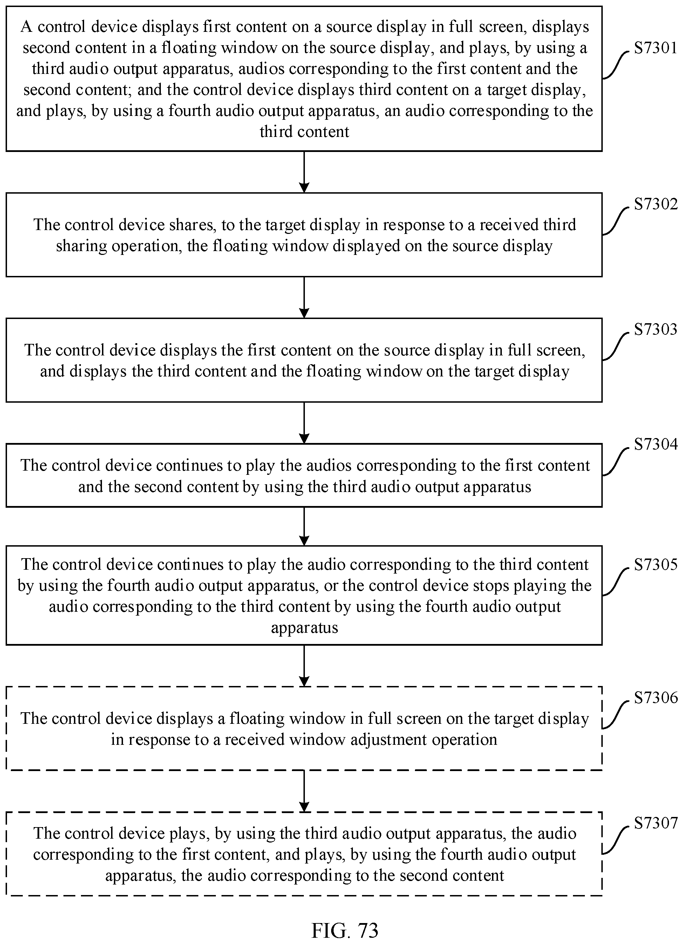

FIG. 73 is a schematic flowchart of an audio control method according to an embodiment of this application;

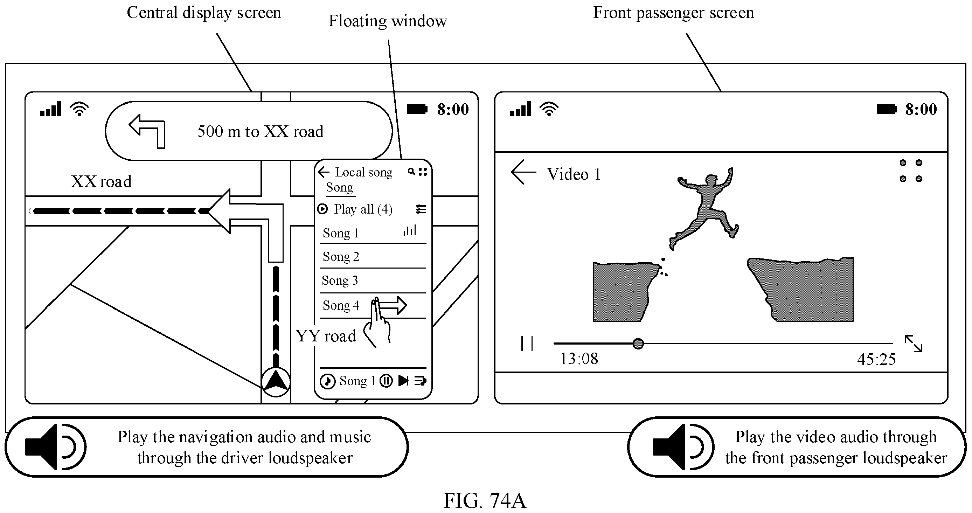

FIG. 74A is a diagram of an audio control scenario and a control manner according to an embodiment of this application;

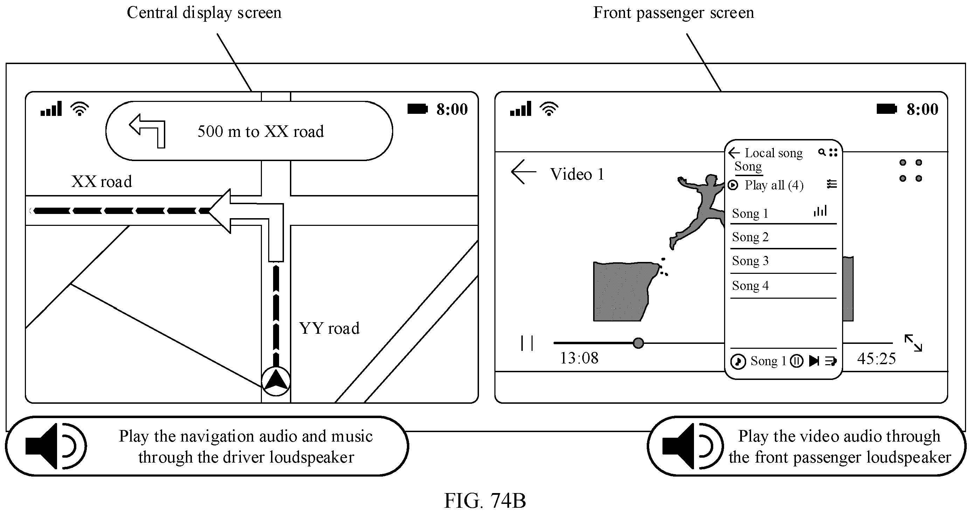

FIG. 74B is a diagram of an audio control scenario and a control manner according to an embodiment of this application;

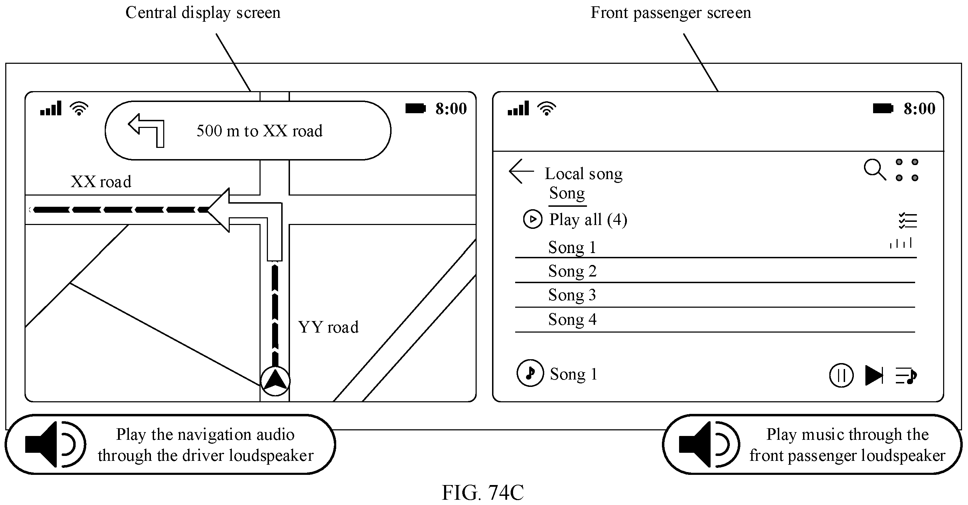

FIG. 74C is a diagram of an audio control scenario and a control manner according to an embodiment of this application;

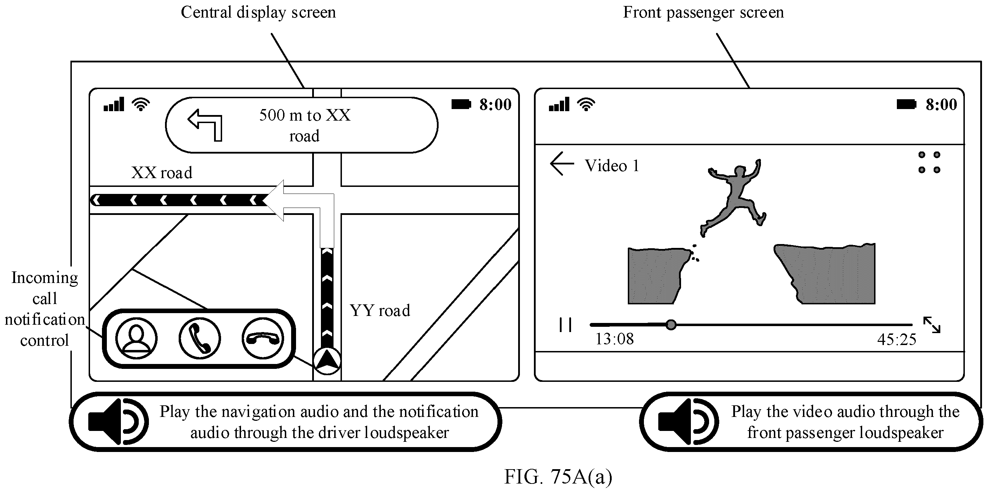

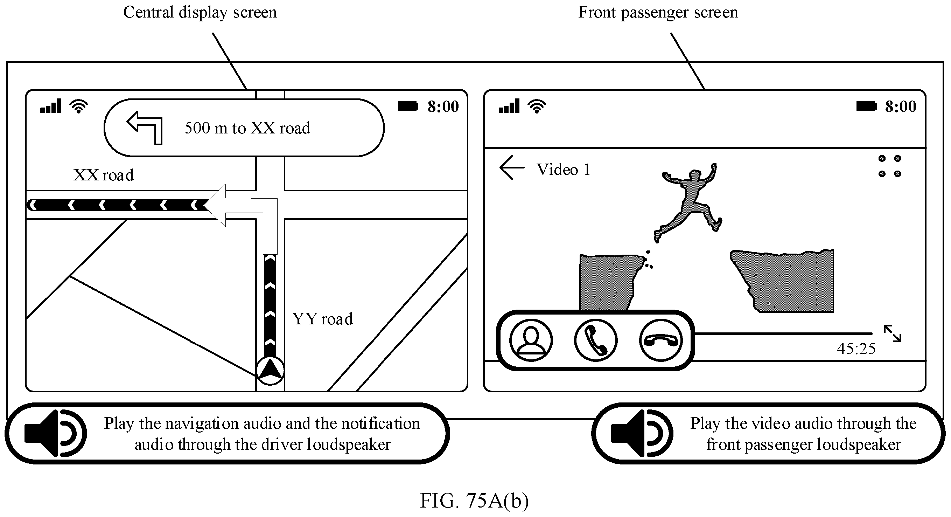

FIG. 75A(a) and FIG. 75A(b) are a diagram of an audio control scenario and a control manner according to an embodiment of this application;

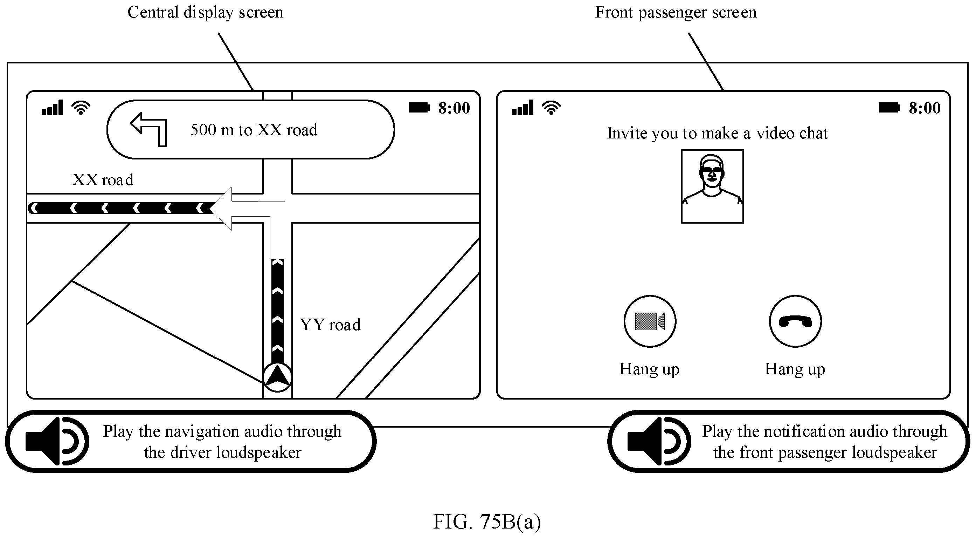

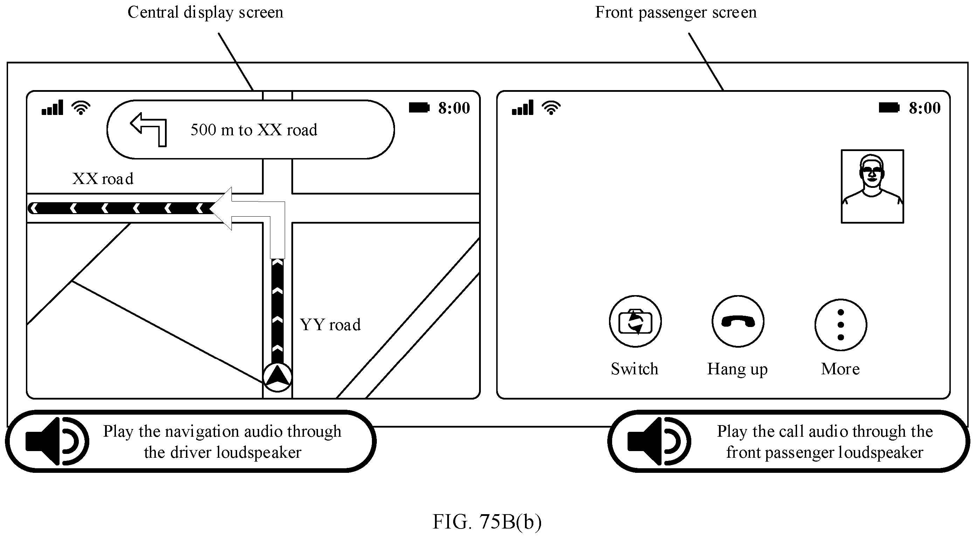

FIG. 75B(a) and FIG. 75B(b) are a diagram of an audio control scenario and a control manner according to an embodiment of this application;

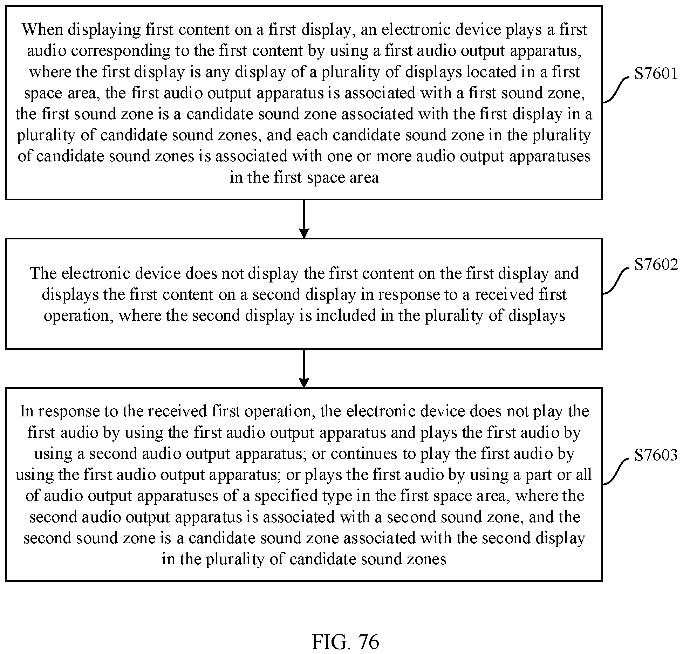

FIG. 76 is a diagram of an audio control method according to an embodiment of this application;

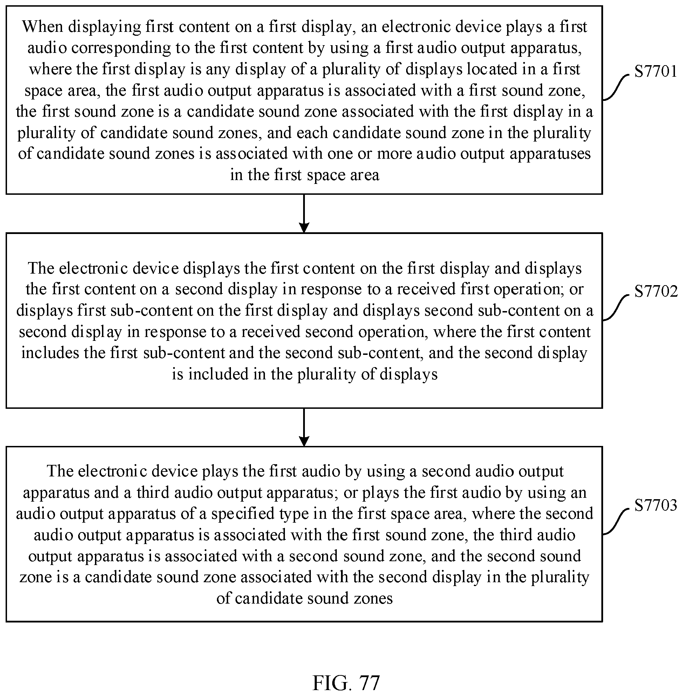

FIG. 77 is a diagram of an audio control method according to an embodiment of this application; and

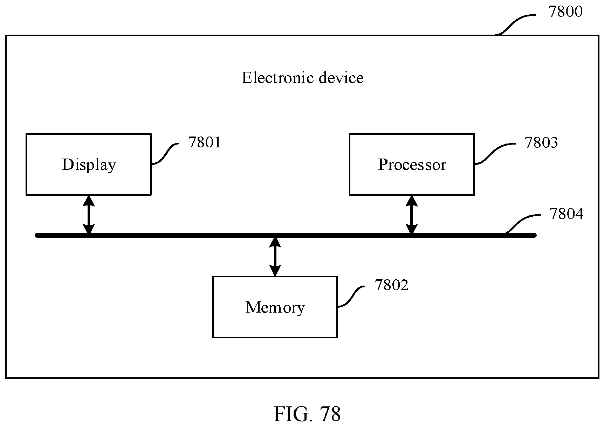

FIG. 78 is a diagram of a structure of an electronic device according to an embodiment of this application.

## DESCRIPTION OF EMBODIMENTS

To make objectives, technical solution, and advantages of embodiments of this application clearer, the following further describes embodiments of this application in detail with reference to the accompanying drawings. In descriptions of embodiments of this application, the following terms "first" and "second" are merely intended for a purpose of description, and shall not be understood as an indication or implication of relative importance or implicit indication of a quantity of

17

indicated technical features. Therefore, a feature limited by "first" or "second" may explicitly or implicitly include one or more features.

It should be understood that in embodiments of this application, "at least one" means one or more, and "a plurality of means two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects. "At least one of the following" or a similar expression thereof indicates any combination of these items, including a single item or any combination of a plurality of items. For example, at least one item (piece) of a, b, or c may represent: a, b, c, a and b, a and c, b and c, or a, b and c, where a, b, and c may be singular or plural.

Currently, more displays are configured in a vehicle, and a user has an increasing requirement for cross-screen interaction (for example, cross-screen transfer and a collaborative operation) on different displays. However, currently, interaction between in-vehicle displays is usually full-screen cross-screen transfer, which cannot meet diversified interaction requirements of the user. Therefore, how to efficiently perform interface transfer to provide the user with intelligent display that meets user requirements and habits is a problem to be studied.

In addition, as more displays are configured in the vehicle, a multi-screen-based immersive technology also develops. Currently, the multi-screen-based immersive technology mainly includes two forms: copying and displaying a same image by using a plurality of screens or splicing and displaying a same image by using a plurality of screens. More applications that provide immersive experience are developed based on multi-screen splicing. For example, after a passenger gets on the vehicle, the plurality of displays may display a start animation in a splicing manner; in a vehicle traveling process, the plurality of displays may display a navigation interface in the splicing manner; and when a video is played, the plurality of displays may display a video interface in the splicing manner. These methods for displaying an image in the splicing manner have a relatively high requirement on displayed content, where the displayed content is usually of a specific size customized by a specific manufacturer. Therefore, the methods can be applied only to specific scenarios (for example, preset scenarios such as a startup animation, a nap mode, a map, and a music rhythm effect), and can provide limited immersive experience, resulting in relatively low practicability.

In addition to a display apparatus, more audio output apparatuses (such as speakers) are currently configured in the vehicle. A vehicle cockpit is used as an example. Audio output apparatuses currently configured in the vehicle cockpit include an in-vehicle speaker, a headrest speaker, a Bluetooth headset, and the like. In the vehicle cockpit, users at different locations may have different requirements for listening to an audio. Therefore, an audio output apparatus configured to output the audio needs to be flexibly selected based on a user requirement. In addition, content displayed on displays at different locations may be different, and corresponding audios to be played may also be different. Therefore, when different displays display content, a used audio output apparatus also needs to be correspondingly adjusted. For audio control in the vehicle cockpit, a currently used solution is mainly as follows: In a plurality of set audio playing modes, a user may manually select an audio playing mode that needs to be adjusted; and after the user selects the audio playing mode, an audio output apparatus in the vehicle cockpit may play an audio in the audio playing mode selected by the user. Different audio playing modes correspond to different audio output apparatuses or audio output manners. In the foregoing audio control solution, manual intervention is required, the audio playing modes that can be selected by the user are limited, and control can be performed only in a preset fixed mode. Therefore, an audio playing control process is relatively inflexible, resulting in relatively low flexibility and practicability of audio control.

In view of the foregoing problems, embodiments of this application provide a control method. The method is used to control a content display manner and an audio playing manner in a multi-screen scenario, to improve control flexibility and practicability.

The method provided in embodiments of this application includes, in a multi-screen scenario, an interface transfer method, a multi-screen collaborative display method, an audio control method, and the like. The interface transfer method may be used to implement cross-screen transfer of a display interface between different displays. In some embodiments, the method may further implement cross-area (or cross-location) one-screen transfer of a display interface on a same display. The multi-screen collaborative display method is used to implement an effect of collaboratively displaying an image on a plurality of displays, to provide a user with immersive viewing experience. The audio control method is used to control a playing manner of an audio corresponding to a display, and is further used to implement audio transfer between different displays.

For ease of understanding, the following first briefly describes some names or terms that may appear in embodiments of this application.

(1) Split-screen display

In embodiments of this application, the "split-screen display" means that a display is divided into a plurality of areas, and each area displays an application window of a task interface. At a same moment, the plurality of areas of the display may separately display application windows of a plurality of task interfaces.

For example, refer to FIG. 2. FIG. 2 is a diagram of displaying a plurality of task interfaces in split screen according to an embodiment of this application. An interface A and an interface B shown in FIG. 2 are displayed on a display 100 in split screen. The interface A and the interface B may be task interfaces of a same application, or may be task interfaces of different applications.

(2) Full-screen display

In embodiments of this application, the "full-screen display" means that a display displays an application window of a task interface in full screen. Displaying the task interface in full screen on the display means displaying the task interface in all display areas that can be used for display on the display.

It should be noted that in embodiments of this application, displaying the task interface in full screen on the display does not indicate that the display does not display another interface element at the same time. For example, when displaying the task interface in full screen, the display may further display a status bar. The status bar may display information such as a network identifier (for example, a wireless fidelity (wireless fidelity, Wi-Fi) network identifier) and a remaining power identifier of an in-vehicle terminal. Certainly, when displaying the task interface in full screen, the display can display not only the status bar but also another interface element. Details are not described herein in embodiments of this application.

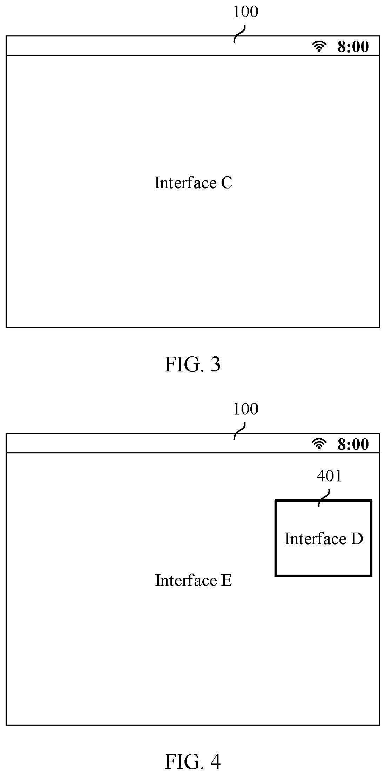

For example, refer to FIG. 3. FIG. 3 is a diagram of displaying a task interface in full screen according to an embodiment of this application. A window in which an interface C shown in FIG. 3 is located is displayed on a display 100 in full screen.

(3) Application window

In embodiments of this application, the "application window" is a basic unit that is set in a graphical user interface (graphical user interface, GUI) for an application to use data. The application may be an application (for example, Bluetooth or Gallery) integrated in an operating system of a device, or may be an application (for example, a map application, a music application, a video application, an email application, or a shopping application) installed by a user. This is not limited in embodiments of this application.

In embodiments of this application, the application window is, for example, a video application window, a navigation application window, or a music application window.

For example, the application window includes a full-screen application window and a split-screen application window. For example, refer to FIG. 2. The interface A and the interface B in FIG. 2 are window application interfaces, and windows in which the interface A and the interface B are located are displayed on the display 100 in split screen. For another example, refer to FIG. 3. The interface C shown in FIG. 3 is a window application interface, and the window in which the interface C is located is displayed on the display 100 in full screen.

(4) Floating window

In embodiments of this application, the "floating window" is a movable window displayed on a display in a floating manner. For example, the floating window may be displayed in a floating manner at an upper layer of an application window displayed on the display, and any operation (for example, an operation on the application window) performed by a user at a lower layer does not affect display (including a display location, a display type, and the like) of the floating window.

For example, refer to FIG. 4. FIG. 4 is a diagram of displaying a task interface in a form of floating window according to an embodiment of this application. As shown in FIG. 4, a window application interface E is displayed on a display 100 in full screen, an interface D is displayed in a floating window 401, the floating window 401 is displayed at an upper layer of the window application interface E in a floating manner, and an operation (for example, an operation on the interface E) performed by the user at a lower layer does not affect display of the floating window.

(5) Floating icon

In embodiments of this application, the "floating icon" is a movable icon displayed on a display in a floating manner. For example, the floating icon may be displayed in a floating manner at an upper layer of an application window displayed on the display, and any operation performed by a user on the application window does not affect display (including a display location, a display type, and the like) of the floating icon.

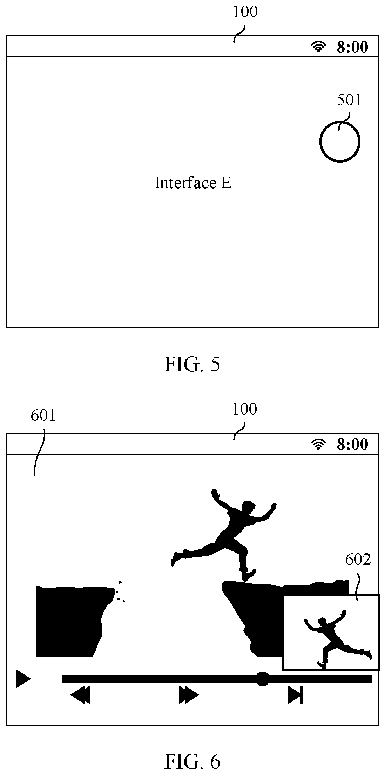

For example, refer to FIG. 5. FIG. 5 is a diagram of displaying a task interface in a form of floating icon according to an embodiment of this application. As shown in FIG. 5, a window application interface E is displayed on a display 100 in full screen, an icon 501 is displayed at an upper layer of the window application interface E in a floating manner, and an operation (for example, an operation on the interface E) performed by the user at a lower layer does not affect display of the icon 501. The icon 501 may correspond to a task interface D. For example, an in-vehicle terminal may display, in response to an access operation performed by the user on the icon 501, a task interface (namely, the interface D shown in FIG. 4) corresponding to the icon 501.

(6) Picture-in-picture (picture-in-picture, PiP)

In embodiments of this application, the "picture-in-picture" means that a video image (a "sub-image" for short) is independently displayed on another interface (for example, another video image (a "main image" for short)) in a form of overlay, where the sub-image may be always overlaid at an upper layer of the main image, and any operation performed by a user on the main image does not affect display (including a display location, a display type, and the like) of the sub-image.

For example, refer to FIG. 6. FIG. 6 is a diagram of displaying a task interface in a form of picture-in-picture according to an embodiment of this application. A video application interface 601 shown in FIG. 6 is displayed on a display 100 in full screen, a video image 602 is displayed at an upper layer of the video application interface 601 in a form of overlay, and an operation performed by the user on the video application interface 601 does not affect display of the sub-image.

(7) Widget

In embodiments of this application, the "widget" is also referred to as a "service widget", and means that some important interface information or operation entrances are pre-installed in the widget, to achieve a direct service.

In a possible form, the widget may be independently displayed on a display.

In another possible form, the widget may be embedded into another application as a part of an interface of the application, and supports a function such as pulling up a page.

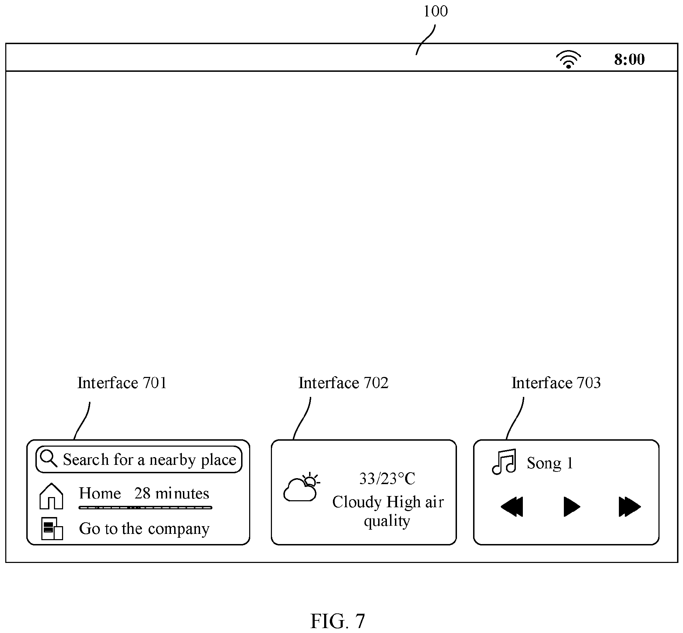

For example, refer to FIG. 7. FIG. 7 is a diagram of displaying a task interface in a form of widget according to an embodiment of this application. A display 100 shown in FIG. 7 displays a navigation widget interface 701, a weather widget interface 702, and a music widget interface 703. For example, the in-vehicle terminal may display, in response to an access operation performed by the user on a widget, a detailed information interface (namely, a task interface) corresponding to the widget.

(8) Notification

In embodiments of this application, the "notification" is notification information about an application, a received message, or the like that is displayed on a display. For example, in embodiments of this application, the notification is a WeChat® message notification, an incoming call notification, or the like.

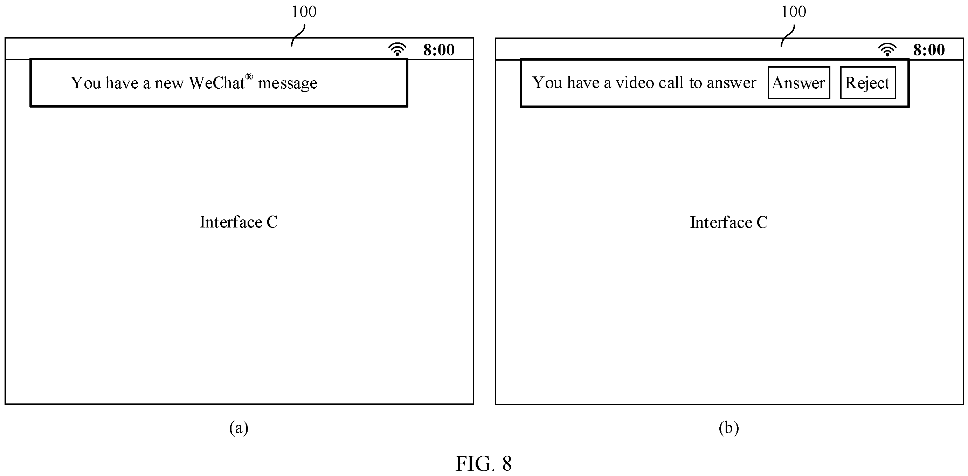

For example, refer to FIG. 8. FIG. 8 is a diagram of displaying two task interfaces in a form of notification according to an embodiment of this application. An interface C shown in both (a) in FIG. 8 and (b) in FIG. 8 is displayed on a display 100. When receiving a new WeChat® message, an in-vehicle terminal displays a WeChat® message notification shown in (a) in FIG. 8. Optionally, the in-vehicle terminal may display a detailed information interface (namely, a task interface) of the WeChat® message in response to an access operation performed by a user on the notified WeChat® message. Alternatively, when receiving a new video call request, the in-vehicle terminal displays a notification of a to-be-answered video call shown in (b) in FIG. 8. Optionally, the in-vehicle terminal may display a detailed information interface (namely, a task interface) of the video call in response to an operation performed by a user for answering the notified to-be-answered video call. Alternatively, optionally, the in-vehicle terminal may hang up the video call in response to an operation performed by a user for rejecting the notified to-be-answered video call.

(9) In-vehicle terminal

The in-vehicle terminal in embodiments of this application is a terminal device disposed on a vehicle. For example, the in-vehicle terminal may be integrated into the vehicle. Optionally, the in-vehicle terminal may alternatively be independent of the vehicle and installed on the vehicle.

In embodiments of this application, the vehicle does not refer to a specific type of transportation means. Optionally, the vehicle may be a ground-based transportation means, for example, a car, a bus, a subway, or a high-speed railway. Optionally, the vehicle may alternatively be a water surface-based transportation means, for example, a ship, a cushion ship, or a submarine. Optionally, the vehicle may alternatively be an air transportation means, for example, an airplane or a helicopter.

(10) Electronic device

The electronic device may be a device having a display function. Optionally, the electronic device may be a device having one or more displays.

In some embodiments of this application, the electronic device may be an in-vehicle terminal.

In some other embodiments of this application, the electronic device may be a portable device, for example, a mobile phone, a tablet computer, a wearable device with a wireless communication function (for example, a watch, a band, a helmet, or a headset), an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). Alternatively, the electronic device may be a smart home device (for example, a smart television or a smart sound box), a smart car, a smart robot, a workshop device, a wireless terminal in self driving (Self Driving), a wireless terminal in remote medical surgery (Remote Medical Surgery), a wireless terminal in a smart grid (Smart Grid), a wireless terminal in transportation safety (Transportation Safety), a wireless terminal in a smart city (Smart City), a wireless terminal in a smart home (Smart Home), a flight device (for example, a smart robot, a hot air balloon, an uncrewed aerial vehicle, or an airplane), or the like.

In some embodiments of this application, the electronic device may alternatively be a portable terminal device that further includes another function like a personal digital assistant and/or a music player function. An example embodiment of the portable terminal device includes but is not limited to a portable terminal device using iOS®, Android®, Microsoft', or another operating system. Alternatively, the portable terminal device may be another portable terminal device, for example, a laptop computer (Laptop) with a touch-sensitive surface (for example, a touch panel). It should be further understood that in some other embodiments of this application, the electronic device may alternatively be a desktop computer with a touch-sensitive surface (for example, a touch panel), instead of the portable terminal device.

The following describes, by using an example, a structure of a device to which the method provided in embodiments of this application is applicable.

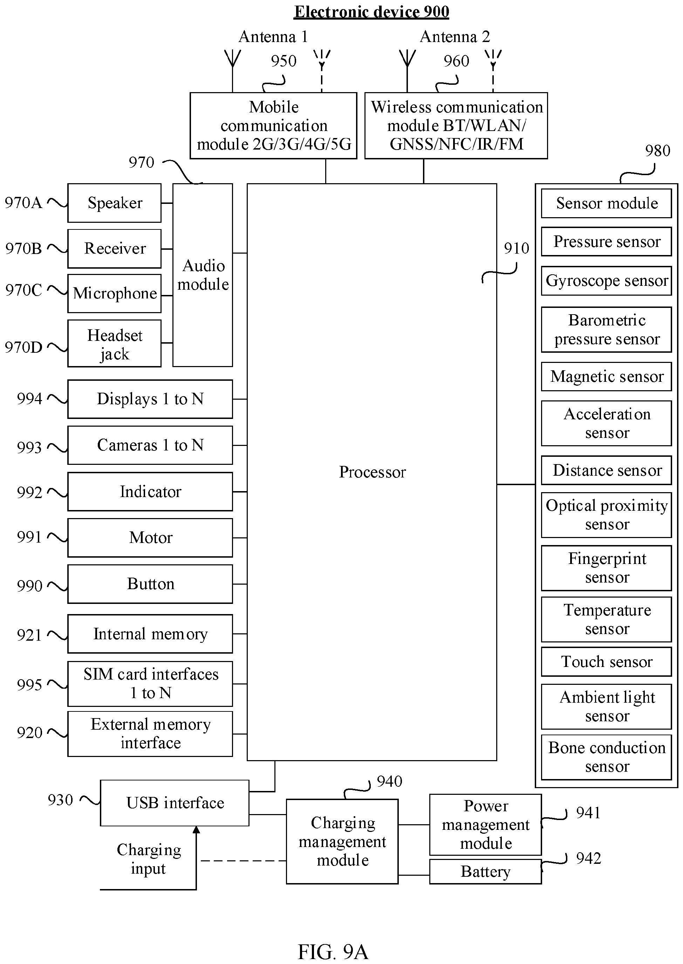

In an example, refer to FIG. 9A. FIG. 9A is a diagram of a hardware structure of an electronic device according to an embodiment of this application. Optionally, the electronic device may be an in-vehicle terminal.

As shown in FIG. 9A, an electronic device 900 may include a processor 910, an external memory interface 920, an internal memory 921, a universal serial bus (universal serial bus, USB) interface 930, a charging management module 940, a power management module 941, a battery 942, an antenna 1, an antenna 2, a mobile communication module 950, a wireless communication module 960, an audio module 970, a speaker 970A, a receiver 970B, a microphone 970C, a headset jack 970D, a sensor module 980, a button 990, a motor 991, an indicator 992, a camera 993, a display 994, a SIM card interface 995, and the like. The sensor module 980 may include a gyroscope sensor, an acceleration sensor, an optical proximity sensor, a fingerprint sensor, a touch sensor, a temperature sensor, a pressure sensor, a distance sensor, a magnetic sensor, an ambient light sensor, a barometric pressure sensor, a bone conduction sensor, and the like.

It may be understood that the electronic device 900 shown in FIG. 9A is merely an example, and does not constitute a limitation on the electronic device. In addition, the electronic device may have more or fewer components than those shown in the figure, or may combine two or more components, or may have different component configurations. Various components shown in FIG. 9A may be implemented by using hardware including one or more signal processing and/or application-specific integrated circuits, software, or a combination of hardware and software.

The processor 910 may include one or more processing units. For example, the processor 910 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (Neural-network Processing Unit, NPU). The different processing units may be independent components, or may be integrated into one or more processors.

The controller may be a nerve center and a command center of the electronic device 900. The controller may generate an operation control signal based on instruction operation code and a time sequence signal, to complete control of instruction fetching and instruction execution. The digital signal processor is configured to process a digital signal. In addition to the digital image signal, the digital signal processor may further process another digital signal. For example, when the electronic device performs frequency selection, the digital signal processor is configured to perform Fourier transform on frequency energy, or the like. The video codec is configured to: compress or decompress a digital video. The electronic device may support one or more types of video codecs. In this way, the electronic device may play or record videos in a plurality of coding formats, for example, moving picture experts group (moving picture experts group, MPEG)-1, MPEG-2, MPEG-3, and MPEG-4. The NPU is a neural-network (neural-network, NN) computing processor. The NPU quickly processes input information by drawing on a structure of a biological neural network, for example, by drawing on a transfer mode between human brain neurons, and may further continuously perform self-learning. The NPU can implement applications such as intelligent cognition of the electronic device, such as image recognition, facial recognition, speech recognition, and text understanding.

A memory may be further disposed in the processor 910, and is configured to store instructions and data. In some embodiments, the memory in the processor 910 is a cache. The memory may store instructions or data just used or cyclically used by the processor 910. If the processor 910 needs to use the instructions or the data again, the processor may directly invoke the instructions or the data from the memory. This avoids repeated access and reduces waiting time of the processor 910, thereby improving system efficiency.

Execution of the control method provided in embodiments of this application may be controlled by the processor 910 or completed by invoking another component, for example, invoking a processing program in this embodiment of this application stored in the internal memory 921, or invoking, by using the external memory interface 920, a processing program in this embodiment of this application stored in a third-party device, to control the wireless communication module 960 to perform data communication with another device, to implement intelligence and convenience of the electronic device 900, and improve user experience. The processor 910 may include different components. For example, when a CPU and a GPU are integrated, the CPU and the GPU may cooperate with each other to perform the control method provided in embodiments of this application. For example, some algorithms in the control method are executed by the CPU, and some algorithms are executed by the GPU, to obtain relatively high processing efficiency.

In some embodiments, the processor 910 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identification module interface, a universal serial bus interface, and/or the like.

The I2C interface is a two-way synchronous serial bus, including a serial data line (serial data line, SDA) and a serial clock line (serail clock line, SCL). In some embodiments, the processor 910 may include a plurality of groups of I2C buses. The processor 910 may be separately coupled to the touch sensor, the microphone, the camera 993, and the like through different I2C bus interfaces.

For example, in this embodiment of this application, the processor 910 may be coupled to the touch sensor through the I2C interface, so that the processor 910 communicates with the touch sensor through the I2C bus interface, to implement a touch function of the electronic device. Optionally, the processor 910 may be coupled to the camera 993 through the I2C interface, so that the processor 910 communicates with the camera 993 through the I2C bus interface, to implement an image obtaining function of the electronic device.

In some embodiments of this application, the processor 910 may obtain, through the I2C bus interface, a touch operation that is detected by the touch sensor and that is performed by a user on a display, for example, a tap operation, a touch and hold operation, a preset gesture operation, or a drag operation, to determine a specific intention corresponding to the touch operation, and respond to the touch operation to perform, for example, cross-screen interface transfer, one-screen interface transfer, or audio transfer.

Further, optionally, when the touch sensor detects the touch operation performed by the user on the display, the processor 910 may obtain, through the I2C bus interface, image information obtained by the camera 993, to recognize the user who inputs the touch operation, so as to perform corresponding interface transfer based on an identity of the user. For example, when receiving an operation performed by the user for starting an application on a driver screen and recognizing, based on the image information obtained by the camera 993, that the user is a front passenger, the electronic device may directly display an interface of the application on a front passenger screen in response to the operation for starting the application.

The I2S interface may be configured to perform audio communication. In some embodiments, the processor 910 may include a plurality of groups of I2S buses. The processor 910 may be coupled to the audio module 970 through the I2S bus, to implement communication between the processor 910 and the audio module 970. In some embodiments, the audio module 970 may transmit an audio signal to the wireless communication module 960 through the I2S interface, to implement a function of answering a call through a Bluetooth headset.

The PCM interface may also be configured to perform audio communication, and sample, quantize, and code an analog signal. In some embodiments, the audio module 970 may be coupled to the wireless communication module 960 through a PCM bus interface. In some embodiments, the audio module 970 may also transmit an audio signal to the wireless communication module 960 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 910 to the wireless communication module 960. For example, the processor 910 communicates with a Bluetooth module in the wireless communication module 960 through the UART interface, to implement a Bluetooth function. In some embodiments, the audio module 970 may transmit an audio signal to the wireless communication module 960 through the UART interface, to implement a function of playing music through the Bluetooth headset.

The MIPI interface may be configured to connect the processor 910 to a peripheral device like the display 994 or the camera 993. The MIPI interface includes a camera serial interface (camera serial interface, CSI), a display serial interface (display serial interface, DSI), and the like. In some embodiments, the processor 910 communicates with the camera 993 through the CSI, to implement an image obtaining function of the electronic device. The processor 910 communicates with the display 994 through the DSI interface, to implement a display function the of electronic device.

The GPIO interface may be configured by software. The GPIO interface may be configured for control signals or data signals. In some embodiments, the GPIO interface may be configured to connect the processor 910 to the camera 993, the display 994, the wireless communication module 960, the audio module 970, the sensor module 980, or the like. The GPIO interface may alternatively be configured as the I2C interface, the I2S interface, the UART interface, the MIPI interface, or the like.

The USB interface 930 is an interface that conforms to a USB standard specification, and may be specifically a mini USB interface, a micro USB interface, a USB Type-C interface, or the like. The USB interface 930 may be configured to exchange data between the electronic device and a peripheral device (for example, a mobile phone or a sound box), or may be configured to connect to a headset for playing an audio through the headset. The interface may be further configured to connect to another electronic device like a game device.

It should be understood that an interface connection relationship between modules illustrated in embodiments of this application is merely an illustrative description, and does not constitute a limitation on a structure of the electronic device. In some other embodiments of this application, the electronic device may alternatively use an interface connection manner different from that in the foregoing embodiment, or use a combination of a plurality of interface connection manners.

The display 994 is configured to display an image, a video, and the like. The display 994 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 900 may include one or N displays 994, where N is a positive integer greater than 1. The display 994 may be configured to display information entered by the user or information provided for the user and various graphical user interfaces (graphical user interfaces, GUIs). For example, the display 994 may display a photo, a video, a web page, a file, or the like.

In embodiments of this application, the display 994 may be an integrated flexible display, or may be a spliced display including two rigid screens and one flexible screen located between the two rigid screens.

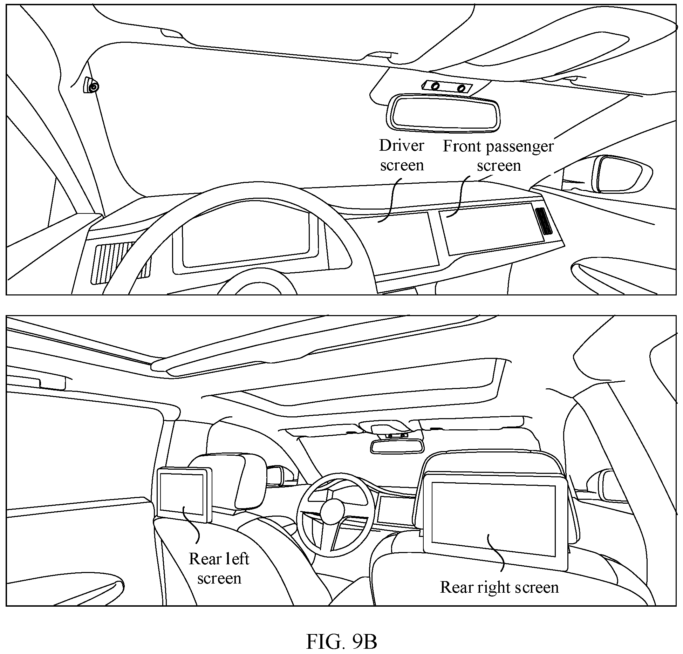

In embodiments of this application, the electronic device may include a plurality of displays 994. For example, as shown in FIG. 9B, for an electronic device on a car, for example, an in-vehicle terminal, the in-vehicle terminal may include a driver screen, a front passenger screen, a rear left screen, and a rear right screen. For another example, for an electronic device on a bus, for example, an in-vehicle terminal, the in-vehicle terminal may include a driver screen and one or more displays disposed in a carriage.

The electronic device implements a display function by using the graphics processing unit (graphics processing unit, GPU), the display 994, the application processor, and the like. The GPU is an image processing microprocessor, and is connected to the display 994 and the application processor. The GPU is configured to perform data and geometric computation for graphic rendering. The processor 910 may include one or more GPUs that execute program instructions to generate or change display information.

In embodiments of this application, the GPU may be configured to perform interface rendering. The display 994 may be configured to display an interface. For example, the interface may include but is not limited to an interface like an application interface (for example, a browser interface, an office application interface, a mailbox interface, a news application interface, a map application interface, or a social application interface), a floating window, a floating icon, a floating bubble, picture-in-picture, a widget, a notification, or an applet interface.

The camera 993 (a front-facing camera, a rear-facing camera, or a camera that may serve as both a front-facing camera and a rear-facing camera) is configured to capture a static image or a video. Usually, the camera 993 may include a photosensitive element, for example, a lens group and an image sensor. The lens group includes a plurality of lenses (convex lens or concave lens), and is configured to: collect an optical signal reflected by a to-be-shot object, and transfer the collected optical signal to the image sensor. The image sensor generates an original image of the to-be-shot object based on the optical signal. For example, an optical image of an object is generated through a lens, and is projected to the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format like red green blue (red green blue, RGB) or YUV

In embodiments of this application, the electronic device may include one or more cameras 993.

The electronic device may implement an image obtaining function (for example, photographing or image shooting) through the image signal processor (image signal processor, ISP), the camera 993, the video codec, the GPU, the display 994, the application processor, and the like. In this application, the camera 993 may be an optical zoom lens or the like. This is not limited in this application.

The ISP is configured to process data fed back by the camera 993. For example, during image shooting, a shutter is pressed, a ray of light is transmitted to a photosensitive element of the camera through a lens, and an optical signal is converted into an electrical signal. The photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 993.

The external memory interface 920 may be configured to connect to an external storage card, for example, a micro SD card, to extend a storage capability of the electronic device. The external storage card communicates with the processor 910 through the external memory interface 920, to implement a data storage function. For example, files such as music, videos, and pictures are stored in the external storage card.

The internal memory 921 may be configured to store computer-executable program code, and the executable program code includes instructions. The processor 910 runs the instructions stored in the internal memory 921 to perform various function applications of the electronic device 900 and data processing. The internal memory 921 may include a program storage area and a data storage area. The program storage area may store an operating system, code of an application required by at least one function, and the like. The data storage area may store data (for example, a task widget) created in a use process of the electronic device 900, and the like.

The internal memory 921 may further store one or more computer programs corresponding to the algorithm of the control method provided in embodiments of this application. The one or more computer programs are stored in the internal memory 921 and are configured to be executed by the one or more processors 910. The one or more computer programs include instructions, and the instructions may be used to perform the steps in the following embodiments.

In addition, the internal memory 921 may include a high-speed random access memory, and may further include a nonvolatile memory, for example, at least one magnetic disk storage device, a flash memory device, or a universal flash storage (universal flash storage, UFS).

Certainly, the code of the algorithm of the control method provided in embodiments of this application may be further stored in an external memory. In this case, the processor 910 may run, through the external memory interface 920, the code of the algorithm that is of the control method and that is stored in the external memory.

The touch sensor is also referred to as a "touch panel". The touch sensor may be disposed on the display 994, and the touch sensor and the display 994 constitute a displays touchscreen, which is also referred to as a "touch screen". The touch sensor is configured to detect a touch operation performed on or near the touch sensor. The touch sensor may transfer the detected touch operation (including information such as a touch location, touch strength, a contact area, and touch duration) to the application processor to determine a type of the touch event. A visual output related to the touch operation may be provided through the display 994. In some other embodiments, the touch sensor may also be disposed on a surface of the electronic device 900 at a location different from that of the display 994.

In embodiments of this application, the touch operation detected by the touch sensor may be an operation performed by the user on or near the touchscreen by using a finger, or may be an operation performed by the user on or near the touchscreen by using a stylus, a touch stylus, a touch ball, or another touch auxiliary tool. This is not limited in this application.

A wireless communication function of the electronic device 900 may be implemented through the antenna 1, the antenna 2, the mobile communication module 950, the wireless communication module 960, the modem processor, the baseband processor, and the like.

The antenna 1 and the antenna 2 are configured to: transmit and receive electromagnetic wave signals. Each antenna in the electronic device 900 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 950 may provide a wireless communication solution that is applied to the electronic device 900 and that includes 2G, 3G, 4G, 5G, and the like. The mobile communication module 950 may include at least one filter, a switch, a power amplifier, a low noise amplifier (low noise amplifier, LNA), and the like. The mobile communication module 950 may receive an electromagnetic wave through the antenna 1, perform processing such as filtering and amplification on the received electromagnetic wave, and transmit the electromagnetic wave to the modem processor for demodulation. The mobile communication module 950 may further amplify a signal modulated by the modem processor, and convert the signal into an electromagnetic wave for radiation through the antenna 1. In some embodiments, at least some functional modules of the mobile communication module 950 may be disposed in the processor 910. In some embodiments, at least some functional modules of the mobile communication module 950 and at least some modules of the processor 910 may be disposed in a same device. In embodiments of this application, the mobile communication module 950 may be further configured to exchange information with another device.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor, and then transferred to the application processor. The application processor outputs a sound signal through an audio Apparatus (not limited to the speaker 970A, the receiver 970B, and the like), and displays an image or a video through the display 994. In some embodiments, the modem processor may be an independent component. In some other embodiments, the modem processor may be independent of the processor 910, and is disposed in the same device with the mobile communication module 950 or another functional module.

The wireless communication module 960 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 900. The wireless communication module 960 may be one or more components integrating at least one communication processing module. The wireless communication module 960 receives an electromagnetic wave through the antenna 2, performs frequency modulation and filtering processing on an electromagnetic wave signal, and sends a processed signal to the processor 910. The wireless communication module 960 may further receive a to-be-sent signal from the processor 910, perform frequency modulation and amplification on the signal, and convert the signal into an electromagnetic wave for radiation through the antenna 2. In embodiments of this application, the wireless communication module 960 is configured to establish a connection to another electronic device to perform data exchange. Alternatively, the wireless communication module 960 may be configured to access the access point device, send a control instruction to another electronic device, or receive data sent by another electronic device.

In addition, the electronic device 900 may implement an audio function, for example, music playing and recording, by using the audio module 970, the speaker 970A, the receiver 970B, the microphone 970C, the headset jack 970D, the application processor, and the like.

The audio module 970 is configured to digital audio information into an analog audio signal for output, and is further configured to convert an analog audio input into a digital audio signal. The audio module 970 may be further configured to code and decode an audio signal. In some embodiments, the audio module 970 may be disposed in the processor 910, or some functional modules of the audio module 970 may be disposed in the processor 910.

The speaker 970A, also referred to as a "loudspeaker", is configured to convert an electrical audio signal into a sound signal. The electronic device may be used by the user to listen to Audio or answer a hands-free call through the speaker 970A.

The receiver 970B, also referred to as an "earpiece", is configured to convert an electrical audio signal into a sound signal.

The microphone 970C, also referred to as a "mike" or a "mic", is configured to convert a sound signal into an electrical signal. When making a call or sending speech information, a user may place the mouth of the user near the microphone 970C to make a sound, to input a sound signal to the microphone 970C. In this application, at least two microphones 970C, for example, a local microphone or a wireless microphone, may be disposed in the electronic device. In some other embodiments, three, four, or more microphones 970C may alternatively be disposed in the electronic device, to collect a sound signal, reduce noises, and the like. In embodiments of this application, the electronic device may collect a sound signal in the real world via the microphone 970C.

The electronic device 900 may receive an input of the button 990, and generate a key signal input related to a user setting and function control of the electronic device 900. The electronic device 900 may generate a vibration prompt (for example, an incoming call vibration prompt) by using the motor 991. The indicator 992 in the electronic device 900 may be an indicator light, may be configured to indicate a charging state and a battery level change, and may be further configured to indicate a message, a missed call, a notification, and the like. The SIM card interface 995 in the electronic device 900 is configured to connect to a SIM card. The SIM card may be inserted into the SIM card interface 995 or removed from the SIM card interface 995, to implement contact with or separation from the electronic device 900.

The power management module 940 is configured to supply power to the processor 910, the internal memory 921, the display 994, the camera 993, the wireless communication module 963, and the like.

It may be understood that, the structure shown in this embodiment of this application does not constitute a specific limitation to the electronic device. During actual application, the electronic device 900 may include more or fewer components than those shown in FIG. 9A. This is not limited in this embodiment of this application. The electronic device 900 shown in the figure is merely an example, and the electronic device 900 may have more or fewer components than those shown in the figure, may combine two or more components, or may have different component configurations. Various components shown in the figure may be implemented by using hardware including one or more signal processing and/or application-specific integrated circuits, software, or a combination of hardware and software.

A software system of the electronic device 900 may use a layered architecture, an event-driven architecture, a microkernel architecture, a micro service architecture, or a cloud architecture. In embodiments of this application, the Android system of the layered architecture is used as an example to describe the software structure of the electronic device.

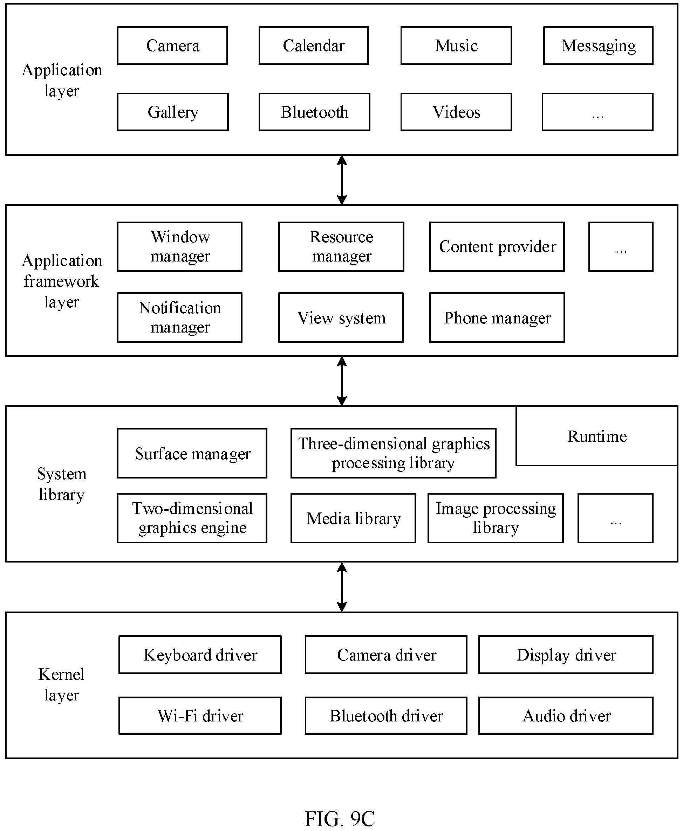

In the layered architecture, software is divided into several layers, and each layer has a clear role and task. The layers communicate with each other through a software interface. As shown in FIG. 9C, this software architecture may be divided into four layers: an application layer, an application framework (framework, FWK), a runtime and a system library, and a Linux kernel layer from top to bottom.

The application layer is the top layer of an operating system and includes native applications of the operating system, such as Camera, Gallery, Calendar, Bluetooth, Music, Videos, and Messaging. An application in embodiments of this application is a software program that can implement one or more specific functions. Usually, a plurality of applications may be installed in the electronic device, for example, a camera application, a mailbox application, and a smart home device control application. An application mentioned below may be a system application installed when the electronic device is delivered from the factory, or may be a third-party application downloaded by a user from a network or obtained by the user from another electronic device during use of the electronic device.

Certainly, a developer may compile an application and install the application at the layer. In a possible implementation, the application may be developed by using a Java language, and is completed by invoking an application programming interface (Application Programming Interface, API) provided by the application framework layer. The developer may interact with a bottom layer (for example, the kernel layer) of the operating system by using the application framework, to develop an application of the developer.

The application framework layer provides an application programming interface (application programming interface, API) and a programming framework for applications at the application layer. The application framework layer may include some predefined functions. The application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include information, for example, a file (for example, a document, a video, an image, or an audio) and a text.

The view system includes visual controls, for example, controls that display content, for example, texts, pictures, and documents. The view system may be configured to construct an application. An interface in a display window may include one or more views. For example, a display interface including an SMS message notification icon may include a text display view and a picture display view.

The phone manager is configured to provide a communication function of the electronic device. The notification manager enables an application to display notification information in a status bar, and may be configured to transmit a notification-type message. The displayed information may automatically disappear after a short pause without user interaction.

The runtime includes a core library and a virtual machine. The runtime is responsible for scheduling and management of the Android system.

The kernel library of the system includes two parts: One is a function that needs to be called in Java language, and the other is the kernel library of the system. The application layer and the application framework layer run on the virtual machine. Java is used as an example. The virtual machine executes Java files of the application layer and the application framework layer as binary files. The virtual machine is configured to perform functions such as object life cycle management, stack management, thread management, security and exception management, and garbage collection.

The system library may include a plurality of functional modules, for example, a surface manager, a media library, a three-dimensional graphics processing library (for example, OpenGL ES), a two-dimensional graphics engine (for example, SGL), and an image processing library. The surface manager is configured to manage a display subsystem and provide fusion of two-dimensional and three-dimensional graphics layers for a plurality of applications. The media library supports playback and recording in a plurality of commonly used audio and video formats, and static image files. The media library may support a plurality of audio and video encoding formats such as MPEG-4, H.564, MP3, AAC, AMR, JPG, and PNG. The three-dimensional graphics processing library is configured to implement three-dimensional graphics drawing, image rendering, compositing, layer processing, and the like. The two-dimensional graphics engine is a drawing engine for two-dimensional drawing.

The kernel (kernel) layer provides a core system service of the operating system. For example, security, memory management, process management, a network protocol stack, and a driver model are all based on the kernel layer. The kernel layer is also used as an abstraction layer between hardware and a software stack. The layer has many drivers related to the electronic device, mainly including a display driver, a driver of a keyboard used as an input device, a flash driver that is based on a memory technology device, a camera driver, an audio driver, a Bluetooth driver, a Wi-Fi driver, and the like.

It should be understood that the function service described above is merely an example. During actual application, the electronic device may alternatively be divided into more or fewer function services based on other factors, or may be divided into functions of each service in another manner, or may not be divided into function services, but works as a whole.

The following separately describes the interface transfer method, the multi-screen collaborative display method, and the audio control method that are provided in embodiments of this application.

Part 1: Interface transfer method

According to the interface transfer method provided in embodiments of this application, a task interface on a first screen can be transferred across screens to a second screen for display. For example, the task interface may be understood as an interface corresponding to an application running on an in-vehicle terminal.

In some embodiments, a plurality of task interfaces may be displayed on the first screen. Based on the interface transfer method provided in embodiments of this application, one of the plurality of task interfaces displayed on the first screen can be transferred to the second screen for display, or more than one (for example, two) of the plurality of task interfaces displayed on the first screen can be simultaneously transferred to the second screen for display.

In some other embodiments, one task interface may be displayed on the first screen. Based on the interface transfer method provided in embodiments of this application, the task interface displayed on the first screen can be transferred across screens to the second screen for display.

Optionally, in some other embodiments of this application, based on the interface transfer method provided in embodiments of this application, the task interface on the first screen can be transferred on one screen from a first location to a second location on the first screen for display.

Further, after the task interface on the first screen is transferred across screens to the second screen for display, based on the interface transfer method provided in embodiments of this application, the task interface transferred to the second screen may be further transferred back to the first screen for display, or the task interface transferred to the second screen may be transferred to a third screen for display.

Alternatively, further, after the task interface on the first screen is transferred on one screen from the first location to the second location on the first screen for display, based on the interface transfer method provided in embodiments of this application, the task interface transferred to the second location on the first screen may be further transferred across screens to the second screen for display, or the task interface transferred to the second location on the first screen may be transferred on one screen to a third location on the first screen for display. The third location may be the same as or different from the first location. This is not limited in embodiments of this application.

Based on the interface transfer method provided in embodiments of this application, when performing interface transfer, the in-vehicle terminal may determine, based on task information of a target screen (for example, the second screen) before the interface transfer, a display type on the target screen after the interface transfer. The task information of the target screen before the interface transfer may include a display type and/or classification information of a task interface displayed on the target screen before the interface transfer.

Optionally, based on the interface transfer method provided in embodiments of this application, when performing the interface transfer, the in-vehicle terminal may determine, based on task information of the first interface displayed on an original screen (for example, the first screen) before the interface transfer, the display type on the target screen after the interface transfer. The task information of the first interface displayed on the original screen (for example, the first screen) before the interface transfer includes a display type and/or classification information of the first interface displayed on the original screen (for example, the first screen) before the interface transfer.

Optionally, based on the interface transfer method provided in embodiments of this application, when performing the interface transfer, the in-vehicle terminal may further determine, based on task information of the first interface displayed on an original screen (for example, the first screen) before the interface transfer and/or task information of a target screen (for example, the second screen) before the interface transfer, a display type on the target screen after the interface transfer.

A display type of a task interface indicates a representation form of the task interface. For example, the display type of the task interface may include but is not limited to any one of full-screen display, split-screen display, a floating window, a floating icon, a floating bubble, picture-in-picture, a service widget, a control, a notification, or the like.

Classification information corresponding to the task interface indicates whether the task interface is a preset focused application interface. The preset focused application interface is an interface that is of an application with a relatively high priority and that is preset by a user. It may be understood that, in an in-vehicle scenario, some applications are relatively highly concerned by the user or are of relatively high importance, and display of these applications needs to be preferentially ensured. Therefore, the user may set a preset focused application based on a specific requirement of the user. For the preset focused application interface, when displaying the interface, including displaying the interface before and after the interface transfer, the in-vehicle terminal preferentially ensures eye-catching display (for example, full-screen display) of the interface, to avoid interference from another interface to the interface, and facilitate viewing and/or operation of the user.

For example, the preset focused application is a map application, a navigation application, or another application related to driving safety, or is a video application, a social application, an entertainment application (like a game application, a music application, or an office application), or another application that are frequently used by the user. The preset focused application is not specifically limited in embodiments of this application.

In embodiments of this application, different displays of the in-vehicle terminal may correspond to different preset focused applications. For example, a preset focused application corresponding to a driver screen may be a map application, a navigation application, or another application related to driving safety. A preset focused application corresponding to a front passenger screen, a rear left screen, or a rear right screen may be a video application, a social application, an entertainment application (like a game application, a music application, or an office application), or another application that are frequently used by the user.

It should be noted that specific display types of task interfaces on the original screen and the target screen before the interface transfer are not limited in embodiments of this application.

In a possible structure, the original screen and the target screen in embodiments of this application may belong to one in-vehicle terminal, and the original screen and the target screen may share modules such as a processor and a memory of the in-vehicle terminal. In other words, the in-vehicle terminal may include a plurality of displays, and the plurality of displays may work independently, for example, may separately perform audio and video playing, an entertainment game operation, and the like. A communication connection is established between the plurality of displays. For example, the plurality of displays may communicate with each other through a communication bus interface. For another example, the plurality of displays may communicate with each other through an in-vehicle local area network.

In another possible structure, the original screen and the target screen in embodiments of this application may separately belong to different in-vehicle terminals, and a communication connection is established between the in-vehicle terminals. In embodiments of this application, the cross-screen transfer of the task interface is cross-device interface transfer actually. For example, the in-vehicle terminals communicate with each other through a communication bus interface, or communicate with each other through an in-vehicle local area network.

It should be noted that, in embodiments of this application, a screen or a display screen may also be referred to as a display. For example, the first screen may also be referred to as a first display, the original screen may also be referred to as an original display, and the target screen may also be referred to as a target display.

The following describes in detail the interface transfer method provided in embodiments of this application with reference to a specific embodiment by using an example in which the in-vehicle terminal includes a plurality of displays (for example, including a first screen, a second screen, and a third screen).

In some embodiments, it is assumed that a task interface (denoted as a first task interface) is displayed on an original screen (for example, the first screen). Based on the interface transfer method provided in embodiments of this application, one or more of a plurality of task interfaces may be transferred across screens to a target screen (for example, the second screen or the third screen) for display.

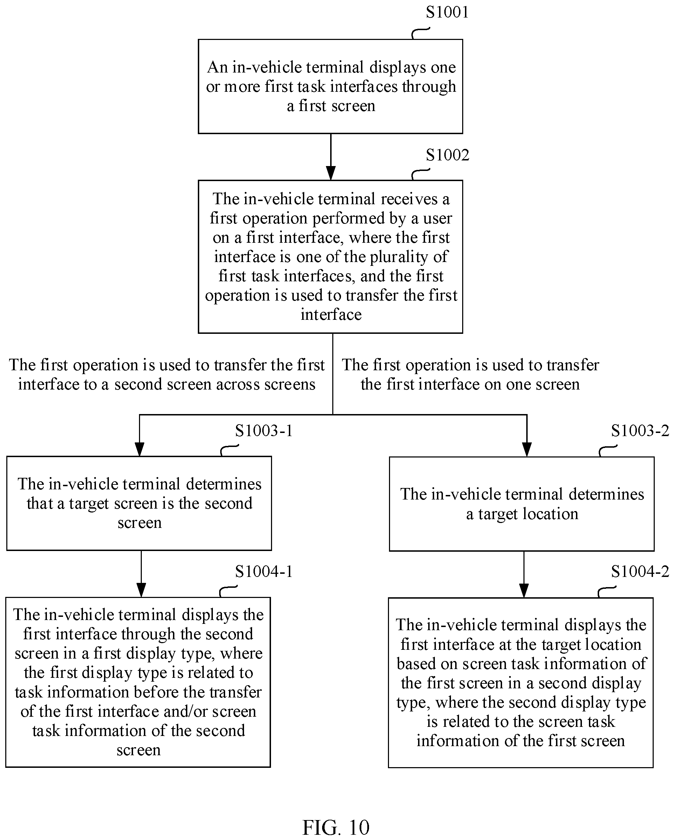

FIG. 10 is a flowchart 1 of an interface transfer method according to an embodiment of this application. As shown in FIG. 10, the interface transfer method according to this embodiment of this application may include S 1001 and S 1002.

S1001: An in-vehicle terminal displays one or more first task interfaces through a first screen.

In some embodiments, the in-vehicle terminal displays one first task interface through the first screen.

In some other embodiments, the in-vehicle terminal displays a plurality of first task interfaces through the first screen.

In this embodiment of this application, the one or more first task interfaces may be displayed on the first screen of the in-vehicle terminal in any display type.

If the in-vehicle terminal displays the one first task interface through the first screen, the one first task interface may be displayed on the first screen in full screen (as shown in FIG. 3), or may be displayed on a page like a first screen desktop, a notification center, or a control center in a representation form of a floating window, a floating icon, a floating bubble, picture-in-picture, a widget, a control, a notification, or the like.

If the in-vehicle terminal displays the plurality of first task interfaces through the first screen, in some examples, all the plurality of first task interfaces may be displayed on the first screen in a form of non-full screen. For example, as shown in FIG. 2, the interface A and the interface B are displayed on the display 100 in split screen. For another example, as shown in FIG. 7, the navigation widget interface 701, the weather interface 702, and the music widget interface 703 are displayed on the display 100 in non-full screen.

In some other examples, one of the plurality of first task interfaces may be displayed on the first screen in full screen, and the other interfaces are displayed on the first screen in a form of floating window, floating icon, floating bubble, picture-in-picture, widget, control, notification, or the like. For example, as shown in FIG. 4, the interface E is displayed on the display 100 in full screen, and the interface D is displayed on the display 100 in a form of floating window. For another example, as shown in FIG. 5, the interface E is displayed on the display 100 in full screen, and the task interface D is displayed on the display 100 in a form of floating icon. For another example, as shown in FIG. 6, the video application interface 601 is displayed on the display 100 in full screen, and the video image 602 is displayed on the display 100 in a form of picture-in-picture. For another example, as shown in FIG. 7, the interface 701 is displayed on the display 100 in full screen, and a health widget, a note widget, and an express query widget are displayed on the display 100 in a form of widget. For another example, as shown in (a) in FIG. 8, the interface C is displayed on the display 100 in full screen, and a WeChat® notification message is displayed on the display 100. For another example, as shown in (b) in FIG. 8, the interface C is displayed on the display 100 in full screen, and a notification of a to-be-answered video call is displayed on the display 100.

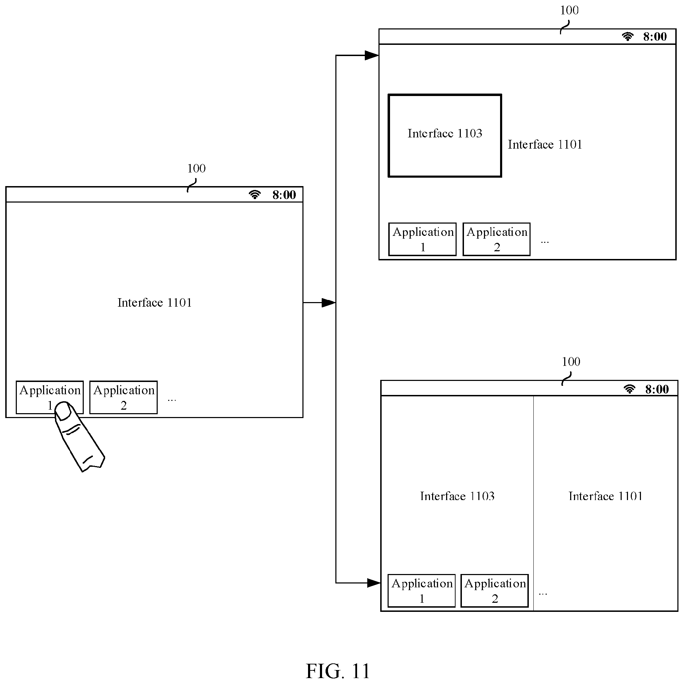

In embodiments of this application, the in-vehicle terminal may display the plurality of first task interfaces on the first screen in response to an operation performed by the user for starting the plurality of first task interfaces. For example, as shown in FIG. 11, when the in-vehicle terminal displays an interface 1101 in full screen through the display 100 (for example, the display 100 may be the first screen), the in-vehicle terminal displays, on the display 100 in response to an operation performed by the user for starting an application 1, an interface 1103 corresponding to the application 1. As shown in FIG. 11, the interface 1103 may be displayed at an upper layer of the interface 1101 in a form of floating window or picture-in-picture. The interface 1103 and the interface 1101 may alternatively be displayed on the display 100 in a form of split-screen display.

Optionally, if an application to which the interface 1101 shown in FIG. 11 belongs is a preset focused application corresponding to the display 100, when the in-vehicle terminal displays the interface 1101 in full screen through the display 100, in response to the operation performed by the user for starting the application 1 (as shown in FIG. 11, an operation that the user taps an icon of the application 1), the in-vehicle terminal may always keep the interface 1101 displayed in full screen, and display the interface 1103 corresponding to the application 1 in a form of floating window or picture-in-picture. In view of this, it can be ensured that an interface that is relatively highly concerned and/or is of relatively high importance can be displayed eye-catchingly, to avoid interference of another interface to the interface, and help the user view and perform an operation.

Alternatively, optionally, if an application to which the interface 1101 shown in FIG. 11 belongs is a preset focused application corresponding to the display 100, when the in-vehicle terminal displays the interface 1101 in full screen through the display 100, in response to the operation performed by the user for starting the application 1, if the application 1 is a non-preset focused application, the in-vehicle terminal may display the interface 1103 corresponding to the application 1 and the interface 1101 on the display 100 in a form of split screen based on a preset scale. For example, during split-screen display, a scale of an interface corresponding to a preset focused application to a non-preset focused application may be 1:2 or 2:1.

Alternatively, optionally, if an application to which the interface 1101 shown in FIG. 11 belongs is a preset focused application corresponding to the display 100, when the in-vehicle terminal displays the interface 1101 in full screen through the display 100, in response to the operation performed by the user for starting the application 1, if the application 1 is the preset focused application, the in-vehicle terminal may display the interface 1103 corresponding to the application 1 and the interface 1101 on the display 100 in a form of split screen at an interface scale of 1:1.

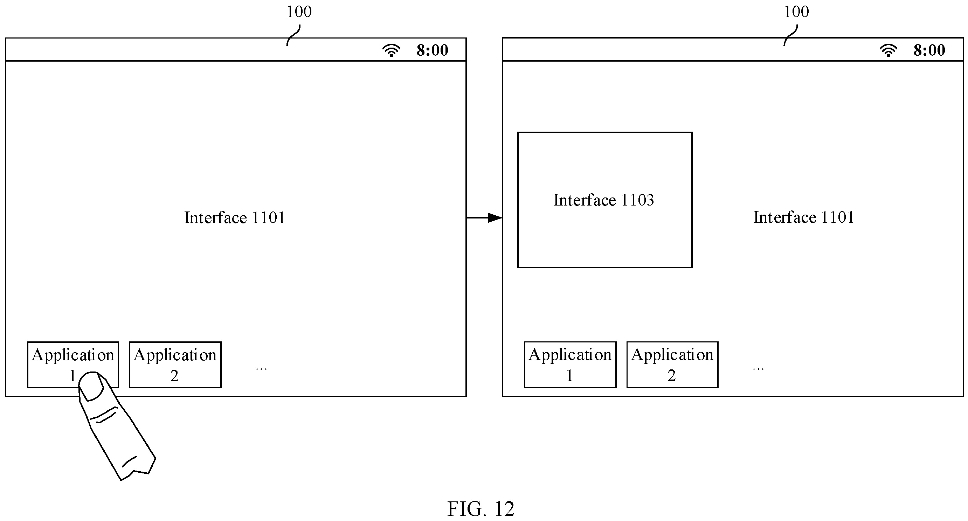

Optionally, as shown in FIG. 12, when the in-vehicle terminal displays the interface 1101 in full screen through the display 100 shown in FIG. 11, in response to the operation performed by the user for starting the application 1, if the in-vehicle terminal displays the interface 1103 corresponding to the application 1 in a form of floating window or picture-in-picture, the in-vehicle terminal may further perform interface adaptive layout adjustment (for example, adaptive location adjustment) on the interface 1101 displayed in full screen, to avoid blocking the interface 1101 by the interface 1103.

In an example, if the interface 1103 blocks a focused area (or a focus area) on the interface 1101, the in-vehicle terminal may perform adaptive location adjustment on the focused area (or the focus area) on the interface 1101 based on an area blocked by the interface 1103 on the interface 1101, so that the focused area (or the focus area) on the interface 1101 is not blocked by the interface 1103. The focused area (or the focus area) on the interface 1101 may be determined by the in-vehicle terminal based on one or more of the following: determining a function of information displayed on the interface 1101, an application function corresponding to the interface 1101, a type corresponding to a plurality of layers (Layer) on the interface 1101, a user-defined setting, and the like. This is not limited in embodiments of this application. For example, when the interface 1101 is an interface of a navigation application, the focused area on the interface 1101 may be an area on which a navigation route is displayed currently. Optionally, the in-vehicle terminal may also display, on the first screen in response to an operation performed by the user for starting a task combination, the plurality of first task interfaces corresponding to the task combination. Alternatively, the in-vehicle terminal may perform another process until the plurality of first task interfaces are displayed on the first screen. This is not limited in embodiments of this application.

It should be noted that FIG. 11 and FIG. 12 only show an example in which application icons (such as an icon of the application 1 and an icon of the application 2) are always displayed (as shown in the figures, displayed in a floating manner) on the display 100. In some embodiments, the application icons may alternatively be displayed on the display by the in-vehicle terminal in response to other operations such as an operation that the user accesses a desktop of the display or an operation that the user accesses a recently used application icon. This is not specifically limited in this application. Further, optionally, after the in-vehicle terminal displays the interface 1103 corresponding to the application 1 in response to the operation performed by the user for starting the application 1, the icon of the application may no longer be displayed on the display.

S1002: The in-vehicle terminal receives a first operation performed by the user on a first interface. The first interface is one of the one or more first task interfaces. The first operation is used to transfer the first interface.

The first operation is a transfer operation performed by the user on the first interface in the one or more first task interfaces displayed on the first screen. The first operation may include but is not limited to a preset sliding operation, a preset touch operation, a voice operation, a preset body action, and the like. This is not limited in this application.

For example, the preset sliding operation is an operation that a finger leaves after quickly sliding on the first interface, an operation that a finger leaves after slowly sliding for a distance on the first interface, an operation that a plurality of fingers (for example, two fingers or three fingers) leave after quickly sliding on the first interface, an operation that a plurality of fingers (for example, two fingers or three fingers) leave after slowly sliding for a distance on the first interface. For example, the preset touch operation is a touch and hold operation (for example, pressing duration meets a time threshold t), a double-tap operation, a multiple tap operation (for example, a double tap operation or a triple tap operation), a multi-finger pinch-in operation (for example, a two-finger pinch-in operation or a three-finger pinch-in operation), a multi-finger pinch-out operation (for example, a two-finger pinch-out operation or a three-finger pinch-out operation), or the like. For example, the preset body action is a preset air gesture operation or a preset facial expression.

In embodiments of this application, the first operation received by the in-vehicle terminal may be used to transfer the first interface across screens, or may be used to transfer the first interface on one screen.

User intentions corresponding to different operations such as the preset sliding operation, the preset touch operation, the voice operation, and the preset body action may be preset and associated by the user, or predefined by a system.

For example, if the user sets that a preset operation that two fingers leave after quickly sliding on the first interface is associated with the cross-screen transfer, when the in-vehicle terminal receives an operation that two fingers of the user leave after quickly sliding on the first interface, the in-vehicle terminal may determine that an intention of the user is to transfer the first interface across screens. For another example, if the user sets that a preset operation that two fingers leave after slowly sliding for a distance on the first interface is associated with the one-screen transfer, when the in-vehicle terminal receives an operation that two fingers of the user leave after slowly sliding for a distance on the first interface, the in-vehicle terminal may determine that an intention of the user is to transfer the first interface on one screen.

Optionally, to facilitate an operation of the user and provide more efficient interface transfer experience for the user, in some embodiments, the in-vehicle terminal may associate an interface transfer intention with a sliding operation of one or more fingers at different speeds (or accelerations). For example, the cross-screen transfer may be associated with an operation that one or more fingers leave after quickly sliding, and the one-screen transfer may be associated with an operation that one or more fingers leave after slowly sliding for a distance. Alternatively, the cross-screen transfer may be associated with an operation that one or more fingers leave after slowly sliding for a distance, and one-screen transfer may be associated with an operation that one or more fingers leave after quickly sliding. This is not specifically limited in this application.

In embodiments of this application, quick and slow are relative concepts. For example, if a sliding speed (or a sliding acceleration) is greater than a preset threshold, the in-vehicle terminal may consider that the sliding is quick sliding; or if a sliding speed (or a sliding acceleration) is less than or equal to a preset threshold, the in-vehicle terminal may consider that the sliding is slow sliding. Alternatively, if a sliding speed (or a sliding acceleration) is greater than or equal to a preset threshold, the in-vehicle terminal may consider that the sliding is quick sliding; or if a sliding speed (or a sliding acceleration) is less than a preset threshold, the in-vehicle terminal may consider that the sliding is slow sliding.

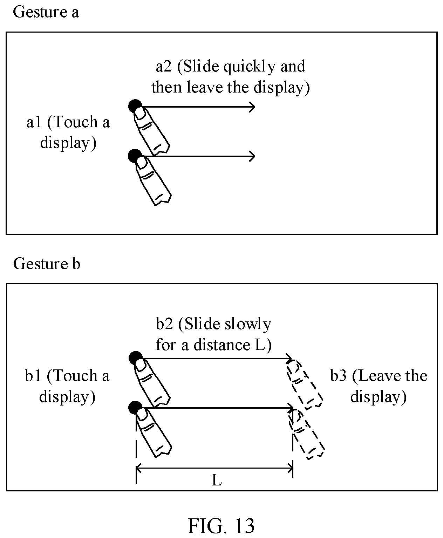

For example, refer to FIG. 13. FIG. 13 shows examples of a gesture for indicating an interface transfer intention according to an embodiment of this application. A gesture a shown in FIG. 13 is an operation that two fingers leave after quickly sliding. When the user performs the gesture a on the display, the following process is specifically included: Two fingers touch the display (a1 shown in FIG. 13), and the two fingers quickly slide and then leave the display (a2 shown in FIG. 13). A gesture b shown in FIG. 13 is an operation that two fingers leave after slowly sliding for a distance. When the user performs the gesture b on the display, the following process is specifically included: Two fingers touch the display (b 1 shown in FIG. 13), the two fingers slowly slide for a distance L (b2 shown in FIG. 13), and then the two fingers leave the display (b3 shown in FIG. 13). In addition, when the cross-screen transfer is associated with the operation that one or more fingers leave after quickly sliding, and the one-screen transfer is associated with the operation that one or more fingers leave after slowly sliding for a distance, optionally, the distance L of the slow sliding may be a distance for which the first interface moves on the first screen.

It may be understood that a one-finger or multi-finger sliding operation complies with operation habits of most users, and helps the users memorize and perform the operation. Therefore, specific interface transfer intentions such as a cross-screen transfer intention and a one-screen transfer intention are identified based on different sliding speeds (or sliding accelerations). This can facilitate memory and operation of the user, and can further improve performance of interaction between the in-vehicle terminal and the user, to improve user experience.

In embodiments of this application, in an example, the in-vehicle terminal may determine a sliding speed of a finger of the user on the display based on received MotionEvent (for example, MotionEvent.ACTION_MOVE ("ACTION MOVE event" for short below)). The sliding speed of the finger of the user on the display may be represented by a pixel at which the finger of the user slides on the display in a unit time (for example, 1 second).

It may be understood that MotionEvent is a time sequence related to a user touch. An operation (for example, a slide operation) performed by the finger of the user on the display indicates a touch event. For the multi-finger sliding operation, a MotionEvent.ACTION_DOWN event ("ACTION_DOWN event" for short below) is generated when a first finger of the user touches the display; an ACTION_POINTER_DOWN event is generated when a second finger or one or more next fingers touch the display; the ACTION_MOVE event is generated in a multi-finger sliding process; an ACTION_POINTER_UP event is generated when a non-last finger leaves the display; and a MotionEvent.ACTION_UP event (ACTION_UP event for short below) is generated when a last finger leaves the screen.

The ACTION_DOWN event indicates a start of the multi-finger sliding operation. To be specific, when the in-vehicle terminal detects that a touch point on the display is pressed, the ACTION_DOWN event is triggered.

The ACTION_MOVE event is triggered by an operation that a plurality of fingers of the user press the screen and sliding. To be specific, when the in-vehicle terminal detects that a plurality of touch points on the display are pressed and move, the ACTION_MOVE event is triggered.

The ACTION_UP event indicates an end of the multi-finger sliding operation. To be specific, when the in-vehicle terminal detects that no touch point on the display is pressed by the user, the ACTION_UP event is triggered.

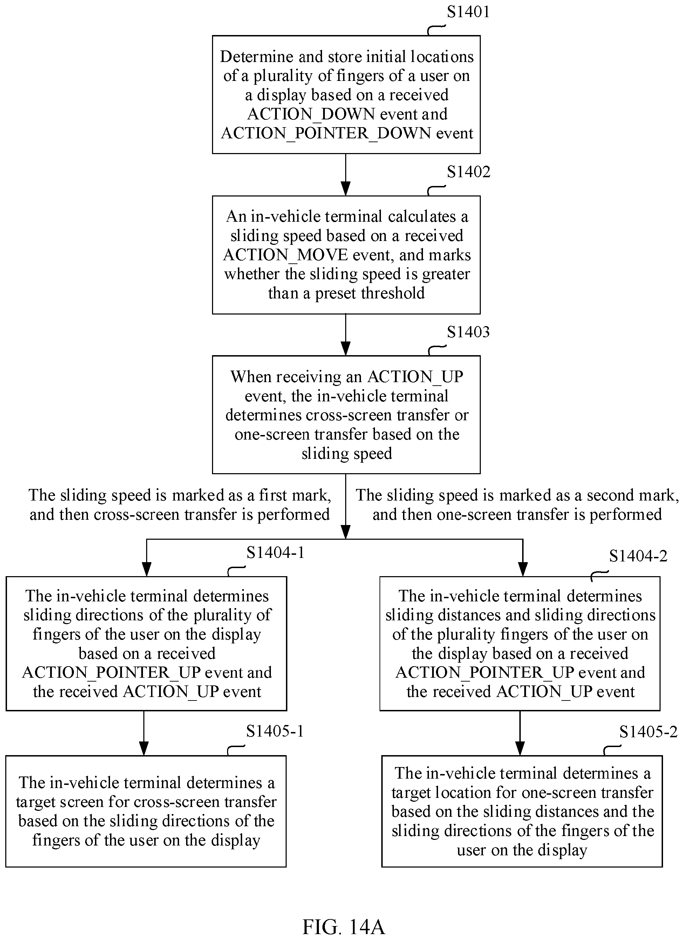

Based on the foregoing touch event mechanism, in a possible implementation, the in-vehicle terminal may determine, based on a method shown in FIG. 14A and the received first operation performed by the user on the first interface, whether the operation is used to transfer the first interface to the second screen across screens or transfer the first interface on one screen. The first operation performed by the user on the first interface in S 1002 shown in FIG. 10 may correspond to events ACTION DOWN+ACTION POINTER DOWN+ACTION MOVE+ACTION POINTER UP +ACTION UP shown in FIG. 14A.

As shown in S1401 in FIG. 14A, the in-vehicle terminal may determine and store initial locations of the plurality of fingers of the user on the display based on a received ACTION DOWN event and ACTION POINTER DOWN event.

For example, when receiving the ACTION_DOWN event, the in-vehicle terminal may determine and store a finger index of a first finger that is of the user and that touches the display and initial location coordinates (initial coordinates for short) of the finger on the display. For example, the in-vehicle terminal may determine an initial location of the finger of the user on the display based on the finger index, store the finger index into ArrayList, and store the initial location coordinates (namely, the initial coordinates) into HashMap based on the finger index.

Similarly, when receiving the ACTION_POINTER_DOWN event, the in-vehicle terminal may determine and store finger indexes of one or more other fingers that are of the user and that touch the display and initial coordinates of the fingers on the display. For example, the in-vehicle terminal may determine initial locations of the one or more other fingers of the user on the display based on the finger indexes, store the finger indexes into ArrayList, and store the initial coordinates into HashMap based on the finger indexes.

As shown in S 1402 in FIG. 14A, the in-vehicle terminal may calculate a sliding speed based on a received ACTION_MOVE event, and mark whether the sliding speed is greater than a preset threshold.

For example, when receiving the ACTION_MOVE event, the in-vehicle terminal calculates an average sliding speed of one or more fingers in real time. For example, the average sliding speed of the one or more fingers may include a speed of the one or more fingers in an x-axis direction and a speed of the one or more fingers in a y-axis direction. The in-vehicle terminal may separately compare the speed of the one or more fingers in the x-axis direction and the speed of the one or more fingers in the y-axis direction with preset thresholds, to determine whether the sliding speed is greater than a corresponding preset threshold, and further mark whether the sliding speed is greater than the preset threshold.

Optionally, the ACTION_MOVE event is generated a plurality of times in a one-finger or multi-finger sliding process. Therefore, a mark indicating whether the sliding speed is greater than the preset threshold is also refreshed a plurality of times.

Further, as shown in S1403 in FIG. 14A, when receiving the ACTION_UP event, the in-vehicle terminal determines cross-screen transfer or one-screen transfer based on the sliding speed.

For example, if the sliding speed of the finger of the user on the display is greater than (or greater than or equal to) the preset threshold, the in-vehicle terminal may consider that the sliding is quick sliding; or if the sliding speed of the finger of the user on the display is less than or equal to (or less than) the preset threshold, the in-vehicle terminal may consider that the sliding is slow sliding.

It should be noted that cross-screen sliding can be actually implemented only when a speed in the sliding direction is greater than the preset threshold. For example, sliding speeds in a right direction and a left direction need to be determined by determining whether a speed in the x-axis direction is greater than the preset threshold; and sliding speeds directly ahead and directly behind need to be determined by determining whether a speed in the y-axis direction is greater than the preset threshold. Optionally, in another direction, whether a speed is greater than the preset threshold may be determined by randomly selecting a speed in the x-axis direction or a speed in the y-axis direction.

Based on the foregoing mechanism, the in-vehicle terminal may determine whether the interface transfer intention of the user is cross-screen transfer or one-screen transfer.

For example, as shown in FIG. 14A, if the sliding speed is marked as a first mark, the cross-screen transfer branch in S1404-1 and S1405-1 is performed. The first mark indicates that the sliding speed is greater than the preset threshold.

S1404-1: The in-vehicle terminal determines sliding directions of the plurality of fingers of the user on the display based on a received ACTION_POINTER_UP event and the received ACTION UP event.

For example, when receiving the ACTION_POINTER_UP event, the in-vehicle terminal may store end location coordinates (end coordinates for short) of a corresponding finger into HashMap based on a finger index of the corresponding finger. Similarly, when receiving the ACTION_UP event, the in-vehicle terminal may store end coordinates of the last finger leaving the display into HashMap based on a finger index.

For example, the in-vehicle terminal may calculate a sliding direction of each finger based on initial coordinates (for example, (startPointX, startPointY)) and end coordinates (for example, (endPointX, endPointY)) that are of the plurality of fingers and that are stored in HashMap. For example, the sliding direction may be calculated based on Calculation formula 1:

Math.atan2((endPointY-startPointY), (endPointX-startPointX)) * (180/Math.PI)          Calculation formula 1:

In an example, for a multi-finger sliding operation, when calculating a sliding speed, the in-vehicle terminal may calculate a sliding speed of each finger, obtain a final sliding speed by calculating an average of sliding speeds of a plurality of fingers, and use the final sliding speed as the sliding speed of the first operation, or the in-vehicle terminal may select a sliding speed of any finger as the sliding speed of the first operation. This is not limited in embodiments of this application. Similarly, when determining a sliding direction of the first operation, the in-vehicle terminal may first determine a sliding direction of each finger, and then use a consistent sliding direction of the plurality of fingers as the sliding direction of the first operation, or the in-vehicle terminal may select a sliding direction of any finger as the sliding direction of the first operation. This is not limited in embodiments of this application. In addition, when determining a sliding distance of the first operation, the in-vehicle terminal may first determine a sliding distance of each finger, and calculate an average value as the sliding distance of the first operation, or the in-vehicle terminal may select a sliding distance of any one finger as the sliding distance of the first operation. This is not limited in embodiments of this application.

S1405-1: The in-vehicle terminal determines a target screen for cross-screen transfer based on the sliding directions of the fingers of the user on the display.

In a possible implementation, the in-vehicle terminal may determine the target screen based on sliding directions in which one or more fingers of the user quickly slide on the first interface and location relationships between an original screen and a plurality of displays. The target screen may be a display to which the sliding direction points.

Alternatively, for example, as shown in FIG. 14A, if the sliding speed is marked as a second mark, the in-vehicle terminal performs the one-screen transfer branch in S 1404-2 and S1405-2. The second mark indicates that the sliding speed is less than or equal to the preset threshold.

S 1404-2: The in-vehicle terminal determines sliding distances and sliding directions of the plurality of fingers of the user on the display based on a received ACTION_POINTER_UP event and the received ACTION_UP event.

For example, the in-vehicle terminal may calculate a sliding distance and a sliding direction of each finger based on initial coordinates (for example, (startPointX, startPointY)) and end coordinates (for example, (endPointX, endPointY)) that are of the plurality of fingers and that are stored in HashMap. For example, the sliding direction may be calculated based on Calculation formula 1, and the sliding distance may be calculated based on Calculation formula 2:

$$\text{Calculation formula 2:} \quad \sqrt{(endPointX - startPointX)^2 + (endPointY - startPointY)^2}$$

S 1405-2: The in-vehicle terminal determines a target location for one-screen transfer based on the sliding distances and the sliding directions of the fingers of the user on the display.

Optionally, for the one-screen transfer, the in-vehicle terminal may further determine whether a sliding distance is greater than a preset threshold after obtaining the sliding distance of a finger on the display through calculation. If the sliding distance is greater than the preset threshold, the in-vehicle terminal performs S 1405-2. If the sliding distance is less than or equal to the preset threshold, the in-vehicle terminal may keep the interface displayed at an original location.

Optionally, in this embodiment of this application, in a process in which the user slides one or more fingers on the first interface, the first interface may move along with the fingers of the user. For example, in the process in which the user slides one or more fingers on the first interface, the in-vehicle terminal may invoke a Rect object (for example, mWindowDragBounds) that indicates a window location in a terminal system, to implement an effect that the first interface moves along with the fingers of the user.

A sliding direction in which the user slides one or more fingers on the first interface may be represented by an angle between a sliding trajectory of the finger of the user and a positive direction of a horizontal axis of a preset coordinate system. For example, finger coordinates of the user are coordinates of a finger of the user in the preset coordinate system. The preset coordinate system is, for example, an xOy coordinate system, where an origin O of the xOy coordinate system may be an upper left corner of the first screen, an x-axis may be an upper edge of the first screen, a right direction is a +x-axis direction (that is, the positive direction of the horizontal axis is rightward), a y-axis may be a left edge of the first screen, and a downward direction is a +y-axis direction (that is, a positive direction of a vertical axis is upward). Specific settings of the preset coordinate system xOy are not limited in embodiments of this application.

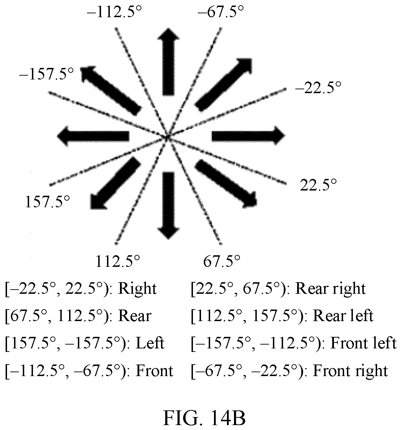

For example, if the angle is within a range of [-22.5°, 22.5°) shown in FIG. 14B, it is assumed that a preset sliding direction [-22.5°, 22.5°) corresponds to a screen located on the right side of the original screen, and in this case, the in-vehicle terminal determines, based on location relationships between the original screen and the plurality of displays, that the screen located on the right side of the original screen is the target screen. For example, if the original screen is a driver screen, it may be determined that the target screen is a front passenger screen. If the original screen is a rear left screen, it may be determined that the target screen is a rear right screen.

For another example, if the angle is within a range of [-67.5°, -22.5°) shown in FIG. 14B, it is assumed that a preset sliding direction [-67.5°, -22.5°) corresponds to a screen located in the front right of the original screen, and in this case, the in-vehicle terminal determines, based on location relationships between the original screen and the plurality of displays, that the screen located in the front right of the original screen is the target screen. For example, if the original screen is a rear left screen, it may be determined that the target screen is a front passenger screen.

For another example, if the angle is within a range of [-112.5°, -67.5°) shown in FIG. 14B, it is assumed that a preset sliding direction [-112.5°, -67.5°) corresponds to a screen located in front of the original screen, and in this case, the in-vehicle terminal determines, based on location relationships between the original screen and the plurality of displays, that the screen located in front of the original screen is the target screen. For example, if the original screen is a rear left screen, it may be determined that the target screen is a driver screen. If the original screen is a rear right screen, it may be determined that the target screen is a front passenger screen.

For another example, if the angle is within a range of [-157.5°, -112.5°) shown in FIG. 14B, it is assumed that a preset sliding direction [-157.5°, -112.5°) corresponds to a screen located in the front left of the original screen, and in this case, the in-vehicle terminal determines, based on location relationships between the original screen and the plurality of displays, that the screen located in the front left of the original screen is the target screen. For example, if the original screen is a rear right screen, it may be determined that the target screen is a driver screen.

For another example, if the angle is within a range of [157.5°, -157.5°) shown in FIG. 14B, it is assumed that a preset sliding direction [157.5°, -157.5°) corresponds to a screen located on the left side of the original screen, and in this case, the in-vehicle terminal determines, based on location relationships between the original screen and the plurality of displays, that the screen located on the left side of the original screen is the target screen. For example, if the original screen is a front passenger screen, it may be determined that the target screen is a driver screen. If the original screen is a rear right screen, it may be determined that the target screen is a rear left screen.

For another example, if the angle is within a range of [112.5°, 157.5°) shown in FIG. 14B, it is assumed that a preset sliding direction [112.5°, 157.5°) corresponds to a screen located in the rear left of the original screen, and in this case, the in-vehicle terminal determines, based on location relationships between the original screen and the plurality of displays, that the screen located in the rear left of the original screen is the target screen. For example, if the original screen is a front passenger screen, it may be determined that the target screen is a rear left screen.

For another example, if the angle is within a range of [67.5°, 112.5°) shown in FIG. 14B, it is assumed that a preset sliding direction [67.5°, 112.5°) corresponds to a screen located in the rear of the original screen, and in this case, the in-vehicle terminal determines, based on location relationships between the original screen and the plurality of displays, that the screen located in the rear of the original screen is the target screen. For example, if the original screen is a driver screen, it may be determined that the target screen is a rear left screen. If the original screen is a front passenger screen, it may be determined that the target screen is a rear right screen.

For another example, if the angle is within a range of [22.5°, 67.5°) shown in FIG. 14B, it is assumed that a preset sliding direction [22.5°, 67.5°) corresponds to a screen located in the rear right of the original screen, and in this case, the in-vehicle terminal determines, based on location relationships between the original screen and the plurality of displays, that the screen located in the rear right of the original screen is the target screen.

For example, if the original screen is the driver screen, it may be determined that the target screen is a rear right screen. It should be noted that the correspondence between the sliding direction and the target screen shown in FIG. 14B is merely used as an example. This is not specifically limited in embodiments of this application. For example, if the angle is within a range of [67.5°, 112.5°) shown in FIG. 14B, it is assumed that a preset sliding direction [67.5°, 112.5°) corresponds to all screens in the rear of the original screen, and in this case, the in-vehicle terminal determines, based on location relationships between the original screen and the plurality of displays, that all the screens in the rear of the original screen are target screens. For example, if the original screen is a driver screen, it may be determined that the target screen is a rear left screen and a rear right screen.

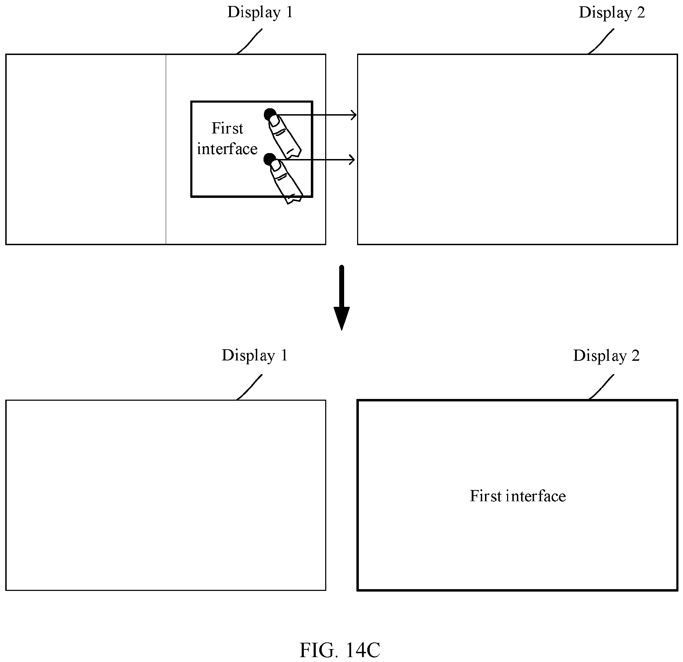

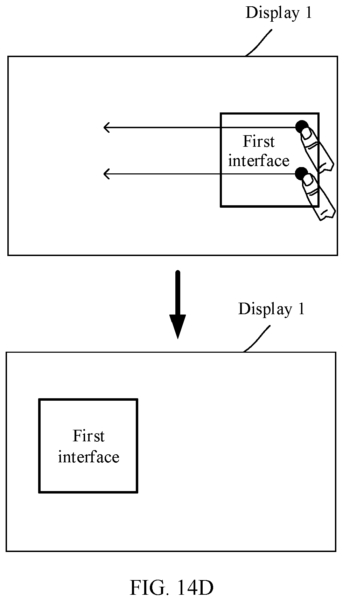

In some other embodiments, the in-vehicle terminal may alternatively determine, based on another mechanism, whether the interface transfer intention of the user is the cross-screen transfer or the one-screen transfer. For example, when receiving the first operation performed by the user on the first interface, the in-vehicle terminal may determine, based on a location of the first interface before the transfer and a location relationship between displays, whether the interface transfer intention of the user is the cross-screen transfer or the one-screen transfer, and a displayed location of the first interface after the transfer. For example, as shown in FIG. 14C, a display 2 is located on the right side of a display 1. For example, the first screen is the display 1. If the location of the first interface before the transfer is close to the right side of the display 1, and the first operation is an operation of sliding the first interface rightward, the in-vehicle terminal may determine that the interface transfer intention of the user is the cross-screen transfer, for example, the first interface is transferred from the display 1 to the display 2. As shown in FIG. 14D, if the location of the first interface before the transfer is close to the right side of the display 1, and the first operation is an operation of sliding the first interface leftward, the in-vehicle terminal may determine that the interface transfer intention of the user is the one-screen transfer, for example, the first interface is transferred from the right side of the display 1 to the left side of the display 1. For another example, if the location of the first interface before the transfer is close to the left side of the display 1, and the first operation is an operation of sliding the first interface rightward, the in-vehicle terminal may determine that the interface transfer intention of the user is the one-screen transfer, for example, the first interface is transferred from the left side of the display 1 to the right side of the display 1.

Similarly, the display 2 is located on the right side of the display 1. For example, the first screen is the display 2. If the location of the first interface before the transfer is close to the left side of the display 2, and the first operation is an operation of sliding the first interface leftward, the in-vehicle terminal may determine that the interface transfer intention of the user is the cross-screen transfer, for example, the first interface is transferred from the display 2 to the display 1. If the location of the first interface before the transfer is close to the left side of the display 2, and the first operation is an operation of sliding the first interface rightward, the in-vehicle terminal may determine that the interface transfer intention of the user is the one-screen transfer, for example, the first interface is transferred from the left side of the display 2 to the right side of the display 2.

For example, as shown in FIG. 10, if the first operation is used to transfer the first interface across screen, the in-vehicle terminal performs S1003-1 and S1004-1; or if the first operation is used to transfer the first interface on one screen, the in-vehicle terminal performs S1003-2 and S 1004-2.

S1003-1: The in-vehicle terminal determines that the target screen is the second screen.

In some embodiments of this application, the in-vehicle terminal may determine the target screen based on the received first operation for cross-screen transfer of the first interface.

For example, the first operation for cross-screen transfer of the first interface is an operation that one or more fingers of the user leave after quickly sliding. In some embodiments, the in-vehicle terminal may determine the target screen based on the sliding direction of the finger of the user. For a specific method and process of determining the target screen, refer to the foregoing specific descriptions. Details are not described herein again.

It may be understood that, when the in-vehicle terminal includes the plurality of displays (for example, the first screen and the second screen), the in-vehicle terminal definitely knows relative location relationships between the plurality of displays. Similarly, when the plurality of displays (for example, the first screen and the second screen) belong to different in-vehicle terminals, an in-vehicle terminal to which the first screen belongs may know the relative location relationships between the plurality of displays. For example, the in-vehicle terminal stores specific locations of the plurality of displays. In view of this, in this embodiment of this application, the in-vehicle terminal may determine, based on the sliding direction of the finger of the user and the relative location relationships between the plurality of displays, the target screen for the cross-screen transfer of the first interface.

In an example, when the plurality of displays (for example, the first screen and the second screen) belong to different in-vehicle terminals, the in-vehicle terminal to which the first screen belongs may obtain the relative location relationships between the plurality of displays based on an automatic positioning technology. For example, the automatic positioning technology is an ultrasonic positioning technology. The in-vehicle terminal to which the first screen belongs may transmit an ultrasonic signal through a speaker disposed in the in-vehicle terminal based on the ultrasonic positioning technology, and receive an echo signal of the ultrasonic signal from another in-vehicle terminal through a microphone disposed in the in-vehicle terminal. Further, the in-vehicle terminal to which the first screen belongs may determine, based on a triangle positioning technology, specific locations of the plurality of in-vehicle terminals in the vehicle based on a transmission path for sending a signal and a transmission path for receiving a signal and with reference to a relative location relationship between the speaker and the microphone, to determine relative location relationships between the plurality of in-vehicle terminals, namely, the relative location relationships between the plurality of displays.

Alternatively, when the plurality of displays (for example, the first screen and the second screen) belong to different in-vehicle terminals, the in-vehicle terminal to which the first screen belongs may alternatively determine specific locations of the plurality of in-vehicle terminals in the vehicle based on related configuration information such as in-vehicle system configuration information or by using another method, to determine relative location relationships between the plurality of in-vehicle terminals, namely, the relative location relationships between the plurality of displays. A specific method and process are not specifically limited in embodiments of this application.

In some embodiments of this application, based on the method provided in embodiments of this application, one-to-one interface transfer can be implemented.

For example, based on the method provided in embodiments of this application, any interface on any screen can be transferred to any other screen across screens. For example, for a car, an interface can be transferred across screens from a driver screen to a front passenger screen, the driver screen to a rear left screen, the driver screen to a rear right screen, the front passenger screen to the driver screen, the front passenger screen to the rear left screen, the front passenger screen to the rear right screen, the rear left screen to the driver screen, the rear left screen to the front passenger screen, the rear left screen to the rear right screen, the rear right screen to the driver screen, the rear right screen to the front passenger screen, and the rear right screen to the rear left screen.

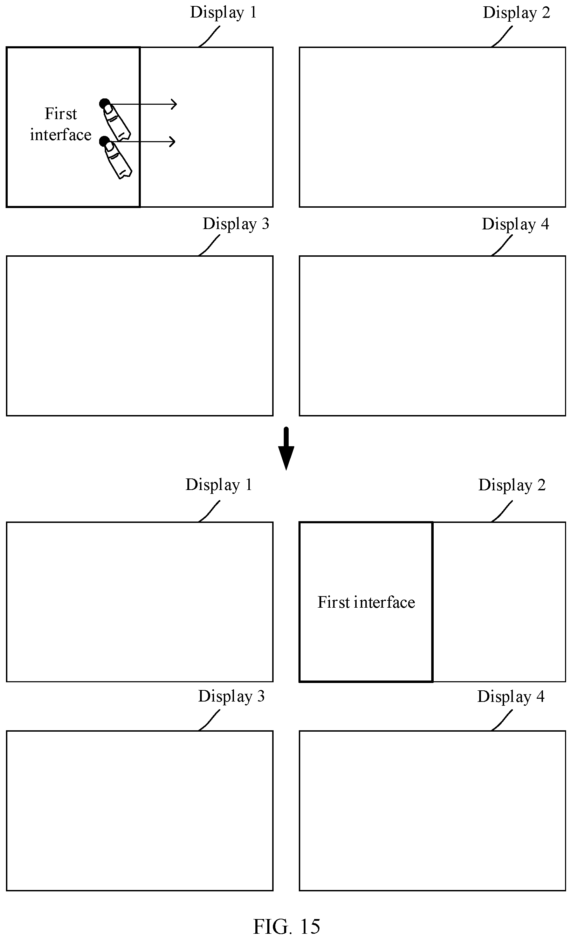

Refer to FIG. 15 to FIG. 17. FIG. 15 to FIG. 17 are diagrams of several sliding operations for cross-screen transfer to different displays according to an embodiment of this application by using an example in which an in-vehicle terminal includes a display 1, a display 2, a display 3, and a display 4.

For example, if the display 1 (namely, the first screen) receives an operation that is shown in FIG. 15 and that two fingers of the user leave after quickly sliding rightward on the first interface (that is, a sliding direction points to the display 2), as shown in FIG. 15, the in-vehicle terminal may determine, based on the sliding direction of the operation and relative location relationships between the display 1, the display 2, the display 3, and the display 4, that the target screen is the display 2 located on the right side of the display 1. That is, an intention of the foregoing operation is to transfer the first interface from the display 1 to the display 2 across screens.

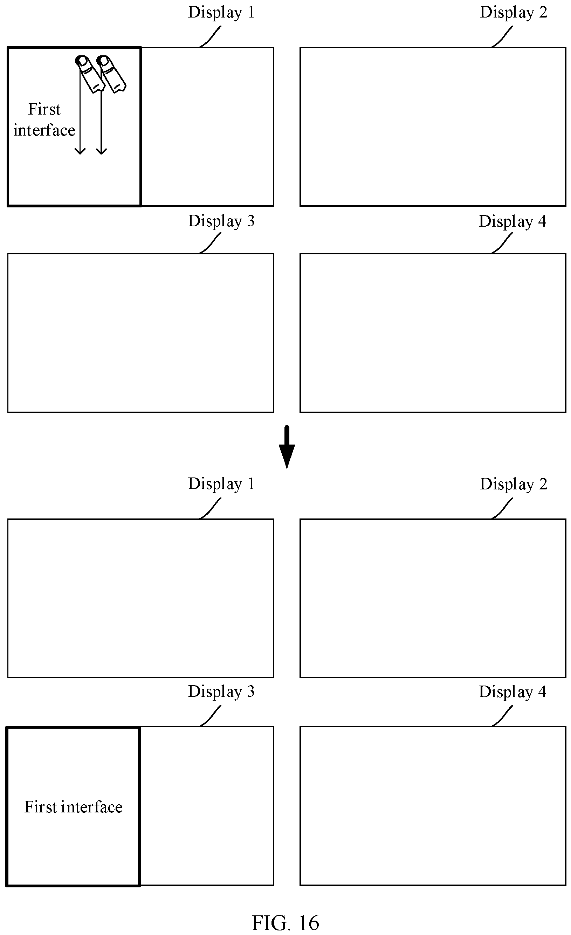

For another example, if the display 1 (namely, the first screen) receives an operation 5 that is shown in FIG. 16 and that two fingers of the user leave after quickly sliding down on the first interface (that is, a sliding direction points to the display 3), as shown in FIG. 16, the in-vehicle terminal may determine, based on the sliding direction of the operation and relative location relationships between the display 1, the display 2, the display 3, and the display 4, that the target screen is the display 3 located in the rear of the display 1. That is, an intention of the foregoing operation is to transfer the first interface from the display 1 to the display 3 across screens.

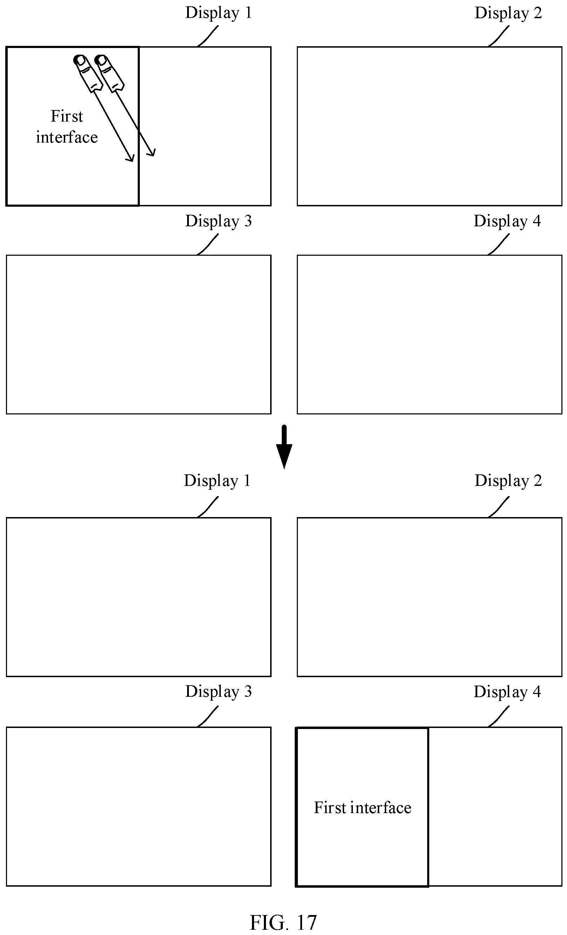

For another example, if the display 1 (namely, the first screen) receives an operation that is shown in FIG. 17 and that two fingers of the user leave after quickly sliding in a lower right direction on the first interface (that is, a sliding direction points to the display 4), as shown in FIG. 17, the in-vehicle terminal may determine, based on the sliding direction of the operation and relative location relationships between the display 1, the display 2, the display 3, and the display 4, that the target screen is the display 4 located in the rear right of the display 1. That is, an intention of the foregoing operation is to transfer the first interface from the display 1 to the display 4 across screens.

In some other embodiments of this application, based on the method provided in embodiments of this application, one-to-many interface transfer can be implemented.

For example, based on the method provided in embodiments of this application, any interface on any screen can be transferred to a plurality of other screens across screens. For example, for a car, an interface can be transferred across screens from a driver screen to a rear-row screen (including a rear left screen and a rear right screen) and from the rear-row screen (for example, the rear left screen or the rear right screen) to a front-row screen (including a driver screen and a front passenger screen).

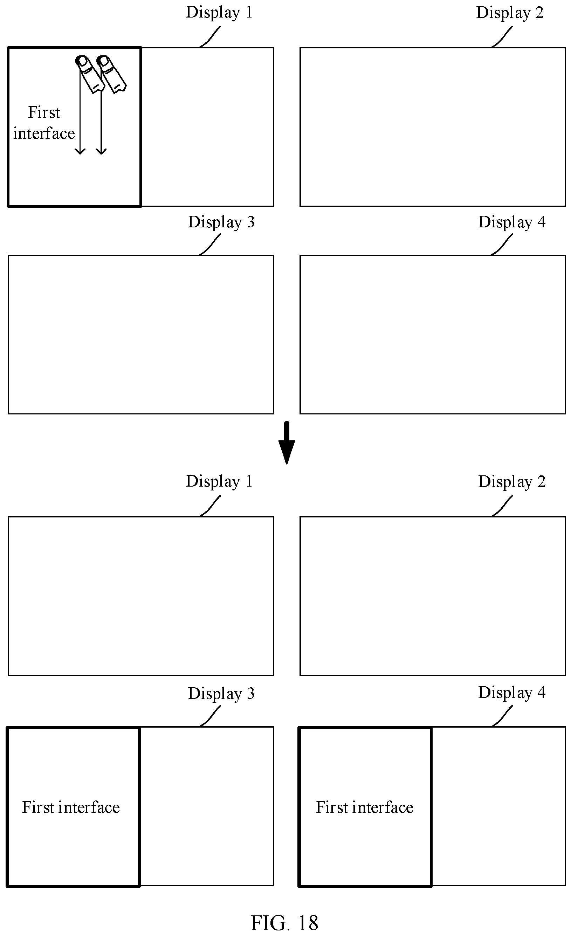

For example, as shown in FIG. 18, it is assumed that the in-vehicle terminal includes a display 1, a display 2, a display 3, and a display 4. If the display 1 (namely, the first screen) receives an operation that is shown in FIG. 18 and that two fingers of the user leave after quickly sliding down on the first interface (that is, a sliding direction points to the rear row), the in-vehicle terminal may determine, based on the sliding direction of the operation and relative location relationships between the display 1, the display 2, the display 3, and the display 4, that the target screen is displays (including the display 3 and the display 4) located in the rear row of the display 1. That is, an intention of the foregoing operation is to transfer the first interface from the display 1 to rear-row displays (including the display 3 and the display 4).

It should be noted that the sliding operations for the cross-screen transfer shown in FIG. 15 to FIG. 18 are merely used as examples of a directional cross-screen transfer operation. The method provided in embodiments of this application may be further applicable to a case of non-directional cross-screen transfer. For example, the terminal device may further transfer the first interface to all other screens of the in-vehicle terminal across screens in response to a second operation of the user on the first interface.

In addition, FIG. 15 to FIG. 18 are merely examples of several interfaces before and after the cross-screen transfer. Specific display in a cross-screen interface transfer process is not limited in this application. For example, after receiving the sliding operation for the cross-screen transfer, the in-vehicle terminal may further display prompt information on the original screen and/or the target screen, where the prompt information is used to separately prompt that cross-screen transfer is about to be performed and a cross-screen transfer interface is about to be received, or is separately used by the user to confirm that cross-screen transfer is about to be performed and a cross-screen transfer interface is about to be received, to prevent incorrect interface transfer caused by a misoperation of the user. Alternatively, for example, in a process in which the first interface is transferred from the original screen to the target screen, the first interface may further be transferred to the target screen for display by using an animation effect that an interface displayed on the original screen becomes smaller and then is transferred to the target screen. Alternatively, for example, when an aspect ratio of the original screen is different from an aspect ratio of the target screen, the in-vehicle terminal may further adjust a display ratio of the first interface on the target screen after interface transfer, to display the first interface at a ratio that adapts to the aspect ratio of the target screen. Alternatively, for example, when a size of the original screen is different from a size of the target screen, the in-vehicle terminal may further display the first interface by using a size that adapts to the size of the target screen after interface transfer.

S 1004-1: The in-vehicle terminal displays the first interface through the second screen in a first display type. The first display type is related to task information before the transfer of the first interface and/or screen task information of the second screen.

The task information before the transfer of the first interface indicates a display type and/or classification information of the first interface displayed on the first screen before the interface transfer. The display type of the first interface displayed on the first screen indicates a representation form of the first interface displayed on the first screen. For example, the display type of the first interface before the transfer may include but is not limited to any one of full-screen display, split-screen display, a floating window, a floating icon, a floating bubble, picture-in-picture, a widget, a control, a notification, or the like. The classification information of the first interface displayed on the first screen indicates whether the first interface is a preset focused application interface.

The screen task information of the second screen indicates a display type and/or classification information of a task interface on the second screen before the interface transfer. The display type of the task interface on the second screen indicates a representation form of the task interface on the second screen. For example, the display type of the task interface on the second screen may include but is not limited to any one of full-screen display, split-screen display, a floating window, a floating icon, a floating bubble, picture-in-picture, a widget, a control, a notification, or the like. The classification information of the task interface on the second screen indicates whether the task interface on the second screen is a preset focused application interface.

In some embodiments, no task interface is displayed on the second screen of the in-vehicle terminal. For example, a display desktop, a notification center, a control center, and the like are displayed on the second screen of the in-vehicle terminal. Optionally, when a system page (for example, a setting page) is displayed on the second screen of the in-vehicle terminal, it may also be considered that no task interface is displayed on the second screen of the in-vehicle terminal.

In some other embodiments, one task interface (for example, one second task interface) is displayed on the second screen of the in-vehicle terminal.

In some other embodiments, a plurality of task interfaces (for example, a plurality of second task interfaces) are displayed on the second screen of the in-vehicle terminal.

In embodiments of this application, one or more second task interfaces may be displayed on the second screen of the in-vehicle terminal in any display type.

If one second task interface is displayed on the second screen of the in-vehicle terminal, the one second task interface may be displayed on the second screen in full screen (as shown in FIG. 3), or may be displayed on a page like the desktop, the notification center, or the control center of the second screen in a representation form of a floating window, a floating icon, a floating bubble, picture-in-picture, a widget, a control, a notification, or the like.

If a plurality of second task interfaces are displayed on the second screen of the in-vehicle terminal, in some examples, the plurality of second task interfaces may be displayed on the second screen in split screen, as shown in FIG. 2. In some other examples, one interface of the plurality of second task interfaces may be displayed on the second screen in full screen, and the other interfaces are displayed on the second screen in a form of floating window, floating icon, floating bubble, picture-in-picture, widget, control, notification, or the like, as shown in FIG. 4, FIG. 5, FIG. 6, (a) in FIG. 8, or (b) in FIG. 8.

Similarly, if a plurality of second task interfaces are displayed on the second screen of the in-vehicle terminal, the plurality of task interfaces may be displayed on the second screen after the in-vehicle terminal responds to an operation performed by the user for opening the plurality of second task interfaces; or the plurality o task interfaces may be displayed on the second screen after the in-vehicle terminal responds to an operation performed by the user for opening a task combination. A specific process in which the in-vehicle terminal displays the plurality of second task interfaces through the second screen is not limited in embodiments of this application.

It may be understood that the second screen is the target screen. When the first interface is transferred from the first screen to the second screen, to provide intelligent display that can meet user requirements and habits, a display type of the first interface displayed on the second screen may be affected by a task interface that is being displayed on the second screen. For example, if the in-vehicle terminal does not consider the task interface on the second screen, but directly displays the first interface on the second screen in full screen, a task interface that is being focused on by the user on the second screen may be forcibly interrupted, affecting user experience. For another example, if the in-vehicle terminal does not consider the task interface on the second screen, but directly displays the first interface on the second screen in non-full screen, when the second screen does not display the task interface originally, the user may need to manually adjust the non-full-screen display of the first interface to full-screen display, affecting user experience.

In addition, that the user transfers the first interface on the first screen to the second screen is usually intended to use the first interface as a focused task of the second screen. Therefore, to provide the intelligent display that can meet the user requirements and habits, the display type of the first interface displayed on the second screen may also be affected by the display type or the classification information of the first interface displayed on the first screen. For example, if the in-vehicle terminal does not consider information that the first interface is previously displayed on the first screen in full screen or displayed as a focused task interface, but directly displays the first interface on the second screen in non-full screen, when the second screen does not display the task interface originally, the user may need to manually adjust the non-full-screen display of the first interface to full-screen display, affecting user experience.

Therefore, in embodiments of this application, during cross-screen interface transfer, the in-vehicle terminal determines, based on the obtained task information before the transfer of the first interface and/or the obtained screen task information of the second screen, a specific display type of the first interface on the second screen after the transfer, to display the first interface on the second screen with a more proper display effect after the interface transfer, for improving user experience.

With reference to specific examples, the following describes specific display effects of displaying, by the in-vehicle terminal on the second screen, the first interface transferred from the first screen by using Case (A) to Case (C).

Case (A): A display effect of displaying, by the in-vehicle terminal on the second screen, the first interface transferred from the first screen is related to the screen task information of the second screen before the transfer.

In some embodiments, the in-vehicle terminal displays the first interface in full screen through the second screen (that is, the first display type is full-screen display), and the first display type is determined by the in-vehicle terminal based on the screen task information of the second screen.

For example, the screen task information of the second screen indicates that no task interface is displayed on the second screen, and the in-vehicle terminal may determine, based on the screen task information of the second screen, to display the first interface in full screen through the second screen after the transfer.

For example, the second screen may display the desktop, the notification center, the control center, the system interface (for example, the setting page), or the like.

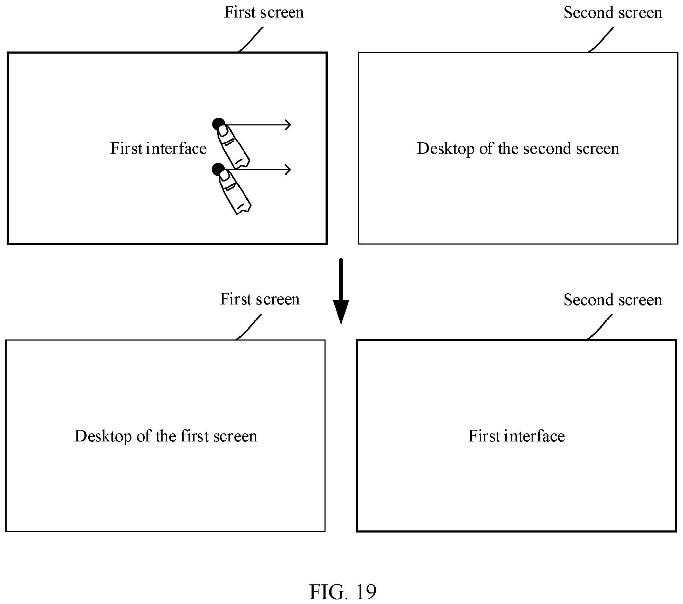

The second screen is located on the right side of the first screen. As shown in FIG. 19, in response to an operation that two fingers of the user leave after quickly sliding on the first interface on the first screen, the in-vehicle terminal transfers the first interface on the first screen to the second screen. After the transfer, the in-vehicle terminal displays the first interface in full screen through the second screen.

In the example shown in FIG. 19, only that the first interface is displayed on the first screen in full screen before the transfer is used as an example. For a case in which the first interface before the transfer is displayed on the first screen in a form of split-screen display, floating window, floating icon, floating bubble, picture-in-picture, widget, notification, or the like, if no task interface is displayed on the second screen, the in-vehicle terminal may also determine, based on the screen task information of the second screen, to display the first interface in full screen after the transfer.

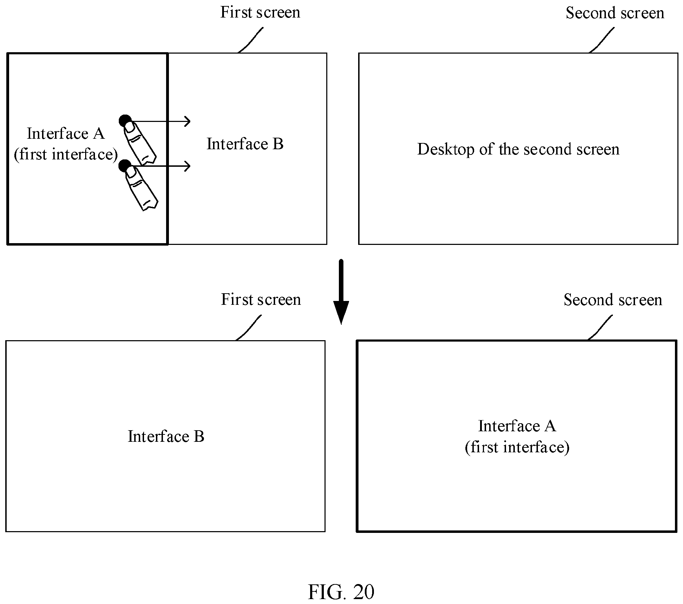

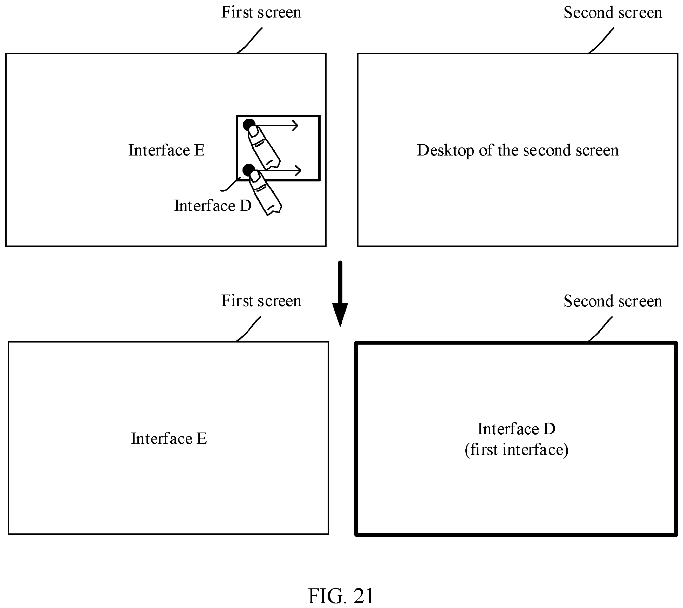

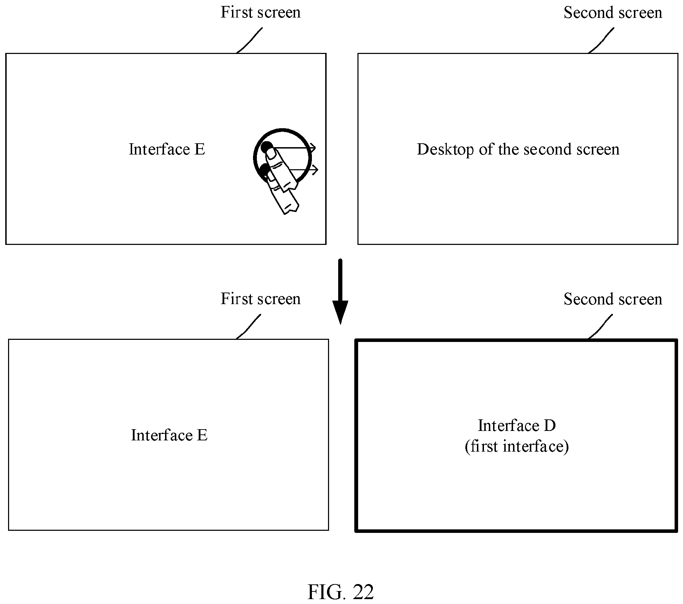

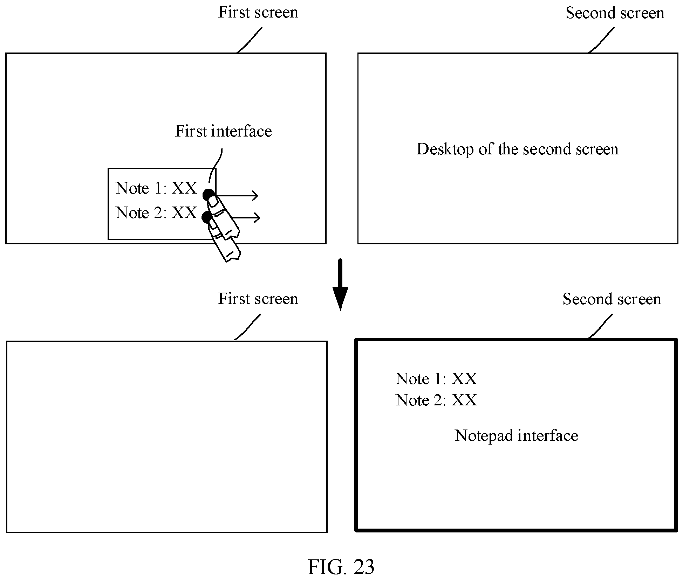

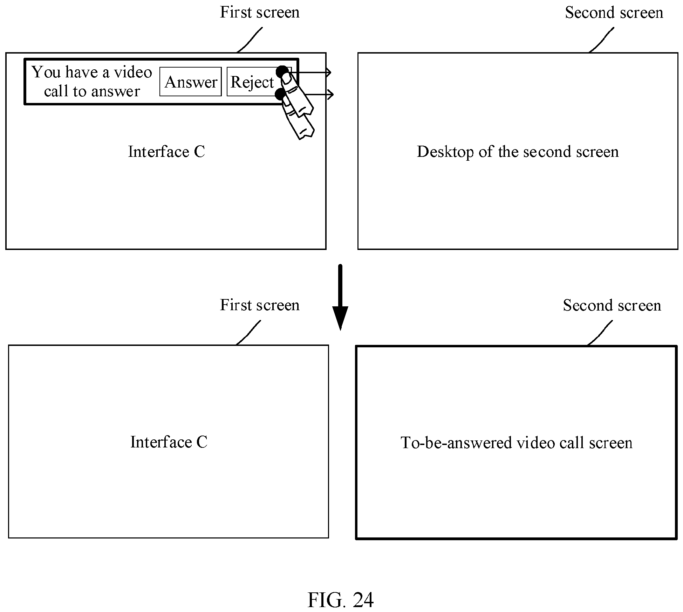

For example, in FIG. 20 to FIG. 24, an example in which the second screen is located on the right side of the first screen is used to show several examples of interface transfer of the in-vehicle terminal provided in embodiments of this application in response to the operation that two fingers of the user leave after quickly sliding on the first interface on the first screen. FIG. 20 shows an example in which when an interface A (namely, the first interface) and an interface B are displayed on the first screen in split screen before the transfer, the in-vehicle terminal determines, based on the screen task information of the second screen, to display the interface A (namely, the first interface) in full screen through the second screen after the transfer. FIG. 21 shows an example in which when an interface D (namely, the first interface) in a form of floating window and an interface E are displayed on the first screen before the transfer, the in-vehicle terminal determines, based on the screen task information of the second screen, to display the interface D (namely, the first interface) in full screen through the second screen after the transfer. FIG. 22 shows an example in which when an icon of an interface D (namely, the first interface) in a form of floating icon and an interface E are displayed on the first screen before the transfer, the in-vehicle terminal determines, based on the screen task information of the second screen, to display the interface D (namely, the first interface) in full screen through the second screen after the transfer. FIG. 23 shows an example in which when a notepad widget (namely, the first interface) is displayed on the first screen in a form of widget before the transfer, the in-vehicle terminal determines, based on the screen task information of the second screen, to display a notepad interface (namely, the first interface) in full screen through the second screen after the transfer. FIG. 24 shows an example in which when a to-be-answered video call screen (namely, the first interface) in a form of notification and an interface C are displayed on the first screen before the transfer, the in-vehicle terminal determines, based on the screen task information of the second screen, to display the to-be-answered video call screen (namely, the first interface) in full screen through the second screen after the transfer.

Alternatively, for example, the screen task information of the second screen indicates that the task interface on the second screen is displayed in a form of non-full screen before the transfer. For example, the display type of the task interface on the second screen is any one of a split-screen window, a floating window, a floating icon, a floating bubble, a widget, a control, or a notification. The in-vehicle terminal may determine, based on the screen task information of the second screen, to display the first interface in full screen through the second screen after the transfer.

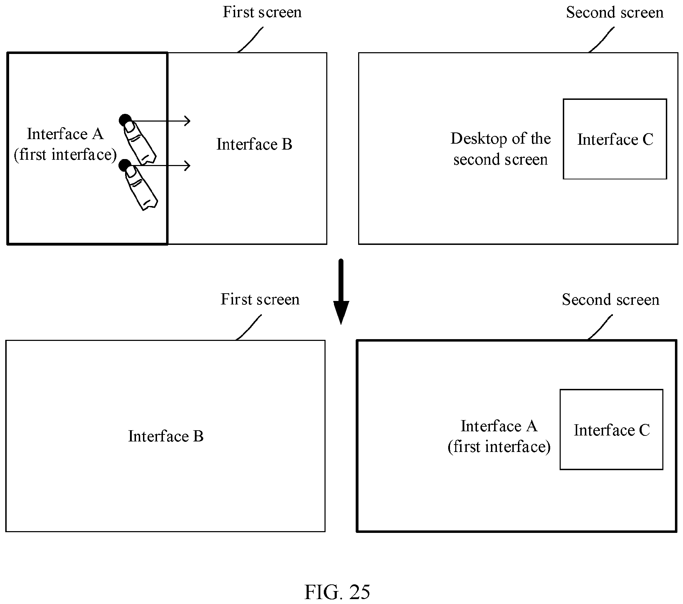

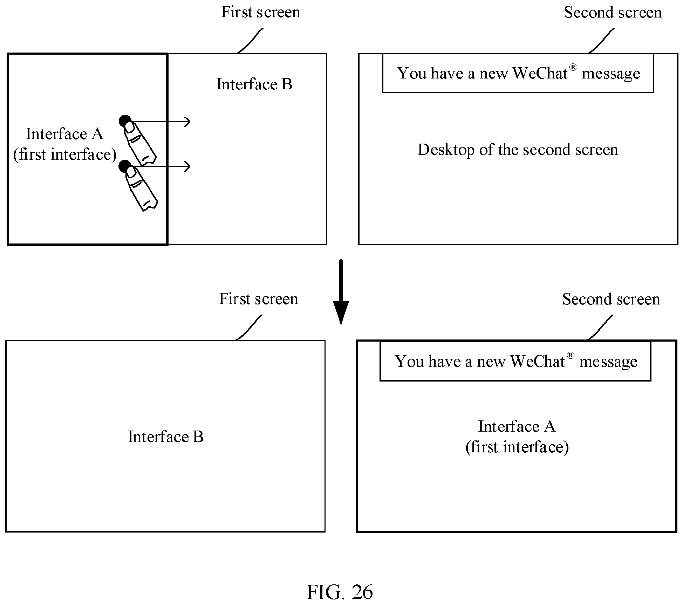

For example, in FIG. 25 and FIG. 26, an example in which the second screen is located on the right side of the first screen is used to show two examples of interface transfer of the in-vehicle terminal provided in embodiments of this application in response to the operation that two fingers of the user leave after quickly sliding on the first interface on the first screen. FIG. 25 shows an example in which when an interface A (namely, the first interface) and an interface B are displayed on the first screen in split screen before the transfer, and an interface B is displayed on the second screen in a form of floating window, the in-vehicle terminal determines, based on the screen task information of the second screen, to display the interface A (namely, the first interface) in full screen through the second screen after the transfer. FIG. 26 shows an example in which when an interface A (namely, the first interface) and an interface B are displayed on the first screen in split screen before the transfer, and a new WeChat® message is displayed on the second screen in a form of notification, the in-vehicle terminal determines, based on the screen task information of the second screen, to display the interface A (namely, the first interface) in full screen through the second screen after the transfer.

In FIG. 25 and FIG. 26, for example, the first interface is only displayed on the first screen in split screen with another interface before the transfer. For an interface transfer example in which the first interface is displayed in another display type before the first interface is transferred, refer to the foregoing or the following examples. In addition, for an example of interface transfer when the task interface on the second screen is displayed in another form of non-full screen (for example, picture-in-picture, a floating icon, a split-screen window, a widget, or a floating bubble), refer to the foregoing or the following examples. Details are not listed one by one herein.

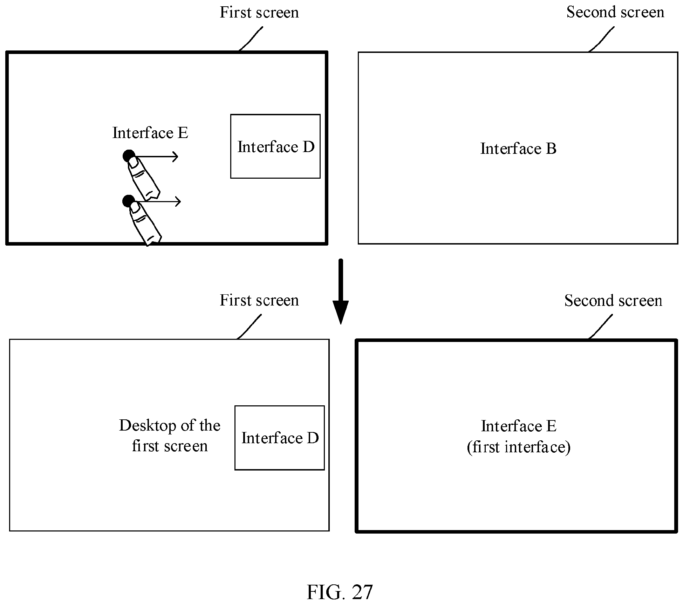

Alternatively, for example, if the screen task information of the second screen indicates that the task interface on the second screen before the transfer does not include the preset focused application interface, the in-vehicle terminal may determine, based on the screen task information of the second screen, to display the first interface in full screen through the second screen after the transfer. For example, it is assumed that an interface B shown in FIG. 27 is not the preset focused application interface, and in this case, the in-vehicle terminal determines, based on the screen task information of the second screen, to display an interface E (namely, the first interface) in full screen through the second screen after the transfer.

It may be understood that, in embodiments of this application, when no task interface is displayed or no task interface is displayed in full screen, or no preset focused application interface is displayed on the second screen, the in-vehicle terminal may directly display the first interface in full screen through the second screen after the interface transfer, to ensure that the first interface can be eye-catchingly displayed without manual adjustment by the user, avoid interference of another interface to the interface, and help the user view the first interface and/or perform an operation on the first interface through the second screen. This provides the user with more efficient and user-friendly interface transfer experience.

In some other embodiments, the in-vehicle terminal displays, through the second screen in a form of non-full screen (for example, the first display type is split-screen display, a floating window, a floating icon, a floating bubble, picture-in-picture, a widget, or a notification), the first interface transferred from the first screen. The first display type is determined by the in-vehicle terminal based on the screen task information of the second screen.

For example, if the screen task information of the second screen indicates that the second screen includes a task interface displayed in full screen, the in-vehicle terminal determines, based on the screen task information of the second screen, that the display type of the first interface after the transfer is split-screen display, a floating window, picture-in-picture, or the like.

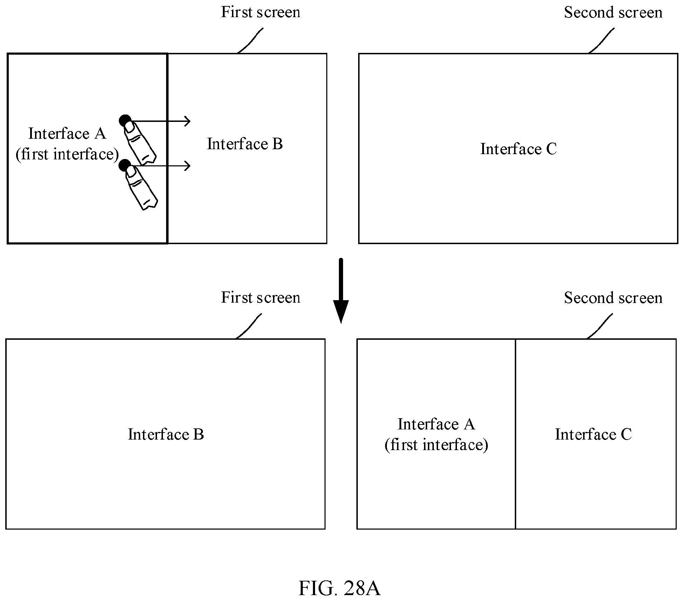

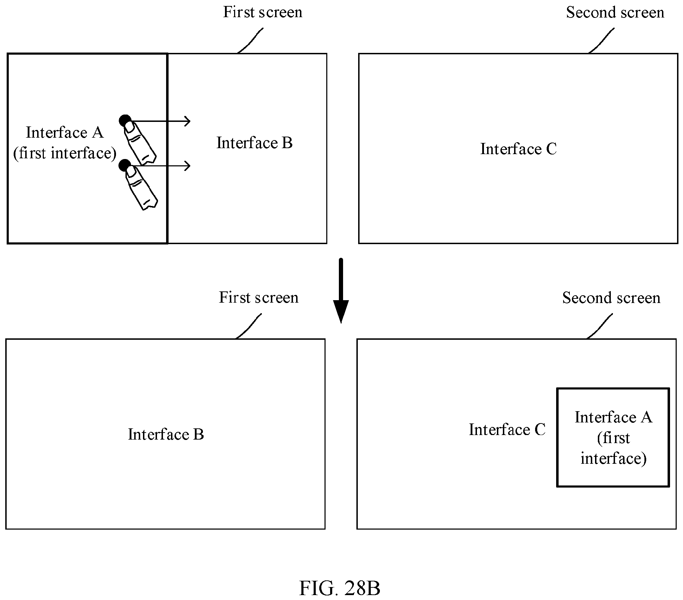

For example, in FIG. 28A and FIG. 28B, an example in which the second screen is located on the right side of the first screen is used to show two examples of interface transfer of the in-vehicle terminal provided in embodiments of this application in response to the operation that two fingers of the user leave after quickly sliding on the first interface on the first screen. FIG. 28A shows an example in which when an interface A (namely, the first interface) and an interface B are displayed on the first screen in split screen before the transfer, and an interface C is displayed on the second screen in full screen, the in-vehicle terminal determines, based on the screen task information of the second screen, to display the interface A (namely, the first interface) and the interface C in split screen (namely, in a form of non-full screen) through the second screen after the transfer. FIG. 28B shows an example in which when the first interface (namely, an interface A) and an interface B are displayed on the first screen in split screen before the transfer, and an interface C is displayed on the second screen in full screen, the in-vehicle terminal determines, based on the screen task information of the second screen, to jointly display the interface A (namely, the first interface) in a form of floating window or picture-in-picture and the interface C in full screen on the second screen after the transfer.

In FIG. 28A and FIG. 28B, for example, the first interface is only displayed on the first screen in split screen with another interface before the transfer. For an interface transfer example in which a task interface on the first screen is displayed in another display type (for example, full-screen display or a floating window) before the first interface is transferred, refer to the foregoing or the following examples. Details are not listed one by one herein.

Alternatively, for example, if the screen task information of the second screen indicates that the preset focused application interface is displayed on the second screen, the in-vehicle terminal determines, based on the screen task information of the second screen, that a display type of the first interface after the transfer is split-screen display, a floating window, picture-in-picture, or the like.

For example, the interface C shown in FIG. 28A and FIG. 28B may be the preset focused application interface. The in-vehicle terminal determines, based on the screen task information of the second screen, to display the interface A (namely, the first interface) and the interface C (as shown in FIG. 28A) in split screen through the second screen after the transfer, or the in-vehicle terminal determines, based on the screen task information of the second screen, to display the interface A (namely, the first interface) in a form of floating window or picture-in-picture (as shown in FIG. 28B) on the interface C that is displayed in full screen on the second screen after the transfer.

When the preset focused application interface on the second screen and the first interface are displayed on the second screen in split screen after the transfer, an interface ratio of the first interface to the preset focused application interface on the second screen may be 1:1 as shown in FIG. 27, or may be 1:2 or 2:1, depending on a specific setting. This is not limited in embodiments of this application.

It may be understood that, in embodiments of this application, when there is a task interface displayed in full screen on the second screen, or there is a preset focused application interface displayed on the second screen, the in-vehicle terminal may display the first interface in a form of split-screen display, floating window, picture-in-picture, or the like through the second screen after the interface transfer, to avoid interrupting the task interface that is being focused on by the user on the second screen, and provide the user with more user-friendly interface transfer experience.

Case (B): A display effect of displaying, by the in-vehicle terminal on the second screen, the first interface transferred from the first screen is related to the task information before the transfer of the first interface.

In some embodiments, after the interface transfer, the in-vehicle terminal displays the first interface in full screen through the second screen (that is, the first display type is full-screen display), and the first display type is determined by the in-vehicle terminal based on the task information of the first interface displayed on the first screen before the transfer.

For example, the in-vehicle terminal may display the first interface on the second screen in a display type that is the same as that used when the first interface is displayed on the first screen. For example, if the display type of the first interface displayed on the first screen is full-screen display, the in-vehicle terminal may determine to display the first interface in full screen through the second screen after the transfer.

As shown in FIG. 27, when the interface E (namely, the first interface) is displayed in full screen on the first screen and the interface D is displayed in a form of floating window or picture-in-picture on the interface E (namely, the first interface), in response to the operation that two fingers of the user leave after quickly sliding on the interface E (namely, the first interface) on the first screen, the in-vehicle terminal determines, based on a display type of the interface E (namely, the first interface) displayed on the first screen, to display the interface E (namely, the first interface) in full screen through the second screen after the transfer. After the transfer shown in FIG. 27, the interface B originally displayed in full screen on the second screen is blocked or replaced by the interface E (namely, the first interface) displayed in full screen, and the interface D originally displayed on the first screen may continue to maintain an original display type.

It may be understood that a transfer requirement of an interface is usually based on communication between people in the vehicle. Therefore, it may be considered that the transfer of the interface is to transfer a focused task of the first screen to the second screen as a focused task of the second screen. In view of this, to provide the user with more efficient and user-friendly interface transfer experience, an in-vehicle device may display, in full screen through the second screen after the interface transfer, the first interface displayed in full screen on the first screen before the interface transfer, to ensure that the first interface can be eye-catchingly displayed without manual adjustment by the user, to avoid interference from another interface to the interface, and help the user view the first interface and/or perform an operation on the first interface through the second screen.

For example, when the first interface displayed on the first screen is the preset focused application interface, the in-vehicle terminal may determine to display the first interface in full screen through the second screen after the transfer. In view of this, it can be ensured that an interface that is relatively highly concerned by the user or is of a relatively high importance is eye-catchingly displayed, to avoid interference from another interface to the interface, and help the user view and/or perform an operation

In some other embodiments, the in-vehicle terminal displays the first interface in a form of non-full screen (that is, the first display type is split-screen display, a floating window, picture-in-picture, or the like) through the second screen. The first display type is determined by the in-vehicle terminal based on the task information of the first interface displayed on the first screen before the transfer.

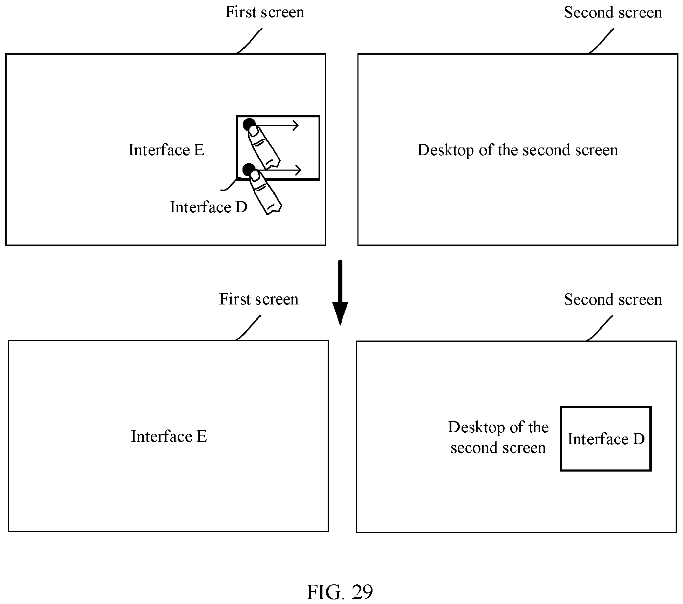

For example, the in-vehicle terminal may display the first interface on the second screen in a display type that is the same as that used when the first interface is displayed on the first screen before the transfer. For example, as shown in FIG. 29, when an interface D (namely, the first interface) in a form of floating window and an interface E in a form of full-screen display are jointly displayed on the first screen, in response to an operation that two fingers of the user leave after quickly sliding on the interface D (namely, the first interface) on the first screen, the in-vehicle terminal determines, based on a display type of the interface D (namely, the first interface) displayed on the first screen before the transfer, to display the interface D on the second screen in a form of floating window after the transfer.

Similarly, when the first interface is displayed on the first screen in a form of picture-in-picture before the transfer, the in-vehicle terminal may also determine to display the first interface in a form of picture-in-picture through the second screen after the transfer (refer to FIG. 29). Details are not listed one by one herein.

Case (C): A display effect of displaying, by the in-vehicle terminal on the second screen, the first interface transferred from the first screen is related to both the task information before the transfer of the first interface and the screen task information of the second screen before the transfer.

In some embodiments, the in-vehicle terminal may analyze the screen task information of the second screen. If the screen task information of the second screen indicates that the second screen includes a task interface displayed in full screen or the preset focused application interface is displayed on the second screen, the in-vehicle terminal may determine to display the first interface in a form of non-full screen after the transfer.

Further, after the in-vehicle terminal determines, based on the screen task information of the second screen, to display the first interface in a form of non-full screen after the transfer, the in-vehicle terminal may determine a specific display type (namely, the first display type) of the first interface on the second screen after the transfer.

For example, it is assumed that the first interface is displayed on the first screen in split screen before the transfer, and then the in-vehicle terminal may determine that the first interface is displayed on the second screen in split screen after the transfer. It is assumed that the first interface is displayed on the first screen in full screen before the transfer, and then the in-vehicle terminal may determine that the first interface is displayed on the second screen in a form of split-screen display, floating window, or picture-in-picture after the transfer. For another example, it is assumed that the first interface is displayed on the first screen in a form of floating window before the transfer, and then the in-vehicle terminal may determine that the first interface is displayed on the second screen in a form of floating window after the transfer. For another example, it is assumed that the first interface is displayed on the first screen in a form of picture-in-picture before the transfer, and then the in-vehicle terminal may determine that the first interface is displayed on the second screen in a form of picture-in-picture after the transfer.

For example, as shown in FIG. 28A, when the first interface (namely, the interface A) and the interface B are displayed on the first screen in split screen before the transfer, and the interface C is displayed on the second screen in full screen, the in-vehicle terminal determines to display the interface A (namely, the first interface) and the interface C in split screen on the second screen after the transfer.

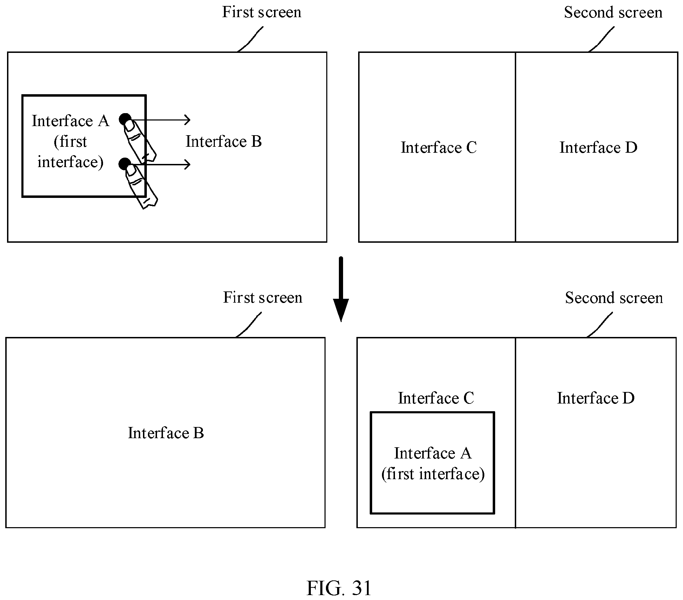

Still as shown in FIG. 31, when the first interface (namely, an interface A) is displayed in a form of floating window on an interface B displayed in full screen on the first screen before the transfer, and an interface C and an interface D are displayed on the second screen in split screen, the in-vehicle terminal may determine to display the interface A (namely, the first interface) in a form of floating window on the interface C and the interface D that are displayed in split screen on the second screen after the transfer.

In some other embodiments, if the screen task information of the second screen indicates that the second screen does not include a task interface displayed in full screen and there is no preset focused application interface on the second screen, the in-vehicle terminal may further analyze the task information before the transfer of the first interface. If the task information before the transfer of the first interface indicates that the first interface is displayed in full screen on the first screen before the transfer and/or the first interface is the preset focused application interface, the in-vehicle terminal may determine to display the first interface in full screen through the second screen after the transfer (that is, the first display type is full-screen display).

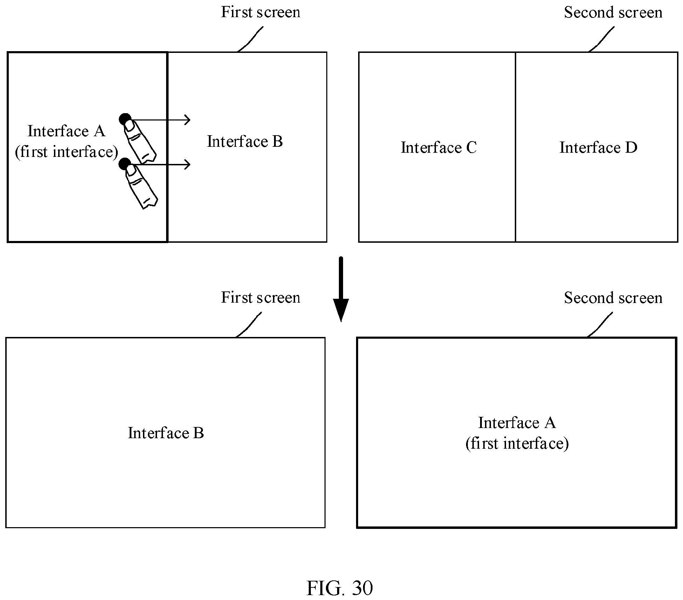

For example, as shown in FIG. 30, when an interface A (namely, the first interface) and an interface B are displayed on the first screen in split screen, and an interface C and an interface D are displayed on the second screen in split screen, it is assumed that the interface C and the interface D are not preset focused application interfaces and the interface A is a preset focused application interface, and in this case, the in-vehicle terminal may determine, in response to an operation that two fingers of the user leave after quickly sliding on the interface A (namely, the first interface) on the first screen, to display the first interface in full screen after the transfer. As shown in FIG. 30, after the transfer, the interface C and the interface D that are originally displayed in split screen on the second screen are blocked or replaced by the first interface displayed in full screen.

Similarly, if the screen task information of the second screen indicates that the second screen does not include a task interface displayed in full screen and there is no preset focused application interface on the second screen, when the first interface is a preset focused application and a display type of the first interface on the first screen is a floating window, a floating icon, a floating bubble, picture-in-picture, a widget, a control, or a notification, the in-vehicle terminal may also determine to display the first interface in full screen through the second screen after the transfer. For details, refer to the foregoing or the following examples. Details are not listed one by one herein.

It should be noted that, FIG. 20, FIG. 25 and FIG. 26, FIG. 28A and FIG. 28B, and FIG. 30 are merely examples in which after the interface A (namely, the first interface) is transferred from the first screen to the second screen, the first screen displays, in full screen, the interface B that is displayed in split screen on the first screen with the interface A (namely, the first interface) before the transfer. In some other embodiments of this application, after the first interface is transferred from the first screen to the second screen, the first screen may also keep the remaining interface displayed in a display type and a location that are the same as those before the transfer.

Optionally, in some embodiments, the in-vehicle terminal may also determine, based on a user setting, a system setting, or the like, a display type of the first interface after the transfer. Alternatively, the in-vehicle terminal may determine, based on another related factor, a specific display type of the first interface after the transfer. This is not specifically limited in embodiments of this application.

In addition, it should be noted that a specific location at which the first interface is displayed on the second screen in a form of non-full screen like a floating window or picture-in-picture after the interface transfer is not limited in embodiments of this application. The specific location depends on specific device settings or an interface layout case.

In addition, it should be noted that, in the foregoing embodiments of this application, an example in which the first screen no longer displays information related to the first interface after the first interface is transferred from the first screen to the second screen is merely used. In some other embodiments of this application, after the first interface is transferred from the first screen to the second screen, a small interface like an application icon or a floating icon corresponding to the first interface may be further displayed on the first screen. This can help a user of the original screen still view the first interface or perform an operation on the first interface, and can avoid interference of the first interface to another focused task on the first screen.

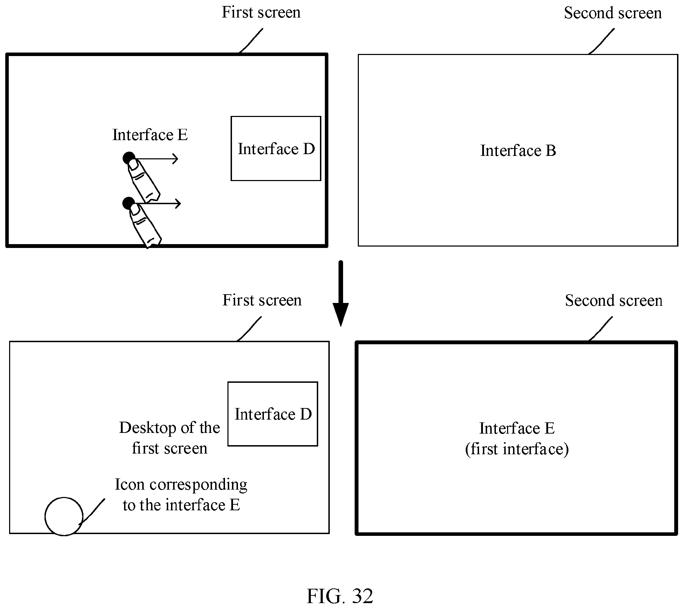

For example, as shown in FIG. 32, when an interface E (namely, the first interface) is displayed in full screen on the first screen and an interface D is displayed in a form of floating window on the interface E (namely, the first interface), in response to an operation that two fingers of the user leave after quickly sliding on the interface E (namely, the first interface) on the first screen, the in-vehicle terminal determines, based on a display type of the interface E (namely, the first interface) displayed on the first screen before the transfer, to display the interface E (namely, the first interface) in full screen through the second screen after the transfer. As shown in FIG. 32, after the transfer, an icon (for example, an application icon or a floating icon) corresponding to the interface E (namely, the first interface) may be displayed on the first screen.

Alternatively, when the first interface is displayed on the first screen in full screen or in split screen before the transfer, after the first interface is transferred from the first screen to the second screen, the first interface may be further displayed on the first screen in a form of floating window, picture-in-picture, widget, or the like that occupies a small display area. This can help a user of the original screen still view the first interface or perform an operation on the first interface, and can avoid interference of the first interface to another focused task on the first screen. For example, as shown in FIG. 32, after the interface E is transferred from the first screen to the second screen, when the user taps the icon (or the floating window, picture-in-picture, widget, or the like) corresponding to the interface E on the first screen, the interface E may be transferred from the second screen back to the first screen.

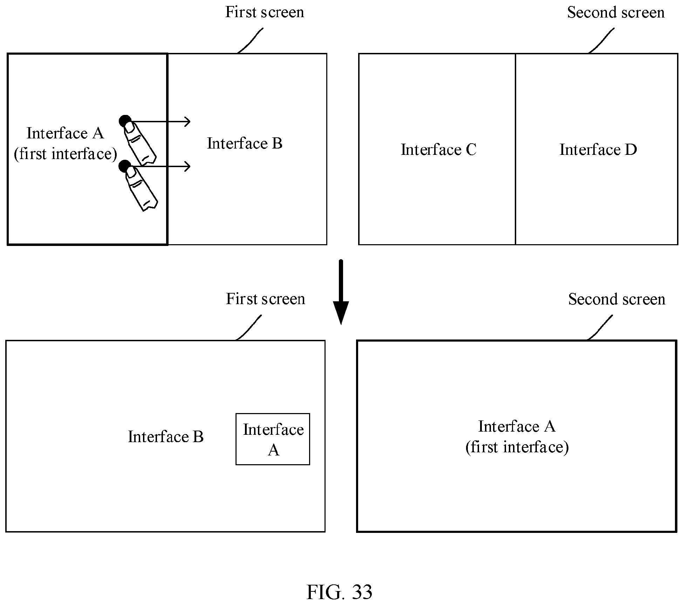

For example, as shown in FIG. 33, when an interface A (namely, the first interface) and an interface B are displayed on the first screen in split screen, and an interface C and an interface D are displayed on the second screen in split screen, it is assumed that the interface C and the interface D are not preset focused application interfaces and the interface A is a preset focused application interface, and in this case, the in-vehicle terminal may determine, in response to an operation that two fingers of the user leave after quickly sliding on the interface A (namely, the first interface) on the first screen, to display the first interface in full screen after the transfer.

Alternatively, optionally, if the interface C and/or the interface D are/is the preset focused application interface, after the interface A (namely, the first interface) shown in FIG. 33 is transferred from the first screen to the second screen, the second screen may display the first interface in a form of floating window.

As shown in FIG. 33, after the transfer, the interface A (namely, the first interface) is displayed on the first screen, and the first interface is displayed on the first screen in a form of floating window, picture-in-picture, widget, or the like. It should be further noted that, in the foregoing embodiments of this application, only an example in which the first screen includes a plurality of task interfaces is used. The method provided in embodiments of this application is also applicable to a case in which the first screen includes one interface.

In addition, it should be further noted that, in the foregoing embodiments of this application, cross-screen transfer of one task interface (namely, the first interface) is merely used as an example. The method provided in embodiments of this application may further support cross-screen transfer of a plurality of task interfaces at a time. For example, if an operation that a plurality of fingers of the user leave after quickly sliding is performed on a display area in which the plurality of task interfaces on the first screen are located, the in-vehicle terminal simultaneously transfers the plurality of task interfaces to the second screen across screens. It may be understood that, based on the interface transfer method provided in embodiments of this application, the user may trigger cross-screen transfer of a task interface from an original screen to a target screen by using a cross-screen transfer operation that meets user operation habits and is easy to memorize and operate, to meet diversified requirements of the user, for example, transferring the task interface to another passenger for use or performing a related operation with assistance of another passenger.

For example, based on the interface transfer method provided in embodiments of this application, the in-vehicle terminal may display a navigation interface (namely, the first interface) through a front passenger screen or another display in response to an operation performed by a driver for transferring the navigation interface (namely, the first interface) across screens, so that a passenger at a corresponding location assists the driver in performing a navigation-related operation, for example, adding a waypoint or modifying a destination. This eliminates a security risk when the driver performs the navigation-related operation, ensures traveling safety of the vehicle, and improves user experience.

For another example, based on the interface transfer method provided in embodiments of this application, the in-vehicle terminal may display a music interface (namely, the first interface) through a front passenger screen or another display in response to an operation performed by a driver for transferring the music interface (namely, the first interface) across screens, so that a passenger at a corresponding location assists the driver in performing a music-related operation, for example, music searching or music switching. This eliminates a security risk when the driver performs the music-related operation, ensures traveling safety of the vehicle, and improves user experience.

For another example, based on the interface transfer method provided in embodiments of this application, the in-vehicle terminal may display a to-be-answered video call screen (namely, the first interface) through a front passenger screen or another display in response to an operation performed by a driver for transferring the to-be-answered video call screen (namely, the first interface) across screens, so that a passenger at a corresponding location replaces the driver to answer the video call or assists the driver in answering the video call. In this way, the driver can focus on driving of the vehicle, traveling safety of the vehicle is ensured, and user experience is improved.

For another example, based on the interface transfer method provided in embodiments of this application, the in-vehicle terminal may transfer, in response to a driver, an animation playing interface (namely, the first interface) to a display (for example, a rear right screen or a rear left screen) at a location of a child in the vehicle, so that the child can watch an animation. This can resolve a problem that the child cannot play the animation independently because the child cannot perform related operations such as animation searching and animation playing independently, and an adult can monitor and take care of an activity performed by the child through the display, thereby improving user experience.

In addition, based on the interface transfer method provided in embodiments of this application, the in-vehicle terminal may further analyze target screen task information and/or task information of a to-be-transferred interface, to display, on the target screen in an appropriate display type after interface transfer, the task interface transferred from the original screen. According to the method, the task interface transferred from the original screen may be displayed with a most eye-catching display effect without affecting a task currently concerned by the user on the target screen. This reduces subsequent operations of the user and provides the user with more efficient and user-friendly interface transfer experience.

For example, when there is a user-focused task on the target screen, the in-vehicle terminal may display, on the target screen in a form of split-screen display, floating window, picture-in-picture, or the like that does not block the user-focused task, the task interface transferred from the original screen.

For another example, when there is no user-focused task on the target screen, the in-vehicle terminal may display, in an eye-catching full-screen display form, the task interface transferred from the original screen, to reduce operations such as manually operating the task interface by the user.

In addition, in a process of cross-screen transfer of the task interface, animation processing may be performed on the task interface, to improve visual experience of the user. For example, when a task displayed in full screen is transferred from the original screen (for example, a central display screen) to the target screen (for example, a front passenger screen), and when a width of the central display screen is the same as a width of the front passenger screen, the user may obtain a relatively coherent visual effect. However, when the width of the central display screen is different from the width of the front passenger screen, a size of the task interface displayed on the central display screen is different from a size of the task interface displayed on the front passenger screen, affecting visual experience of the user. Therefore, in embodiments of this application, animation processing may be performed on the transferred task interface. In a possible implementation, after the task interface is transferred to the target screen in full screen or split screen, the task interface may be adaptively arranged. To be specific, the task interface is processed based on a size of the target screen, so that a display effect of the task interface adapts to a size of the target screen. In this manner, the task interface may be quickly transferred to the target screen by performing translation and then zooming processing on the task interface. In another possible implementation, in a process in which the task interface is transferred to the target screen in full screen or split screen, for example, in a process in which the task interface traverses the original screen and the target screen, the task interface may be simultaneously transformed and transferred. In this manner, visual coherence can be improved by simultaneously zooming in or out and performing translation transfer on the task interface.

The foregoing embodiments describe a case of the cross-screen transfer. As shown in FIG. 10, for a case of the one-screen transfer, if the first operation received by the in-vehicle terminal in S 1002 is used to perform one-screen transfer on the first interface, the in-vehicle terminal performs 51003-2 and S 1004-2.

S 1003-2: The in-vehicle terminal determines a target location.

In embodiments of this application, the in-vehicle terminal may determine the target location based on the received first operation for performing one-screen transfer of the first interface.

For example, the first operation for one-screen transfer of the first interface is an operation that one or more fingers of the user leave after slowly sliding for a distance. In some embodiments, the in-vehicle terminal may determine the target location based on the sliding distance of the finger of the user. For a specific method and process of determining the target location, refer to the foregoing specific description. Details are not described herein again.

S1004-2: The in-vehicle terminal displays the first interface at the target location based on screen task information of the first screen in a second display type. The second display type is related to the screen task information of the first screen.

The screen task information of the first screen indicates a display type and/or classification information of a task interface on the first screen before the interface transfer. The screen task information of the first screen includes task information before the transfer of the first interface.

In some embodiments, it is assumed that the first interface is displayed on the first screen in full screen before the transfer, and in this case, the in-vehicle terminal may determine that the second display type is a preset display type, for example, a floating window, a floating icon, a floating bubble, picture-in-picture, or a widget. This specifically depends on settings (including factory settings or manual settings) of an in-vehicle device. A specific size of the floating window, the floating icon, the floating bubble, the picture-in-picture, or the widget also depends on the settings (including the factory settings or the manual settings) of the in-vehicle device.

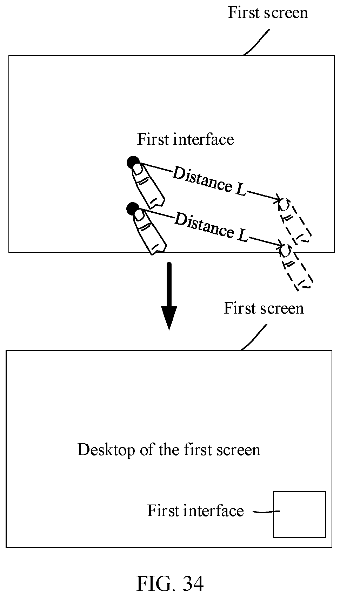

For example, as shown in FIG. 34, when the first interface is displayed on the first screen in full screen before the transfer, in response to an operation that two fingers of the user leave after slowly sliding on the first interface for a distance (for example, a distance L), the in-vehicle terminal determines that an operation intention is used to transfer the first interface to the target location on one screen. For example, the target location may be a location at which two fingers of the user leave the first screen; or the target location may be a preset location, for example, a location at an edge of the screen. Considering that the first interface is currently displayed in full screen, the in-vehicle terminal determines, based on the preset display type, a display type of the first interface at the target location after the transfer, for example, a floating window or picture-in-picture shown in FIG. 34.

In some other embodiments, it is assumed that the first interface is displayed at an original location of the first screen in a form of non-full screen before transfer, and no other task interface is displayed at the target location. In this case, the in-vehicle terminal may determine that the second display type is the display type of the first interface before the transfer. In other words, it is assumed that the first interface is displayed at an original location of the first screen in a form of non-full screen before the transfer, and in this case, the in-vehicle terminal may keep an original display type, and move the first interface from the original location to the target location.

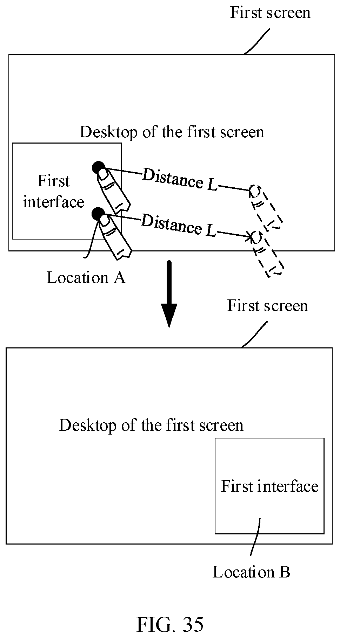

For example, as shown in FIG. 35, when the first interface is displayed at a location A (namely, the original location) on the first screen in a form of floating window, in response to an operation that two fingers of the user leave after slowly sliding on the first interface for a distance (for example, the distance L), the in-vehicle terminal may keep an original floating window of the first interface unchanged, and move the floating window (namely, the first interface) from the location A (namely, the original location) to a location B (namely, the target location) at which two fingers of the user leave the first screen. Alternatively, the in-vehicle terminal may keep an original floating window of the first interface unchanged, and move the floating window (namely, the first interface) from the location A (namely, the original location) to a preset location, for example, a location (namely, the target location) at the edge of the display.

When the first interface is displayed at the original location of the first screen in a form of picture-in-picture, floating icon, widget, or the like before the transfer, the in-vehicle terminal may also keep the original display type of the first interface unchanged, and move the first interface from the original location to the target location. Details are not listed one by one herein.

In some other embodiments, it is assumed that the first interface and another interface (for example, a second interface) are displayed on the first screen in split screen before the transfer, and the target location is a task interface (namely, the second interface) displayed in split screen with the first interface. In this case, the in-vehicle terminal may determine to exchange the first interface and the second interface (that is, a location of the second interface before the transfer is the target location of the first interface).

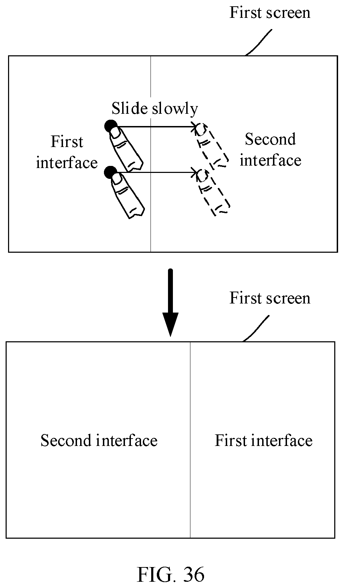

For example, as shown in FIG. 36, when the first interface and the second interface are displayed on the first screen in split screen, in response to an operation that two fingers of the user leave after slowly sliding on the first interface to a display area in which the second interface is located, the in-vehicle terminal may keep an original split-screen window of the first interface unchanged, and exchange locations of the first interface and the second interface.

It may be understood that, based on the interface transfer method provided in embodiments of this application, the user may trigger, by using a one-screen transfer operation that meets user operation habits and is easy to memorize and operate, one-screen transfer of a task interface from a location (namely, the original location) to another location (namely, a target location) on a screen, to meet diversified requirements of the user. For example, a full-screen interface is pinned (pinned) to a location on the screen, or a location of the task interface is moved, or task interfaces displayed in split screen are exchanged.

Optionally, based on the interface transfer method provided in embodiments of this application, the in-vehicle terminal may further support reverse transfer of the first interface that has been transferred from the first screen to the second screen.

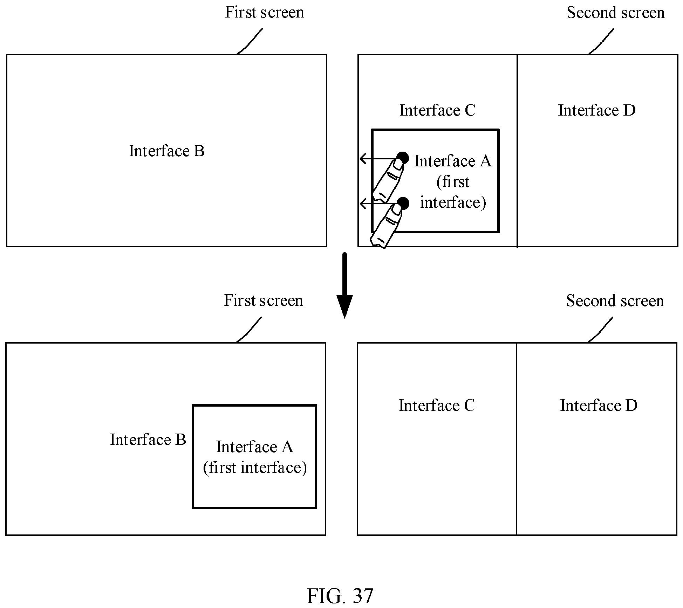

For example, as shown in FIG. 37, after the in-vehicle terminal transfers the first interface (an interface A shown in FIG. 37) from the first screen to the second screen across screens, the in-vehicle terminal may reversely transfer, based on an operation performed by the user for transferring the first interface from the second screen to the first screen, the first interface that has been transferred from the first screen to the second screen back to the first screen. A display type of the first interface after the reverse transfer shown in FIG. 37 is merely used as an example, is not limited in embodiments of this application, and depends on a specific case.

For example, in a reverse transfer process, the in-vehicle terminal may determine, based on a first operation (for example, an operation that one or more fingers leave after quickly sliding) performed by the user on the first interface on the second screen, that the target screen is the first screen, further determine, based on screen task information of the first screen and/or task information of the first interface at a current moment, a display type of the first interface on the first screen after the transfer, and further display the first interface in the determined display type through the first screen, implementing reverse transfer of the first interface to the first screen. In the reverse transfer process, the second screen is the original screen, and the first screen is the target screen. For a specific reverse transfer process, refer to the specific process in which the first interface is transferred from the first screen to the second screen across screens.

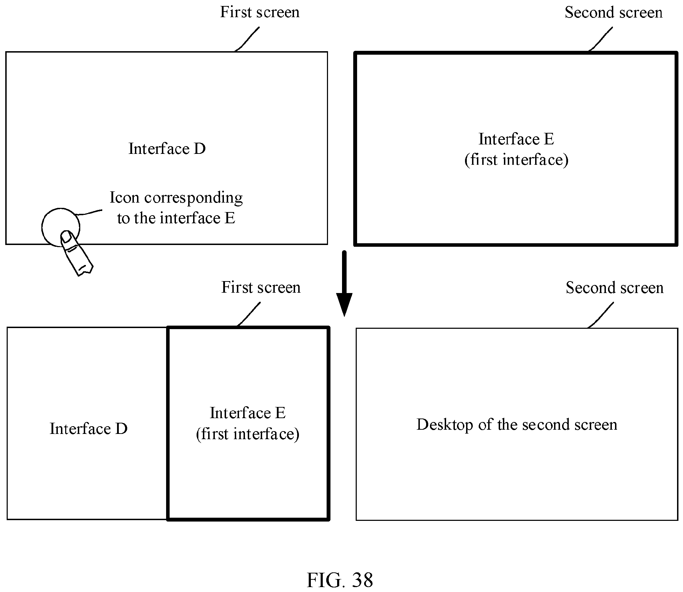

Alternatively, for example, as shown in FIG. 38, after the in-vehicle terminal transfers the first interface (for example, an interface E shown in FIG. 38) from the first screen to the second screen across screens, the in-vehicle terminal may reversely transfer, based on an operation that is triggered by the user on the first screen and that is of reversely transferring the first interface (for example, an operation that the user taps an icon corresponding to the interface E on the first screen shown in FIG. 38), the first interface that has been transferred from the first screen to the second screen back to the first screen. A display type of the first interface after the reverse transfer shown in FIG. 38 is merely used as an example, is not limited in embodiments of this application, and depends on a specific case. For example, the first screen may be a driver screen, and the second screen may be a front passenger screen or a rear-row screen. In this way, the user may control the reverse transfer of the first interface by using the driver screen. The operation for triggering reverse transfer of the first interface on the first screen may also be an operation of tapping a floating window, a floating bubble, a widget, or the like corresponding to the interface E.

Alternatively, optionally, based on the interface transfer method provided in embodiments of this application, after the in-vehicle terminal transfers the first interface from the first screen to the second screen across screens, the in-vehicle terminal may further support one-screen transfer of the first interface on the second screen. For example, the in-vehicle terminal may transfer, from the original location to the target location based on a one-screen transfer operation of the user, the first interface that is transferred from the first screen to the second screen. For the one-screen transfer of the first interface on the second screen, refer to a specific process of the one-screen transfer of the first interface on the first screen in the foregoing embodiment. Details are not described herein again.

Alternatively, optionally, based on the interface transfer method provided in embodiments of this application, after the in-vehicle terminal transfers the first interface from the first screen to the second screen across screens, the in-vehicle terminal may further support in transferring the first interface to another display (for example, a third screen) across screens again. For cross-screen transfer of the first interface from the second screen to the third screen, refer to a specific process of cross-screen transfer of the first interface from the first screen to the second screen in the foregoing embodiments. Details are not described herein again.

It should be noted that, in the foregoing embodiments of this application, the in-vehicle terminal transfers, based on the cross-screen transfer operation of the user, the first interface displayed on the original screen (for example, the first screen) to the target screen (for example, the second screen) across screens. In some embodiments, the in-vehicle terminal may further display the first interface to the target screen (for example, the second screen) based on the cross-screen transfer operation of the user when a process corresponding to the first interface is started but the first interface is not displayed. The cross-screen transfer operation of the user is an operation performed by a passenger at a target screen location for opening the first interface on the first screen.

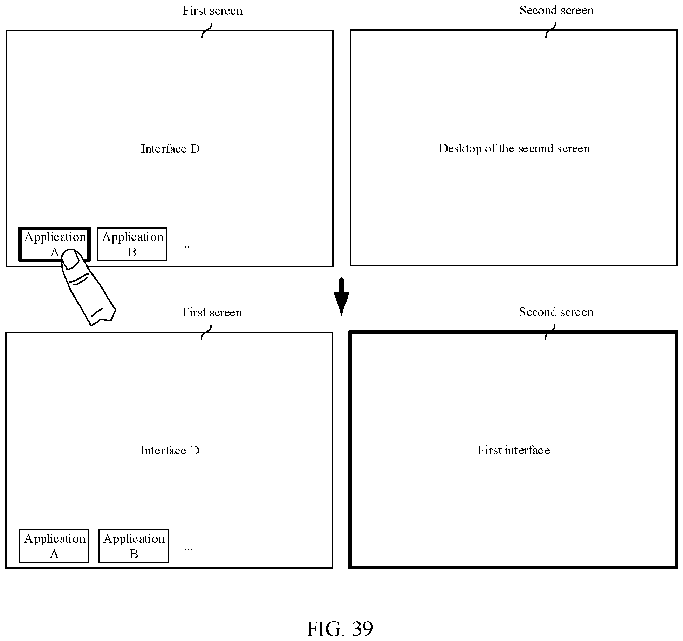

For example, as shown in FIG. 39, it is assumed that the first interface is a home page of an application A. In response to detecting an operation performed by the user for starting the application A on the first screen and determining that an identity of the user is a passenger at a second screen location, the in-vehicle terminal starts the application A, draws a home page interface (namely, the first interface) of the application A, and displays the first interface through the second screen. Optionally, as shown in FIG. 39, after the in-vehicle terminal displays the first interface through the second screen, the first screen may further continue to display an icon of the application A. Alternatively, optionally, after the in-vehicle terminal displays the first interface through the second screen, the first screen may further display the first interface in a form of small interface like a floating window or a floating icon, to avoid interference to another focused task on the first screen. This is not limited in embodiments of this application.

Alternatively, for example, it is assumed that the first interface is a lower-level interface of an interface (for example, a third interface). In response to detecting an operation that the user accesses the first interface on the third interface and determines that an identity of the user is a passenger at a second screen location, the in-vehicle terminal draws the first interface and displays the first interface through the second screen. Optionally, after the in-vehicle terminal displays the first interface through the second screen, the first screen may further continue to display the third interface. Alternatively, optionally, after the in-vehicle terminal displays the first interface through the second screen, the first screen may no longer display the third interface. This is not limited in embodiments of this application.

Alternatively, it is assumed that the first interface is a detailed information interface (namely, the first interface) corresponding to a widget, and an application corresponding to the widget is currently not running. In response to detecting an operation of tapping the widget by the user on the first screen and determining that an identity of the user is a passenger at a second screen location, the in-vehicle terminal starts the application corresponding to the widget, draws the detailed information interface (namely, the first interface) of the widget, and displays the first interface through the second screen. Optionally, after the in-vehicle terminal displays the first interface through the second screen, the first screen may further display the first interface in a form of small interface like a floating window, a floating icon, or a floating bubble, to avoid interference to another focused task on the first screen. This is not limited in embodiments of this application.

In a possible implementation, when receiving the cross-screen transfer operation, the in-vehicle terminal may capture image information in a viewfinder frame through a camera. It may be understood that the viewfinder frame of the camera usually includes an image of the user that inputs the cross-screen transfer operation. Further, the in-vehicle terminal may recognize, based on the image information of the user captured by the camera, the identity of the user that triggers the cross-screen transfer operation. For a specific method and process of determining the identity of the user based on the image information of the user, refer to a conventional technology. Details are not described herein again.

In another possible implementation, when receiving the cross-screen transfer operation, the in-vehicle terminal may draw, based on information such as a touch location, a touch force, and a touch area of the cross-screen transfer operation on the first screen, a touch profile corresponding to the cross-screen transfer operation. The touch profile corresponding to the cross-screen transfer operation indicates a contact area between a finger of the user and a screen. Further, the in-vehicle terminal may determine, based on the touch profile, the identity of the user that triggers the cross-screen transfer operation.

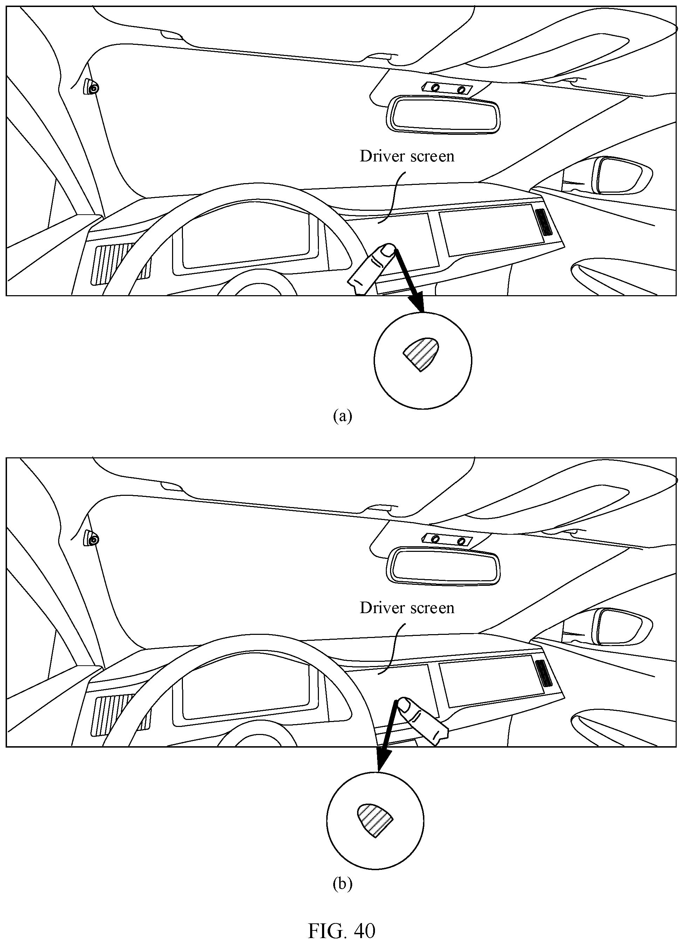

For example, the first screen is a driver screen. It may be understood that, as shown in FIG. 40, if the identity of the user that triggers the cross-screen transfer operation is a passenger in a driver seat, a contact area between the finger of the user corresponding to the cross-screen transfer operation and the screen is shown in (a) in FIG. 40; and if the identity of the user that triggers the cross-screen transfer operation is a passenger in a front passenger seat, a contact area between the finger of the user corresponding to the cross-screen transfer operation and the screen is shown in (b) in FIG. 40. It can be learned from the contact area shown in (a) in FIG. 40 and the contact area shown in (b) in FIG. 40 that orientations of a fingertip of the user are respectively the upper right and the upper left. In view of this, the in-vehicle terminal may determine an orientation of the fingertip of the user by analyzing the contact area between the finger of the user and the screen, and then determine, based on the orientation of the fingertip of the user, the identity of the user that triggers the cross-screen transfer operation.

Alternatively, the in-vehicle terminal may determine, by using another method, the identity of the user that triggers the cross-screen transfer operation. This is not specifically limited in embodiments of this application.

It may be understood that, based on the interface transfer method provided in embodiments of this application, the in-vehicle terminal may not only trigger, based on the cross-screen transfer operation of the user, the cross-screen transfer of the task interface from the original screen to the target screen, but also trigger, based on a one-screen transfer operation of the user, one-screen transfer of a task interface from a location (namely, the original location) to another location (namely, a target location) on a screen, to meet diversified requirements of the user, for example, transferring the task interface to another passenger for use or performing a related operation with assistance of another passenger, and for another example, pinning (pinning) the full-screen interface to the location on the screen or moving the location of the task interface.

In addition, based on the interface transfer method provided in embodiments of this application, the in-vehicle terminal may further analyze target screen task information and/or task information of a to-be-transferred interface, to display, on the target screen in an appropriate display type after interface transfer, the task interface transferred from the original screen. According to the method, the task interface transferred from the original screen may be displayed with a most eye-catching display effect without affecting a task currently concerned by the user on the target screen. This reduces subsequent operations of the user and provides the user with more efficient and user-friendly interface transfer experience.

Part 2: Multi-screen collaborative display method

According to the multi-screen collaborative display method provided in embodiments of this application, a plurality of displays may collaboratively display an image, to provide a user with immersive viewing experience. Content displayed on different displays or manners of displaying content are different. Based on the multi-screen collaborative display method provided in embodiments of this application, when one display displays a content interface, another display may display content based on the content on the display, so that a plurality of displays collaboratively display one image, thereby stimulating an atmosphere and providing a better display effect.

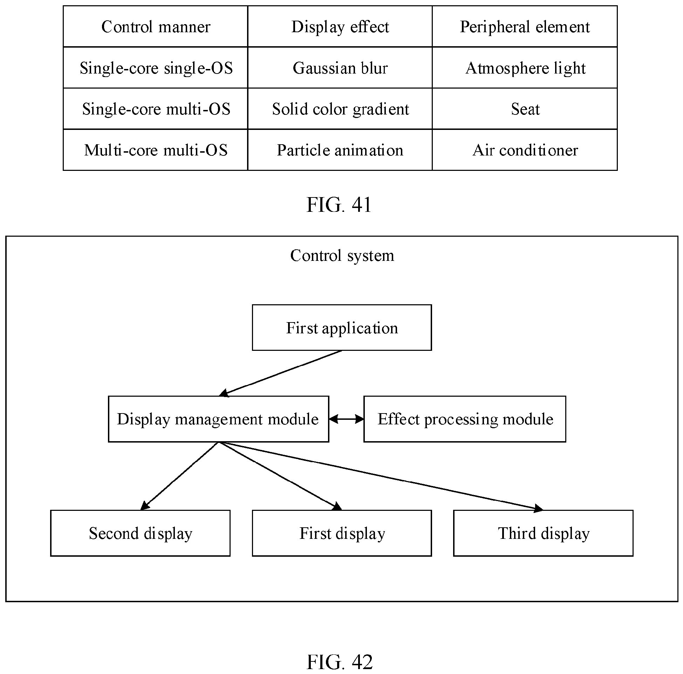

FIG. 41 is a diagram of an application scenario of a multi-screen collaborative display method according to an embodiment of this application. In the multi-screen collaborative display method provided in embodiments of this application, in the plurality of displays, a first display may display a first interface, and a second display and a third display may display content based on the first interface. As shown in FIG. 41, in terms of a display control manner, a control mechanism of the first display, the second display, and the third display may be any one of a single-core single-OS (operating system, OS) control mechanism, a single-core multi-OS control mechanism, or a multi-core multi-OS control mechanism. In terms of a display effect, the first interface displayed on the first display may be any interface, and the second display and the third display may display interfaces obtained after rendering processing is performed on the first interface. A rendering effect may be any one of Gaussian blur, solid color gradient, or particle animation. Optionally, in the multi-screen collaborative display method provided in embodiments of this application, when an image is collaboratively displayed on a plurality of screens, peripheral elements of the plurality of displays, for example, another device in space in which the plurality of displays are located, may be further controlled based on the displayed image, to implement immersive image display with assistance of the another device. For example, as shown in FIG. 41, the peripheral elements of the plurality of displays may include an atmosphere light, a seat, an air conditioner, and the like.

The multi-screen collaborative display method provided in embodiments of this application may be applied to a vehicle cockpit scenario. In this case, the first display, the second display, and the third display may be displays configured in the cockpit. Optionally, the first display, the second display, and the third display may be displays belonging to a same in-vehicle terminal, and the control mechanism of the first display, the second display, and the third display is a one-core multi-screen mechanism (including the single-core single-OS mechanism and the single-core multi-OS mechanism). Alternatively, the first display, the second display, and the third display may be displays belonging to different in-vehicle terminals, and the control mechanism of the first display, the second display, and the third display is a multi-core multi-screen mechanism (including the multi-core multi-OS mechanism).

In some embodiments of this application, the second display and the third display may be respectively located on two sides of the first display in terms of space locations. For example, the second display and the third display may be respectively located on a left side and a right side of the first display. Certainly, a relative location relationship among the first display, the second display, and the third display may also be another location relationship. In embodiments of this application, the first display, the second display, and the third display are not forcibly distributed in the foregoing manner.

In some embodiments of this application, the first display may be any display described in the foregoing content of Part 1 (namely, content of the interface transfer method part) or the following content of Part 3 (namely, content of the audio control method part), and the second display and the third display may be displays located on two sides of the any display. In some embodiments of this application, in a scenario in which the user enables the immersive display mode, the multi-screen collaborative display method provided in embodiments of this application may be used to display content.

The following describes, with reference to a specific application scenario, the multi-screen collaborative display method provided in embodiments of this application. The following uses a scenario in which the second display and the third display are respectively located on the left and right sides of the first display as an example for description. For an implementation in another relative location scenario, refer to the implementation in the scenario. Details are not described in embodiments of this application.

1. Single-core single-OS control multi-screen scenario

In this scenario, the first display, the second display, and the third display belong to a same electronic device (for example, a same in-vehicle terminal), only one OS is configured in the electronic device, and a control mechanism of the first display, the second display, and the third display is a single-core single-OS control mechanism.

For example, FIG. 42 is a diagram of an architecture of a control system according to an embodiment of this application. The control system may be deployed in a single-core single-OS electronic device. As shown in FIG. 42, the control system may include a display management module, an effect processing module, a first display, a second display, and a third display.

The display management module is configured to control and manage the first display, the second display, and the third display. The effect processing module is configured to perform effect processing on a first interface displayed on the first display, so that the display management module can display, on the second display and the third display, a first interface obtained after the effect processing.

Optionally, the control system may further include a first application. The first application may be configured to draw the first interface, and control, by using the display management module, the first display to display the first interface. The first application is an application that is installed in the electronic device and that runs on the first display, and the first interface may be any interface of the first application.

Optionally, when the electronic device to which the control system belongs is implemented by using the software architecture shown in FIG. 9C, the display management module and the effect processing module in the control system may be deployed at the application framework layer shown in FIG. 9C.

It should be understood that the functional modules in the control system are merely an example. During actual application, the electronic device may alternatively be divided into more or fewer functional modules based on other factors, or may be divided into functions of each module in another manner, or may not be divided into functional modules, but works as a whole.

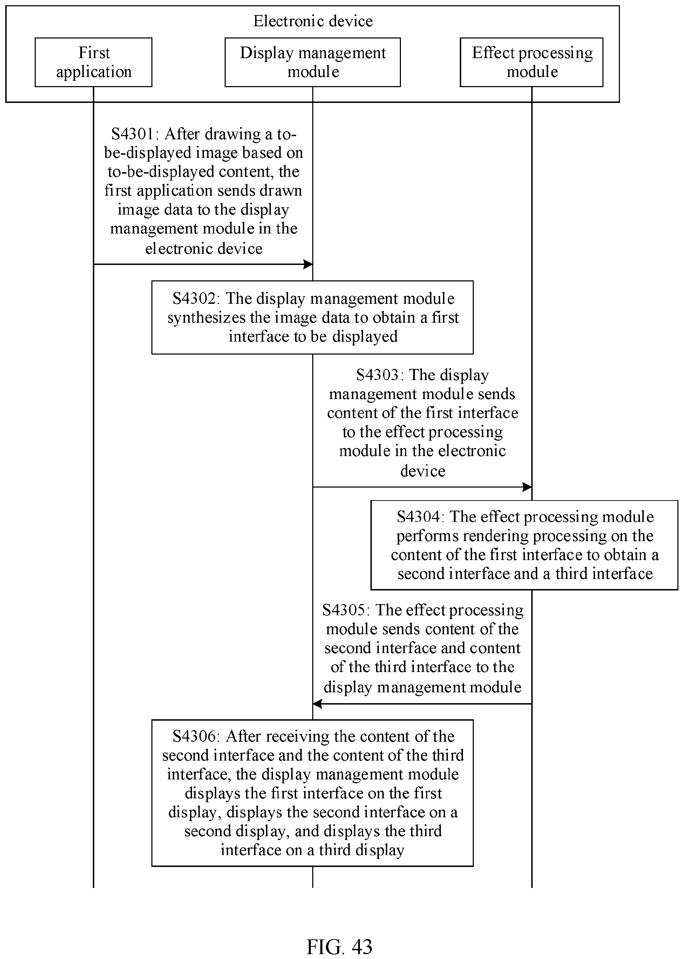

Refer to FIG. 43. The control system applied to the foregoing single-core single-OS scenario is used as an example, and the multi-screen collaborative display method provided in embodiments of this application may include the following steps.

S4301: After drawing a to-be-displayed image based on to-be-displayed content, the first application in the electronic device sends drawn image data to the display management module in the electronic device.

The first application may draw the to-be-displayed image at each refresh cycle of the first display.

S4302: The display management module synthesizes the image data to obtain a first interface to be displayed.

S4303: The display management module sends content of the first interface to the effect processing module in the electronic device.

S4304: The effect processing module performs rendering processing on the content of the first interface to obtain a second interface and a third interface.

The rendering processing may be any one of Gaussian blur processing, solid color gradient processing, or particle animation processing. For a specific processing process, refer to related descriptions in the following embodiments. Details are not described herein.

S4305: The effect processing module sends content of the second interface and content of the third interface to the display management module.

S4306: After receiving the content of the second interface and the content of the third interface, the display management module displays the first interface on the first display, displays the second interface on the second display, and displays the third interface on the third display.

Based on the foregoing method, when displaying the first interface on the first display, the electronic device having the plurality of displays may control the second display and the third display to separately display a special effect interface related to the first interface, to provide richer display effects and improve immersive viewing experience of the user.

2. Single-core multi-OS control multi-screen scenario

In this scenario, the first display, the second display, and the third display belong to a same electronic device (for example, a same in-vehicle terminal), a plurality of OSes are configured in the electronic device, and a control mechanism of the first display, the second display, and the third display is a single-core multi-OS control mechanism.

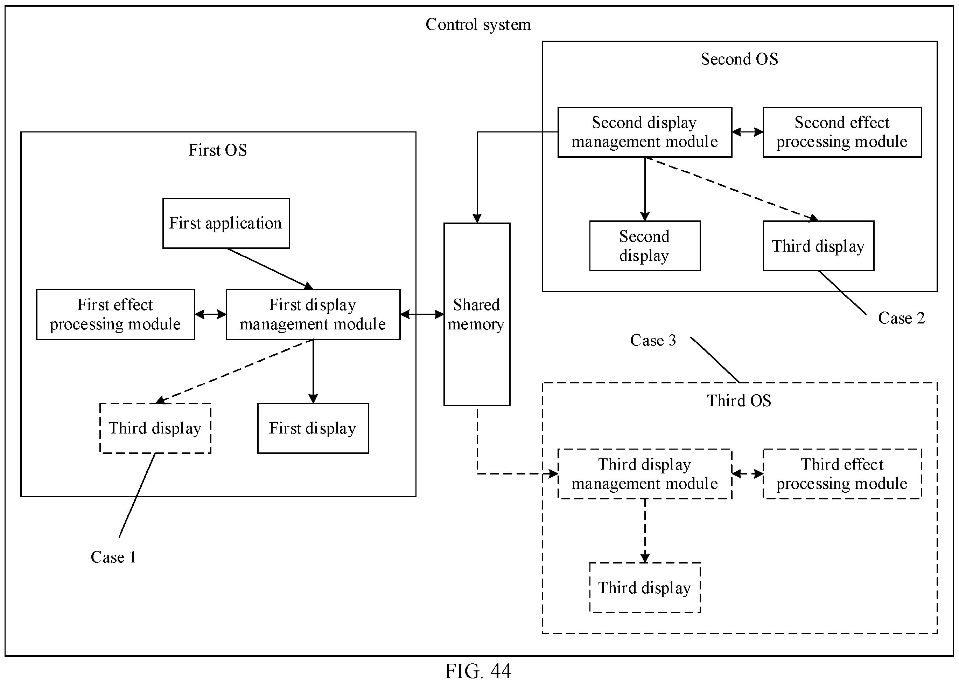

For example, FIG. 44 is a diagram of an architecture of a control system according to an embodiment of this application. The control system may be deployed in a single-core multi-OS electronic device. As shown in FIG. 42, the control system includes at least a first OS and a second OS. The first OS includes a first display management module, a first effect processing module, and a first display, and the second OS may include a second display management module, a second effect processing module, and a second display.

In an optional implementation, in Case 1 shown in FIG. 42, the third display may belong to the first OS. In this scenario, the first OS is used to control the first display and the third display. For a specific control manner, refer to the control manner of the OS in the control system shown in FIG. 42. Details are not described herein again.

In another optional implementation, in Case 2 shown in FIG. 42, the third display may belong to the second OS. In this scenario, the second OS is used to control the second display and the third display. For a specific control manner, refer to the control manner of the OS in the control system shown in FIG. 42. Details are not described herein again.

In still another optional implementation, in Case 3 shown in FIG. 42, the third display may belong to a third OS. In this case, the control system further includes the third OS, and the third OS includes a third display management module, a third effect processing module, and the third display.

In the foregoing manners, each display management module in the control system is configured to control and manage a corresponding display. Each effect processing module is configured to perform effect processing on a first interface displayed on the first display, so that a display management module in an OS in which the effect processing module is located may display, on a corresponding display, a first interface obtained after the effect processing.

Optionally, the first OS may further include the first application. The first application may be configured to draw the first interface, and control, by using the first display management module, the first display to display the first interface. The first interface may be a first application to any interface screen.

In the single-core multi-OS scenario, a plurality of OSes (the first OS and the second OS, or the first OS, the second OS, and the third OS) in the control system may share a memory, and functional modules in the OSes may read data from the shared memory, or may store processed data into the shared memory. Therefore, relatively high access efficiency can be provided, and data storage space of the control system can be saved.

It should be understood that the functional modules in the control system are merely an example. During actual application, the electronic device may alternatively be divided into more or fewer functional modules based on other factors, or may be divided into functions of each module in another manner, or may not be divided into functional modules, but works as a whole.

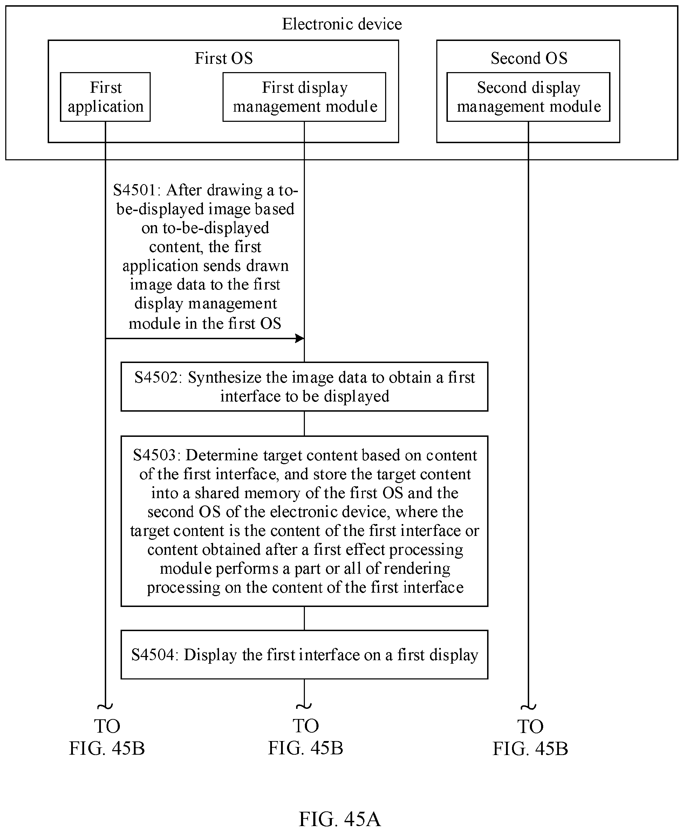

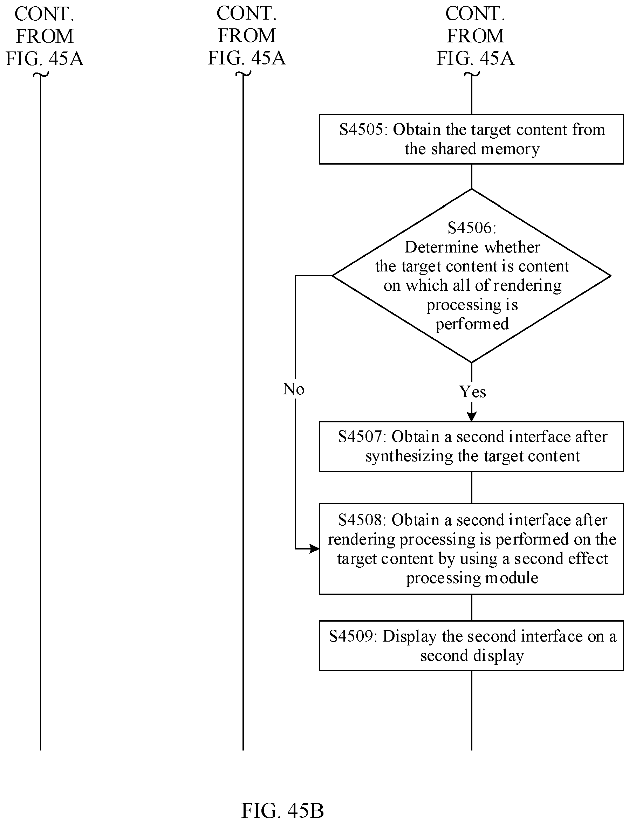

Refer to FIG. 45A and FIG. 45B. The control system applied to the single-core multi-OS scenario is used as an example, and the multi-screen collaborative display method provided in embodiments of this application may include the following steps.

S4501: After drawing a to-be-displayed image based on to-be-displayed content, the first application in the first OS of the electronic device sends drawn image data to the first display management module in the first OS.

The first application may draw the to-be-displayed image at each refresh cycle of the first display.

S4502: The first display management module synthesizes the image data to obtain a first interface to be displayed.

S4503: The first display management module determines target content based on content of the first interface, and stores the target content into the shared memory of the first OS and the second OS of the electronic device, where the target content is the content of the first interface or content obtained after the first effect processing module performs a part or all of rendering processing on the content of the first interface.

The rendering processing may be any one of Gaussian blur processing, solid color gradient processing, or particle animation processing. For a specific processing process, refer to related descriptions in the following embodiments. Details are not described herein.

In some embodiments of this application, after obtaining the first interface, the first display management module may directly use the content of the first interface as the target content and store the target content into the shared memory; or after obtaining the first interface, the first display management module may perform a part of a rendering processing process (namely, a part of a complete rendering processing process) on the content of the first interface by using the first effect processing module, and use the obtained content as the target content and store the target content into the shared memory; or after obtaining the first interface, the first display management module may perform all of a rendering processing process (namely, a complete rendering processing process) on the content of the first interface by using the first effect processing module, use the obtained content as the target content, and store the target content into the shared memory.

A manner in which the first display management module determines the target content may be dynamically adjusted based on performance of the first OS and performance of the second OS. For example, when usage of a central processing unit (central processing unit, CPU) or a graphics processing unit (graphics processing unit, GPU) allocated to the first OS is greater than a specified value, the first display management module may directly use the content of the first interface as the target content, or may use the content obtained after the first effect processing module performs a part of rendering processing on the content of the first interface as the target content. In this manner, when the CPU or the GPU of the first OS is overloaded, the first OS does not perform rendering processing or performs only a part of rendering processing on the content of the first interface, and may leave remaining rendering processing work to the second OS for execution, thereby avoiding or reducing pressure on the CPU or the GPU of the first OS, and improving overall processing efficiency. For another example, when it is determined that usage of a central processing unit (central processing unit, CPU) or a graphics processing unit (graphics processing unit, GPU) allocated to the second OS is greater than a specified value, the first OS may use the content obtained after a part or all of rendering processing is performed on the content of the first interface as the target content. In this manner, when the CPU or the GPU of the second OS is overloaded, the first OS performs a part or all of rendering processing on the content of the first interface, so that the first OS shares a part of rendering processing work. This can reduce or avoid pressure of the rendering processing process on the CPU or the GPU of the second OS, thereby improving overall processing efficiency.

S4504: The first display management module displays the first interface on the first display.

S4505: The second display management module in the second OS of the electronic device obtains the target content from the shared memory.

S4506: The second display management module determines whether the target content is content on which all of rendering processing is performed. If yes, perform step S4507; otherwise, perform step S4508.

S4507: The second display management module obtains a second interface after synthesizing the target content. Step S4509 is performed.

S4508: The second display management module obtains a second interface after performing rendering processing on the target content by using the second effect processing module. Step S4509 is performed.

When the target content is content on which rendering processing is not performed, the second effect processing module may perform a complete rendering processing process on the target content to obtain the second interface. When the target content is content on which a part of rendering processing is performed, the second effect processing module may perform a remaining rendering processing process on the target content to obtain the second interface.

S4509: The second display management module displays the second interface on the second display.

The foregoing procedure shows a method for separately displaying an interface on the first display and the second display by the first OS and the second OS in the electronic device. For the third display, there are the following three cases:

(1) When the third display belongs to the first OS, a method for displaying an interface on the third display by the first OS may be: After obtaining the first interface, the first display management module sends the content of the first interface to the first effect processing module; the first effect processing module performs rendering processing on the content of the first interface to obtain a third interface; the first effect processing module sends content of the third interface to the first display management module; and the first display management module displays the third interface based on the received content.

(2) When the third display belongs to the second OS, for a method for displaying an interface on the third display by the second OS, refer to the method for displaying the second interface on the second display by the second OS in steps S4505 to S4509 in the foregoing procedure. Details are not described herein again.

(3) When the third display belongs to the third OS, for a method for displaying an interface on the third display by the third OS, refer to the method for displaying the second interface on the second display by the second OS in steps S4505 to S4509 in the foregoing procedure. Details are not described herein again.

Based on the foregoing method, a plurality of OSes in the electronic device may collaboratively implement an effect of displaying the first interface on the first display and displaying, on both the second display and the third display, a special effect interface related to the first interface, to provide richer display effects and improve immersive viewing experience of the user.

3. Multi-core multi-OS control multi-screen scenario

In this scenario, the first display, the second display, and the third display belong to different electronic devices (for example, different in-vehicle terminals), one or more OSes may be configured in each electronic device, each OS may include one or more displays, and a control mechanism of the first display, the second display, and the third display is a multi-core multi-OS control mechanism.

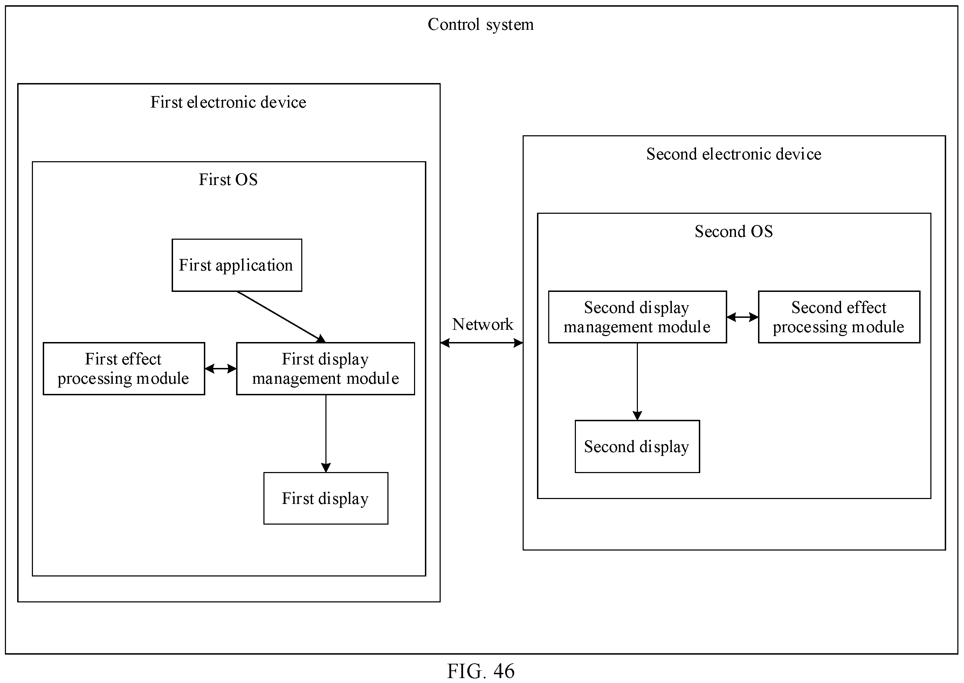

For example, FIG. 46 is a diagram of an architecture of a control system according to an embodiment of this application. The control system may be deployed in a plurality of electronic devices. For example, a first display and a second display in the control system are deployed in different electronic devices and belong to different OSes. As shown in FIG. 46, the control system includes at least a first electronic device and a second electronic device, where the first electronic device includes at least a first OS, and the second electronic device includes at least a second OS. The first OS includes a first display management module, a first effect processing module, and the first display, and the second OS includes a second display management module, a second effect processing module, and the second display.

Optionally, the first electronic device may include only the first OS, or may include more OSes. Similarly, the second electronic device may include only the second OS, or may include more OSes.

In an optional implementation, the third display (not shown in FIG. 46) may belong to the first OS or the second OS. In this scenario, for a specific control manner in which the first OS or the second OS controls the plurality of displays, refer to the control manner of the OS in the control system shown in FIG. 42. Details are not described herein again.

In another optional implementation, the third display may belong to a third OS, and the third OS includes a third display management module, a third effect processing module, and the third display. In a possible case, the third OS may belong to the first electronic device or the second electronic device. In another possible case, the third OS may belong to a third electronic device. In this case, the control system further includes the third electronic device. For a manner in which the plurality of OSes in the first electronic device, the second electronic device, or the third electronic device control a display, refer to the control manner of the OS in the control system shown in FIG. 44. Details are not described herein again.

In the foregoing manners, each display management module in the control system is configured to control and manage a corresponding display. Each effect processing module is configured to perform effect processing on a first interface displayed on the first display, so that a display management module in an OS in which the effect processing module is located may display, on a corresponding display, a first interface obtained after the effect processing.

Optionally, the first OS may further include the first application. The first application may be configured to draw the first interface, and control, by using the first display management module, the first display to display the first interface. The first interface may be a first application to any interface screen.

In the multi-core multi-OS scenario, the plurality of OSes that belong to a same electronic device in the control system may share a memory. Different electronic devices (or OSes of different electronic devices) cannot share the memory, and can receive and send data through a network stream.

It should be understood that the functional modules in the control system are merely an example. During actual application, the electronic device may alternatively be divided into more or fewer functional modules based on other factors, or may be divided into functions of each module in another manner, or may not be divided into functional modules, but works as a whole.

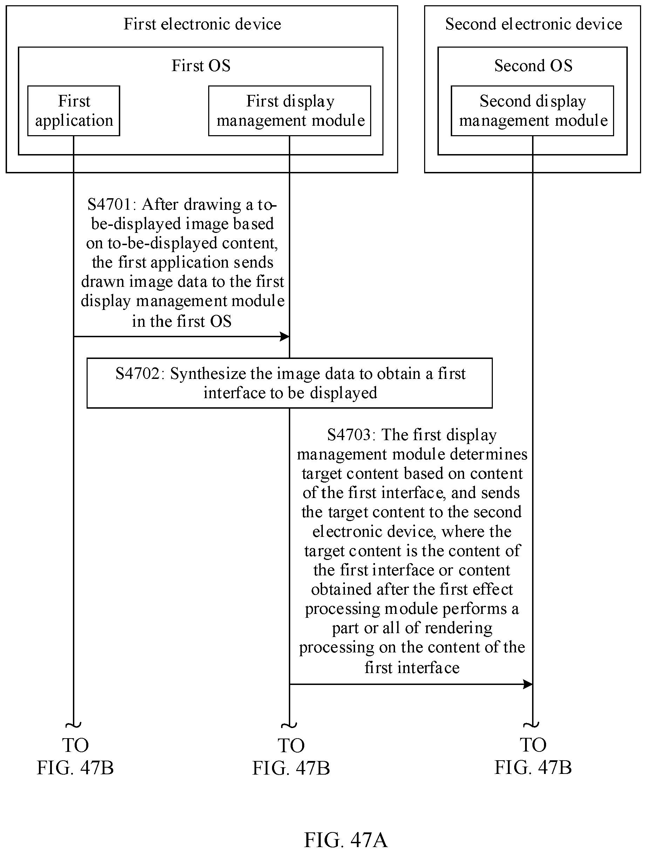

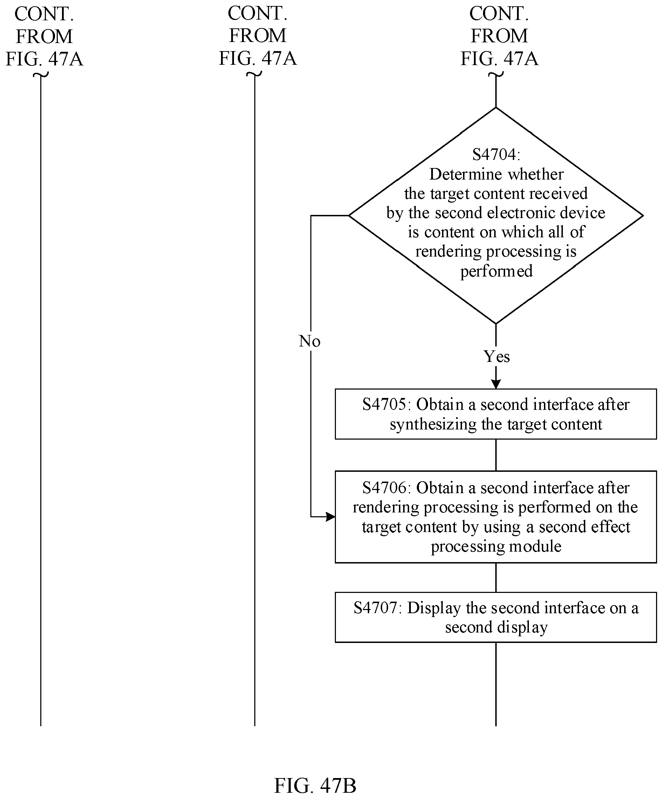

Refer to FIG. 47A and FIG. 47B. The control system applied to the multi-core multi-OS scenario is used as an example, and the multi-screen collaborative display method provided in embodiments of this application may include the following steps.

S4701: After drawing a to-be-displayed image based on to-be-displayed content, the first application in the first OS of the first electronic device sends drawn image data to the first display management module in the first OS.

The first application may draw the to-be-displayed image at each refresh cycle of the first display.

S4702: The first display management module synthesizes the image data to obtain a first interface to be displayed.

S4703: The first display management module determines target content based on content of the first interface, and sends the target content to the second electronic device, where the target content is the content of the first interface or content obtained after the first effect processing module performs a part or all of rendering processing on the content of the first interface.

For methods such as rendering processing, target content, and a manner of determining the target content, refer to the related descriptions of step S4503 in the foregoing embodiment. Details are not described herein again.

S4704: The second display management module in the second OS of the second electronic device determines whether the target content received by the second electronic device is content on which all of rendering processing is performed. If yes, perform step S4705; otherwise, perform step S4706.

S4705: The second display management module obtains a second interface after synthesizing the target content. S4707 is performed.

S4706: The second display management module obtains a second interface after performing rendering processing on the target content by using the second effect processing module. Step S4707 is performed.

When the target content is content on which rendering processing is not performed, the second effect processing module may perform a complete rendering processing process on the target content to obtain the second interface. When the target content is content on which a part of rendering processing is performed, the second effect processing module may perform a remaining rendering processing process on the target content to obtain the second interface.

S4707: The second effect processing module displays the second interface on the second display.

The foregoing procedure shows a method for separately displaying an interface on the first display and the second display by the first OS of the first electronic device and the second OS of the second electronic device. For the third display, there are the following five cases:

(1) When the third display belongs to the first OS, a method for displaying an interface on the third display by the first OS may be: After obtaining the first interface, the first display management module sends the content of the first interface to the first effect processing module; the first effect processing module performs rendering processing on the content of the first interface to obtain a third interface; the first effect processing module sends content of the third interface to the first display management module; and the first display management module displays the third interface based on the received content.

(2) When the third display belongs to the second OS, for a method for displaying an interface on the third display by the second OS, refer to the method for displaying the second interface on the second display by the second OS in steps S4704 to S4707 in the foregoing procedure. Details are not described herein again.

(3) When the third display belongs to the third OS and the third OS belongs to the first electronic device, for a method for displaying an interface on the third display by the third OS, refer to the method for displaying the third interface on the third display by the first OS in the case (1) in the procedure. Details are not described herein again.

(4) When the third display belongs to the third OS and the third OS belongs to the second electronic device, for a method for displaying an interface on the third display by the third OS, refer to the method for displaying the second interface on the second display by the second OS in steps S4704 to S4707 in the procedure. Details are not described herein again.

(5) When the third display belongs to the third OS and the third OS belongs to the third electronic device, for a method for displaying an interface on the third display by the third OS, refer to the method described in steps S4703 to S4707 in the procedure. Details are not described herein again.

Based on the foregoing method, a plurality of OSes in the plurality electronic devices may collaboratively implement an effect of displaying the first interface on the first display and displaying, on both the second display and the third display, a special effect interface related to the first interface, to provide richer display effects and improve immersive viewing experience of the user.

The following describes the rendering processing method in the foregoing embodiment with reference to a specific example.

1. Gaussian blur processing

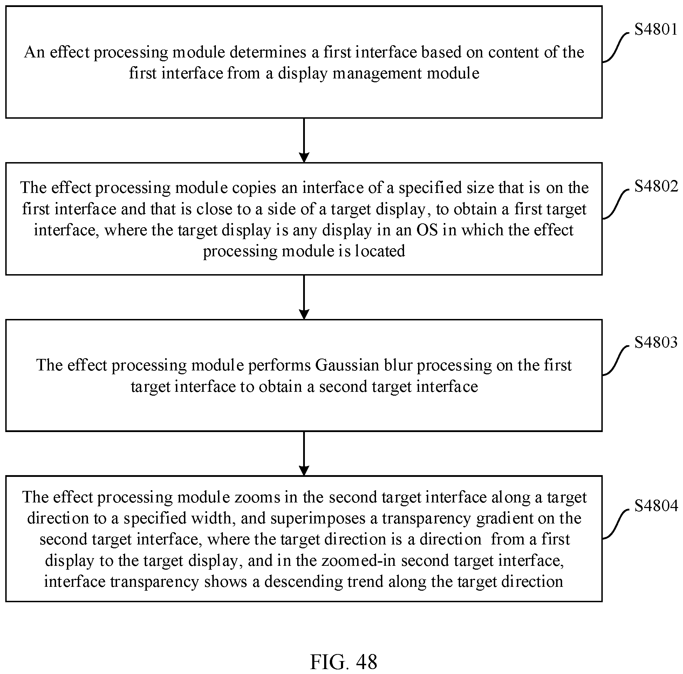

Refer to FIG. 48. A Gaussian blur processing method, for example, applied to the control system provided in the foregoing embodiments, provided in this embodiment of this application may include the following steps.

S4801: The effect processing module determines a first interface based on content of the first interface from the display management module.

The effect processing module and the display management module may be respectively the effect processing module and the display management module in any OS described in the foregoing embodiments.

S4802: The effect processing module copies an interface of a specified size that is on the first interface and that is close to a side of a target display, to obtain a first target interface, where the target display is any display in the OS in which the effect processing module is located.

Optionally, the target display may be the second display or the third display in the foregoing embodiments.

In some embodiments of this application, the display management module may obtain a location relationship between the target display and another display in advance. The effect processing module may determine a location relationship between the target display and the first display based on the location relationship obtained by the display management module, and then determine, based on the location relationship, a location of the first target interface captured from the first interface. For example, when the target display is located on the left side of the first display, the effect processing module may tailor and copy an interface of a specified size on the left side of the first interface as the first target interface. For another example, when the target display is located on the right side of the first display, the effect processing module may tailor and copy an interface of a specified size on the right side of the first interface as the first target interface.

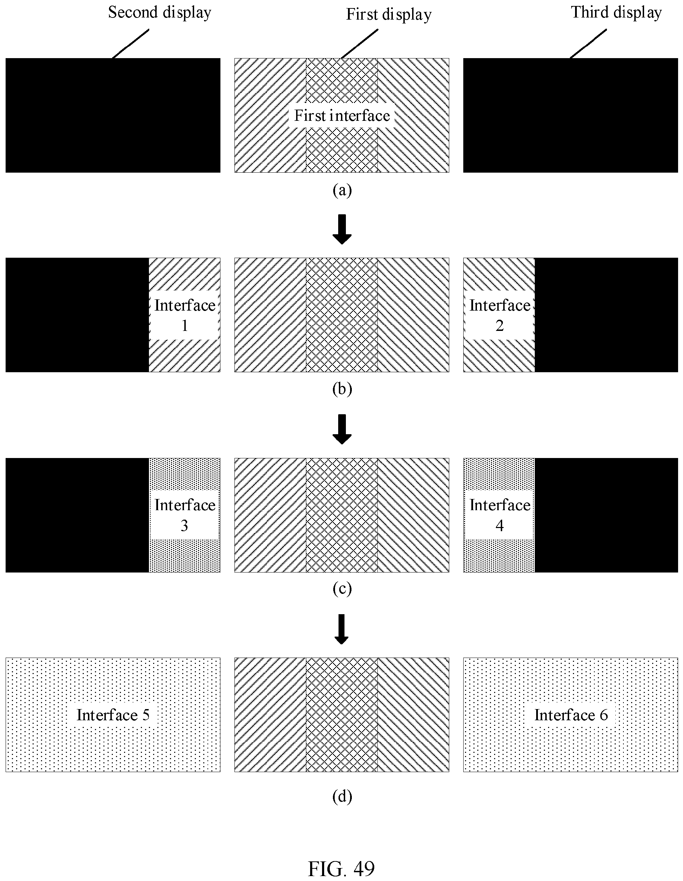

For example, as shown in (a) in FIG. 49, in the scenario in which the second display and the third display are respectively located on the left and right sides of the first display, the first interface may be the first interface displayed on the first display shown in (a) in FIG. 49. For example, the specified size is one third of a size of the first interface. When the target display is the second display, the first target interface may be an interface 1 shown in (b) in FIG. 49, and the interface 1 includes content in an area that is one third of the first interface and that is on the left side of the first interface. When the target display is the third display, the first target interface may be an interface 2 shown in (b) in FIG. 49, and the interface 2 includes content in an area that is one third of the first interface and that is on the right side of the first interface.

S4803: The effect processing module performs Gaussian blur processing on the first target interface to obtain a second target interface.

For example, when the target display is the second display, the second target interface may be an interface 3 shown in (c) in FIG. 49. When the target display is the third display, the second target interface may be an interface 4 shown in (c) in FIG. 49. It should be noted that both the interface 3 and the interface 4 shown in (c) in FIG. 49 are merely used to represent an area occupied by the second target interface, and do not represent specific content in the second target interface.

S4804: The effect processing module zooms in the second target interface along a target direction to a specified width, and superimposes a transparency gradient on the second target interface, where the target direction is a direction from the first display to the target display, and in the zoomed-in second target interface, interface transparency shows a descending trend along the target direction.

For example, the specified width may be a width of the target display. Certainly, the width may be another width. This is not limited in embodiments of this application.

For example, when the target display is the second display, the zoomed-in second target interface may be an interface 5 shown in (d) in FIG. 49. In the interface, an area on one side in the target direction is displayed as black, an area on a side away from the target direction is displayed as transparent, and transparency of the interface gradually decreases along the target direction. When the target display is the third display, the zoomed-in second target interface may be an interface 6 shown in (d) in FIG. 49. In the interface, an area on one side in the target direction is displayed as black, an area on a side away from the target direction is displayed as transparent, and transparency of the interface gradually decreases along the target direction. It should be noted that the interface 5 and the interface 6 shown in (d) in FIG. 49 are merely used to represent an area occupied by the zoomed-in second target interface, and do not represent specific content in the zoomed-in second target interface.

Based on the foregoing method, when a user interface is displayed on the first display, a Gaussian blur rendering effect may be displayed on both the second display and the third display, and immersive viewing experience can be provided for the user in a combined display manner of the three displays.

2. Solid color gradient processing

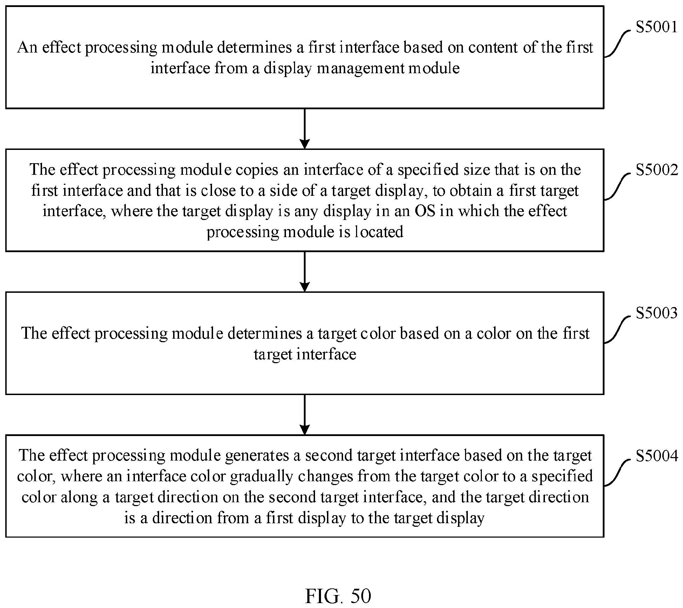

Refer to FIG. 50. A solid color gradient processing method, for example, applied to the control system provided in the foregoing embodiments, provided in this embodiment of this application may include the following steps.

S5001: The effect processing module determines a first interface based on content of the first interface from the display management module.

S5002: The effect processing module copies an interface of a specified size that is on the first interface and that is close to a side of a target display, to obtain a first target interface, where the target display is any display in the OS in which the effect processing module is located.

For specific implementations of steps S5001 and S5002, refer to the method described in steps S4801 and S4802 in the foregoing embodiment. Details are not described herein again.

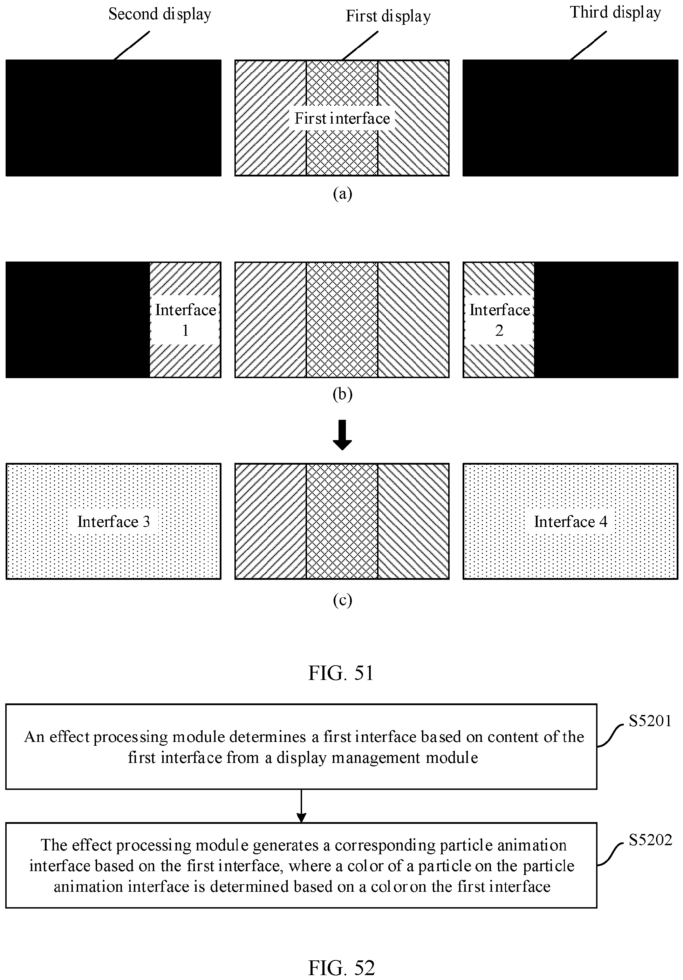

For example, as shown in (a) in FIG. 51, in the scenario in which the second display and the third display are respectively located on the left and right sides of the first display, the first interface may be the first interface displayed on the first display shown in (a) in FIG. 51. For example, the specified size is one third of a size of the first interface. In this case, when the target display is the second display, the first target interface may be an interface 1 shown in (b) in FIG. 51, and the interface 1 includes content in an area that is one third of the first interface and that is on the left side of the first interface. When the target display is the third display, the first target interface may be an interface 2 shown in (b) in FIG. 51, and the interface 2 includes content in an area that is one third of the first interface and that is on the right side of the first interface.

S5003: The effect processing module determines a target color based on a color on the first target interface.

For example, the target color may be any color selected from colors of the first target interface, or the target color may be an average color of all colors of the first target interface. Alternatively, the target color may be a color selected in another manner. This is not limited in this embodiment of this application.

S5004: The effect processing module generates a second target interface based on the target color, where an interface color gradually changes from the target color to a specified color along a target direction on the second target interface, and the target direction is a direction from the first display to the target display.

For example, the specified color may be black.

For example, when the target display is the second display, the second target interface may be an interface 3 shown in (c) in FIG. 51. In the interface, an area on one side in the target direction is displayed as the specified color, an area on a side away from the target direction is displayed as the target color, and a color on the interface gradually changes from the target color to the specified color along the target direction. When the target display is the third display, the second target interface may be an interface 4 shown in the (c) in FIG. 51. In the interface, an area on one side in the target direction is displayed as the specified color, an area on a side away from the target direction is displayed as the target color, and a color on the interface gradually changes from the target color to the specified color along the target direction. It should be noted that both the interface 3 and the interface 4 shown in (c) in FIG. 51 are merely used to represent an area occupied by the second target interface, and do not represent specific content in the second target interface.

Based on the foregoing method, when a user interface is displayed on the first display, a solid color gradient rendering effect may be displayed on both the second display and the third display, and immersive viewing experience can be provided for the user in a combined display manner of the three displays.

3. Particle animation processing

Refer to FIG. 52. A particle animation processing method, for example, applied to the control system provided in the foregoing embodiments, provided in this embodiment of this application may include the following steps.

S5201: The effect processing module determines a first interface based on content of the first interface from the display management module.

The effect processing module and the display management module may be respectively the effect processing module and the display management module in any OS described in the foregoing embodiments.

S5202: The effect processing module generates a corresponding particle animation interface based on the first interface, where a color of a particle on the particle animation interface is determined based on a color on the first interface.

In an optional implementation, the particle animation interface may display a particle animation corresponding to the entire first interface. In this manner, both the second display and the third display that are located on two sides of the first display may display a same particle animation interface. Optionally, in this manner, colors of particles at different locations on the particle animation interface may be determined based on colors of corresponding locations on the first interface, or may be determined in another manner. This is not limited in embodiments of this application. For example, the effect processing module may perform Gaussian blur processing on the first interface, and then select a color from different locations on the processed interface as the color of the particle corresponding to the location. For another example, the effect processing module may use a color at a specified location on the first interface as the color of the particle. Optionally, in this manner, a size of the particle animation interface may be the same as a size of the first interface.

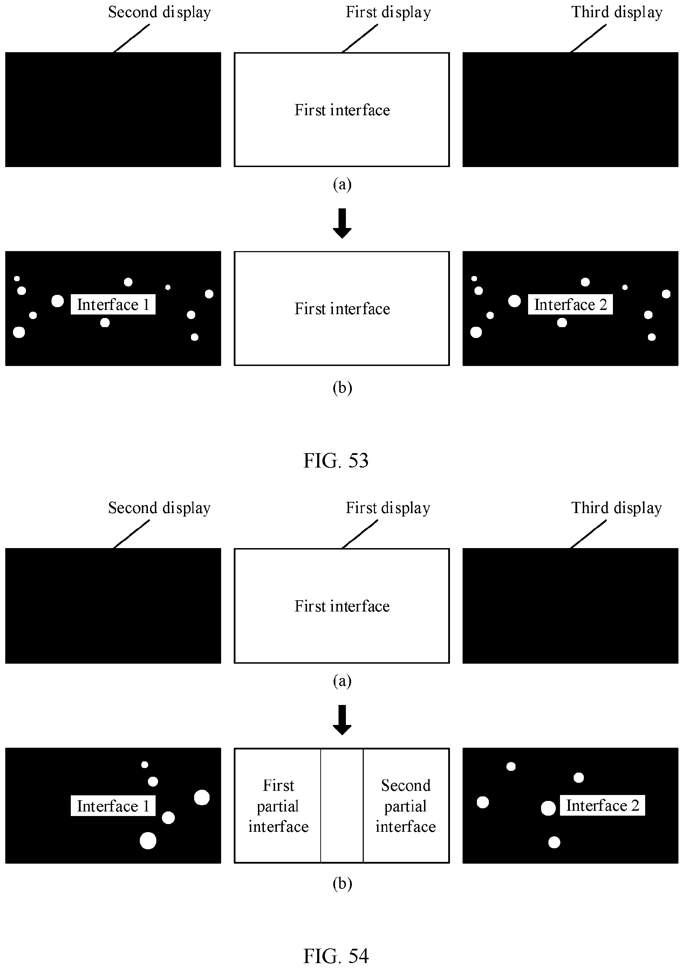

For example, as shown in (a) in FIG. 53, in the scenario in which the second display and the third display are respectively located on the left and right sides of the first display, the first interface may be the first interface displayed on the first display shown in (a) in FIG. 51. When the target display is the second display, the particle animation interface may be an interface 1 shown in (b) in FIG. 53. When the target display is the third display, the particle animation interface may be an interface 2 shown in (b) in FIG. 53. Particle animations displayed on the interface 1 and the interface 2 are consistent.

In another optional implementation, the particle animation interface may display a particle animation corresponding to a partial interface of the first interface. The partial interface may be an interface of a specified size that is on the first interface and that is close to the target display, and the target display is a display configured to display the particle animation interface. In this manner, the second display and the third display that are located on two sides of the first display may display different particle animation interfaces. Optionally, in this manner, colors of particles at different locations on the particle animation interface may be determined based on colors of corresponding locations on the partial interface, or may be determined in another manner. This is not limited in this embodiment of this application. For example, this may be determined based on the method in the foregoing manner. Optionally, a size of the particle animation interface may be the same as or different from a size of the partial interface.

For example, as shown in (a) in FIG. 54, in the scenario in which the second display and the third display are respectively located on the left and right sides of the first display, the first interface may be the first interface displayed on the first display shown in (a) in FIG. 54. When the target display is the second display, the particle animation interface may be an interface 1 shown in (b) in FIG. 54, and a particle animation displayed on the interface 1 is a particle animation corresponding to first partial interface content on the first interface. When the target display is the third display, the particle animation interface may be an interface 2 shown in (b) in FIG. 54, a particle animation displayed on the interface 2 is a particle animation corresponding to a second partial interface content on the first interface. The particle animations displayed on the interface 1 and the interface 2 are different.

Optionally, when the first interface is an interface (for example, a video interface) of media content, in the foregoing two manners, a dynamic change amplitude (including height and depth change amplitudes) of a particle on the particle animation interface may be determined according to factors such as playing rhythm and volume of the media content; and a density of particles on the particle animation interface may be determined based on a color feature or an audio feature of the media content. The color feature may be a depth of an interface color, or the like, and the depth of the interface color may be distinguished based on parameters such as saturation, a color parameter, and brightness of an interface. The audio feature may be audio rhythm or the like, and the soothing and tension of the audio rhythm may be determined based on parameters such as a frequency of the audio. For example, when it is determined that the color on the first interface belongs to a light color range, a relatively low particle density may be set; and when it is determined that the color on the first interface belongs to a dark color range, a relatively high particle density may be set. For another example, when it is determined that the audio rhyme corresponding to the media content on the first interface belongs to a soothing range, a relatively low particle density may be set; and when it is determined that the audio rhyme corresponding to the media content on the first interface belongs to a tension range, a relatively high particle density may be set.

In a specific implementation process, for the interface color, a color parameter range corresponding to the light color range and a color parameter range corresponding to the dark color range may be preset; for the audio rhythm, an audio parameter range corresponding to the soothing range and an audio parameter range corresponding to the tension range may be preset. Particle density parameters corresponding to different color depth ranges and/or audio rhyme ranges may also be preset. Therefore, when the particle animation interface is displayed, a corresponding color depth range and/or audio rhythm range may be determined based on a color parameter and/or an audio parameter corresponding to the interface, to determine the particle density parameter of the particle animation interface.

In some embodiments of this application, when only the first interface is displayed on the first display, and a display area of the first interface on the first display does not occupy a complete display area of the first display, the first display management module may generate, by using the first effect processing module, a particle animation displayed outside the first interface, and display the particle animation in a display area that is not occupied by the first interface on the first display. For a manner of generating the particle animation by using the first effect processing module, refer to the foregoing method.

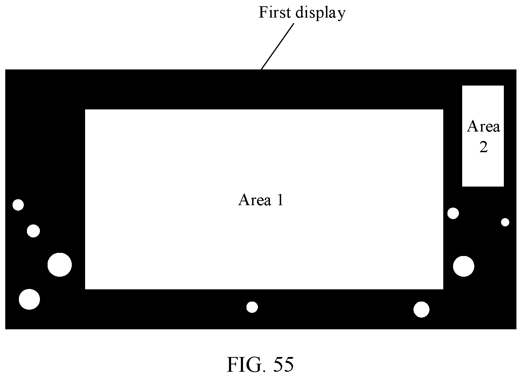

For example, as shown in FIG. 55, when an area occupied by the first interface displayed on the first display is an area 1, a particle animation corresponding to the first interface may be displayed in an area 2 that is on the first display and that is not occupied by the first interface.

Based on the foregoing method, when a user interface is displayed on the first display, a particle animation rendering effect may be displayed on both the second display and the third display, and immersive viewing experience can be provided for the user in a combined display manner of the three displays.

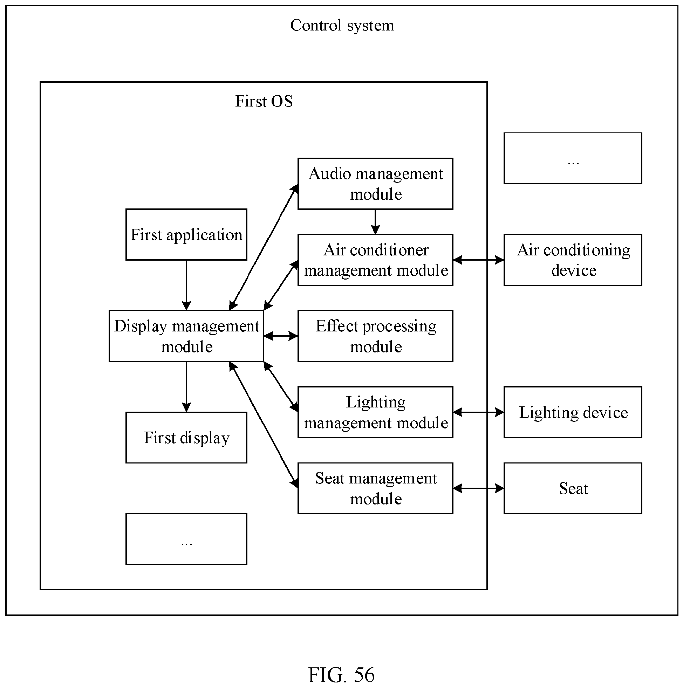

In some embodiments of this application, in a scenario in which the electronic device in the foregoing embodiments is an in-vehicle terminal, the control system in the foregoing embodiments may be deployed in a vehicle cockpit. In addition to the components such as the device, the system, the functional module, and the hardware apparatus in the foregoing embodiments, the control system may further include a lighting device (for example, an atmosphere light), a seat, an air conditioning device, and the like shown in FIG. 56. A first OS in which a first display is located may further include an audio management module, a lighting management module, an air conditioner management module, a seat management module, and the like. The audio management module is configured to control and manage audio input and output related to the first display. The lighting management module is configured to control and manage the lighting device. The air conditioner management module is configured to control and manage the air conditioning device. The seat management module is configured to control and manage the seat in the cockpit.

The first OS may control the lighting device, the seat, and the air conditioning device in the control system based on content displayed on the first interface. Specifically, the following cases may be included:

(1) When an audio is being played when the first interface is displayed, the first display management module in the first OS may notify the air conditioner management module of a detected event that playing volume of the audio increases in specified decibels within specified duration (for example, millisecond-level duration such as 5 milliseconds). After receiving the notification, the air conditioner management module may increase air volume of an air exhaust vent of the air conditioning device by a specified value, increase air exhaust time by specified duration, or increase an air speed of an air exhaust vent by a specified value, so that the user can experience this change in an immersive manner. Optionally, the first display management module may further detect, by using the seat management module, a seat taken by a user, so that the air conditioner management module adjusts, in the foregoing manner, only an air conditioner corresponding to the seat taken by the user. Optionally, the first display management module may further control, by using the seat management module, the seat to shake, and the like, to provide the user with more immersive experience.

(2) The first display management module in the first OS may determine a target color according to a color on the first interface, and indicate the target color to the lighting management module. The lighting management module may adjust a color and brightness of the lighting device based on the target color, to control a display manner of the lighting device in real time, and assist in providing immersive viewing experience. For a manner of determining the target color based on the color on the first interface, refer to the method described in step S5003 in the foregoing embodiment. Details are not described herein again.

(3) The first display management module in the first OS may perform artificial intelligence (artificial intelligence, AI) analysis on content of the first interface to recognize a picture scenario, and determine, based on a preset correspondence between a different scenario and an air conditioner temperature, an air conditioner temperature corresponding to a current scenario. In this way, the temperature of the air conditioning device can be adjusted through the air conditioner management module. For example, when the recognized scenario is a cold glacier scenario or the like, the temperature of the air conditioner may be lowered; when the recognized scenario is a hot environment or the like, the temperature of the air conditioner may be increased; or when the recognized scenario is a natural scenario like flower, grass, or tree, a corresponding aroma may be given off.

Based on the foregoing method, an immersive service may be provided together with periphery elements when content is displayed, thereby improving immersive experience of the user.

In the multi-screen collaborative display method provided in embodiments of this application, the plurality of displays may simultaneously display an image of an application and different related special effects (including Gaussian blur, solid color gradient, particle animation, and the like), to implement a multi-screen image simultaneous display effect, and further provide richer immersive content outputs. In this way, relatively high flexibility and practicability are provided, and immersive experience of the user can be improved. In addition, according to the multi-screen collaborative display method provided in embodiments of this application, based on output content (including image content, sound content, and the like), a service provided by a periphery device of a display, for example, a light, an air conditioner, or a seat, may be further adjusted. For example, a color and brightness of the light, a temperature of the air conditioner, an air direction and air volume of an air exhaust outlet, and a seat status may be adjusted. This can further provide more diversified immersive services, and then improve immersive experience of the user.

Part 3: Audio control method

According to the audio control method provided in embodiments of this application, audio playing corresponding to a display can be controlled in a scenario in which a plurality of screens and a plurality of audio output apparatuses are included, to improve flexibility and usability of audio playing control.

The audio control method provided in embodiments of this application may be applied to an audio control system that includes a control device, a plurality of displays, and a plurality of audio output apparatuses. The control device is configured to control the plurality of displays and the plurality of audio output apparatuses. The plurality of displays may be displays of the control device, or may be displays of other electronic devices. In the plurality of displays, different displays may belong to a same device, or may belong to different devices. The audio output apparatuses and the displays may belong to a same electronic device or different electronic devices. According to solutions provided in embodiments of this application, an appropriate audio output apparatus can be flexibly allocated to a display based on specific running statuses of the plurality of displays in the system to play an audio, so that flexibility, accuracy, and efficiency of audio control can be improved, and user experience of listening to an audio can be improved.

In some embodiments of this application, the control device may be the in-vehicle terminal described in the foregoing content of Part 1 (namely, the content of the interface transfer method part), or may be the electronic device described in the foregoing content of Part 2 (namely, the content of the multi-screen collaborative display method part). The plurality of displays may be the plurality of displays provided in the foregoing content of Part 1, or may be the plurality of displays provided in the foregoing content of Part 2.

Optionally, the electronic device shown in FIG. 9A or FIG. 9C may serve as a possible implementation of the control device provided in this embodiment of this application. During actual application, composition of the control device may alternatively be implemented in another manner, for example, may include more or fewer modules. This is not specifically limited in this embodiment of this application.

In some embodiments of this application, the audio control system may be a system including a control device, and a plurality of displays and a plurality of audio output apparatuses that are located in a same space environment. The space environment may be, for example, a cockpit interior or an indoor environment. Based on the solution provided in this embodiment of this application, the plurality of audio output apparatuses in the space environment may provide an audio playing service for a user under unified control of the control device.

The solution provided in this embodiment of this application mainly includes audio control methods in two scenarios. The two scenarios are respectively a non-content cross-screen transfer scenario and a content cross-screen transfer scenario. The non-content cross-screen transfer scenario means a scenario in which content interaction does not exist between different displays in an audio control system. The content cross-screen transfer scenario means a scenario in which content interaction exists between different displays in the audio control system. Display content interaction means that a service/application running on a display may be shared to another display for running, or content displayed on a display may be shared to another display for display. The following describes audio control methods in various scenarios.

Scenario 1: Non-content transfer scenario

In this scenario, there is no content transfer between different displays, and therefore audio transfer is not involved. When a control device controls audio playing, interference between audio playing processes corresponding to content on different displays is relatively small. Therefore, the control device may relatively independently control content displayed on each display and the audio playing process. Specifically, in this scenario, the electronic device may use a partition management mechanism when performing audio control. The partition management mechanism means that the electronic device may perform sound zone division on a space environment corresponding to an audio control system, where the sound zone defines an area range in which an audio output apparatus is located in the space environment corresponding to the audio control system, different sound zones are different area ranges in the space environment, and each area defined by the sound zone includes at least one display and at least one audio output apparatus. Each display may be associated with a sound zone in which the display is located, and audio data corresponding to content displayed on each display may be played by using an audio output apparatus in the sound zone associated with the display. When displaying content on a display, the electronic device may select an associated sound zone based on the display, and play an audio by using an audio output apparatus in the associated sound zone.

In some embodiments of this application, the sound zone may be classified into a primary available sound zone and a secondary available sound zone. The primary available sound zone may be used as a default sound zone. When multi-sound zone division is not performed, each display may be associated with the primary available sound zone, and may be associated with a newly obtained sound zone after the multi-sound zone division is performed. For the space environment corresponding to the audio control system, the primary available sound zone may be the entire space environment, and audio output apparatuses corresponding to the primary available sound zone are all audio output apparatuses in the entire space environment. In other words, if the primary available sound zone is selected during audio playing, all audio output apparatuses in the space environment may be used to play an audio. The secondary available sound zone is a partial area in the space environment, and an audio output apparatus corresponding to the secondary available sound zone is an audio output apparatus in a partial area corresponding to the secondary available sound zone. There may be a plurality of secondary available sound zones.

In this embodiment of this application, one sound zone may be associated with a plurality of displays. For the sound zone, all the plurality of displays associated with the sound zone may play an audio by using an audio output apparatus in the sound zone. For a display, one display can play an audio only by using an audio output apparatus in one sound zone associated with the display. The division of the sound zone may be automatically performed by the control device according to a specified rule, or may be manually performed by the user.

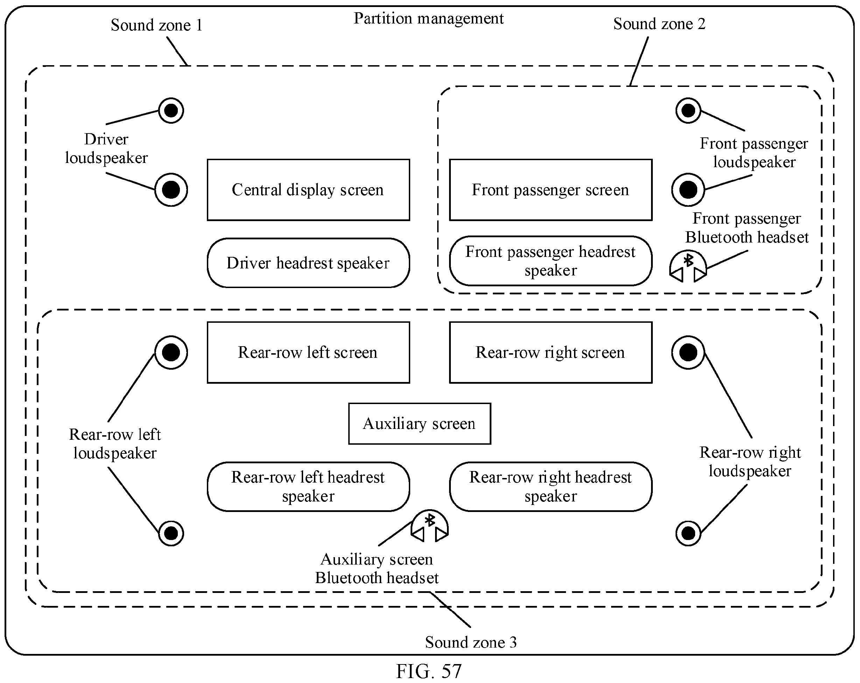

For example, the audio control system may be a system including a control device, a plurality of displays, and a plurality of audio output apparatuses that are deployed in a vehicle cockpit, and the space environment corresponding to the audio control system may be space in the vehicle cockpit. As shown in FIG. 57, a five-seat vehicle is used as an example. A display deployed in a vehicle cockpit may include a central display screen (or referred to as a driver screen), a front passenger screen, a rear-row screen (including at least one of a rear-row left screen, a rear-row right screen, or an auxiliary screen), and the like. An audio output apparatus deployed in the vehicle cockpit may include a driver loudspeaker (that is, a loudspeaker), a front passenger loudspeaker, rear-row loudspeakers (including a rear-row left loudspeaker and a rear-row right loudspeaker), a headrest speaker of each seat (including a driver headrest speaker, a front passenger headrest speaker, a rear-row left headrest speaker, and a rear-row right headrest speaker), a Bluetooth headset connected to each seat or each display (for example, a front passenger Bluetooth headset and an auxiliary screen Bluetooth headset shown in FIG. 57), and the like, where the driver loudspeaker, the front passenger loudspeaker, and the rear-row loudspeakers may jointly form a vehicle loudspeaker in the vehicle cockpit. The control device may control the plurality of displays by using a one-core multi-screen control mechanism. The one-core multi-screen mechanism may be understood as that one chip drives a plurality of displays to perform interaction. As shown in FIG. 57, sound zones divided in the vehicle cockpit may include sound zones 1 to 3. A sound zone 1 may be a primary available sound zone, and a sound zone 2 and a sound zone 3 may be secondary available sound zones. A display and an audio output apparatus included in each sound zone are shown in FIG. 57. The primary available sound zone, namely, the sound zone 1, corresponds to space in the entire cockpit. Audio output apparatuses in the sound zone 1 may include all audio output apparatuses in the cockpit. The central display screen is associated with the sound zone 1. Therefore, when playing an audio corresponding to content displayed on the central display screen, the control device may select, from all the audio output apparatuses in the cockpit, at least one audio output apparatus that needs to be used. The sound zone 2 corresponds to space near a front passenger seat, and audio output apparatuses in the sound zone 2 include a front passenger loudspeaker, a front passenger headrest speaker, a front passenger Bluetooth headset, and the like. The front passenger screen is associated with the sound zone 2. Therefore, when playing an audio corresponding to content displayed on the front passenger screen, the control device may select, from the audio output apparatuses in the sound zone 2, an audio output apparatus that needs to be used. The sound zone 3 corresponds to space near a rear-row seat, and audio output apparatuses in the sound zone 3 include a rear-row loudspeaker, a rear-row headrest speaker, a rear-row screen Bluetooth headset, and the like. The rear-row screen is associated with the sound zone 3. Therefore, when playing an audio corresponding to content displayed on the rear-row screen, the control device may select, from the audio output apparatuses in the sound zone 3, an audio output apparatus that needs to be used.

It should be noted that a quantity of sound zones, a sound zone division manner, an association relationship between a display and a sound zone, and the like shown in FIG. 57 are merely an example provided in this embodiment of this application, and do not constitute a limitation on a sound zone division method and a method for associating a display and a sound zone provided in this embodiment of this application. In the scenario shown in FIG. 57, division of sound zones in space of the cockpit, the association relationship between the display and the sound zone, and the like are not limited to the implementations described in the foregoing content. During actual application, the control device may flexibly perform sound zone division and flexibly control the association relationship between the display and the sound zone based on factors such as an actual scenario and a user requirement. For example, the cockpit may be divided into more sound zones. For another example, the sound zone associated with the front passenger screen may also include the vehicle loudspeaker or the like. Based on the foregoing sound zone division method, when the electronic device displays content on different displays, for each display, the electronic device may select an audio output apparatus in a sound zone associated with the display to play an audio corresponding to content displayed on the display. In other words, a service (or an application) is displayed (running) on a specific display, and an audio output apparatus in a sound zone in which the specific display is located is preferentially selected to play an audio. Based on the method, an effect of audio-visual follow and what you see is what you hear can be implemented, that is, content seen by the user on a display matches an audio heard by the user, thereby improving user experience.

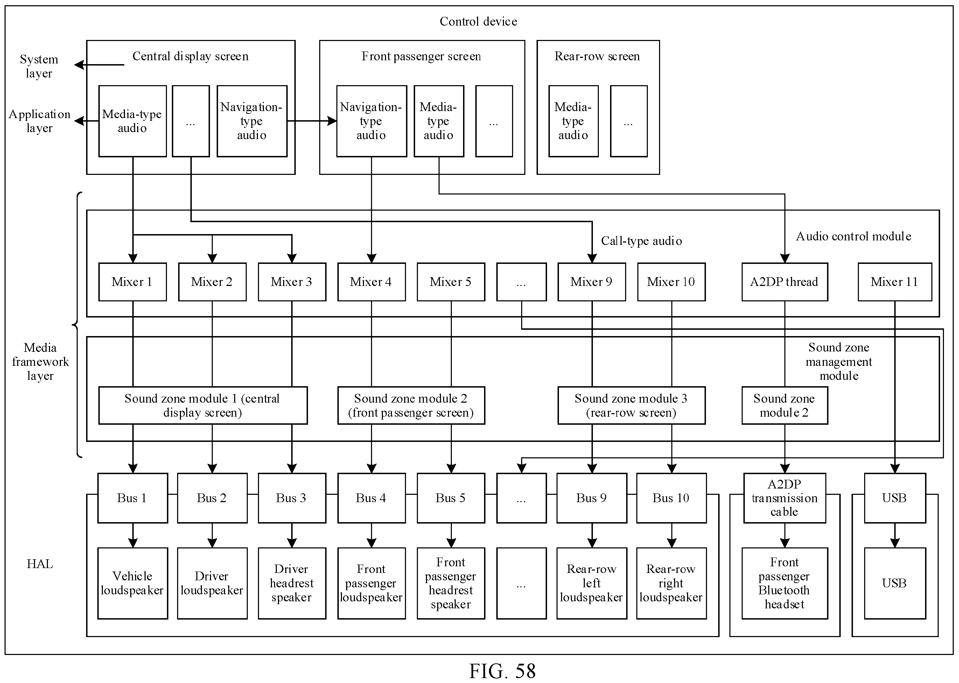

Refer to FIG. 58. In some embodiments of this application, for example, the plurality of displays in the foregoing audio control system all belong to the control device. Function layers that are in the control device and that are used to implement the audio control method provided in embodiments of this application may include a system layer, an application layer, a media framework layer, a hardware abstraction layer (hardware abstract layer, HAL), and the like.

The system layer includes a plurality of displays (for example, the central display screen, the front passenger screen, and the rear-row screen shown in FIG. 58). The application layer includes various types of applications installed in the control device, for example, a system-level application (vehicle control settings, comfort settings, and the like), a media-type application (including a listening application like a video application, a music application, and a radio application), a voice call-type application, and a navigation-type application. These applications may run or display content on a display of the system layer. In addition, audios of various types (for example, a media-type audio and a navigation-type audio shown in FIG. 58) may be played by using an audio output apparatus in the audio control system. Optionally, the application layer may be implemented as the application layer shown in FIG. 9C, and the media framework layer may be deployed at the application framework layer shown in FIG. 9C.

The media framework layer may include an audio control module (for example, shown in FIG. 58, a mixer (mix/mixer) 1 to a mixer 11, and an advanced audio distribution profile (advanced audio distribution profile, A2DP) thread) and a sound zone management module (for example, a sound zone module 1 to a sound zone module 3 shown in FIG. 58). The audio control module and the sound zone management module can collaboratively control the audio playing process. Specifically, the sound zone management module is configured to manage the sound zones obtained through division in the audio control system. The sound zone management module may be connected to at least one bus, where each bus may be connected to at least one audio output apparatus, and different buses are connected to different audio output apparatuses. The sound zone management module may store an association relationship between a display and a sound zone, information about an audio output apparatus in a sound zone, a connection relationship between a bus and an audio output apparatus, and the like. The audio control module may obtain the information from the sound zone management module, and when displaying the application content, select, based on the information, an audio output apparatus for playing an audio corresponding to application content and a bus for transmitting audio data, to transmit, through the selected bus, the audio data to the selected audio output apparatus for playing. Specifically, the audio control module is configured to receive audio data from an application at the application layer, and select a corresponding audio output apparatus for the audio data according to the solution provided in this embodiment of this application. After selecting the audio output apparatus, the audio control module may determine a bus corresponding to the selected audio output apparatus. After determining the bus, the audio control module may transmit the audio data through the sound zone management module and the bus, to transmit the audio data to the selected audio output apparatus for playing.

The HAL is an interface layer located between a kernel layer (which may be the kernel layer shown in FIG. 9C) and a hardware circuit (not shown in FIG. 9C). The HAL may include a bus (for example, a bus 1 to a bus 10, an A2DP transmission line, or a universal serial bus (universal serial bus, USB) shown in FIG. 58) for transmitting audio data and an interface corresponding to each audio output apparatus (for example, an interface corresponding to the driver headrest speaker or the driver loudspeaker shown in FIG. 58). The bus may be configured to transmit audio data from the software layer to a corresponding interface, the interface may transmit the audio data to a corresponding audio output apparatus for playing.

It should be noted that, a connection manner between modules or apparatuses such as the display, the audio control module, the sound zone module, the bus, and the interface corresponding to the audio output apparatus shown in FIG. 58, a data cabling manner, and the like are merely an example for description in this embodiment of this application. A connection manner between modules or apparatuses inside the control device, a data cabling manner, and the like are not limited to the manner shown in FIG. 58. During specific implementation, related deployment may be performed according to a performed method.

In an optional implementation, different buses may be respectively connected to interfaces corresponding to different audio output apparatuses, and each bus is connected to an interface corresponding to only one audio output apparatus. In this case, the audio control module can select only one audio output apparatus through one bus. After selecting an audio output apparatus, the audio control module may send audio data to a bus corresponding to the selected audio output apparatus, and transmit the audio data to the selected audio output apparatus through an interface connected to the bus and the bus. For example, as shown in FIG. 58, buses 1 to 5 are respectively connected to the vehicle loudspeaker, the driver loudspeaker, a driver headrest speaker, a front passenger loudspeaker, and a front passenger headrest speaker. When the audio control module selects to play an audio by using a front-row loudspeaker and a front-row headrest speaker, the audio may be separately sent to the buses 2 to 5. When the audio control module selects to play an audio by using the driver headrest speaker, the audio may be sent to the bus 3.

It should be noted that, for ease of viewing, for a connection manner between the sound zone module and the bus, FIG. 58 shows only some implementable connection manners, but does not cover all implementable connection manners, and does not impose a limitation on the connection manner between the sound zone module and the bus inside the control device. In an actual scenario, the control device may control, based on an actual situation of a divided sound zone, a connection relationship between a sound zone module corresponding to the divided sound zone and a bus. For example, it can be learned, in the sound zone division manner shown in FIG. 57, that the sound zone 1 associated with the central display screen may include all the audio output apparatuses in the cockpit. Correspondingly, in addition to the buses 1 to 3, the sound zone module 1 corresponding to the central display screen shown in FIG. 58 may be connected to other buses such as buses 4 to 10, an A2DP transmission line, and a USB.

In another optional implementation, each bus may be connected to interfaces corresponding to a plurality of audio output apparatuses, and the audio control module may select a plurality of audio output apparatuses through one bus. In addition, each audio output apparatus may also be connected to a plurality of buses. For example, the driver headrest speaker, the driver loudspeaker, the front passenger loudspeaker, and the front passenger headrest speaker shown in FIG. 58 may all be connected to one bus. When the audio control module selects to play an audio by using the front-row loudspeaker and the front-row headrest speaker, the audio is directly sent to the bus. For another example, both the rear-row left loudspeaker and the rear-row right loudspeaker shown in FIG. 58 may be connected to one bus. When the audio control module selects to use the rear-row loudspeakers to play an audio, the audio is directly sent to the bus.

It should be noted that the software and hardware layer structure shown in FIG. 58 is merely an implementation of a related layer of the control device in this embodiment of this application. During actual application, composition of the control device and each layer may alternatively be implemented in another manner, for example, may include more or fewer modules. This is not specifically limited in this embodiment of this application.

For example, when the control device runs a first application and displays application content of the first application on a first display, the audio control module may select, based on an association relationship between a display and a sound zone, a sound zone associated with the first display, further select, from the sound zone based on an audio type, an audio output apparatus for playing an audio, then transmit, through a bus corresponding to the selected audio output apparatus, the audio corresponding to the application content to an interface at the HAL, configure an audio output manner of the audio output apparatus, and transmit the audio corresponding to the application content to the corresponding audio output apparatus for playing. When the control device runs a second application and displays application content of the second application on a second display, a corresponding audio playing method is similar.

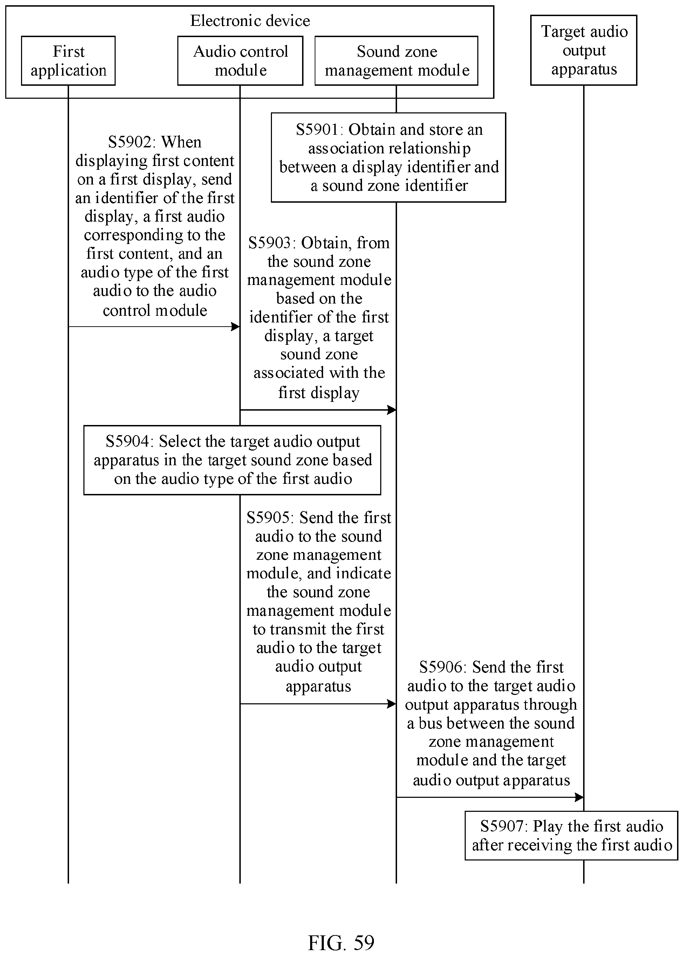

As shown in FIG. 59, a procedure corresponding to the foregoing method may include the following steps.

S5901: An electronic device obtains and stores an association relationship between a display identifier and a sound zone identifier.

The electronic device may be the control device shown in FIG. 58.

In some implementations, the association relationship between the display identifier and the sound zone identifier may be obtained and stored by using a sound zone management module of the electronic device. The association relationship between the display identifier and the sound zone identifier may be set by a user. Alternatively, the sound zone management module may automatically perform, according to a specified rule, sound zone division on ambient space corresponding to an audio control system, and after obtaining a location of a display in the ambient space, associate the display identifier of the display with the sound zone identifier of a sound zone in which the display is located, to obtain the association relationship between the display identifier and the sound zone identifier.

For example, based on the sound zone division manner shown in FIG. 57, the association relationship that is between the display and the sound zone and that is obtained and stored by the sound zone management module may include: the sound zone 1 associated with the central display screen, the sound zone 2 associated with the front passenger screen, and the sound zone 3 associated with the rear-row screen. As shown in FIG. 58, an audio played by the central display screen is transmitted to an audio output apparatus in the sound zone 1 for playing, an audio played by the front passenger screen is transmitted to an audio output apparatus in the sound zone 2 for playing, and an audio played by the rear-row screen is transmitted to an audio output apparatus in the sound zone 3 for playing.

S5902: When displaying first content on a first display by using the first application, the electronic device sends an identifier of the first display, a first audio corresponding to the first content, and an audio type of the first audio to an audio control module.

The first application may obtain, from a display management module, a display identifier of the first display on which the first application is located. The display management module may be configured to manage a plurality of displays. The display management module may be deployed at the application framework layer shown in FIG. 9C.

For example, when the first display is the central display screen, that is, the first application runs and displays on the central display screen, and the first audio played by the first application is a media-type audio, the first application may obtain a display identifier of the central display screen from the display management module. The first application may send the display identifier of the central display screen, the first audio, and the audio type (for example, a media-type audio type) of the first audio to the audio control module.

S5903: The electronic device obtains, from the sound zone management module based on the identifier of the first display, a target sound zone associated with the first display.

For example, the target sound zone associated with the first display may be obtained from the sound zone management module based on the identifier of the first display by using the audio control module of the electronic device. The audio control module may obtain, from the sound zone management module, an identifier of the target sound zone associated with the identifier of the first display. The sound zone management module determines, based on the received identifier of the first display and the stored association relationship between the display identifier and the sound zone identifier, the identifier of the target sound zone associated with the received identifier of the first display, and provides the identifier of the target sound zone to the audio control module, so that the audio control module determines the corresponding target sound zone.

For example, based on the foregoing example, the audio control module may send the display identifier of the central display screen to the sound zone management module. Because the central display screen is associated with the sound zone 1, the sound zone management module may determine the sound zone 1 as the target sound zone, and return a sound zone identifier of the sound zone 1 to the audio control module.

S5904: The electronic device selects a target audio output apparatus in the target sound zone based on the audio type of the first audio.

For example, the target audio output apparatus may be selected in the target sound zone by using the audio control module of the electronic device. After selecting the target sound zone, the audio control module may play an audio of the first application by using an audio output apparatus in the target sound zone, that is, use the target sound zone as the audio sound zone of the first application. The audio control module may obtain an audio output apparatus included in the target sound zone from the sound zone management module.

In some embodiments of this application, the audio control module may select, based on a preset correspondence between an audio type and an audio output apparatus and a priority of an audio output apparatus, an audio output apparatus corresponding to the audio type of the first audio, and play the first audio by using the selected audio output apparatus. Audio output apparatuses corresponding to different audio types may be the same or different. Priorities of audio output apparatuses corresponding to a same audio type in different sound zones may be the same or different. Priorities of audio output apparatuses corresponding to different audio types in a same sound zone may be the same or different. The priority of the audio output apparatus may be determined based on a location (for example, a driver seat or a front passenger seat), an audio type (for example, a media audio) of a played audio, an audio playing mode (for example, a private mode), a display mode (for example, copying display or splicing display), or the like, or may be determined based on a user indication (for example, a voice indication or an operation indication). For example, when the central display screen and the front passenger screen display video content in a splicing manner, a priority of the vehicle loudspeaker may be set to be the highest. When the front passenger screen displays a video in the private mode, a priority of a front passenger Bluetooth headset may be set to be higher than a priority of a front passenger loudspeaker. For another example, a priority of an audio output apparatus manually selected by the user may be the highest. Optionally, the audio control module may obtain the priority of the audio output apparatus from a configuration file of the system.

In some embodiments of this application, the audio control module may preferentially select an audio output apparatus corresponding to an audio type to play an audio of the corresponding audio type. In a plurality of audio output apparatuses corresponding to the audio type, the audio control module may preferentially select one or more audio output apparatuses with a higher priority to play the audio of the corresponding audio type. For example, based on the foregoing example 1, the preset correspondence between the audio type and the audio output apparatus may be: The media-type audio corresponds to a Bluetooth headset, the vehicle loudspeaker, each seat loudspeaker, each seat headrest speaker, and the like; and the navigation-type audio corresponds to the driver Bluetooth headset, the vehicle loudspeaker, the driver loudspeaker, the driver headrest speaker, and the like. When a same type of audio corresponds to a plurality of audio output apparatuses, different audio output apparatuses have different priorities. For example, there may be cases described in the following examples:

Case 1: In a case of media-type audio, priorities of audio output apparatuses corresponding to the sound zone module 1 associated with the central display screen in FIG. 58 in descending order may be: a priority of the vehicle loudspeaker, a priority of the driver loudspeaker, and a priority of the driver headrest speaker.
Case 2: In a case of navigation-type audio, priorities of audio output apparatuses corresponding to the sound zone module 1 associated with the central display screen in FIG. 58 in descending order may be: a priority of the driver loudspeaker, a priority of the vehicle loudspeaker, and a priority of the driver headrest speaker.
Case 3: In a case of media-type audio, priorities of audio output apparatuses corresponding to the sound zone module 2 associated with the front passenger screen in FIG. 58 in descending order may be: a priority of the front passenger Bluetooth headset, a priority of the front passenger headrest speaker, and a priority of the front passenger loudspeaker.

For example, as shown in FIG. 58, the sound zone module 1 corresponds to the sound zone 1 associated with the central display screen. When the first application displays content on the central display screen and plays a media-type audio, the first application may send a to-be-played audio, a corresponding audio type, and the display identifier of the central display screen to the audio control module like the mixer 1. The audio control module (for example, the mixer 1) may determine, based on the display identifier of the central display screen, the sound zone module 1 corresponding to the sound zone associated with the central display screen, and determine, based on the audio type and a corresponding audio output apparatus priority (for example, the priority described in Case 1) corresponding to the audio type, that a used audio output apparatus is the vehicle loudspeaker. In this case, the audio control module may control a transmission route of the to-be-played audio to be the sound zone module 1 to the bus 1, and the bus 1 to the interface corresponding to the vehicle loudspeaker, so that the to-be-played audio is transmitted to the vehicle loudspeaker for playing. Other audio playing manners shown in FIG. 58 are similar. Details are not described herein again.

Certainly, in the foregoing example, priorities of audio output apparatuses in each sound zone may alternatively be other orders, for example, a user-specified order. This is not limited to the foregoing prioritizing manner.

S5905: The electronic device sends the first audio to the sound zone management module, and indicates the sound zone management module to transmit the first audio to the target audio output apparatus.

For example, the first audio may be sent to the sound zone management module by using the audio control module of the electronic device, and the sound zone management module is indicated to transmit the first audio to the target audio output apparatus.

S5906: The electronic device sends the first audio to the target audio output apparatus through a bus between the sound zone management module and the target audio output apparatus.

For example, the sound zone management module in the electronic device may send the first audio to the target audio output apparatus through the bus between the sound zone management module and the target audio output apparatus.

S5907: The target audio output apparatus plays the first audio after receiving the first audio.

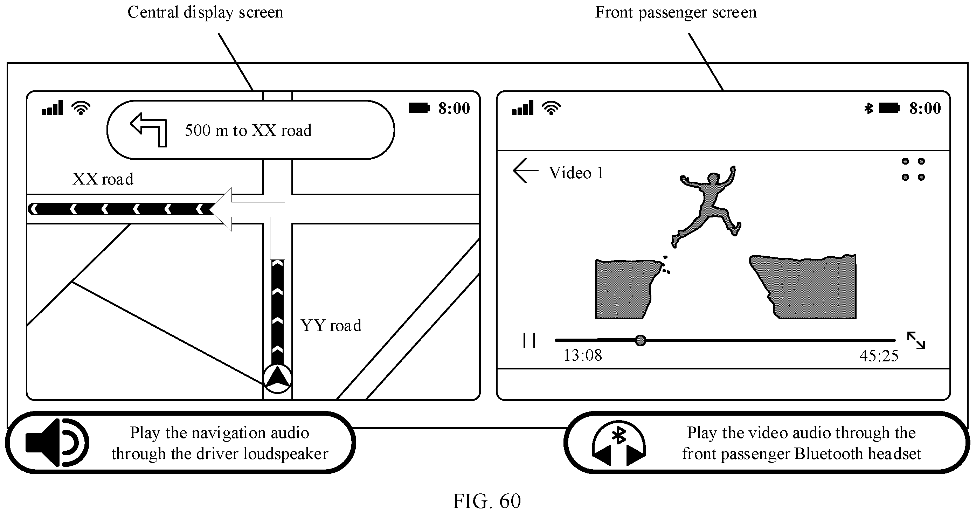

For example, based on the scenario shown in FIG. 57, when the central display screen in the vehicle cockpit displays a navigation interface and the front passenger screen displays a video interface, the control device may separately select, according to the foregoing method, an audio output apparatus configured to play a navigation audio corresponding to the navigation interface and an audio output apparatus configured to play a video audio corresponding to the video interface, and separately play the navigation audio and the video audio by using the selected audio output apparatuses. For example, as shown in FIG. 60, the control device may play the navigation audio through the driver loudspeaker in the cockpit, to implement an effect that a user corresponding to the central display screen listens to the navigation audio in the private mode. In addition, the control device may play the video audio through the front passenger Bluetooth headset in the cockpit, to implement an effect that a user corresponding to the front passenger screen listens to an audio corresponding to the video in the private mode. In view of this, both the users corresponding to the central display screen and the front passenger screen can listen to audios, and mutual interference is relatively small. Therefore, listening experience is relatively high.

In the audio division method provided in the foregoing embodiment, sound zone division is performed based on the space area range. However, an audio division rule applicable to the solution of this application is not limited thereto. In some embodiments of this application, sound zone division may alternatively be performed based on another feature of an audio apparatus. For example, for audio apparatuses in a vehicle, sound zone division may be performed based on a feature of an audio output apparatus, for example, a status type (for example, a static type or a moving type), a location range (for example, an area inside the vehicle, an area outside the vehicle, a front-row area, or a rear-row area), or a device type (for example, a speaker or a Bluetooth headset). A specific division rule may include at least one of the following:

1. For a static audio output apparatus, sound zone division may be performed based on a device location. The static audio output apparatus in this embodiment of this application may be an audio output apparatus at a fixed position, for example, may include a fixed audio output apparatus configured on a vehicle.

In this manner, audio output apparatuses located in a same location area may be classified into a same sound zone, and audio output apparatuses located in different location areas may be classified into different sound zones. A sound zone obtained through division in this manner is a static sound zone.

For example, an out-of-vehicle audio output apparatus configured outside a cockpit of the vehicle may be classified into an out-of-vehicle sound zone, and an audio output apparatus configured inside the cockpit of the vehicle may be classified into an in-vehicle sound zone.

2. For a static audio output apparatus, sound zone division may be performed based on a device type.

In this manner, audio output apparatuses of a same device type may be classified into a same sound zone, and audio output apparatuses of different device types may be classified into different sound zones. A sound zone obtained through division in this manner is a static sound zone.

For example, speakers configured in the cockpit may be classified into a speaker sound zone.

3. For a static audio output apparatus, sound zone division may be performed based on a device location and a device type.

In this manner, audio output apparatuses located in different location areas may be directly classified into different sound zones; and in audio output apparatuses located in a same location area, audio output apparatuses of a same device type may be classified into a same sound zone, and audio output apparatuses of different device types may be classified into different sound zones. In other words, the audio output apparatuses in different location areas belong to different sound zones, the audio output apparatuses of different device types in a same location area belong to different sound zones, and the audio output apparatuses of a same device type in a same location area belong to a same sound zone. A sound zone obtained through division in this manner is a static sound zone.

4. For a moving audio output apparatus, each audio output apparatus may be classified into one sound zone. The moving audio output apparatus in this embodiment of this application may be an audio output apparatus whose location is not fixed, for example, may include a mobile playing device like a Bluetooth headset carried by the user into the vehicle cockpit.

A sound zone obtained through division in this manner is a moving sound zone.

For example, a Bluetooth headset that is carried by a front passenger and that is connected to the front passenger screen in the vehicle cockpit may be classified into a Bluetooth sound zone 1, and a Bluetooth headset that is carried by the user in the rear-row left seat and that is connected to the rear-row left screen in the vehicle cockpit may be classified into a Bluetooth sound zone 2.

In some embodiments of this application, the foregoing sound zone division rules (namely, the foregoing rules 1 to 3) based on which the static audio output apparatus is classified into a sound zone may be used as a head unit audio configuration file to be preconfigured in a head unit system. The electronic device to which the displays in the cockpit belong may perform sound zone division according to the foregoing sound zone division rules after obtaining the foregoing sound zone division rules.

In some embodiments of this application, for the static audio output apparatus in the vehicle, the user may perform static sound zone division on the static audio output apparatus in advance, and store, into the head unit system, sound zone information of each obtained static sound zone as an audio configuration file of a head unit. In this case, the electronic device to which the displays in the cockpit belong may directly determine, based on the audio configuration file stored in the head unit system, the sound zone information of the divided static sound zone.

In some embodiments of this application, for the moving audio output apparatus, after establishing a communication connection to the moving audio output apparatus, the electronic device may perform moving sound zone division on the moving audio output apparatus according to the preset sound zone division rule (namely, the foregoing rule 4), so that the moving sound zone can be updated based on a change status of the moving audio output apparatus in the cockpit, thereby ensuring accuracy of the divided moving sound zone.

The sound zone information in this embodiment of this application includes at least the sound zone identifier and an identifier of an audio output apparatus included in a sound zone, may further include type information such as a status type, a location range, or a device type of the audio output apparatus included in the sound zone, and may further include an audio output channel corresponding to the sound zone, and audio transmission-related configuration information such as an audio format, a sampling rate, or a volume range supported by the audio output channel.

In some embodiments of this application, when the audio configuration file of the head unit includes sound zone information of a plurality of static sound zones, the electronic device may further prioritize the plurality of static sound zones based on a user indication or a user-specified rule, and select a used sound zone based on a priority order. Audio output apparatuses included in a same sound zone belong to a same type. Therefore, the prioritizing the plurality of static sound zones may also be understood as prioritizing the plurality of different types of audio output apparatuses. The prioritizing indicates a priority of selecting a sound zone or an audio output apparatus for playing an audio. For example, for an audio output apparatus in the vehicle, a possible prioritizing may be that a priority of a Bluetooth headset is higher than a priority of an in-vehicle speaker, and the priority of the in-vehicle speaker is higher than a priority of an out-of-vehicle speaker. Correspondingly, a priority of a Bluetooth sound zone is higher than a priority of an in-vehicle speaker sound zone, and the priority of the in-vehicle speaker sound zone is higher than a priority of an out-of-vehicle speaker sound zone. Optionally, when a same display is associated with different Bluetooth sound zones, priorities of the different Bluetooth sound zones may be determined based on a time of connection between a Bluetooth headset in a Bluetooth sound zone and a display, where a priority of a Bluetooth sound zone to which a Bluetooth headset connected to the display earlier belongs is higher than a priority of a Bluetooth sound zone to which a Bluetooth headset connected to the display later belongs.

In some embodiments of this application, different types of displays may correspond to different priorities. In this case, the electronic device may separately sort, based on the priorities corresponding to the different displays, audio output apparatuses available to the different displays, and further select an audio output apparatus with a highest priority from the audio output apparatuses available to the displays, to play an audio whose content corresponds to a display. For example, when the cockpit includes speakers and Bluetooth headsets, a priority order corresponding to the central display screen and an instrument screen in the cockpit may be that a priority of a speaker is higher than a priority of a Bluetooth headset, and a priority order corresponding to the front passenger screen and the rear-row screen in the cockpit may be that a priority of a Bluetooth headset is higher than a priority of a speaker.

It should be understood that the foregoing priority order is merely an example, and an actually available priority order is not limited thereto. Specifically, the priority order may be determined based on a setting of the user. This is not specifically limited in this embodiment of this application.

In some embodiments of this application, when the in-vehicle terminal described in Part 1 displays an interface, the in-vehicle terminal may control an audio device in a vehicle to play a corresponding audio according to the audio control method in the non-content transfer scenario. When the electronic device described in Part 2 is an electronic device in a cockpit, an audio device in the cockpit may be controlled to play a corresponding audio according to the audio control method in the non-content transfer scenario when content is displayed.

Scenario 2: Content cross-screen transfer scenario

In Scenario 1 (namely, the non-content transfer scenario), when the user triggers to transfer content displayed on a display to another display for display, the scenario changes to a content transfer scenario, and audio control may be performed according to a method described in this part of content.

In this embodiment of this application, in the content cross-screen transfer scenario, the control device may determine, based on at least one piece of information of an application type, an audio type, a user interface (user interface, UI) type, or a content transfer manner, whether to perform audio transfer, that is, determine whether to adjust a playing manner of an audio corresponding to transferred content. In this embodiment of this application, adjusting an audio playing manner may be: adjusting an audio output apparatus used when the audio is played (for example, switching the used audio output apparatus), and/or adjusting an audio output manner of an audio output apparatus used when the audio is played (for example, switching a sound channel of the audio output apparatus).

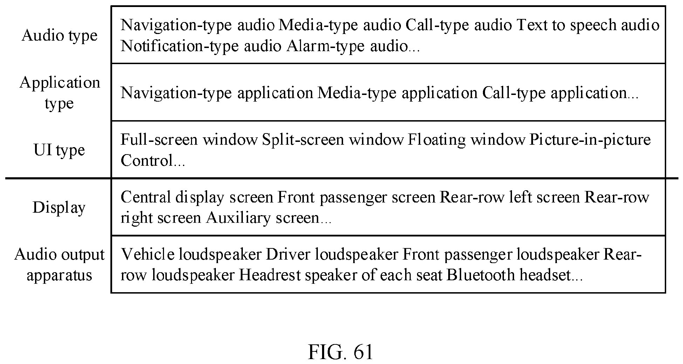

For example, refer to FIG. 61. A vehicle cockpit scenario is used as an example, and displays in the cockpit may include a central display screen, a front passenger screen, a rear-row left screen, a rear-row right screen, an auxiliary screen, and the like. An audio output apparatus in the cockpit may include a vehicle loudspeaker, a driver loudspeaker, a front passenger loudspeaker, a rear-row loudspeaker (including a rear-row left loudspeaker and a rear-row right loudspeaker), a headrest speaker of each seat, a Bluetooth headset, or the like. In this scenario, an application type may include a navigation-type application, a media-type application (for example, a music playing application, a video application, a game application, or a book listening application), a call-type application (for example, Phone or MeeTime), and the like. An audio type may include a navigation-type audio, a media-type audio, a call-type audio, a text to speech (text to speech, TTS) audio, a notification-type audio, an alarm-type audio, and the like. A UI type may include a full-screen window, a split-screen window, a floating window, picture-in-picture, a control, and the like. A content transfer manner used when content is transferred between displays may be moving, copying, sharing, or the like. Moving means that content displayed on a source display is displayed on a target display after the content is shared to the target display, and the content is no longer displayed on the source display. Copying means that the content displayed on the source display is copied to the target display for display, and the content is displayed on both the source display and the target display. Sharing means that some content displayed on the source display is shared to the target display for display, and the source display displays the remaining content, for example, in a case in which an interface displayed on the source display before content sharing can be obtained by splicing interfaces displayed on the source display and the target display. In this embodiment of this application, an example in which the transfer is performed from the source display to the target display is used. The application type, the audio type, the UI type, the content transfer manner, and the like are all factors that affect audio control and playing manners. Under influence of different factors, the control device uses different audio control methods. The following describes, with reference to this example, an audio control method used by the control device in the content cross-screen transfer scenario.

In this embodiment of this application, in the content cross-screen transfer scenario, an audio transfer rule may include one or more of the following:

Rule 1: If media-type content is transferred, a corresponding media-type audio is transferred along with the media content. To be specific, when the media-type content is displayed on a specific display, the media-type audio is played by using an audio output apparatus in a sound zone corresponding to the specific display.

For example, an audio output apparatus that corresponds to the front passenger screen and that has a highest priority for playing a media-type audio may be the front passenger Bluetooth headset. After media-type content is transferred to the front passenger screen for display, a media-type audio corresponding to the media-type content needs to be played by using a front passenger Bluetooth headset.

Rule 2: A navigation audio, a notification audio, a system audio, or an alarm audio may not be transferred along with content that is transferred across screens.

Optionally, the navigation audio, the system audio, or the alarm audio may be played by preferentially using an audio output apparatus that is mainly used by a driver, for example, a driver loudspeaker, a driver headrest speaker, a driver Bluetooth headset, or a vehicle loudspeaker.

Optionally, the notification audio may be played by using an audio output apparatus in a sound zone in which a user receiving the notification audio is located.

Rule 3: If content of a voice call or a video call is transferred, a corresponding call audio can be transferred along with the content.

Optionally, after the call audio is transferred along with the content of the voice/video call, the call audio may be switched to be played preferentially through the vehicle loudspeaker, and certainly, may alternatively be switched to be played by using an audio output apparatus in a sound zone corresponding to a display on which the content after the transfer is located.

Rule 4: An audio for responding to a voice control command can be transferred along with a location of a user who deliveries the command.

For example, when the user is in a driver seat, after the user deliveries the voice control command, the control device may display content corresponding to the voice control command on the driver screen, and play, by using an audio output apparatus in a sound zone associated with the driver screen, the audio for responding to the voice control command. When the user moves from the driver seat to a front passenger seat, the control device may display, on the front passenger screen based on a location change of the user, the content corresponding to the voice control command of the user, and play, by using an audio output apparatus in a sound zone associated with the front passenger screen, the audio for responding to the voice control command. Optionally, the control device may recognize the location change of the user in a manner of face detection, positioning, or the like. This is not limited in this application.

Rule 5: When a control or widget is transferred, a corresponding audio may not be transferred accordingly.

Rule 6: For a floating window, picture-in-picture, or the like, it can be determined based on interface content or a content transfer manner whether an audio is to be transferred.

When determining, based on the interface content, whether to perform transfer, the control device may determine, based on an audio type of the audio corresponding to the interface content, whether to transfer the audio that corresponds to the floating window, the picture-in-picture, or the like during the transfer. For example, whether to perform the transfer may be determined based on Rule 1 to Rule 4. For a method for determining, by the control device based on the content transfer manner, whether to perform the transfer, refer to the following description of related content.

In the foregoing rules, if the audio is transferred along with the content, after the content is transferred, the control device may select an audio output apparatus for playing the audio transferred along with the content by using the method described in the content of Scenario 1 (namely, the non-content transfer scenario). Optionally, if the selected audio output apparatus is playing an audio, the control device may control the audio output apparatus to pause the audio that is being played currently and switch to playing the transferred audio. Subsequently, when it is determined that the audio output apparatus does not need to play the transferred audio, the audio output apparatus may be controlled to continue to play the audio that is originally played by the audio output apparatus. In some implementations, prompt information may alternatively be output to the user to prompt the user to perform a selection. Based on the selection of the user, the audio output apparatus outputs the originally played audio or the transferred audio.

The foregoing transfer rule may be applied to the interface transfer scenario described in the interface transfer method in Part 1 in the foregoing embodiments. For example, in the scenarios shown in FIG. 15 to FIG. 18, FIG. 20 and FIG. 21, FIG. 25 and FIG. 26, FIG. 28A to FIG. 31, FIG. 33, and FIG. 37, the first interface is a split-screen interface or a floating window. In a cross-screen transfer process of the first interface, in an optional implementation, a display area of the first interface occupies only a part of an area of a display. Therefore, a transfer rule of an audio corresponding to the first interface may use Rule 6. To be specific, audio transfer is controlled in an audio transfer manner corresponding to an interface of a type like a floating window or picture-in-picture. In another optional implementation, if the transfer rule of the audio corresponding to the first interface may use Rule 1 to Rule 4, audio transfer may be controlled based on an audio type of the audio corresponding to the first interface. In the scenario shown in FIG. 18, the first interface may be transferred to two different displays. If it is determined, according to a corresponding audio transfer rule, that the audio is transferred along with the first interface, the audio corresponding to the first interface may be copied and then transferred to the two different displays at the same time. In the scenarios shown in FIG. 19, FIG. 27, FIG. 32, and FIG. 38, in the cross-screen transfer process of the first interface, the transfer rule of the audio corresponding to the first interface may use Rule 1 to Rule 4. In the scenarios shown in FIG. 22 to FIG. 23, the first interface is a widget or a floating icon (namely, a control). In the cross-screen transfer process of the first interface, the transfer rule of the audio corresponding to the first interface may use Rule 5. In the scenario shown in FIG. 24, the first interface is a to-be-answered call, and the audio corresponding to the first interface belongs to a notification audio. In this case, in the cross-screen transfer process of the first interface, the transfer rule of the audio corresponding to the first interface may use Rule 2. In the foregoing scenarios, when the audio after the transfer conflicts with an audio that is being played originally, corresponding control may be performed according to the method described in the foregoing embodiments. Details are not described herein again.

The following describes the foregoing transfer rules with reference to specific embodiments.

1. When content is transferred across screens, an audio playing manner is switched accordingly.
In some embodiments of this application, when content displayed on a source display is shared to a target display, and an audio corresponding to the content is a media-type audio or a call-type audio (a voice call audio, a video call audio, or the like), a control device may adjust a playing manner of the audio corresponding to the content along with cross-screen transfer of the content. A specific adjustment manner may be any one of the following:

(1) Switch to playing the audio corresponding to the shared content by using an audio output apparatus in a sound zone associated with the target display.
The control device may select, according to the method described in the content of Scenario 1 (namely, the non-content transfer scenario), an audio output apparatus that needs to be used after the switching from the audio output apparatus in the sound zone associated with the target display. Details are not described herein again.
(2) Switch to playing the audio corresponding to the shared content by using an audio playing apparatus in a sound zone associated with a source display and an audio playing apparatus in a sound zone associated with the target display.

The control device may continue to use the audio playing apparatus in the sound zone associated with the currently used source display, or may reselect, according to the method described in the content of Scenario 1 (namely, the non-content transfer scenario), an audio output apparatus that needs to be used after the switching from the audio output apparatus in the sound zone associated with the source display. The control device may select, according to the method described in the content of Scenario 1 (namely, the non-content transfer scenario), the audio output apparatus that needs to be used after the switching from the audio playing apparatus in the sound zone associated with the target display. Details are not described herein.

The following provides description based on specific scenarios and examples.

Scenario 1: A content transfer result is mobile content.

In this scenario, the control device may shift (or referred to as transfer) the content displayed on the source display to the target display for display based on a user indication. If the audio corresponding to the content is the media-type audio or the call-type audio, after the content is transferred to the target display for display, the control device may switch the audio playing manner to playing the audio corresponding to the content by using the audio playing apparatus in the sound zone associated with the target display. The control device may select, according to the method described in the content of Scenario 1 (namely, the non-content transfer scenario), the audio playing apparatus in the sound zone to which the target display belongs, and perform corresponding audio playing control. Details are not described herein again.

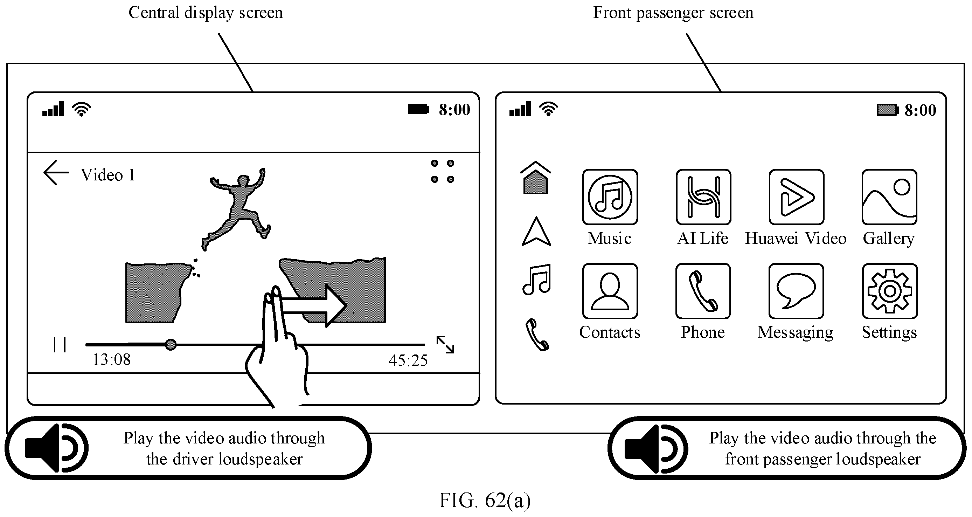

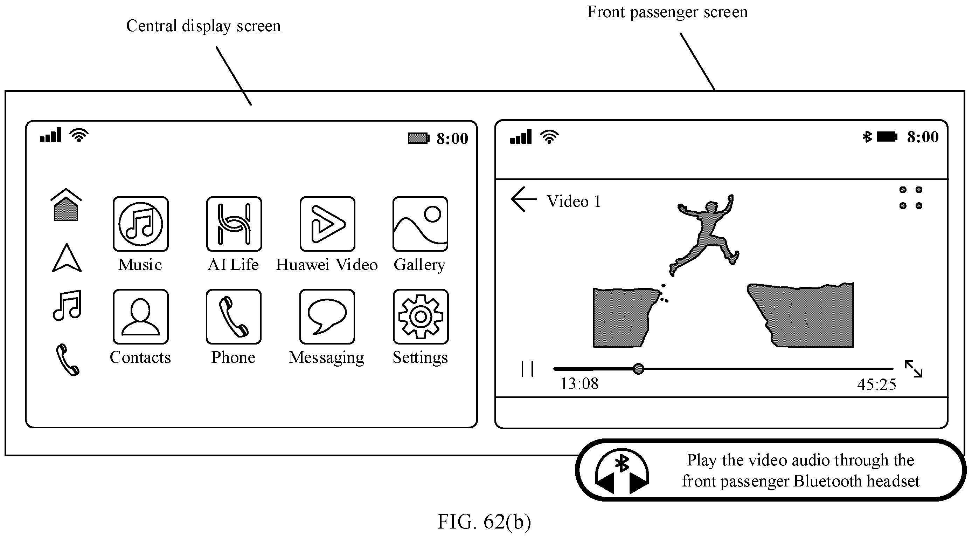

For example, based on the scenario shown in FIG. 57, the source display is the central display screen and the target display is the front passenger screen. As shown in FIG. 62(a), the central display screen in the vehicle cockpit displays a video playing interface, and the front passenger screen displays a desktop interface. The control device may play, through the vehicle loudspeaker, an audio corresponding to video content displayed on the central display screen, and the driver loudspeaker, the front passenger loudspeaker, and the rear-row loudspeaker all play the audio corresponding to the video content. Therefore, when the video content is played on the central display screen, the entire vehicle may listen to the audio corresponding to the video content. The control device may also perform similar control on the rear-row loudspeaker. After the user performs an operation (for example, a two-finger right sliding operation shown in FIG. 62(a)) on the central display screen to trigger the control device to transfer the video playing interface displayed on the central display screen to the front passenger screen for display, as shown in FIG. 62(b), the central display screen may be back to display a desktop interface, the front passenger screen displays the video playing interface and may continue to play the video, and simultaneously, the control device may switch to selecting an audio output apparatus (for example, the front passenger Bluetooth headset connected to the front passenger screen shown in FIG. 62(b)) in a sound zone associated with the front passenger screen to play the audio corresponding to the video content. Further, when the central display screen switches from displaying the desktop interface to displaying a navigation interface, the control device may still play a corresponding navigation audio through the vehicle loudspeaker, or may select another audio output apparatus (for example, the driver loudspeaker) in the sound zone associated with the central display screen to play the audio. For a method for selecting an audio output apparatus in a sound zone associated with a display, refer to the method described in the content of Scenario 1 (namely, the non-content transfer scenario). Details are not described herein again.

In some embodiments, the operation performed by the user for triggering the video playing interface displayed on the central display screen to be displayed on the front passenger screen may be a gesture operation (for example, the two-finger right sliding operation shown in FIG. 62(a)) on the central display screen. In some other embodiments, the operation performed by the user for triggering the content displayed on the central display screen to be displayed on the front passenger screen may alternatively be a gesture operation on the front passenger screen. For example, the front passenger screen may display a control for content transfer, for example, a control for transferring content of the central display screen to the front passenger screen, or a control for copying content of the central display screen to the front passenger screen. After the user operates the control that is used for transferring the content of the central display screen to the front passenger screen and that is on the front passenger screen, the content displayed on the central display screen may be transferred to the front passenger screen for display. A manner of triggering content transfer is not limited in this application.

Optionally, as shown in FIG. 62(b), when the control device switches to selecting the front passenger Bluetooth headset connected to the front passenger screen as the audio output apparatus with the highest priority, the front passenger screen may display a Bluetooth connection icon, to prompt the user that the audio is played through the Bluetooth headset in this case. It may be understood that when the control device selects another audio output apparatus in the sound zone associated with the display as the audio output apparatus with the highest priority, an identifier corresponding to the audio output apparatus with the highest priority may also be correspondingly displayed on the display.

In addition, after the control device selects the audio output apparatus with the highest priority in the associated sound zone of the display to play the audio, the user may manually switch to another audio output apparatus.

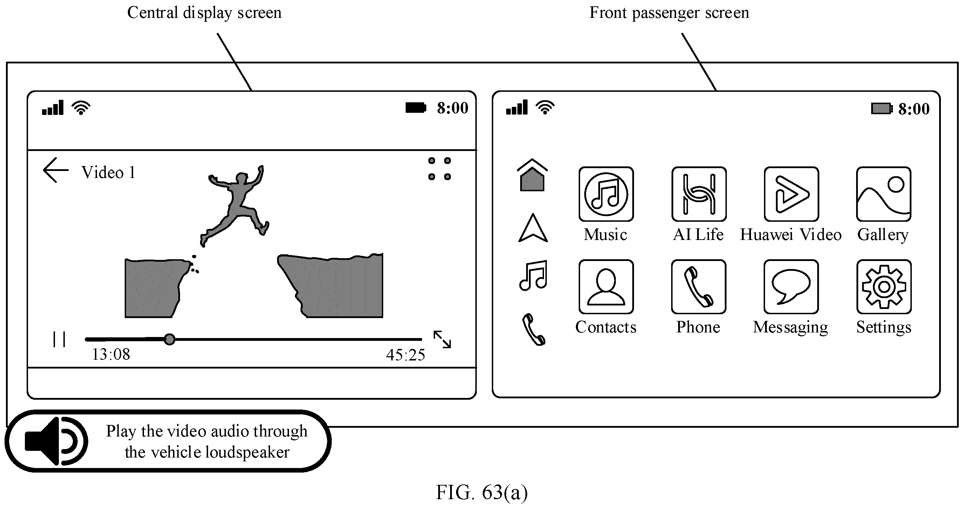

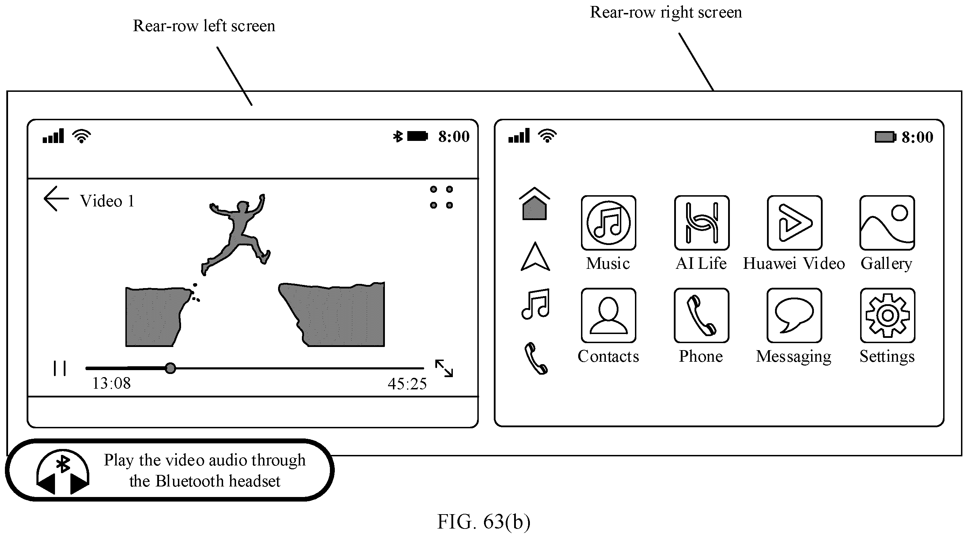

For example, based on the scenario shown in FIG. 57, the source display is the central display screen and the target display is the rear-row left screen. As shown in FIG. 63(a), the central display screen in the vehicle cockpit displays a video playing interface, and the audio corresponding to the video content displayed on the central display screen is played through the vehicle loudspeaker. After the user performs an operation on the central display screen to trigger the control device to transfer the video playing interface displayed on the central display screen to the rear-row left screen for display, as shown in FIG. 63(b), the rear-row left screen displays the video playing interface and may continue to play the video. In an optional implementation, as shown in FIG. 63(b), the control device may play, through a Bluetooth headset (or a rear-row left headrest speaker) connected to the rear-row left screen, an audio corresponding to content displayed on the rear-row left screen. In this manner, audio playing of the rear-row left screen may be switched to a private mode, to reduce interference to an audio played on another display. In another optional implementation, if the rear-row left screen is not connected to a Bluetooth headset or a headrest speaker, the control device may switch the audio corresponding to the content on the central display screen from being played through the vehicle loudspeaker to being played through the driver loudspeaker, and play, through the rear-row left loudspeaker, the audio corresponding to the content displayed on the rear-row left screen. For a method for selecting an audio output apparatus in a sound zone associated with a display, refer to the method described in the content of Scenario 1 (namely, the non-content transfer scenario). Details are not described herein again.

For example, based on the scenario shown in FIG. 57, the source display is the central display screen, the target display is the front passenger screen and a rear-row screen, and both the front passenger screen and the rear-row screen are connected to a Bluetooth headset. As shown in FIG. 64A-1 and FIG. 64A-2, the central display screen in the vehicle cockpit displays the video playing interface, and the audio corresponding to the video content displayed on the central display screen is played through the vehicle loudspeaker. After the user performs an operation on the central display screen to trigger the control device to transfer the video playing interface displayed on the central display screen to both the front passenger screen and the rear-row screen for display, as shown in FIG. 64B-1 and FIG. 64B-2, the interface displayed on the central display screen may return to the desktop interface, and the front passenger screen and the rear-row screen may display the video playing interface and continue to play the video, the control device may switch to playing the audio corresponding to the video content on the front passenger screen through the front passenger Bluetooth headset connected to the front passenger screen, and play the audio corresponding to the video content on the rear-row screen through the Bluetooth headset (the rear-row left Bluetooth headset and the rear-row right Bluetooth headset) connected to the rear-row screen, so that a front passenger and a rear-row user separately listen to the video through their respective Bluetooth headsets.

It should be understood that the scenario in which the content transfer result is the transferred content and the audio is transferred along with the content includes but is not limited to the scenarios shown in FIG. 62(a) to FIG. 64B-2 in the foregoing examples. Examples are not described one by one in embodiments of this application. In conclusion, in the scenario in which the content transfer result is the transferred content and the audio is transferred along with the content, the user may simultaneously transfer content displayed on a display in the cockpit to any one or more of other displays in the cockpit for display. In addition, the control device may play, through an audio output apparatus in a sound zone associated with a display in which the transferred content is located, an audio corresponding to the transferred content. For a specific method for selecting an audio output apparatus in a sound zone, refer to the method described in the content of Scenario 1 (namely, the non-content transfer scenario). Details are not described herein again.

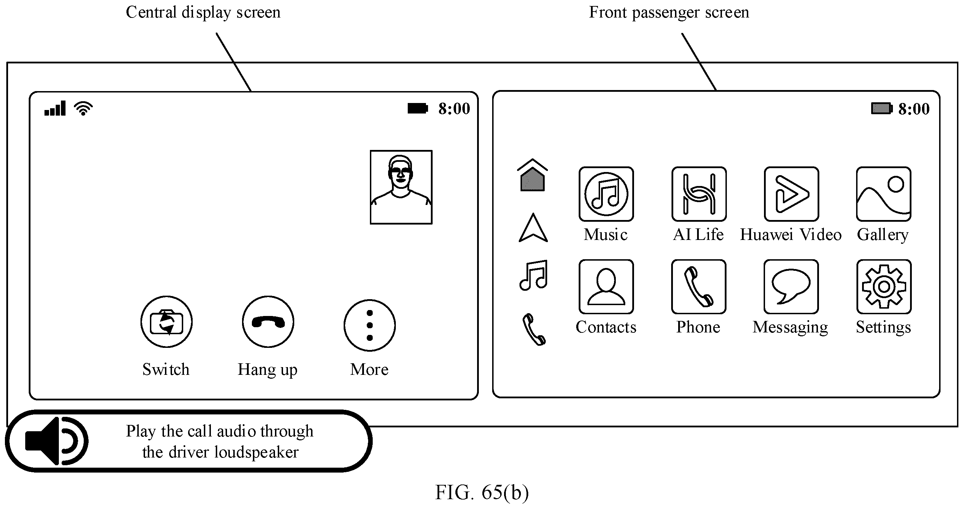

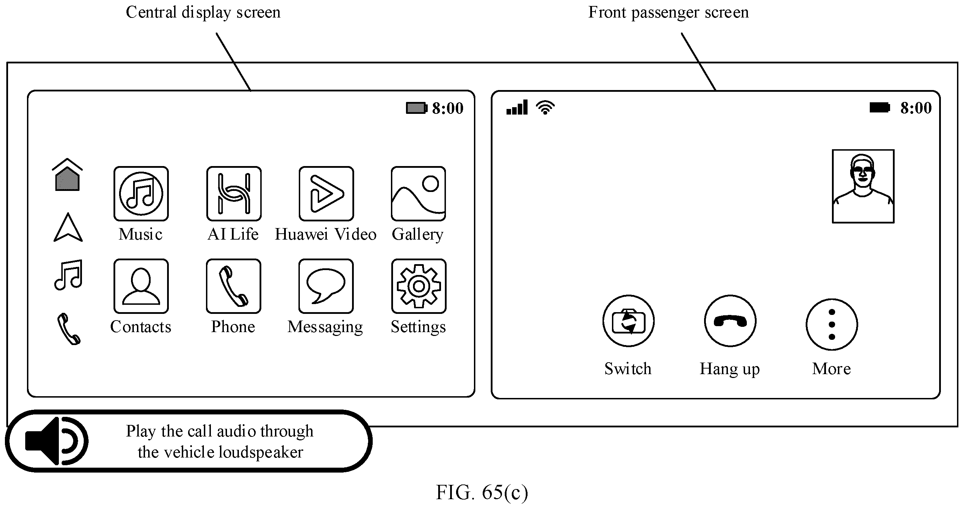

For example, based on the scenario shown in FIG. 57, the source display is the central display screen and the target display is the front passenger screen. When the audio output apparatus in the sound zone associated with the front passenger screen may be the vehicle loudspeaker, as shown in FIG. 65(a), when the central display screen displays an incoming call notification of a video call, the control device may play a corresponding incoming call notification audio through the driver loudspeaker. After the user indicates to answer the video call, as shown in FIG. 65(b), the control device may display a video call screen on the central display screen, and play a call audio through the driver loudspeaker. When the control device shares the video call screen to the front passenger screen for display based on the user indication, as shown in FIG. 65(c), the video call screen is no longer displayed on the central display screen, the video call screen is displayed on the front passenger screen, and the control device may switch to playing the call audio through the vehicle loudspeaker. Alternatively, the control device may switch to playing the call audio through the front passenger loudspeaker.

Optionally, in Scenario 1, after the image is transferred from the source display to the target display for display, the source display may further display a small-sized window (for example, a floating window, a floating bubble, or picture-in-picture) corresponding to the transferred content. Optionally, the small-sized window may display an image corresponding to the transferred content. Further, the user may operate the small-sized window on the source display, to transfer the image from the target display to the source display for display. When the image is transferred from the target display to the source display for display, for a method for transferring an audio along with the image, refer to the descriptions in the embodiment shown in Scenario 1.

Scenario 2: A content transfer result is copied content.

In this scenario, the control device may copy, based on a user indication, the content displayed on the source display to the target display for display. If the audio corresponding to the content is the media-type audio or the call-type audio, after the content is transferred to the target display for display, the control device switches the audio playing manner to playing the audio corresponding to the content by using the audio playing apparatus in the sound zone associated with the source display and the audio playing apparatus in the sound zone associated with the target display. The control device may select, according to the method described in the content of Scenario 1 (namely, the non-content transfer scenario), the audio playing apparatus in the sound zone to which the target display belongs, and perform corresponding audio playing control. Details are not described herein again.

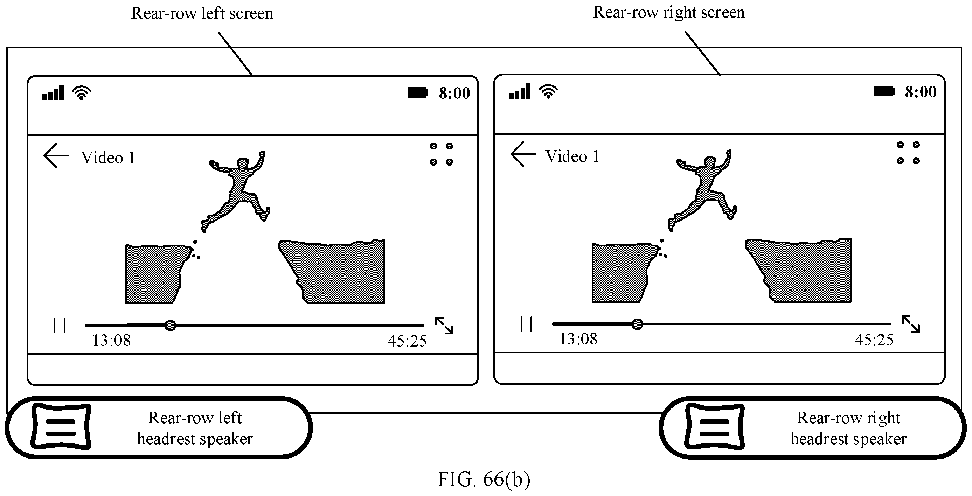

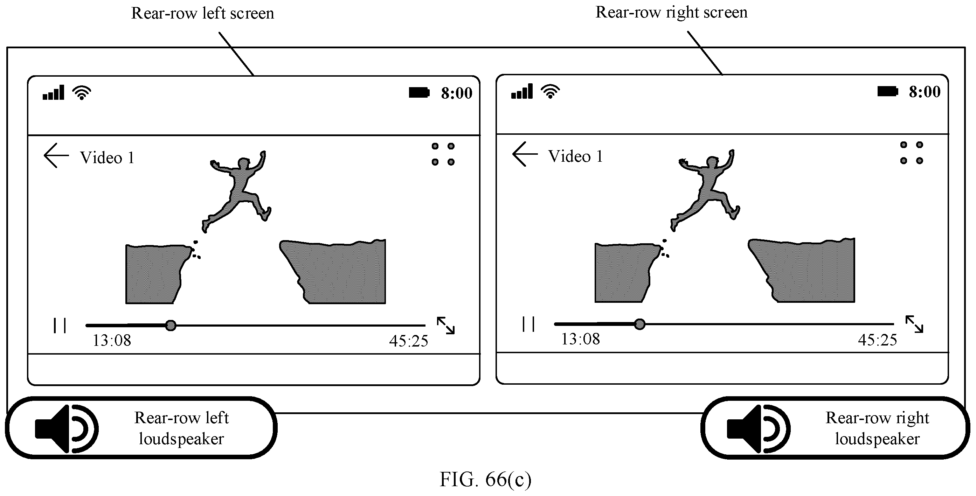

For example, based on the scenario shown in FIG. 57, the source display is the rear-row left screen and the target display is the rear-row right screen is used. As shown in FIG. 66(a), a video playing interface is displayed on the rear-row left screen in the vehicle cockpit, a desktop interface is displayed on the rear-row right screen, and an audio corresponding to video content displayed on the rear-row left screen is played through the rear-row left headrest speaker. After the user performs an operation on the rear-row left screen (for example, a three-finger right sliding operation shown in FIG. 66(a)) to trigger the control device to copy the video playing interface displayed on the rear-row left screen to the rear-row right screen for display, as shown in FIG. 66(b), the rear-row left screen continues to display the video playing interface and continues to play the video, and the rear-row right screen displays a video playing interface that is the same as the rear-row left screen and continues to play the video. In an optional implementation, as shown in FIG. 66(b), the control device may continue to play, through the rear-row left headrest speaker, the audio corresponding to the video content displayed on the rear-row left screen, and select an audio output apparatus (for example, the rear-row right headrest speaker shown in FIG. 66(b)) in a sound zone associated with the rear-row right screen to play the audio corresponding to the video content displayed on the rear-row right screen. In another optional implementation, as shown in FIG. 66(c), because content displayed on the rear-row left screen is the same as that displayed on the rear-row right screen, the control device may select to use the rear-row left loudspeaker and the rear-row right loudspeaker to play an audio corresponding to the video content displayed on the rear-row left screen and the rear-row right screen at the same time, to implement an effect of rear-row public playing. Optionally, before the video content displayed on the rear-row left screen is copied, the video content may also be played through a Bluetooth headset connected to the rear-row left screen. After the video playing interface is copied to the rear-row right screen for display, the control device may continue to use the Bluetooth headset connected to the rear-row left screen to play the audio corresponding to the video content displayed on the rear-row left screen, and use a Bluetooth headset connected to the rear-row right screen to play the audio corresponding to the video content displayed on the rear-row right screen. Alternatively, the control device may select to play the audio corresponding to the video content displayed on the rear-row left screen and the rear-row right screen simultaneously through the rear-row left loudspeaker and the rear-row right loudspeaker.

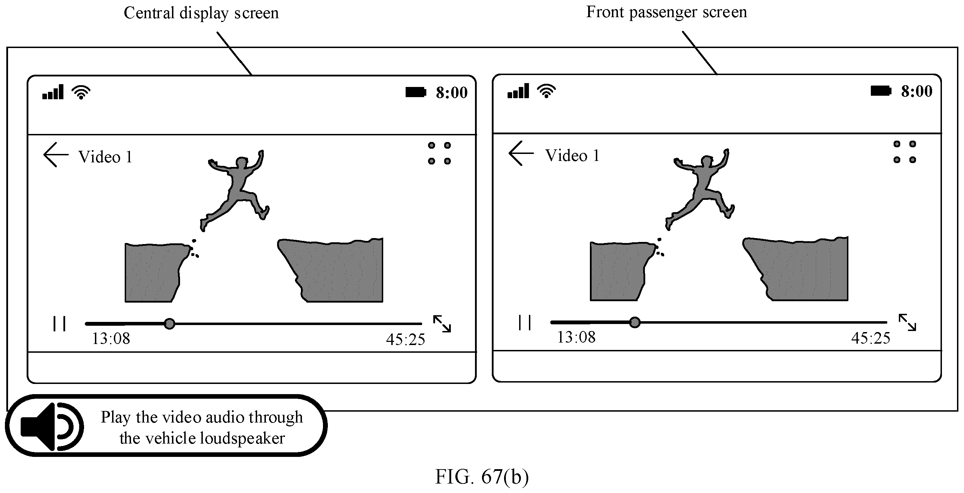

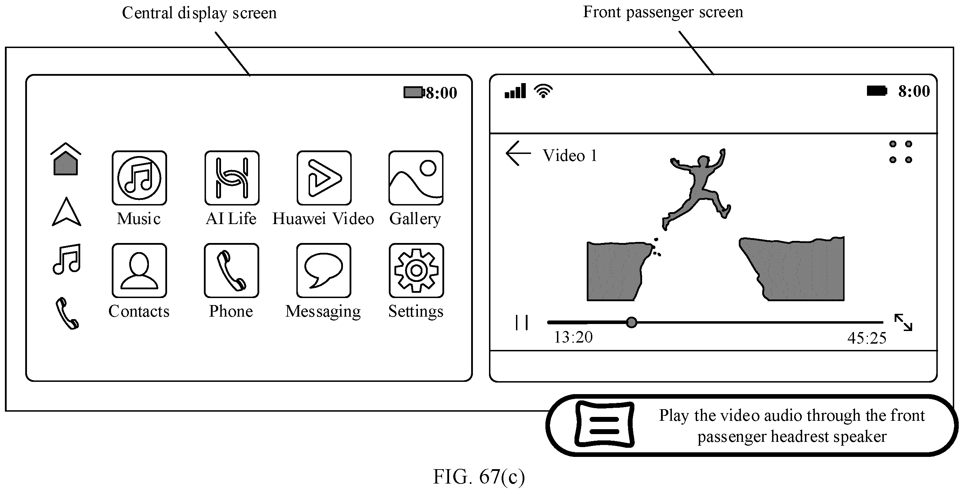

For example, based on the scenario shown in FIG. 57, the source display is the central display screen and the target display is the front passenger screen. As shown in FIG. 67(a), the central display screen displays a video playing interface, the front passenger screen displays a desktop interface, and the audio corresponding to the video content displayed on the central display screen is played through the vehicle loudspeaker. After the user performs an operation on the central display screen (for example, a three-finger right sliding operation shown in FIG. 67(a)) to trigger the control device to copy the video playing interface displayed on the central display screen to the front passenger screen for display, as shown in FIG. 67(b), the central display screen continues to display the video playing interface, the front passenger screen displays a video playing interface that is the same as that on the central display screen, and the audio corresponding to the video content is still played through the vehicle loudspeaker. After the user controls to exit the video playing interface of the central display screen, the central display screen no longer displays the video playing interface. For example, the central display screen may return to the desktop interface shown in FIG. 67(c), and the control device stops playing the audio corresponding to the video content through the vehicle loudspeaker. In this case, the front passenger screen is still playing the video. As shown in FIG. 67(c), the control device may switch to playing the audio corresponding to the video content through the front passenger headrest speaker, to ensure that the user can also listen to the audio corresponding to the video content when watching the video content displayed on the front passenger screen. It may be understood that, in the embodiments shown in FIG. 66(a) to FIG. 67(c), because factors such as a user location are different, audios of a same type may be played by using different audio output apparatuses. For details, refer to the method described in the content of Scenario 1 (namely, the non-content transfer scenario). Details are not described herein again.

Scenario 3: A content transfer result is spliced content.

In this scenario, the control device may share, based on a user indication, some content displayed on the source display to the target display for display, and display the remaining content on the source display. In this case, the source display and the target display collaboratively display the same content. If an audio corresponding to the content is a media-type audio or a call-type audio, the control device may switch an audio playing manner to playing the audio corresponding to the content by using an audio playing apparatus in a sound zone associated with the source display and an audio playing apparatus in a sound zone associated with the target display. The control device may select, according to the method described in the content of Scenario 1 (namely, the non-content transfer scenario), the audio playing apparatus in the sound zone to which the target display belongs, and perform corresponding audio playing control. Details are not described herein again.

For example, based on the scenario shown in FIG. 57, the source display is the central display screen in the vehicle cockpit and the target display is the front passenger screen. As shown in FIG. 68(a), the central display screen displays a video playing interface, the front passenger screen displays a desktop interface, and the audio corresponding to the video content displayed on the central display screen may be played through the driver loudspeaker or the vehicle loudspeaker. After the user performs an operation on the central display screen (for example, a four-finger right sliding operation shown in FIG. 68(a)) to trigger the control device to share the video playing interface displayed by the central display screen with the front passenger screen for display, as shown in FIG. 68(b), the central display screen displays some content of the video playing interface, and the front passenger screen displays some content of the video playing interface. In addition, a complete video playing interface may be obtained by splicing the interface displayed on the central display screen and the interface displayed on the front passenger screen. In an optional implementation, as shown in FIG. 68(b), the control device may play, through the driver loudspeaker and the front passenger loudspeaker, the audio corresponding to the video content. In another optional implementation, the control device may play the audio corresponding to the video content through the vehicle loudspeaker. In this manner, an effect of sharing the video content by the entire vehicle can be implemented.

For example, based on the example shown in FIG. 68(a) and FIG. 68(b), after some content displayed on the central display screen is shared to the front passenger screen for display, the user may trigger to transfer the content displayed by splicing the central display screen and the front passenger screen to one display for display. For example, when the user triggers the control device to transfer some content displayed on the front passenger screen back to the driver screen for display, content displayed on the driver screen and the front passenger screen are switched from the manner shown in FIG. 68(b) to the manner shown in FIG. 69(a) or FIG. 69(b). The driver screen displays a complete video playing interface, and the front passenger screen switches back to the desktop interface. In an optional implementation, if another display other than the driver screen has an audio playing requirement or is playing an audio, as shown in FIG. 69(a), the control device may switch to a manner of playing, through the driver loudspeaker, the audio corresponding to the video content displayed on the driver screen. In this manner, an effect of playing the video content for the driver in a private mode, and interference to an audio playing process corresponding to the another display is reduced. In another optional implementation, if another display other than the driver screen has no audio playing requirement or does not play an audio, the control device may switch to a manner of playing, through the vehicle loudspeaker, an audio corresponding to video content displayed on the driver screen. As shown in FIG. 69(b), both the driver loudspeaker and the front passenger loudspeaker play the audio corresponding to the video content. As shown in FIG. 69(b), the rear-row loudspeaker that is not shown in the figure also play the audio corresponding to the video content. Similarly, the user may further trigger to transfer some content displayed on the central display screen to the front passenger screen for display, and determine an audio output manner according to whether another display other than the front passenger screen has an audio playing requirement.

In some embodiments of this application, when playing an audio by using an audio output apparatus, the control device may simultaneously set a sound field mode used when the audio output apparatus plays the audio. The control device may preset an output manner used by each audio output apparatus in different sound field modes, for example, a manner of outputting a mono audio, outputting a stereo audio, or the like. When playing an audio, the control device may select a sound field mode according to a user indication or according to an actual scenario, and control an audio output device to play the audio in the sound field mode. For example, the sound field mode may include a theater mode, a front-row surround mode, a driver surround mode, a private mode, and the like. For example, the theater mode may mean playing an audio through the vehicle loudspeaker, the front-row surround mode may mean playing an audio through the front-row loudspeaker, the driver surround mode may mean playing an audio through the driver loudspeaker, the private mode may mean playing an audio through a loudspeaker at a specific location, and the like.

For example, based on the scenarios described in the examples in FIG. 68(a) to FIG. 69(b), after the video playing interface displayed on the central display screen is shared to the front passenger screen for display, when the control device plays the audio corresponding to the video content through the vehicle loudspeaker, as shown in FIG. 70(a), the control device may control the vehicle loudspeaker to play the audio in the theater mode. Further, when some content displayed on the front passenger screen is transferred back to the driver screen for display, as shown in FIG. 70(b), the control device may control the driver loudspeaker to play the audio in the private mode.

In some embodiments of this application, when content displayed on the source display is shared to the target display, and an application corresponding to the content is a media-type application or a call-type application, the control device may adjust a playing manner of the audio corresponding to the content along with cross-screen transfer of the content. A specific adjustment manner may be: switching to playing the audio corresponding to the shared content by using the audio playing apparatus in the sound zone associated with the target display, or switching to playing the audio corresponding to the shared content by using the audio playing apparatus in the sound zone associated with the source display and the audio playing apparatus in the sound zone associated with the target display. For a specific implementation of the solution, refer to the method in the foregoing embodiments. Details are not described herein again.

2. When content is transferred across screens, an audio playing manner is not switched.

In some embodiments of this application, after content displayed on a source display is shared to a target display, a control device may not adjust an audio playing manner, but still play, by using an audio output apparatus used before the content is shared, an audio corresponding to the shared content. The following provides description based on specific scenarios and examples.

Scenario 1: Content is transferred, and a playing manner of a navigation audio and a notification audio (a message audio) is not switched (an audio is not transferred).

In this scenario, the control device displays specified content on the source display, and plays an audio corresponding to the specified content by using an audio output apparatus in a sound zone associated with the source display. The specified content and the audio corresponding to the specified content may be any one of the following: navigation content and a navigation audio, system information and a system audio, and alarm information and an alarm audio. After the control device shares, according to a user indication, the specified content to the target display for display, the control device may not switch a playing manner of the audio corresponding to the specified content, that is, continue to play the audio corresponding to the specified content by using the audio output apparatus in the sound zone associated with the source display. When the control device shares, according to the user indication, the specified content displayed on the source display to the target display for display, if content is being displayed on the target display and a corresponding audio is being played, the control device may continue playing the original audio on the target display, or may pause playing the audio. Optionally, when displaying the content from the source display, the target display may display the content in a floating window.

For example, the audio is a system audio. When a full-screen window, a split-screen window, a floating window, picture-in-picture, a control, a widget, or the like is transferred between displays, the control device may play a corresponding system audio (for example, a sound effect like "shout" or "wow"). For example, the system audio may be configured by a system or customized by a user. Optionally, the system audio may be played by preferentially using an audio output apparatus that is mainly used by a driver, for example, a driver loudspeaker, a driver headrest speaker, a driver Bluetooth headset, or a vehicle loudspeaker. Alternatively, the system audio may be played by using an audio output apparatus in a sound zone associated with the target display for content transfer.

For example, the audio is an alarm audio. Alarm information corresponding to the alarm audio may be displayed on a central display screen by default. The alarm audio may be played by preferentially using an audio output apparatus that is mainly used by a driver, for example, a driver loudspeaker, a driver headrest speaker, a driver Bluetooth headset, or a vehicle loudspeaker.

For example, specified content is navigation content corresponding to the navigation audio. The control device may display the navigation content on the source display, and the control device plays, by using the audio output apparatus in the sound zone associated with the source display, the navigation audio corresponding to the navigation content. After the control device shares, according to a user indication, the navigation content displayed on the source display to the target display for display, the source display may no longer display the navigation content, and the target display displays the navigation content. In this case, when playing an audio, the control device does not switch a playing manner of the navigation audio, and may still play the navigation audio corresponding to the navigation content by using the audio output apparatus in the sound zone associated with the source display. When the control device shares, according to a user indication, the navigation content displayed on the source display to the target display for display, when content is displayed on the target display and a corresponding audio is being played, in an optional implementation, the control device may display, on the target display in split screen, the navigation content from the source display and the content originally displayed on the target display. Because the content originally displayed on the target display is still displayed on the display, the navigation content does not affect viewing of the content originally displayed on the target display. In this case, the audio playing manner may not need to be switched, that is, the audio output apparatus in the sound zone associated with the source display is still used to play the navigation audio corresponding to the navigation content, and the audio output apparatus in the sound zone associated with the target display is still used to play the audio corresponding to the content originally displayed on the target display. In another optional implementation, the control device may display, on the target display in full screen, the navigation content from the source display. In addition, the control device may continue to play, by using the audio output apparatus in the sound zone associated with the target display, the audio corresponding to the content originally displayed on the target display, or because the content originally displayed on the target display is blocked by the navigation content, the control device may also pause playing the audio corresponding to the content originally displayed on the target display.

When the control device displays the navigation content from the source display on the target display in full screen, refer to FIG. 71. A procedure corresponding to the foregoing method may include the following steps.

S7101: The control device displays the navigation content on the source display, and plays, by using a first audio output apparatus, the navigation audio corresponding to the navigation content.

Optionally, the control device may display other content on the target display, and play, by using a second audio output apparatus, an audio corresponding to the other content.

The first audio output apparatus is the audio output apparatus in the sound zone associated with the source display, and the second audio output apparatus is the audio output apparatus in the sound zone associated with the target display.

For example, as shown in FIG. 72A(a), the source display is a central display screen in a vehicle cockpit, the target display is a front passenger screen in the vehicle cockpit, and when the central display screen displays the navigation content and the front passenger screen displays video content, the first audio output apparatus may be a driver loudspeaker, and the second audio output apparatus may be a front passenger loudspeaker. The control device may play, through the driver loudspeaker, the navigation audio corresponding to the navigation content, and play, through the front passenger loudspeaker, a video audio corresponding to the video content.

S7102: The control device shares, to the target display in response to a received first sharing operation, the navigation content displayed on the source display.

For example, the first sharing operation may be a two-finger right and transverse sliding operation that is shown in FIG. 72A(a) and that is performed on the source display.

S7103: The control device stops displaying the navigation content on the source display, and displays the navigation content on the target display.

For example, as shown in FIG. 72A(b), after sharing the navigation content displayed on the central display screen to the front passenger screen, the control device may display a desktop interface on the driver screen, and display the navigation content on the front passenger screen.

S7104: The control device continues to play, by using the first audio output apparatus, the navigation audio corresponding to the navigation content.

For example, as shown in FIG. 72A(b), the control device may continue to play, through the driver loudspeaker, the navigation audio corresponding to the navigation content displayed on the front passenger screen. Based on the method, although the navigation content displayed on the driver screen is transferred to the front passenger screen, a user in a driver seat can still listen to the navigation audio, to ensure that the user in the driver seat can drive the vehicle according to the navigation. In addition, the navigation content is transferred to the front passenger screen, so that a user in a front passenger seat performs an operation (for example, switching to a new destination and re-navigating) on the navigation content in place of the user in the driver seat, so that the user in the driver seat can focus on driving. Therefore, the method has relatively high practicability and user experience.

Optionally, before step S7102, the method may further include step S7100, and after step S7104, the method may further include steps S7105 to S7108.

S7100: The control device displays other content on the target display, and plays, by using the second audio output apparatus, an audio corresponding to the other content.

S7105: The control device continues to play, by using the second audio output apparatus, the audio corresponding to the other content, or the control device stops playing, by using the second audio output apparatus, the audio corresponding to the other content.

For example, as shown in FIG. 72A(b), the control device may pause playing of a video audio corresponding to video content originally displayed on the front passenger screen. After the navigation content is displayed on the front passenger screen, an application or a service that is used to display the video content on the front passenger screen may be switched to run in the background.

S7106: The control device returns, to the source display in response to a received second sharing operation, the navigation content displayed on the target display.

For example, as shown in FIG. 72A(b), the central display screen and the front passenger screen respectively continue to display the navigation content and the video content. Subsequently, when required, the user may share the navigation content displayed by the central display screen to the front passenger screen for display. For example, content displayed on the central display screen and content displayed on the front passenger screen at a subsequent moment are shown in FIG. 72B(a). In this case, when receiving the second sharing operation performed by the user, the control device may return the navigation content displayed on the front passenger screen to the central display screen for display. For example, the second sharing operation may be a two-finger left and transverse sliding operation that is shown in FIG. 72B(a) and that is performed on the front passenger screen.

Optionally, in the scenario shown in FIG. 72A(a) and FIG. 72A(b), after the user shares the navigation content displayed on the central display screen to the front passenger screen for display, a small-sized window (for example, a navigation floating window or a navigation widget) corresponding to the navigation window may be displayed on the central display screen. In this way, the user may transfer the navigation content from the front passenger screen back to the central display screen by operating the small-sized window on the central display screen. In this case, the second sharing operation may be an operation performed by the user on the small-sized window on the central display screen, for example, a tap operation on the small-sized window. For related content that the user operates the small-sized window to transfer the content back to the source display, refer to the related descriptions in the embodiment shown in FIG. 32.

S7107: The control device displays the navigation content on the source display, and stops displaying the navigation content on the target display.

For example, as shown in FIG. 72B(b), after returning the navigation content displayed on the front passenger screen to the central display screen, the control device may continue to display the navigation content on the central display screen, and continue to display the video content on the front passenger screen.

S7108: The control device continues to play, by using the first audio output apparatus, the navigation audio corresponding to the navigation content, and continues to play, by using the second audio output apparatus, the audio corresponding to the other content.

For example, as shown in FIG. 72B(b), the control device may continue to play, through the driver loudspeaker, the navigation audio corresponding to the navigation content displayed on the central display screen, and continue to play, through the front driver loudspeaker, the video sound corresponding to the video content displayed on the front passenger screen. Based on the method, after the content transferred from the central display screen to the front control screen for display is transferred back to the central display screen, the control device may switch manners of displaying the content and playing the audio on the two displays back to a manner used before the content is transferred to the front control screen.

Scenario 2: A floating window, picture-in-picture, a control, or a widget is transferred, and an audio playing manner is not switched.

In this scenario, the control device may display first content (for example, display the first content in full screen) on the source display, and the control device may display second content in a window (for example, a floating window or picture-in-picture) on the source display. The window in which the second content is located may be overlaid on the window in which the first content is located. The control device may play audios corresponding to the first content and the second content by using an audio output apparatus in a sound zone associated with the source display. After the control device shares, according to a user indication, the window in which the second content is located on the source display to the target display for display, the source display no longer displays the window, and the target display displays the window. In this case, when playing the audios, the control device may not switch a playing manner of the audios corresponding to the first content and the second content, that is, still play the audios corresponding to the first content and the second content by using the audio output apparatus in the sound zone associated with the source display. When the control device shares, according to the user indication, the second content displayed on the source display to the target display for display, if third content is being displayed on the target display and a corresponding audio is being played, the control device may continue playing the audio corresponding to the third content, or may pause playing the audio corresponding to the third content.

For example, the window in which the second content is located is a floating window. Refer to FIG. 73. A procedure corresponding to the foregoing method may include the following steps.

S7301: The control device displays the first content on the source display in full screen, displays the second content in a floating window on the source display, and plays, by using a third audio output apparatus, audios corresponding to the first content and the second content; and the control device displays third content on the target display, and plays, by using a fourth audio output apparatus, an audio corresponding to the third content.

The third audio output apparatus is the audio output apparatus in the sound zone associated with the source display, and the fourth audio output apparatus is an audio output apparatus in a sound zone associated with the target display.

For example, as shown in FIG. 74A, when the source display is a central display screen in a vehicle cockpit, the target display is a front passenger screen in the vehicle cockpit, the first content is navigation content, the second content is music content in a floating window, and the third content is video content, the third audio output apparatus may be a driver loudspeaker, and the fourth audio output apparatus may be a front passenger loudspeaker. The control device may play, through the driver loudspeaker, a navigation audio corresponding to the navigation content and music corresponding to the music content, and play, through the front driver loudspeaker, an audio corresponding to the video content.

S7302: The control device shares, to the target display in response to a received third sharing operation, the floating window displayed on the source display.

For example, the first sharing operation may be an operation of selecting the floating window and then transversely sliding rightward with two fingers shown in FIG. 74A.

S7303: The control device displays the first content on the source display in full screen, and displays the third content and the floating window on the target display.

For example, as shown in FIG. 74B, after the floating window displayed on the central display screen is shared to the front passenger screen, the control device may display only the navigation content on the driver screen, and display the video content and the floating window on the front passenger screen.

S7304: The control device continues to play the audios corresponding to the first content and the second content by using the third audio output apparatus.

For example, as shown in FIG. 74B, the control device may continue to play, through the driver loudspeaker, a navigation audio corresponding to the navigation content and a music audio corresponding to the music content.

S7305: The control device continues to play the audio corresponding to the third content by using the fourth audio output apparatus, or the control device stops playing the audio corresponding to the third content by using the fourth audio output apparatus.

For example, as shown in FIG. 74B, the control device may continue to play, through the front passenger loudspeaker, the video sound corresponding to the video content originally displayed on the front passenger screen.

Optionally, the control device may determine, according to an audio playing status of the second content, whether to pause playing the audio corresponding to the third content. For example, when the music content in the floating window is in a no-content playing state, the control device may continue to play the audio corresponding to the third content by using the fourth audio output apparatus; and when the music content in the floating window is in a content playing state, the control device may stop playing the audio corresponding to the third content by using the fourth audio output apparatus.

Optionally, after step S7305, the method may further include steps S7306 and S7307.

S7306: The control device displays a floating window in full screen on the target display in response to a received window adjustment operation.

The window adjustment operation is used to indicate to switch the floating window to full-screen display, that is, to display content in the floating window in full screen on the target display.

For example, as shown in FIG. 74C, compared with FIG. 74B, content displayed on the central display screen remains unchanged, and a floating window on the front passenger screen is switched to a full-screen display format.

S7307: The control device plays, by using the third audio output apparatus, the audio corresponding to the first content, and plays, by using the fourth audio output apparatus, the audio corresponding to the second content.

For example, as shown in FIG. 74C, the control device may play, through the driver loudspeaker, the navigation audio corresponding to the navigation content, and play, through the front passenger loudspeaker, the music corresponding to the music content.

In some embodiments of this application, when the control device returns, based on a user operation, the floating window on the target display to the source display for display, the control device may continue to perform step S7301.

In some other embodiments, in the procedure shown in FIG. 73, in step S7301, the control device may display, on the source display in full screen, an interface, like a desktop, a control center, or a setting page, of the first content that has no audio being played, display the second content in a floating window on the source display, and play, by using the third audio output apparatus, the audio corresponding to the second content. Further, after the floating window displayed on the source display is shared to the target display, in step S7304, the control device may continue to play, by using the third audio output apparatus, the audio corresponding to the second content. After the user adjusts the floating window to be displayed in full screen on the target display, in step S7307, the control device may play, by using the fourth audio output apparatus, the audio corresponding to the second content.

In still some embodiments, in the procedure shown in FIG. 73, in step S7301, the control device may display the first content in full screen on the source display, display the second content in a floating window on the source display, play the audio corresponding to the second content by using the third audio output apparatus, and play the audio corresponding to the first content by using a fifth audio output apparatus in the sound zone associated with the source display. In other words, the control device may play the first content and the second content by using different audio output apparatuses in the sound zone associated with the source display. For example, the source display is the central display screen. The control device may play the navigation audio corresponding to the navigation content through the driver loudspeaker, and play the music corresponding to the music content through a driver headrest speaker. Further, in step S7304 and step S7307, the control device may play, by using the third audio output apparatus, the audio corresponding to the second content, and play, by using the fifth audio output apparatus, the audio corresponding to the first content. For example, as shown in FIG. 75A(a), the control device displays navigation content and an incoming call notification control for a video call on the central display screen in the vehicle cockpit, and plays, through the driver loudspeaker, a navigation audio corresponding to the navigation content and a notification audio corresponding to the incoming call notification control. In addition, the control device displays the video content on the front passenger screen in the vehicle cockpit, and plays, through the front passenger loudspeaker, a video audio corresponding to the video content. When the control device receives a user indication that the incoming call notification control is transferred to the front passenger screen for display, as shown in FIG. 75A(b), the control device displays the navigation content on the central display screen, and plays, through the driver loudspeaker, the navigation audio corresponding to the navigation content and a notification audio corresponding to the incoming call notification control. In addition, as shown inFIG. 75A(b), the control device displays the video content and the incoming call notification control on the front passenger screen, and plays, through the front passenger loudspeaker, the video audio corresponding to the video content. In another optional implementation, the control device may also control the front passenger loudspeaker to pause video audio playing.

Further, when the control device switches, according to a user indication, the incoming call notification control displayed on the front passenger screen to full-screen display or starts an application corresponding to the incoming call notification control, as shown in FIG. 75B(a), the control device may switch to a manner of playing the navigation audio through the driver loudspeaker and playing the notification audio corresponding to the incoming call notification control through the front passenger loudspeaker, that is, the notification audio corresponding to the incoming call notification control is transferred. After the control device answers the incoming call according to the user indication, as shown in FIG. 75B(b), the control device continues to display the navigation content on the central display screen, and plays, through the driver loudspeaker, the navigation audio corresponding to the navigation content. In addition, as shown in FIG. 75B(b), the control device displays a video call screen on the front passenger screen, and may play a video call audio through the front passenger loudspeaker. Certainly, the control device may also display the video call screen on the front passenger screen, and play the video call audio through the vehicle loudspeaker.

Optionally, in the foregoing embodiments, the manner (namely, an audio transfer manner used by the control device) of switching the audio output apparatus used when the control device plays an audio may be by default, for example, may be a default manner configured by the system or manually configured by the user. Even if the control device automatically determines, according to a preconfigured rule, an audio output apparatus used when an audio is played, the user may also manually adjust the audio output apparatus. When playing an audio, the control device preferentially uses the audio output apparatus manually selected by the user to play the audio.

Optionally, in the audio transfer rules provided in the foregoing embodiments of this application, the control device may preferentially perform control according to a rule that corresponds to audio transfer when content transfer is performed. When a service in the control device does not support control according to the rule, the control device may perform control according to other rules provided in the foregoing embodiments, or perform control according to a system configuration or a user-defined rule.

It should be noted that, both the interface transfer method provided in the content of Part 1 and the audio control method provided in the content of Part 3 provide an interface display method related to an interface transfer process. If there is a repetition or similar part in the interface display method provided in the content of the two parts, refer to each other. If there is a difference, a manner may be flexibly selected according to the related description or an actual scenario, which is not listed one by one in embodiments of this application.

It should be noted that the specific implementation procedure provided in each embodiment is merely an example of a method procedure applicable to embodiments of this application. For specific implementation, refer to the descriptions in the foregoing embodiments. In addition, an execution sequence of the steps in each implementation procedure may be correspondingly adjusted based on an actual requirement, other steps may be added or some steps may be reduced, and the like.

In the foregoing embodiments, the method provided in embodiments of this application is described by using an example in which the display is controlled by using the one-core multi-screen mechanism. However, the method provided in embodiments of this application is not limited to a scenario in which the display is controlled by using the one-core multi-screen mechanism, but may be further applied to a scenario in which the display is controlled by using a multi-core multi-screen mechanism.

When the solution provided in embodiments of this application is applied to the multi-core multi-screen mechanism or a scenario in which a display is controlled by a plurality of devices, a plurality of displays in the audio control system in the foregoing embodiments may belong to a plurality of control devices. In an implementation, a control device (for example, a vehicle) may be a vehicle that uses the multi-core multi-screen mechanism. In another implementation, a communication connection may be established between the plurality of devices. For example, a vehicle may establish a communication connection to an external device like a tablet or a large screen, and each display of the vehicle, the tablet, and the large screen jointly form the plurality of displays in the audio control system. In this scenario, for audio output apparatuses, each audio output apparatus is connected to (or associated with) only one control device in a plurality of control devices and is controlled by the control device. For each control device, an audio output apparatus connected to the control device may exist in the audio control system, or an audio output apparatus connected to the control device may not exist in the audio control system. If the audio output apparatus connected to the control device exists in the audio control system, the audio output apparatus may be used as an independent audio output apparatus of the control device, and the control device may display content by using a display of the control device, and play an audio by using the connected audio output apparatus. If an audio output apparatus connected to the control device does not exist in the audio control system, the control device can display content only through a display of the control device. If an audio needs to be played, an audio output apparatus corresponding to another control device needs to be used. For example, the audio to be played may be sent to another control device, and the another control device plays the audio by using the connected audio output apparatus.

In the foregoing multi-core multi-screen or multi-device control scenario, the audio control system may include the plurality of control devices, each control device includes at least one display, and displays of the plurality of control devices form the plurality of displays in the audio control system. Each control device may not be connected to an audio output apparatus or may be connected to at least one audio output apparatus. Audio control methods used by the plurality of control devices are the same.

For example, in the scenario of Example 1, if the multi-core multi-screen mechanism is used as a control mechanism of the plurality of displays, in an example, the central display screen and the front passenger screen may belong to a first control device, and the rear-row screen may belong to a second control device. For a layer structure of the first control device and the second control device, refer to the structure shown in FIG. 58. Software processing modules (for example, a structure of a media framework layer (an audio control module, a sound zone management module, and the like)) and corresponding processing logic of the first control device and the second control device are the same as corresponding modules and processing logic shown in FIG. 58. Hardware structures of the first control device and the second control device are different from the hardware structure shown in FIG. 58. The difference lies in that: The display included at the system layer of the first control device and the display included at the system layer of the second control device jointly form the plurality of displays at the system layer shown in FIG. 58. The interface that is included in the HAL of the first control device and that is connected to the audio output apparatus and the interface that is included in the HAL of the second control device and that is connected to the audio output apparatus jointly form an interface (a bus is similar) that is at the HAL shown in FIG. 58. In an example, the audio output apparatus connected to the first control device may include a driver headrest speaker, a driver loudspeaker, a front passenger loudspeaker, a front passenger headrest speaker, a front passenger seat Bluetooth headset, and the like. The audio output apparatus connected to the second control device may include a rear-row loudspeaker, a rear-row headrest speaker, and the like.

In an example scenario, when the audio output apparatus connected to the second control device includes the rear-row speaker, when content displayed on the central display screen of the first control device is transferred to the rear-row screen of the second control device and the audio is transferred along with the content, the first control device may stop playing, by using the connected audio output apparatus, the audio corresponding to the transferred content, and the second control device may play, by using the connected audio output apparatus, that is, the rear-row speaker, the audio corresponding to the transferred content.

In still another example scenario, when the audio output apparatus connected to the second control device includes a Bluetooth headset, when content displayed on the central display screen of the first control device is transferred to the rear-row screen of the second control device and an audio is transferred along with the content, the first control device may stop playing, by using the connected audio output apparatus, the audio corresponding to the transferred content, and the second control device may play, by using the connected audio output apparatus, that is, the Bluetooth headset, the audio corresponding to the transferred content.

In yet another example scenario, when the audio output apparatus connected to the first control device includes a driver loudspeaker and a front passenger loudspeaker, and the audio output apparatus connected to the second control device includes a rear-row loudspeaker, the second control device may display content on the rear-row screen and play a corresponding audio through the rear-row loudspeaker. When the second control device needs to play the audio through the vehicle loudspeaker, the second control device may send the audio to the first control device after establishing a communication connection to the first control device (for example, the second control device may establish a communication connection to the first control device through a Bluetooth connection or a frequency modulation (frequency modulation, FM) broadcast). The first control device may play the audio through a driver loudspeaker and a front passenger loudspeaker. In addition, the second control device continues to play the audio through the rear-row loudspeaker. In this way, an effect of playing an audio through the vehicle loudspeaker in the multi-core multi-screen control mechanism can be implemented.

For a content display manner, an audio playing manner, and an effect of the method provided in this embodiment of this application when the method is applied to the multi-core multi-screen mechanism or the multi-device control display scenario, refer to the content display manner, the audio playing manner, and the effect in the one-core multi-screen mechanism control display scenario in the foregoing embodiments. For example, in the scenario shown in FIG. 63(a) and FIG. 63(b), in the one-core multi-screen scenario, after the user transfers the video playing interface displayed on the central display screen to the rear-row left screen for display, the control device may play, through a Bluetooth headset connected to the rear-row left screen, the audio corresponding to the video playing interface displayed on the rear-row left screen. In the multi-core multi-screen scenario, if the central display screen and the front passenger screen belong to the first control device, and the rear-row screen belongs to the second control device, after the user transfers the video playing interface displayed on the central display screen to the rear-row left screen for display, the first control device may stop playing, by using the connected audio output apparatus, the audio corresponding to the video playing interface, and the second control device may play, through the Bluetooth headset connected to the rear-row left screen, the audio corresponding to the video playing interface. In another scenario, the multi-core multi-screen mechanism or the plurality of device may also implement content display and audio playing effects in the foregoing one-core multi-screen mechanism. Details are not described in this embodiment of this application.

Based on the foregoing embodiments and a same concept, an embodiment of this application further provides an audio control method. As shown in FIG. 76, the method includes the following steps.

S7601: When displaying first content on a first display, an electronic device plays a first audio corresponding to the first content by using a first audio output apparatus, where the first display is any display of a plurality of displays located in a first space area, the first audio output apparatus is associated with a first sound zone, the first sound zone is a candidate sound zone associated with the first display in a plurality of candidate sound zones, and each candidate sound zone in the plurality of candidate sound zones is associated with one or more audio output apparatuses in the first space area.

In some embodiments of this application, the electronic device may be the control device in the foregoing embodiments. The first space area may be the space area in the vehicle cockpit in the foregoing embodiments. Each audio output apparatus may include at least one of an in-vehicle loudspeaker (for example, the driver loudspeaker, the front passenger loudspeaker, or the rear-row loudspeaker in the foregoing embodiments), a headrest speaker (for example, the driver headrest speaker, the front passenger headrest speaker, or the rear-row headrest speaker in the foregoing embodiments), or a Bluetooth headset (for example, the Bluetooth headset connected to each display in the foregoing embodiments). Apparatuses specifically included in each audio output apparatus may be of a same type, or may be of different types. Each audio output apparatus may include one or more in-vehicle loudspeakers, headrest speakers, or Bluetooth headsets. For example, the first audio output apparatus is used as an example. The first audio output apparatus may be the vehicle loudspeaker described in the foregoing embodiments, and the first audio output apparatus specifically includes a plurality of loudspeakers such as the driver loudspeaker, the front passenger loudspeaker, and the rear-row loudspeaker. For another example, the first audio output apparatus may also include the driver loudspeaker, the driver headrest speaker, and the like.

For example, the first display may be any display in the vehicle cockpit in the foregoing embodiments.

In some embodiments of this application, before playing the first audio corresponding to the first content by using the first audio output apparatus, the electronic device needs to first determine the first audio output apparatus. Specifically, the electronic device may determine the first sound zone based on the first display; obtain a priority order of the at least one audio output apparatus associated with the first sound zone; and select an audio output apparatus with the highest priority from the at least one audio output apparatus as the first audio output apparatus based on the priority order of the at least one audio output apparatus. In some embodiments of this application, the electronic device may select, from the plurality of candidate sound zones based on a specified association relationship between a display and a candidate sound zone, a candidate sound zone associated with the first display as the first sound zone; or the electronic device may determine the first sound zone based on a received sound zone selection operation, where the sound zone selection operation is used to select a candidate sound zone from the plurality of candidate sound zones as the first sound zone. The plurality of candidate sound zones, the audio output apparatus associated with each candidate sound zone, the correspondence between the display and the candidate sound zone, and the like may be preconfigured by a system or a user. The sound zone selection operation may be an operation of selecting a sound zone by the user. In some embodiments of this application, the electronic device may select, from a plurality of pieces of priority information based on a specified correspondence between an audio type and priority information, target priority information corresponding to an audio type of the first audio, where each of the plurality of pieces of priority information indicates a priority order of the at least one audio output apparatus associated with the first sound zone, and different priority information corresponds to different audio types; and then determine the priority order of the at least one audio output apparatus based on the target priority information. The plurality of priority information, a priority order of an audio output apparatus indicated by each piece of priority information, a specified correspondence between an audio type and priority information, and the like may be preconfigured by the system or the user.

In an example, when the first space area is the space in the vehicle cockpit in the foregoing embodiments, the plurality of candidate sound zones may be the sound zones 1 to 3 obtained by dividing the vehicle cockpit shown in FIG. 57. An audio output apparatus associated with each sound zone includes an audio output apparatus located in the sound zone shown in FIG. 57, and a display associated with each sound zone may be a display located in the sound zone shown in FIG. 57.

It should be noted that the audio output apparatus in the sound zone in embodiments of this application may also be understood as an audio output apparatus associated with the sound zone.

In some embodiments of this application, a same display may correspond to one or more pieces of priority information, and in a plurality of pieces of priority information corresponding to a same display, different priority information may correspond to different audio types. In some embodiments of this application, a same audio type may correspond to one or more pieces of priority information, and in a plurality of pieces of priority information corresponding to a same audio type, different displays may correspond to different priority information.

For example, the priority order of the audio output apparatus indicated by the priority information may be the priority order described in Case 1 to Case 3 in the foregoing embodiments, or certainly may be another priority order.

S7602: The electronic device does not display the first content on the first display and displays the first content on a second display in response to a received first operation, where the second display is included in the plurality of displays.

In some embodiments of this application, the first display may be the source display in the foregoing embodiments, and the second display may be the target display in the foregoing embodiments. For example, the first display and the second display may be the displays in the vehicle cockpit in the foregoing embodiments. For example, the first operation may be the operation (for example, the two-finger sliding operation) for indicating to transfer the content displayed on the source display to the target display for display in the foregoing embodiments.

In an embodiment, the user may determine, based on a direction of the first operation, the target display for the transfer. For example, the central display screen is located on the left side of the front passenger screen. An operation that two fingers slide rightward on the central display screen may be used to transfer the content displayed on the central display screen to the front passenger screen, and an operation that two fingers slide leftward on the front passenger screen may be used to transfer content displayed on the front passenger screen back to the central display screen. In some other embodiments, the user may determine, based on a type of the first operation, the target display for the transfer. For example, when the source display is the central display screen, the two-finger sliding operation may be used to transfer the content displayed on the central display screen to the front passenger screen, and the three-finger sliding operation may be used to transfer the content displayed on the central display screen to the rear-row screen. In still some embodiments, the user may select, on the central display screen, one or more target displays for content transfer. The first operation is not limited in this application.

A scenario in which the electronic device does not display the first content on the first display and displays the first content on the second display in response to the received first operation may be a scenario in which a content transfer result is mobile content in the foregoing embodiments. For example, the first display may be the central display screen shown in FIG. 62(a) and FIG. 62(b), the second display may be the front passenger screen shown in FIG. 62(a) and FIG. 62(b), and the first content may be the content of the video playing interface displayed on the central display screen shown in FIG. 62(a) and FIG. 62(b). In some embodiments of this application, the electronic device may display the first content on the second display in full screen/split screen, or display the first content in a floating window on the second display.

Optionally, before the electronic device does not display the first content on the first display in response to the received first operation, and before the second display displays the first content, the second display may display second content, and the electronic device may play a second audio corresponding to the second content by using a third audio output apparatus, where the third audio output apparatus is associated with the second sound zone. In this scenario, when displaying the first content on the second display, the electronic device may display the first content in full screen/split screen on the second display, or display the first content in a floating window/picture-in-picture on the second display. Specifically, the electronic device may display the first content and the second content on the second display in split screen; or display the first content in a first window on the second display, where the first window is overlaid on a window in which the second content is located, and a size of the first window is less than a size of the window in which the second content is located, that is, the first window occupies a part of an area of the second display, for example, the first window is a floating window or picture-in-picture. Alternatively, the electronic device may display the first content and does not display the second content on the second display. For example, the electronic device displays the first content in full screen on the second display.

In the foregoing method, for a manner in which the electronic device determines the third audio output apparatus, refer to the method described in the content of Scenario 1 (namely, the non-content transfer scenario) in the foregoing embodiments. Details are not described herein again.

S7603: In response to the received first operation, the electronic device does not play the first audio by using the first audio output apparatus and plays the first audio by using a second audio output apparatus; or continues to play the first audio by using the first audio output apparatus; or plays the first audio by using a part or all of audio output apparatuses of a specified type in the first space area, where the second audio output apparatus is associated with a second sound zone, and the second sound zone is a candidate sound zone associated with the second display in the plurality of candidate sound zones

In some embodiments of this application, the electronic device does not display the first content on the first display in response to the received first operation, and after displaying the first content on the second display, may play the first audio corresponding to the first content in any one of the following manners:

(1) Not play the first audio by using the first audio output apparatus, and play the first audio by using the second audio output apparatus.

This manner corresponds to the processing manner in the scenario in which the audio is transferred along with the content in the foregoing embodiments (corresponding to Rule 1 and Rule 3 in the foregoing embodiments). In this manner, after the first content is transferred from the first display to the second display, the audio output apparatus for playing the first content is switched from the audio output apparatus in the sound zone associated with the first display to the audio output apparatus in the sound zone associated with the second display. For a specific implementation, refer to the implementation described in the corresponding scenario in the foregoing embodiments. Details are not described herein again.

For example, the first content may be displayed content corresponding to a service in the electronic device, and the first audio may be an audio of a service corresponding to the first content. For example, a video playing interface corresponding to the video service is the first content, and an audio corresponding to the video playing interface is the first audio. It may be understood that, after the first content is transferred from the first display to the second display for display, specific content of the first content and the first audio may change. For example, after the video playing interface is transferred from the first display to the second display for display, the video may continue to be played. Correspondingly, the first content and the first audio may change in real time with playing progress of the video. For second content, a second audio, and the like, refer to the foregoing descriptions.

In some embodiments of this application, if the first content is media-type content or call-type content, or the first audio is a media-type audio or a call-type audio, or a service that provides the first content/first audio is a media-type service or a call-type service, in response to the first operation, the first audio output apparatus does not play the first audio, and the electronic device plays the first audio by using a second audio output apparatus. That is, the media-type audio or the call-type audio is transferred along with the content. For a specific implementation, refer to the implementation in the scenario corresponding to a rule like Rule 1 or Rule 3 in the foregoing embodiments. Details are not described herein again.

In some embodiments of this application, before the first content is transferred from the first display to the second display, when the second content is displayed on the second display and the second audio corresponding to the second content is played by using a third audio output apparatus, the first display does not display the first content, and after the second display displays the first content, the electronic device may further continue to play the second audio by using the third audio output apparatus. Optionally, when the first content is displayed in a split-screen window or a floating window on the second display, the electronic device may not display the first content on the first display, and after displaying the first content on the second display, continue to play the second audio by using the third audio output apparatus.

In some embodiments of this application, before the first content is transferred from the first display to the second display, when the second content is displayed on the second display and the second audio corresponding to the second content is played by using the third audio output apparatus, the first display does not display the first content in response to the received first operation, and after the second display displays the first content in full screen, if the first content is displayed in a second window, the electronic device may stop playing the second audio by using the third audio output apparatus.

In some embodiments of this application, in response to a first voice indication of a first user, a third audio is played by using an audio output apparatus associated with the first sound zone, where a space area in which the first user is located is a space area associated with the first sound zone; and in response to a second voice indication of a second user, a fourth audio is played by using an audio output apparatus associated with the second sound zone, where a space area in which the second user is located is a space area associated with the second sound zone. In other words, when a location of a user changes from the space area associated with the first sound zone to the space area associated with the second sound zone, the control manner of transferring an audio along with content is used. The electronic device may determine the location of the user and a change status of the location of the user in a manner of face detection, positioning, or the like. This is not specifically limited in embodiments of this application.

In some embodiments of this application, before the first audio is not played by using the first audio output apparatus and the first audio is played by using the second audio output apparatus, the second audio output apparatus further needs to be determined. Specifically, the electronic device may determine the second sound zone based on the second display; obtain a priority order of the at least one audio output apparatus associated with the second sound zone; and select, based on the priority order of the at least one audio output apparatus associated with the second sound zone, an audio output apparatus with a highest priority from the at least one audio output apparatus associated with the second sound zone as the second audio output apparatus. For a specific implementation, refer to the foregoing implementation in which the electronic device determines the first audio output apparatus. Details are not described herein again.

(2) The electronic device continues to play the first audio by using the first audio output apparatus.

This manner corresponds to the processing manner in the scenario in which the audio is not transferred along with the content in the foregoing embodiments (corresponding to Rule 2, Rule 5, and the like in the foregoing embodiments). In this manner, after the first content is transferred from the first display to the second display, the audio output apparatus for playing the first content is still the audio output apparatus for playing the first content before the transfer, that is, the audio output apparatus in the sound zone associated with the first display. For a specific implementation corresponding to this manner, refer to the implementation described in the corresponding scenario in the foregoing embodiments. Details are not described herein again.

In some embodiments of this application, before continuing to play the first audio by using the first audio output apparatus, the electronic device further needs to determine that the first audio is any one of the following audios: a navigation audio, a notification audio, a system audio, or an alarm audio; or determine that a service that provides the first audio is any one of the following services: a navigation service, a notification service, a system service, or an alarm service; or determine that the first content is any one of a floating window, picture-in-picture, a control, or a widget. That is, the navigation-type audio, the notification-type audio, the system-type audio, and the alarm-type audio are not transferred along with the content. When the floating window, picture-in-picture, control, and widget are transferred, the corresponding audios do not need to be transferred. For a specific implementation, refer to implementations in scenarios corresponding to rules such as Rule 2, Rule 5, and Rule 6 in the foregoing embodiments. Details are not described herein again.

(3) The electronic device plays the first audio by using a part or all of audio output apparatuses of a specified type in the first space area.

In this manner, after the first content is transferred from the first display to the second display, the audio output apparatus for playing the first content may switch from the audio output apparatus in the sound zone associated with the first display to a part or all of audio output apparatuses of a specified type in a first space environment. For example, when the first space area is the vehicle cockpit described in the foregoing embodiments, all of audio output apparatuses of a specified type in the first space area may be a vehicle loudspeaker, all headrest speakers in the cockpit, all Bluetooth headsets in the cockpit, or the like. A part of audio output apparatuses of a specified type in the first space area may be a front-row loudspeaker or all front-row headrest speakers. For a specific implementation corresponding to the manner, refer to a related implementation in the foregoing embodiments. Details are not described herein again.

In some embodiments of this application, before playing the first audio by using all of audio output apparatuses of a specified type in the first space area, the electronic device further needs to determine that the first audio is a call-type audio. That is, the call-type audio can be transferred along with the content transfer. For a specific implementation, refer to the implementation in the scenario corresponding to a related rule in the foregoing embodiments. Details are not described herein again.

In some embodiments of this application, after the second audio is not played by using the third audio output apparatus, in response to a received second operation, the first content is not displayed on the second display, and the second content is displayed on the second display; and the second audio continues to be played by using the third audio output apparatus. The second operation is used to indicate the second display to stop displaying the first content.

In some embodiments of this application, after the second audio is not played by using the third audio output apparatus, in response to a received third operation, the first content is displayed on the first display, the first content is not displayed on the second display, and the second content is displayed on the second display; and the first audio continues to be played by using the first audio output apparatus, and the second audio continues to be played by using the third audio output apparatus. The third operation is used to indicate to return the first content to the first display for display.

In an example, for a possible application scenario and an implementation of the method, refer to the descriptions of some content corresponding to FIG. 74A to FIG. 74C in the foregoing embodiments, or refer to the descriptions of some content corresponding to FIG. 72B(a) and FIG. 72B(b) in the foregoing embodiments. Details are not described herein again.

In some embodiments of this application, after not displaying the first content on the first display, and displaying the first content on the second display in response to a received first operation, and when determining that a display area of the first content on the second display is a partial area of the second display, the electronic device may display the first content in full screen on the second display in response to a received fourth operation, may play the first audio by using the audio output apparatus associated with the second sound zone, and may not display the first audio by using the audio output apparatus associated with the first sound zone. The fourth operation is used to indicate to display the first content in full screen. When selecting the audio output apparatus associated with the second sound zone, the electronic device may use the method described in the content of Scenario 1 (namely, the non-content transfer scenario) in the foregoing embodiments. Details are not described herein again.

In an example, for a possible application scenario and an implementation of the method, refer to the descriptions of some content corresponding to FIG. 74A to FIG. 74C in the foregoing embodiments, or refer to the descriptions of some content corresponding to FIG. 75A(a) to FIG. 75B(b) in the foregoing embodiments. Details are not described herein again.

For specific steps performed by the electronic device in the method, refer to the related descriptions in the foregoing embodiments. Details are not described herein again.

Based on the foregoing embodiments and a same concept, an embodiment of this application further provides an audio control method. As shown in FIG. 77, the method includes the following steps.

S7701: When displaying first content on a first display, an electronic device plays a first audio corresponding to the first content by using a first audio output apparatus, where the first display is any display of a plurality of displays located in a first space area, the first audio output apparatus is associated with a first sound zone, the first sound zone is a candidate sound zone associated with the first display in a plurality of candidate sound zones, and each candidate sound zone in the plurality of candidate sound zones is associated with one or more audio output apparatuses in the first space area.

In some embodiments of this application, the electronic device, the first display, a second display, and the first space area may be respectively the same as the electronic device, the first display, the second display, and the first space area in the method corresponding to FIG. 76. Details are not described herein again.

For a method for determining the first audio output apparatus by the electronic device, refer to the related descriptions in the method corresponding to FIG. 76. Details are not described herein again.

S7702: The electronic device displays the first content on the first display and displays the first content on the second display in response to a received first operation; or displays first sub-content on the first display and displays second sub-content on the second display in response to a received second operation, where the first content includes the first sub-content and the second sub-content, and the second display is included in the plurality of displays.

In some embodiments of this application, the first display may be the source display in the foregoing embodiments, and the second display may be the target display in the foregoing embodiments. For example, the first display and the second display may be the displays in the vehicle cockpit in the foregoing embodiments. The first operation may be the operation (for example, the three-finger sliding operation) for indicating to copy the content displayed on the source display to the target display for display in the foregoing embodiments. The second operation may be the operation (for example, the four-finger sliding operation) for indicating to display the first content on the first display and the second display in split screen in the foregoing embodiments.

A scenario in which the electronic device displays the first content on the first display and displays the first content on the second display in response to the received first operation may be a scenario in which a content transfer result is copied content in the foregoing embodiments. A scenario in which the electronic device displays the first sub-content on the first display and displays the second sub-content on the second display in response to the received second operation may be a scenario in which a content transfer result is spliced content in the foregoing embodiments.

In some embodiments of this application, a size of a display area in which the first sub-content is located may be the same as or different from a size of a display area in which the second sub-content is located. The first content may be obtained by splicing the first sub-content and the second sub-content.

S7703: The electronic device plays the first audio by using a second audio output apparatus and a third audio output apparatus; or plays the first audio by using an audio output apparatus of a specified type in the first space area, where the second audio output apparatus is associated with the first sound zone, the third audio output apparatus is associated with a second sound zone, and the second sound zone is a candidate sound zone associated with the second display in the plurality of candidate sound zones.

In some embodiments of this application, a scenario in which the electronic device plays the first audio by using a second audio output apparatus and a third audio output apparatus corresponds to a processing manner in a scenario in which a content transfer manner is content copying or content splicing in the foregoing embodiments. For a specific implementation, refer to the implementation described in the corresponding scenario in the foregoing embodiments. Details are not described herein again.

In some embodiments of this application, the second audio output apparatus is the same as the first audio output apparatus; and/or a type of the second audio output apparatus is the same as a type of the third audio output apparatus. For a method for determining the second audio output apparatus and the third audio output apparatus by the electronic device, refer to the related descriptions in the method corresponding to FIG. 76. Details are not described herein again.

In some embodiments of this application, after displaying the first content on the first display and displaying the first content on the second display in response to the received first operation, in response to a received third operation, the electronic device may not display the first content on the first display, and continue to display the first content on the second display; and the electronic device plays the first audio by using an audio output apparatus associated with the second sound zone, and does not play the first audio by using an audio output apparatus associated with the first sound zone; or in response to a received fourth operation, the electronic device may continue to display the first content on the first display, and not display the first content on the second display; and the electronic device plays the first audio by using an audio output apparatus associated with the first sound zone, and does not play the first audio by using an audio output apparatus associated with the second sound zone. The third operation is used to indicate to stop displaying the first content on the first display. The fourth operation is used to indicate to stop displaying the first content on the second display.

In some embodiments of this application, after displaying the first sub-content on the first display, and displaying the second sub-content on the second display in response to a received second operation, in response to a received fifth operation, the electronic device may not display the second sub-content on the second display, and display the first content on the first display; and the electronic device plays the first audio by using an audio output apparatus associated with the first sound zone, and does not play the first audio by using an audio output apparatus associated with the second sound zone; or in response to a received sixth operation, the electronic device may not displays the first sub-content on the first display, and display the first content on the second display; and the electronic device plays the first audio by using an audio output apparatus associated with the second sound zone, and does not play the first audio by using an audio output apparatus associated with the first sound zone. The fifth operation is used to indicate to stop displaying the second sub-content on the second display, and display the complete first content on the first display, that is, the fifth operation is used to indicate to return the second sub-content displayed on the second display to the first display and combine the second sub-content and the first sub-content for display. The sixth operation is used to indicate to stop displaying the first sub-content on the first display, and display the complete first content on the second display, that is, the sixth operation is used to indicate to send the first sub-content displayed on the first display to the second display and combine the first sub-content and the second sub-content for display.

For a specific implementation corresponding to the foregoing method, refer to a related implementation in the foregoing embodiments. Details are not described herein again.

For specific steps performed by the electronic device in the method, refer to the related descriptions in the foregoing embodiments. Details are not described herein again.

Based on the foregoing embodiments and a same concept, an embodiment of this application further provides an electronic device. The electronic device may be configured to implement the control method provided in embodiments of this application. As shown in FIG. 78, an electronic device 7800 may include a display 7801, a memory 7802, one or more processors 7803, and one or more computer programs (not shown in the figure). The foregoing components may be coupled through one or more communication buses 7804.

The display 7801 is configured to display a related user interface, for example, an application interface.

The memory 7802 stores the one or more computer programs (code), and the one or more computer programs include computer instructions. The one or more processors 7803 invoke the computer instructions stored in the memory 7802, so that the electronic device 7800 performs the control method provided in embodiments of this application.

During specific implementation, the memory 7802 may include a high-speed random access memory, and may further include a nonvolatile memory, for example, one or more magnetic disk storage devices, a flash device, or another nonvolatile solid-state storage device. The memory 7802 may store an operating system (a system for short below), for example, an embedded operating system like Android, iOS, Windows, or Linux. The memory 7802 may be configured to store an implementation program of this embodiment of this application. The memory 7802 may further store a network communication program. The network communication program may be used to communicate with one or more additional devices, one or more user equipments, or one or more network devices.

The one or more processors 7803 may be a general-purpose central processing unit (Central Processing Unit, CPU), a microprocessor, an application-specific integrated circuit (Application-Specific Integrated Circuit, ASIC), or one or more integrated circuits for controlling program execution of the solutions of this application.

It should be noted that FIG. 78 is merely an implementation of the electronic device 7800 provided in this embodiment of this application. During actual application, the electronic device 7800 may further include more or fewer components. This is not limited herein.

It should be understood that the solutions in embodiments of this application may be properly combined for use, and explanations or descriptions of terms in embodiments may be cross-referenced or explained in embodiments. This is not limited.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

Based on the foregoing embodiments and a same concept, an embodiment of this application further provides a computer-readable storage medium. The computer-readable storage medium stores a computer program. When the computer program is run on a computer, the computer is enabled to perform the method provided in the foregoing embodiments.

Based on the foregoing embodiments and a same concept, an embodiment of this application further provides a computer program product. The computer program product includes a computer program or instructions. When the computer program or the instructions is/are run on a computer, the computer is enabled to perform the method provided in the foregoing embodiments.

It may be understood that, to implement functions of the foregoing embodiments, an electronic device (for example an in-vehicle terminal) include a corresponding hardware structure and/or a corresponding software module for performing each function. A person skilled in the art should easily be aware that, in combination with units and algorithm steps of the examples described in embodiments disclosed in this specification, this application may be implemented in a hardware form or in a form of combining hardware with computer software. Whether a function is performed in a manner of hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the electronic device may be divided into functional modules. For example, each functional module corresponding to each function may be obtained through division, or two or more functions may be integrated into one processing module. The integrated module may be implemented in a form of hardware, or may be implemented in a form of software functional module. It should be noted that, in embodiments of this application, module division is an example, and is merely a logical function division. During actual implementation, another division manner may be used.

It should be further understood that each module in the electronic device may be implemented in a form of software and/or hardware. This is not specifically limited herein. In other words, the electronic device is presented in a form of functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when software is used for implementing data transmission, the data transmission may be completely or partially implemented in a form of computer program product. The computer program product includes one

# EP 4 502 779 A1

or more computer instructions. When the computer program instructions are loaded and executed on a computer, the procedures or functions according to embodiments of this application are completely or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, and microwave, or the like). The computer-readable storage medium may be a usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid-state drive (solid-state drive, SSD)), or the like.

Method or algorithm steps described in combination with embodiments of this application may be implemented by hardware, or may be implemented by a processor by executing software instructions. The software instructions may be formed by a corresponding software module. The software module may be located in a RAM memory, a flash memory, a ROM memory, an EPROM memory, an EEPROM memory, a register, a hard disk, a removable magnetic disk, a CD-ROM, or a storage medium of any other form known in the art. For example, the storage medium is coupled to the processor, so that the processor can read information from the storage medium and write information to the storage medium. Certainly, the storage medium may alternatively be a component of the processor. The processor and the storage medium may be disposed in an ASIC. In addition, the ASIC may be located in an electronic device. Certainly, the processor and the storage medium may alternatively exist in the electronic device as discrete components.

Based on the foregoing descriptions of the implementations, a person skilled in the art may clearly understand that for the purpose of convenient and brief descriptions, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above.

It is clear that a person skilled in the art can make various modifications and variations to this application without departing from the scope of this application. This application is intended to cover these modifications and variations of this application provided that they fall within the scope of the claims of this application and their equivalent technologies.

## Claims

1. A control method, applied to a first electronic device, wherein the first electronic device comprises a first display and a second display, and the method comprises:

   displaying a first interface on the first display; and
   when receiving a first operation for transferring the first interface on the first display, transferring the first interface based on an intention of the first operation, wherein the transfer comprises one-screen transfer and cross-screen transfer, wherein
   when the transfer is the cross-screen transfer, after the transfer of the first interface is completed, a display type of the first interface on the second display is related to task information before the transfer of the first interface and/or screen task information of the second display, wherein the task information before the transfer of the first interface indicates a display type and/or classification information of the first interface before the transfer of the first interface, the screen task information of the second display indicates a display type and/or classification information of a task interface on the second display before the transfer of the first interface, and the classification information indicates whether an interface is a preset focused application interface of a screen.

2. The method according to claim 1, wherein
   the display type comprises any one of an application window, a floating window, a floating icon, a floating bubble, picture-in-picture, a widget, a control, or a notification.

3. The method according to claim 1 or 2, wherein the cross-screen transfer comprises:

   displaying first sub-content on the first display, and displaying second sub-content on the second display, wherein the first interface comprises first content, and the first content comprises the first sub-content and the second sub-content; or
   skipping displaying the first interface on the first display, and displaying the first interface on the second display; or

displaying the first interface on the first display, and displaying the first interface on the second display.

4. The method according to claim 3, wherein
the first operation is an operation that one or more fingers leave after sliding on the first interface at a sliding speed greater than a preset threshold, and the first operation is used to transfer the first interface across screens.

5. The method according to claim 4, wherein when the transfer is the cross-screen transfer, the transferring the first interface based on an intention of the first operation comprises:

determining, based on a sliding direction of the first operation and location relationships between the first display and a plurality of displays, that the second display is a target screen for the cross-screen transfer, wherein the sliding direction points to the second display; and
transferring the first interface to the second display across screens.

6. The method according to any one of claims 3 to 5, wherein the display type of the first interface after the transfer is the same as the display type of the first interface before the transfer.

7. The method according to claim 6, wherein the display type of the first interface on the first display before the transfer of the first interface is full-screen display; and after the transfer of the first interface is completed, the display type of the first interface on the second display is full-screen display.

8. The method according to any one of claims 3 to 5, wherein the display type of the first interface after the transfer is related to the classification information of the first interface before the transfer, wherein
the first interface before the transfer is a preset focused application interface of the first display; and after the transfer of the first interface is completed, the display type of the first interface on the second display is full-screen display.

9. The method according to claim 7 or 8, wherein the display type of the first interface after the transfer is also related to the screen task information of the second display, wherein
before the transfer of the first interface, the task interface is not displayed, or the task interface is not displayed in full screen, or a preset focused application interface of the second display is not displayed on the second display.

10. The method according to any one of claims 3 to 5, wherein the display type of the first interface after the transfer is related to the screen task information of the second display, wherein
before the transfer of the first interface, the task interface is not displayed, or the task interface is not displayed in full screen, or a preset focused application interface of the second display is not displayed on the second display; and after the transfer of the first interface is completed, the display type of the first interface is full-screen display.

11. The method according to any one of claims 3 to 5, wherein the display type of the first interface after the transfer is related to the screen task information of the second display, wherein
before the transfer of the first interface, the task interface is displayed in full screen or a preset focused application interface of the second display is displayed on the second display; and after the transfer of the first interface is completed, the first interface and another task interface on the second display are displayed in split screen.

12. The method according to claim 11, wherein the display type of the first interface after the transfer is also related to the task information before the transfer of the first interface, wherein
before the transfer of the first interface, the display type of the first interface is full-screen display or the first interface is a preset focused application interface of the first display.

13. The method according to any one of claims 3 to 5, wherein the display type of the first interface after the transfer is related to the screen task information of the second display, wherein
before the transfer of the first interface, the task interface is displayed in full screen or a preset focused application interface of the second display is displayed on the second display; and after the transfer of the first interface is completed, the display type of the first interface is split-screen display, a floating window, a floating icon, a floating bubble, picture-in-picture, a widget, or a control.

14. The method according to claim 13, wherein the display type of the first interface after the transfer is the same as the display type of the first interface before the transfer.

15. The method according to any one of claims 3 to 14, wherein the method further comprises:

when displaying the first interface on the first display, playing a first audio corresponding to the first interface by using a first audio output apparatus; and
the method further comprises:

skipping displaying the first interface on the first display, and displaying the first interface on the second display in response to the first operation; and
in response to the first operation, skipping playing the first audio by using the first audio output apparatus, and playing the first audio by using a second audio output apparatus; or continuing to play the first audio by using the first audio output apparatus; or playing the first audio by using an audio output apparatus of a specified type in a first space area in which the first display is located, wherein
the first audio output apparatus is associated with a first sound zone, and the second audio output apparatus is associated with a second sound zone; the first sound zone is a candidate sound zone associated with the first display in a plurality of candidate sound zones, and the second sound zone is a candidate sound zone associated with the second display in the plurality of candidate sound zones; each candidate sound zone in the plurality of candidate sound zones is associated with one or more audio output apparatuses in the first space area; and/or the first audio output apparatus comprises at least one audio output apparatus of a same type, and the second audio output apparatus comprises at least one audio output apparatus of a same type, wherein the type comprises at least one of a status type indicating a moving/static state of an audio output apparatus, a location type indicating a location range of an audio output apparatus, or a device type of an audio output apparatus.

16. The method according to claim 15, wherein if the first audio is a media-type audio or a call-type audio, or a service that provides the first audio is a media-type service or a call-type service, in response to the first operation, the first audio is not played by using the first audio output apparatus, and the first audio is played by using the second audio output apparatus.

17. The method according to claim 15 or 16, wherein if the first audio is any one of the following audios: a navigation audio, a notification audio, a system audio, or an alarm audio, or if the service that provides the first audio is any one of the following services: a navigation service, a notification service, a system service, or an alarm service, or if a display type corresponding to the first interface is any one of a floating window, picture-in-picture, a control, or a widget, in response to the first operation, the first audio continues to be played by using the first audio output apparatus.

18. The method according to any one of claims 15 to 17, wherein if the first audio is the call-type audio, in response to the first operation, the first audio is played by using all audio output apparatuses of the specified type in the first space area.

19. The method according to claim 15, wherein the method further comprises:

in response to a first voice indication of a first user, playing a third audio by using an audio output apparatus associated with the first sound zone, wherein a space area in which the first user is located is a space area associated with the first sound zone; and
in response to a second voice indication of a second user, playing a fourth audio by using an audio output apparatus associated with the second sound zone, wherein a space area in which the second user is located is a space area associated with the second sound zone.

20. The method according to any one of claims 15 to 19, wherein before the skipping displaying the first interface on the first display, and displaying the first interface on the second display, the method further comprises:

displaying a second interface on the second display, and playing a second audio corresponding to the second interface by using a third audio output apparatus, wherein the third audio output apparatus is associated with the second sound zone;
the displaying the first interface on the second display comprises:

displaying the first interface and skipping displaying the second interface on the second display; and
after the skipping displaying the first interface on the first display, and displaying the first interface on the second display in response to the received first operation, the method further comprises:

skipping playing the second audio by using the third audio output apparatus.

21. The method according to claim 20, wherein after the skipping playing the second audio by using the third audio output apparatus, the method further comprises:

in response to a received second operation, skipping displaying the first interface on the second display, and displaying the second interface on the second display; and
continuing to play the second audio by using the third audio output apparatus.

22. The method according to claim 20, wherein after the skipping playing the second audio by using the third audio output apparatus, the method further comprises:

in response to a received third operation, displaying the first interface on the first display, skipping displaying the first interface on the second display, and displaying the second interface on the second display; and
continuing to play the first audio by using the first audio output apparatus, and continuing to play the second audio by using the third audio output apparatus.

23. The method according to any one of claims 15 to 22, wherein after the skipping displaying the first interface on the first display, and displaying the first interface on the second display, the method further comprises:

when a display area of the first interface on the second display is a partial area of the second display, displaying the first interface in full screen on the second display in response to a received fourth operation; and
playing the first audio by using the audio output apparatus associated with the second sound zone, and skipping displaying the first audio by using the audio output apparatus associated with the first sound zone.

24. The method according to any one of claims 15 to 23, wherein before the playing a first audio corresponding to the first interface by using a first audio output apparatus, the method further comprises:

determining the first audio output apparatus; and
the determining the first audio output apparatus comprises:

determining the first sound zone based on the first display; and
selecting an audio output apparatus with a highest priority from the at least one audio output apparatus as the first audio output apparatus.

25. The method according to claim 24, wherein the selecting an audio output apparatus with a highest priority from the at least one audio output apparatus as the first audio output apparatus comprises:

obtaining a priority order of the at least one audio output apparatus associated with the first sound zone; and
selecting the audio output apparatus with the highest priority from the at least one audio output apparatus as the first audio output apparatus based on the priority order of the at least one audio output apparatus.

26. The method according to claim 24, wherein the determining the first sound zone based on the first display comprises:

selecting, from the plurality of candidate sound zones based on a specified association relationship between a display and a candidate sound zone, a candidate sound zone associated with the first display as the first sound zone; or
determining the first sound zone based on a received sound zone selection operation, wherein the sound zone selection operation is used to select a candidate sound zone from the plurality of candidate sound zones as the first sound zone.

27. The method according to any one of claims 15 to 26, wherein before the skipping playing the first audio by using the first audio output apparatus, and playing the first audio by using a second audio output apparatus, the method further comprises:

determining the second audio output apparatus; and
the determining the second audio output apparatus comprises:

determining the second sound zone based on the second display;

obtaining a priority order of the at least one audio output apparatus associated with the second sound zone; and

selecting, based on the priority order of the at least one audio output apparatus associated with the second sound zone, an audio output apparatus with a highest priority from the at least one audio output apparatus associated with the second sound zone as the second audio output apparatus.

28. The method according to any one of claim 3 and claims 8 to 27, wherein before the skipping displaying the first interface on the first display, and displaying the first interface on the second display, the method further comprises:

displaying the second interface on the second display, and playing the second audio corresponding to the second interface by using the third audio output apparatus, wherein the third audio output apparatus is associated with the second sound zone, the second sound zone is the candidate sound zone associated with the second display in the plurality of candidate sound zones, and each candidate sound zone in the plurality of candidate sound zones is associated with the one or more audio output apparatuses in the first space area in which the first display is located;

the displaying the first interface on the second display comprises:

displaying the first interface and the second interface on the second display in split screen; or

displaying the first interface in a first window on the second display, wherein the first window is overlaid on a window in which the second interface is located, and a size of the first window is less than a size of the window in which the second interface is located; and

after the skipping displaying the first interface on the first display, and displaying the first interface on the second display in response to the received first operation, the method further comprises:

continuing to play the second audio by using the third audio output apparatus.

29. The method according to any one of claims 3 to 14, wherein the method further comprises:

when displaying the first interface on the first display, playing a first audio corresponding to the first content by using a first audio output apparatus; and

the method further comprises:

in response to the first operation, displaying the first sub-content on the first display, and displaying the second sub-content on the second display; or displaying the first interface on the first display, and displaying the first interface on the second display; and

in response to the first operation, playing the first audio by using a second audio output apparatus and a third audio output apparatus; or playing the first audio by using an audio output apparatus of a specified type in a first space area in which the first display is located, wherein

the first audio output apparatus is associated with a first sound zone, the second audio output apparatus is associated with the first sound zone, and the third audio output apparatus is associated with a second sound zone; the first sound zone is a candidate sound zone associated with the first display in a plurality of candidate sound zones, and the second sound zone is a candidate sound zone associated with the second display in the plurality of candidate sound zones; each candidate sound zone in the plurality of candidate sound zones is associated with one or more audio output apparatuses in the first space area; and/or the first audio output apparatus comprises at least one audio output apparatus of a same type, the second audio output apparatus comprises at least one audio output apparatus of a same type, and the third audio output apparatus comprises at least one audio output apparatus of a same type, wherein the type comprises at least one of a status type indicating a moving/static state of an audio output apparatus, a location type indicating a location range of an audio output apparatus, or a device type of an audio output apparatus.

30. The method according to claim 29, wherein the second audio output apparatus is the same as the first audio output apparatus; and/or

a type of the second audio output apparatus is the same as a type of the third audio output apparatus.

31. The method according to claim 29 or 30, wherein after the displaying the first interface on the first display, and displaying the first interface on the second display, the method further comprises:

in response to a received second operation, skipping displaying the first interface on the first display, and continuing to display the first interface on the second display; and playing the first audio by using an audio output apparatus associated with the second sound zone, and skipping playing the first audio by using an audio output apparatus associated with the first sound zone; or

in response to a received third operation, continuing to display the first interface on the first display, and skipping displaying the first interface on the second display; and playing the first audio by using an audio output apparatus associated with the first sound zone, and skipping playing the first audio by using an audio output apparatus associated with the second sound zone.

32. The method according to claim 29 or 30, wherein after the displaying the first sub-content on the first display, and displaying the second sub-content on the second display, the method further comprises:

in response to a received fourth operation, skipping displaying the second sub-content on the second display, and displaying the first interface on the first display; and playing the first audio by using an audio output apparatus associated with the first sound zone, and skipping playing the first audio by using an audio output apparatus associated with the second sound zone; or

in response to a received sixth operation, skipping displaying the first sub-content on the first display, and displaying the first interface on the second display; and playing the first audio by using an audio output apparatus associated with the second sound zone, and skipping playing the first audio by using an audio output apparatus associated with the first sound zone.

33. The method according to any one of claims 29 to 32, wherein before the playing a first audio corresponding to the first interface by using a first audio output apparatus, the method further comprises:

determining the first audio output apparatus; and
the determining the first audio output apparatus comprises:

determining the first sound zone based on the first display; and
selecting an audio output apparatus with a highest priority from the at least one audio output apparatus as the first audio output apparatus.

34. The method according to claim 33, wherein the selecting an audio output apparatus with a highest priority from the at least one audio output apparatus as the first audio output apparatus comprises:

obtaining a priority order of the at least one audio output apparatus associated with the first sound zone; and
selecting the audio output apparatus with the highest priority from the at least one audio output apparatus as the first audio output apparatus based on the priority order of the at least one audio output apparatus.

35. The method according to claim 33, wherein the determining the first sound zone based on the first display comprises:

selecting, from the plurality of candidate sound zones based on a specified association relationship between a display and a candidate sound zone, a candidate sound zone associated with the first display as the first sound zone; or

determining the first sound zone based on a received sound zone selection operation, wherein the sound zone selection operation is used to select a candidate sound zone from the plurality of candidate sound zones as the first sound zone.

36. The method according to any one of claims 29 to 35, wherein before the playing the first audio by using a second audio output apparatus and a third audio output apparatus, the method further comprises:

determining the second audio output apparatus, and determining the third audio output apparatus; and
the determining the third audio output apparatus comprises:

determining the second sound zone based on the second display;
obtaining a priority order of the at least one audio output apparatus associated with the second sound zone; and
selecting, based on the priority order of the at least one audio output apparatus associated with the second sound zone, an audio output apparatus with a highest priority from the at least one audio output apparatus associated with the second sound zone as the third audio output apparatus.

37. The method according to any one of claims 15 to 36, wherein the first space area is a space area in a vehicle cockpit, and any audio output apparatus comprises at least one of an in-vehicle loudspeaker, a headrest speaker, or a Bluetooth headset.

38. The method according to any one of claims 3 to 37, wherein after the transfer of the first interface is completed, a floating window, a floating icon, a floating bubble, an application icon, or a widget corresponding to the first interface is displayed on the first display.

39. The method according to claim 38, wherein after the transfer of the first interface is completed, the method further comprises:

when receiving an operation that a user taps the floating window, the floating icon, the floating bubble, the application icon, or the widget that corresponds to the first interface and that is displayed on the first display, transferring the first interface back to the first display across screens, wherein
after the first interface is transferred back to the first display across screens, a display type of the first interface is related to task information of the first interface displayed on the second display, and/or screen task information of the first display when the first operation is received.

40. The method according to any one of claims 3 to 39, wherein after the skipping displaying the first interface on the first display, and displaying the first interface on the second display, the method further comprises:

when receiving an operation for transferring the first interface to the first display across screens, transferring the first interface back to the first display across screens, wherein
after the first interface is transferred back to the first display across screens, the display type of the first interface is related to the task information of the first interface displayed on the second display, and/or the screen task information of the first display when the first operation is received.

41. The method according to any one of claims 3 to 40, wherein the first electronic device further comprises a third display, and after the transferring the first interface to the second display across screens, the method further comprises:

when receiving an operation for transferring the first interface to the third display across screens, transferring the first interface to the third display across screens, wherein
after the first interface is transferred to the third display across screens, a display type of the first interface is related to the task information of the first interface displayed on the second display, and/or screen task information of the third display when the first operation is received.

42. The method according to any one of claims 1 to 41, wherein
when the first operation performed by the user for transferring the first interface on the first display is received, one or more first task interfaces are displayed on the first display, wherein the one or more first task interfaces comprise the first interface.

43. The method according to any one of claims 1 to 42, wherein the first display is any one of the following vehicle screens: a driver screen, a front passenger screen, a rear left screen, or a rear right screen; the second display is any one of the following vehicle screens: the driver screen, the front passenger screen, the rear left screen, or the rear right screen; and the second display is different from the first display.

44. The method according to any one of claims 1 to 43, wherein the first electronic device further comprises a fourth display and a fifth display, and the fourth display and the fifth display are respectively located on two sides of the first display; and
the method further comprises:

when displaying the first interface on the first display, displaying a third interface on the fourth display, and displaying a fourth interface on the fifth display, wherein
the third interface is an interface obtained after first effect processing is performed on a partial interface that is of the first interface and that is close to a side of the fourth display, the fourth interface is an interface obtained after the first effect processing is performed on a partial interface that is of the first interface and that is closed to a side of the fifth display, and the first effect processing is any one of Gaussian blur processing, solid color gradient processing, or particle animation processing.

45. The method according to claim 44, wherein after the first operation for transferring the first interface on the first display is received, the method further comprises:
when the transfer is the cross-screen transfer, skipping displaying the third interface on the fourth display, and skipping displaying the fourth interface on the fifth display.

46. The method according to claim 44 or 45, wherein the first electronic device comprises a first OS and a second OS, the first OS is used to control the first display, and the second OS is used to control the fourth display; and
the displaying a third interface on the fourth display comprises:

determining a fifth interface by using the first OS, wherein the fifth interface is the first interface, or the partial interface that is of the first interface and that is close to the side of the fourth display, or an interface obtained after a part or all of a process of the first effect processing is performed on the partial interface that is of the first interface and that is close to the side of the fourth display;
storing the fifth interface into a first memory by using the first OS;
obtaining the fifth interface from the first memory by using the second OS;
determining the third interface based on the fifth interface by using the second OS; and
displaying the third interface on the fourth display by using the second OS.

47. The method according to claim 46, wherein the determining the third interface based on the fifth interface by using the second OS comprises:

when the fifth interface is the first interface, determining, by using the second OS based on the fifth interface, the partial interface that is of the first interface and that is close to the side of the fourth display, and performing the first effect processing on the partial interface that is of the first interface and that is close to the side of the fourth display, to obtain the third interface; or
when the fifth interface is the partial interface that is of the first interface and that is close to the side of the fourth display, performing the first effect processing on the fifth interface by using the second OS, to obtain the third interface; or
when the fifth interface is an interface obtained after a part of the process of the first effect processing is performed on the partial interface that is of the first interface and that is close to the side of the fourth display, performing the remaining part of the process of the first effect processing on the fifth interface by using the second OS, to obtain the third interface; or
when the fifth interface is an interface obtained after all of the process of the first effect processing is performed on the partial interface that is of the first interface and that is close to the side of the fourth display, determining the fifth interface as the third interface by using the second OS.

48. The method according to any one of claims 1 to 43, wherein the first electronic device further comprises a fourth display and a fifth display, and the fourth display and the fifth display are respectively located on two sides of the first display; and
the method further comprises:
when displaying the first interface on the first display, displaying a third interface on the fourth display, and displaying the third interface on the fifth display, wherein the third interface is an interface obtained after particle animation processing is performed on the first interface.

49. The method according to claim 48, wherein after the first operation for transferring the first interface on the first display is received, the method further comprises:
when the transfer is the cross-screen transfer, skipping displaying the third interface on the fourth display, and skipping displaying the third interface on the fifth display.

50. The method according to claim 48 or 49, wherein the first electronic device comprises a first OS and a second OS, the first OS is used to control the first display, and the second OS is used to control the fourth display; and
the displaying a third interface on the fourth display comprises:

determining a fourth interface by using the first OS, wherein the fourth interface is the first interface, or an interface obtained after a part or all of a process of the particle animation processing is performed on the first interface;
storing the fourth interface into a first memory by using the first OS;
obtaining the fourth interface from the first memory by using the second OS;
determining the third interface based on the fourth interface by using the second OS; and

displaying the third interface on the fourth display by using the second OS.

51. The method according to any one of claims 44 and 45 and claims 48 and 49, wherein the first display, the fourth display, and the fifth display belong to a same OS.

52. The method according to any one of claims 1 to 6, claim 8, and claims 10 to 12, wherein the displaying a first interface on the first display comprises:

displaying the first interface in a first area on the first display; and
the method further comprises:

when displaying the first interface on the first display, displaying a third interface in a second area on the first display, wherein
the second area is an area other than the first area on the first display, and the third interface is an interface obtained after particle animation processing is performed on the first interface.

53. The method according to claim 52, wherein after the first operation for transferring the first interface on the first display is received, the method further comprises:
when the transfer is the cross-screen transfer, skipping displaying the third interface on the first display.

54. The method according to any one of claims 1 to 43, wherein the first electronic device further comprises a fourth display, and before the first operation for transferring the first interface on the first display is received, the method further comprises:

when displaying the first interface on the first display, displaying a third interface on the fourth display; and
sending a fourth interface to a second electronic device, so that the second electronic device displays the fourth interface on a fifth display; or sending a fifth interface to a second electronic device, so that the second electronic device generates a fourth interface based on the fifth interface and then displays the fourth interface on the fifth display, wherein
the second electronic device comprises the fifth display, the fourth display and the fifth display are respectively located on two sides of the first display, the third interface is an interface obtained after first effect processing is performed on a partial interface that is of the first interface and that is close to a side of the fourth display, the fourth interface is an interface obtained after the first effect processing is performed on a partial interface that is of the first interface and that is close to a side of the fifth display, the fifth interface is the partial interface that is of the first interface and that is close to the side of the fifth display or an interface obtained after a part or all of a process of the first effect processing is performed on the partial interface that is of the first interface and that is close to the side of the fifth display, and the first effect processing is any one of Gaussian blur processing, solid color gradient processing, or particle animation processing.

55. The method according to any one of claims 1 to 43, wherein the method further comprises:

when displaying the first interface on the first display, sending a third interface and a fourth interface to a second electronic device, so that the second electronic device separately displays the third interface and the fourth interface on a fourth display and a fifth display; or when displaying the first interface on the first display, sending the first interface to a second electronic device, so that the second electronic device separately generates a third interface and a fourth interface based on the first interface and then separately displays the third interface and the fourth interface on a fourth display and a fifth display, wherein
the second electronic device comprises the fourth display and the fifth display, the fourth display and the fifth display are respectively located on two sides of the first display, the third interface is an interface obtained after first effect processing is performed on a partial interface that is of the first interface and that is close to a side of the fourth display, the fourth interface is an interface obtained after the first effect processing is performed on a partial interface that is of the first interface and that is close to a side of the fifth display, and the first effect processing is any one of Gaussian blur processing, solid color gradient processing, or particle animation processing.

56. The method according to any one of claims 1 to 43, wherein the method further comprises:

when displaying the first interface on the first display, sending a third interface to a second electronic device, so that the second electronic device displays the third interface on a fourth display, or sending a fourth interface to a second electronic device, so that the second electronic device generates a third interface based on the fourth interface and then displays the third interface on a fourth display; and

when displaying the first interface on the first display, sending a fifth interface to a third electronic device, so that the third electronic device displays the fifth interface on a fifth display, or sending a sixth interface to a third electronic device, so that the third electronic device generates a fifth interface based on the sixth interface and then displays the fifth interface on a fifth display, wherein

the second electronic device comprises the fourth display, the third electronic device comprises the fifth display, the fourth display and the fifth display are respectively located on two sides of the first display, the third interface is an interface obtained after first effect processing is performed on a partial interface that is of the first interface and that is close to a side of the fourth display, the fourth interface is the partial interface that is of the first interface and that is close to the side of the fourth display or an interface obtained after a part or all of a process of the first effect processing is performed on the partial interface that is of the first interface and that is close to the side of the fourth display, the fifth interface is an interface obtained after the first effect processing is performed on a partial interface that is of the first interface and that is close to a side of the fifth display, the sixth interface is the partial interface that is of the first interface and that is close to the side of the fifth display or an interface obtained after a part or all of the process of the first effect processing is performed on the partial interface that is of the first interface and that is close to the side of the fifth display, and the first effect processing is any one of Gaussian blur processing, solid color gradient processing, or particle animation processing.

57. The method according to claim 1 or 2, wherein
when the transfer is the one-screen transfer, the first operation is an operation that one or more fingers leave after sliding for a distance on the first interface at a sliding speed less than or equal to the preset threshold, and the first operation is used to transfer the first interface on one screen.

58. The method according to claim 57, wherein the transferring the first interface based on an intention of the first operation comprises:

transferring the first interface to a target location on one screen, wherein
the target location is an end location of the first operation on the first display, or the target location is obtained through calculation based on the first operation, or the target location is a preset location on an edge of the first display.

59. The method according to claim 58, wherein before the transfer of the first interface, the first display displays the first interface and a second interface in split screen, and the first operation is an operation that one or more fingers of a user leave after sliding for a distance on the first interface at a sliding speed less than or equal to the preset threshold toward the second interface; and
after the transfer of the first interface is completed, locations of the first interface and the second interface are exchanged.

60. An electronic device, wherein the electronic device comprises a display, a memory, and one or more processors, wherein
the memory is configured to store computer program code, and the computer program code comprises computer instructions; and when the computer instructions are executed by the one or more processors, the electronic device is enabled to perform the method according to any one of claims 1 to 59.

61. A chip system, wherein the chip system comprises a processing circuit and a storage medium, and the storage medium stores instructions; and when the instructions are executed by the processing circuit, the processing circuit is enabled to perform the method according to any one of claims 1 to 59.

62. A computer-readable storage medium, wherein the computer-readable storage medium stores a computer program, and when the computer program is run on a computer, the computer is enabled to perform the method according to any one of claims 1 to 59.

63. A computer program product, wherein the computer program product comprises a computer program or instructions; and when the computer program or the instructions is/are run on a computer, the computer is enabled to perform the method according to any one of claims 1 to 59.

First screen

Second screen

First screen

Second screen

FIG. 1

100

Interface A

Interface B

🛜 8:00

FIG. 2

100

🛜 8:00

Interface C

FIG. 3

100

🛜 8:00

401

Interface D

Interface E

FIG. 4

100

501

Interface E

FIG. 5

601

100

602

FIG. 6

100

Interface 701

Interface 702

Interface 703

Q Search for a nearby place

⌂ Home   28 minutes

Go to the company

33/23°C
Cloudy High air
quality

♫ Song 1

◀  ▶  ▶▶

FIG. 7

EP 4 502 779 A1

100

You have a new WeChat® message

Interface C

(a)

100

You have a video call to answer | Answer | Reject |

Interface C

(b)

FIG. 8

**Electronic device 900**

FIG. 9A

Driver screen   Front passenger screen

Rear left screen

Rear right screen

FIG. 9B

| | | | |
|---|---|---|---|
| **Application layer** | Camera | Calendar | Music | Messaging |
| | Gallery | Bluetooth | Videos | ... |

| | | | |
|---|---|---|---|
| **Application framework layer** | Window manager | Resource manager | Content provider | ... |
| | Notification manager | View system | Phone manager | |

| | | | |
|---|---|---|---|
| **System library** | Surface manager | Three-dimensional graphics processing library | Runtime | |
| | Two-dimensional graphics engine | Media library | Image processing library | ... |

| | | | |
|---|---|---|---|
| **Kernel layer** | Keyboard driver | Camera driver | Display driver |
| | Wi-Fi driver | Bluetooth driver | Audio driver |

FIG. 9C

S1001

An in-vehicle terminal displays one or more first task interfaces through a first screen

S1002

The in-vehicle terminal receives a first operation performed by a user on a first interface, where the first interface is one of the plurality of first task interfaces, and the first operation is used to transfer the first interface

The first operation is used to transfer the first interface to a second screen across screens

The first operation is used to transfer the first interface on one screen

S1003-1

The in-vehicle terminal determines that a target screen is the second screen

S1004-1

The in-vehicle terminal displays the first interface through the second screen in a first display type, where the first display type is related to task information before the transfer of the first interface and/or screen task information of the second screen

S1003-2

The in-vehicle terminal determines a target location

S1004-2

The in-vehicle terminal displays the first interface at the target location based on screen task information of the first screen in a second display type, where the second display type is related to the screen task information of the first screen

FIG. 10

100

🛜 8:00

Interface 1103

Interface 1101

| Application 1 | Application 2 | ... |

100

🛜 8:00

Interface 1101

| Application 1 | Application 2 | ... |

100

🛜 8:00

Interface 1103

Interface 1101

| Application 1 | Application 2 | ... |

FIG. 11

100

🛜 8:00

Interface 1101

Application 1   Application 2   ...

100

🛜 8:00

Interface 1103

Interface 1101

Application 1   Application 2   ...

EP 4 502 779 A1

FIG. 12

Gesture a

a2 (Slide quickly and then leave the display)

a1 (Touch a display)

Gesture b

b2 (Slide slowly for a distance L)

b1 (Touch a display)

b3 (Leave the display)

L

FIG. 13

S1401

Determine and store initial locations of a plurality of fingers of a user on a display based on a received ACTION_DOWN event and ACTION_POINTER_DOWN event

S1402

An in-vehicle terminal calculates a sliding speed based on a received ACTION_MOVE event, and marks whether the sliding speed is greater than a preset threshold

S1403

When receiving an ACTION_UP event, the in-vehicle terminal determines cross-screen transfer or one-screen transfer based on the sliding speed

The sliding speed is marked as a first mark, and then cross-screen transfer is performed

The sliding speed is marked as a second mark, and then one-screen transfer is performed

S1404-1

The in-vehicle terminal determines sliding directions of the plurality of fingers of the user on the display based on a received ACTION_POINTER_UP event and the received ACTION_UP event

S1404-2

The in-vehicle terminal determines sliding distances and sliding directions of the plurality fingers of the user on the display based on a received ACTION_POINTER_UP event and the received ACTION_UP event

S1405-1

The in-vehicle terminal determines a target screen for cross-screen transfer based on the sliding directions of the fingers of the user on the display

S1405-2

The in-vehicle terminal determines a target location for one-screen transfer based on the sliding distances and the sliding directions of the fingers of the user on the display

FIG. 14A

−112.5°  −67.5°

−157.5°

−22.5°

22.5°

157.5°

112.5°  67.5°

[−22.5°, 22.5°): Right   [22.5°, 67.5°): Rear right

[67.5°, 112.5°): Rear   [112.5°, 157.5°): Rear left

[157.5°, −157.5°): Left   [−157.5°, −112.5°): Front left

[−112.5°, −67.5°): Front   [−67.5°, −22.5°): Front right

FIG. 14B

Display 1

Display 2

First
interface

Display 1

Display 2

First interface

FIG. 14C

Display 1

First
interface

Display 1

First
interface

FIG. 14D

FIG. 15

Display 1

Display 2

First
interface

Display 3

Display 4

Display 1

Display 2

Display 3

Display 4

First interface

FIG. 16

FIG. 17

Display 1

Display 2

First
interface

Display 3

Display 4

Display 1

Display 2

Display 3

Display 4

First interface

First interface

FIG. 18

First screen

Second screen

First interface

Desktop of the second screen

First screen

Second screen

Desktop of the first screen

First interface

FIG. 19

First screen

Second screen

Interface A
(first interface)

Interface B

Desktop of the second screen

First screen

Second screen

Interface B

Interface A
(first interface)

FIG. 20

First screen

Second screen

| Interface E<br><br>Interface D | Desktop of the second screen |
|---|---|

First screen

Second screen

| Interface E | Interface D<br>(first interface) |
|---|---|

FIG. 21

First screen

Second screen

Interface E

Desktop of the second screen

First screen

Second screen

Interface E

Interface D
(first interface)

FIG. 22

First screen

Second screen

First interface

Note 1: XX
Note 2: XX

Desktop of the second screen

First screen

Second screen

Note 1: XX
Note 2: XX

Notepad interface

FIG. 23

First screen

Second screen

You have a video call to answer | Answer | Reject |

Interface C

Desktop of the second screen

First screen

Second screen

Interface C

To-be-answered video call screen

FIG. 24

First screen

Second screen

Interface A
(first interface)

Interface B

Desktop of the
second screen

Interface C

First screen

Second screen

Interface B

Interface A
(first interface)

Interface C

FIG. 25

First screen

Second screen

Interface B

You have a new WeChat® message

Interface A
(first interface)

Desktop of the second screen

First screen

Second screen

Interface B

You have a new WeChat® message

Interface A
(first interface)

FIG. 26

First screen

Second screen

Interface E

Interface D

Interface B

First screen

Second screen

Desktop of the
first screen

Interface D

Interface E
(first interface)

FIG. 27

First screen

Second screen

Interface A
(first interface)

Interface B

Interface C

First screen

Second screen

Interface B

Interface A
(first interface)

Interface C

FIG. 28A

First screen

Second screen

Interface A
(first interface)

Interface B

Interface C

First screen

Second screen

Interface B

Interface C

Interface A
(first
interface)

FIG. 28B

First screen

Second screen

Interface E

Interface D

Desktop of the second screen

First screen

Second screen

Interface E

Desktop of the second screen | Interface D

FIG. 29

First screen

Second screen

Interface A
(first interface)

Interface B

Interface C

Interface D

First screen

Second screen

Interface B

Interface A
(first interface)

FIG. 30

First screen

Second screen

```
┌─────────────────────────────┐   ┌───────────────┬───────────────┐
│  ┌──────────────────┐       │   │               │               │
│  │ Interface A   ●╲  │──────>│   │               │               │
│  │  (first        ╲  │ Interface B │ Interface C   │   Interface D │
│  │  interface) ●╲ ╲  │──────>│   │               │               │
│  └──────────────╲──┘ ╲      │   │               │               │
│                  ╲    ╲     │   │               │               │
└─────────────────────────────┘   └───────────────┴───────────────┘
```

First screen

Second screen

```
┌─────────────────────────────┐   ┌───────────────┬───────────────┐
│                             │   │  Interface C  │               │
│                             │   │ ┌───────────┐ │   Interface D │
│        Interface B          │   │ │ Interface A│ │               │
│                             │   │ │(first      │ │               │
│                             │   │ │ interface) │ │               │
│                             │   │ └───────────┘ │               │
└─────────────────────────────┘   └───────────────┴───────────────┘
```

FIG. 31

First screen

Second screen

Interface E

Interface D

Interface B

First screen

Second screen

Desktop of the
first screen

Interface D

Interface E
(first interface)

Icon corresponding
to the interface E

FIG. 32

First screen

Second screen

Interface A
(first interface)

Interface B

Interface C

Interface D

First screen

Second screen

Interface B

Interface
A

Interface A
(first interface)

FIG. 33

First screen

First interface

Distance L

Distance L

First screen

Desktop of the first screen

First interface

FIG. 34

First screen

Desktop of the first screen

First
interface

Distance L

Distance L

Location A

First screen

Desktop of the first screen

First interface

Location B

FIG. 35

First screen

Slide slowly

First interface

Second interface

First screen

Second interface

First interface

FIG. 36

First screen

Second screen

Interface B

Interface C

Interface D

Interface A
(first
interface)

First screen

Second screen

Interface B

Interface A
(first interface)

Interface C

Interface D

FIG. 37

First screen

Second screen

Interface D

Icon corresponding
to the interface E

Interface E
(first interface)

First screen

Second screen

Interface D

Interface E
(first interface)

Desktop of the second screen

FIG. 38

First screen

Second screen

Interface D

Application A

Application B

...

Desktop of the second screen

First screen

Second screen

Interface D

Application A

Application B

...

First interface

FIG. 39

(a)

(b)

FIG. 40

| Control manner | Display effect | Peripheral element |
|---|---|---|
| Single-core single-OS | Gaussian blur | Atmosphere light |
| Single-core multi-OS | Solid color gradient | Seat |
| Multi-core multi-OS | Particle animation | Air conditioner |

FIG. 41

Control system

First application

Display management module ↔ Effect processing module

Second display | First display | Third display

FIG. 42

| Electronic device | | |
|---|---|---|
| First application | Display management module | Effect processing module |

S4301: After drawing a to-be-displayed image based on to-be-displayed content, the first application sends drawn image data to the display management module in the electronic device

S4302: The display management module synthesizes the image data to obtain a first interface to be displayed

S4303: The display management module sends content of the first interface to the effect processing module in the electronic device

S4304: The effect processing module performs rendering processing on the content of the first interface to obtain a second interface and a third interface

S4305: The effect processing module sends content of the second interface and content of the third interface to the display management module

S4306: After receiving the content of the second interface and the content of the third interface, the display management module displays the first interface on the first display, displays the second interface on a second display, and displays the third interface on a third display

FIG. 43

FIG. 44

Electronic device

First OS

First application

First display management module

Second OS

Second display management module

S4501: After drawing a to-be-displayed image based on to-be-displayed content, the first application sends drawn image data to the first display management module in the first OS

S4502: Synthesize the image data to obtain a first interface to be displayed

S4503: Determine target content based on content of the first interface, and store the target content into a shared memory of the first OS and the second OS of the electronic device, where the target content is the content of the first interface or content obtained after a first effect processing module performs a part or all of rendering processing on the content of the first interface

S4504: Display the first interface on a first display

TO
FIG. 45B

TO
FIG. 45B

TO
FIG. 45B

FIG. 45A

CONT.
FROM
FIG. 45A

CONT.
FROM
FIG. 45A

CONT.
FROM
FIG. 45A

S4505: Obtain the target content from the shared memory

S4506: Determine whether the target content is content on which all of rendering processing is performed

No

Yes

S4507: Obtain a second interface after synthesizing the target content

S4508: Obtain a second interface after rendering processing is performed on the target content by using a second effect processing module

S4509: Display the second interface on a second display

FIG. 45B

Control system

First electronic device

First OS

First application

First effect
processing module ↔ First display
management module

First display

Network ↔

Second electronic device

Second OS

Second display
management module ↔ Second effect
processing module

Second display

FIG. 46

| First electronic device | Second electronic device |
|---|---|

First OS

| First application | First display management module |
|---|---|

Second OS

Second display management module

S4701: After drawing a to-be-displayed image based on to-be-displayed content, the first application sends drawn image data to the first display management module in the first OS

S4702: Synthesize the image data to obtain a first interface to be displayed

S4703: The first display management module determines target content based on content of the first interface, and sends the target content to the second electronic device, where the target content is the content of the first interface or content obtained after the first effect processing module performs a part or all of rendering processing on the content of the first interface

TO
FIG. 47B

TO
FIG. 47B

TO
FIG. 47B

FIG. 47A

CONT.
FROM
FIG. 47A

CONT.
FROM
FIG. 47A

CONT.
FROM
FIG. 47A

S4704:
Determine whether
the target content received
by the second electronic device
is content on which all of
rendering processing is
performed

No

Yes

S4705: Obtain a second interface after
synthesizing the target content

S4706: Obtain a second interface after
rendering processing is performed on the
target content by using a second effect
processing module

S4707: Display the second interface on a
second display

FIG. 47B

An effect processing module determines a first interface based on content of the first interface from a display management module
⟋ S4801

The effect processing module copies an interface of a specified size that is on the first interface and that is close to a side of a target display, to obtain a first target interface, where the target display is any display in an OS in which the effect processing module is located
⟋ S4802

The effect processing module performs Gaussian blur processing on the first target interface to obtain a second target interface
⟋ S4803

The effect processing module zooms in the second target interface along a target direction to a specified width, and superimposes a transparency gradient on the second target interface, where the target direction is a direction from a first display to the target display, and in the zoomed-in second target interface, interface transparency shows a descending trend along the target direction
⟋ S4804

FIG. 48

Second display

First display

Third display

First interface

(a)

Interface 1

Interface 2

(b)

Interface 3

Interface 4

(c)

Interface 5

Interface 6

(d)

FIG. 49

An effect processing module determines a first interface based on content of the first interface from a display management module _/ S5001

The effect processing module copies an interface of a specified size that is on the first interface and that is close to a side of a target display, to obtain a first target interface, where the target display is any display in an OS in which the effect processing module is located _/ S5002

The effect processing module determines a target color based on a color on the first target interface _/ S5003

The effect processing module generates a second target interface based on the target color, where an interface color gradually changes from the target color to a specified color along a target direction on the second target interface, and the target direction is a direction from a first display to the target display _/ S5004

FIG. 50

Second display          First display          Third display

First interface

(a)

Interface 1

Interface 2

(b)

Interface 3          Interface 4

(c)

FIG. 51

An effect processing module determines a first interface based on content of the first interface from a display management module          S5201

The effect processing module generates a corresponding particle animation interface based on the first interface, where a color of a particle on the particle animation interface is determined based on a color on the first interface          S5202

FIG. 52

Second display

First display

Third display

First interface

(a)

Interface 1

First interface

Interface 2

(b)

FIG. 53

Second display

First display

Third display

First interface

(a)

Interface 1

First partial interface

Second partial interface

Interface 2

(b)

FIG. 54

First display

FIG. 55

Control system

First OS

First application

Audio management module

Air conditioner management module

Effect processing module

Display management module

First display

Lighting management module

Seat management module

...

Air conditioning device

Lighting device

Seat

...

FIG. 56

FIG. 57

EP 4 502 779 A1

FIG. 58

Electronic device

First application

Audio control module

Sound zone management module

Target audio output apparatus

S5901: Obtain and store an association relationship between a display identifier and a sound zone identifier

S5902: When displaying first content on a first display, send an identifier of the first display, a first audio corresponding to the first content, and an audio type of the first audio to the audio control module

S5903: Obtain, from the sound zone management module based on the identifier of the first display, a target sound zone associated with the first display

S5904: Select the target audio output apparatus in the target sound zone based on the audio type of the first audio

S5905: Send the first audio to the sound zone management module, and indicate the sound zone management module to transmit the first audio to the target audio output apparatus

S5906: Send the first audio to the target audio output apparatus through a bus between the sound zone management module and the target audio output apparatus

S5907: Play the first audio after receiving the first audio

FIG. 59

Central display screen

Front passenger screen

.ıll 🤏         ▬ 8:00

←    500 m to XX road

XX road

YY road

.ıll 🤏          * ▬ 8:00

← Video 1

||

13:08                    45:25

Play the navigation audio
through the driver loudspeaker

Play the video audio through the
front passenger Bluetooth headset

FIG. 60

EP 4 502 779 A1

| Audio type | Navigation-type audio Media-type audio Call-type audio Text to speech audio Notification-type audio Alarm-type audio... |
|---|---|
| Application type | Navigation-type application Media-type application Call-type application... |
| UI type | Full-screen window Split-screen window Floating window Picture-in-picture Control... |
| Display | Central display screen Front passenger screen Rear-row left screen Rear-row right screen Auxiliary screen... |
| Audio output apparatus | Vehicle loudspeaker Driver loudspeaker Front passenger loudspeaker Rear-row loudspeaker Headrest speaker of each seat Bluetooth headset... |

FIG. 61

Front passenger screen

8:00

Gallery
Settings
Huawei Video
Messaging
AI Life
Phone
Music
Contacts

Play the video audio through the front passenger loudspeaker

Central display screen

8:00

Video 1

13:08
45:25

Play the video audio through the driver loudspeaker

FIG. 62(a)

Front passenger screen

8:00

Video 1

13:08    45:25

Play the video audio through the front passenger Bluetooth headset

Central display screen

8:00

Music    AI Life    Huawei Video    Gallery

Contacts    Phone    Messaging    Settings

FIG. 62(b)

Central display screen      Front passenger screen

FIG. 63(a)

EP 4 502 779 A1

← Video 1

13:08                    45:25

Music    AI Life    Huawei Video    Gallery

Contacts    Phone    Messaging    Settings

8:00

8:00

Play the video audio through
the Bluetooth headset

EP 4 502 779 A1

FIG. 63(b)

Front passenger screen

8:00

Gallery

Settings

Huawei Video

Messaging

AI Life

Phone

Music

Contacts

Central display screen

8:00

Video 1

13:08

45:25

Play the video audio through the vehicle loudspeaker

FIG. 64A-1

Rear-row left screen

Rear-row right screen

Music    AI Life    Huawei Video    Gallery

Contacts    Phone    Messaging    Settings

Music    AI Life    Huawei Video    Gallery

Contacts    Phone    Messaging    Settings

8:00

8:00

FIG. 64A-2

EP 4 502 779 A1

Central display screen      Front passenger screen

📶 🛜    🔋 8:00

Music    AI Life    Huawei Video    Gallery

Contacts    Phone    Messaging    Settings

📶 🛜    ✳ ▬ 8:00

← Video 1

13:08          45:25

Play the video audio through the
front passenger Bluetooth headset

FIG. 64B-1

EP 4 502 779 A1

FIG. 64B-2

Central display screen

Front passenger screen

8:00

Invite you to make a video chat

Hang up          Hang up

8:00

Music      AI Life    Huawei Video   Gallery

Contacts    Phone    Messaging    Settings

Play the notification audio
through the driver loudspeaker

FIG. 65(a)

EP 4 502 779 A1

Front passenger screen

8:00

Gallery
Settings
Huawei Video
Messaging
AI Life
Phone
Music
Contacts

Central display screen

8:00

Switch
Hang up
More

Play the call audio through the driver loudspeaker

FIG. 65(b)

Front passenger screen

Central display screen

8:00

8:00

Switch   Hang up   More

Music   AI Life   Huawei Video   Gallery

Contacts   Phone   Messaging   Settings

Play the call audio through
the vehicle loudspeaker

FIG. 65(c)

Rear-row left screen                    Rear-row right screen

| | 8:00

← Video 1

13:08                    45:25

⌂
△
♪  Music    AI Life   Huawei Video   Gallery
📞
   Contacts   Phone   Messaging   Settings

Rear-row left
headrest speaker

FIG. 66(a)

EP 4 502 779 A1

FIG. 66(b)

EP 4 502 779 A1

Rear-row left screen

Rear-row right screen

← Video 1

8:00

← Video 1

8:00

|| 13:08      45:25

|| 13:08      45:25

Rear-row left
loudspeaker

Rear-row right
loudspeaker

FIG. 66(c)

Central display screen

Front passenger screen

Video 1

13:08    45:25

Play the video audio through the vehicle loudspeaker

Music    AI Life    Huawei Video    Gallery

Contacts    Phone    Messaging    Settings

8:00

8:00

FIG. 67(a)

EP 4 502 779 A1

Central display screen

Front passenger screen

← Video 1     13:08     45:25

← Video 1     13:08     45:25

Play the video audio through
the vehicle loudspeaker

FIG. 67(b)

Central display screen  Front passenger screen

8:00

Music  AI Life  Huawei Video  Gallery

Contacts  Phone  Messaging  Settings

Video 1

13:20  45:25

Play the video audio through the front passenger headrest speaker

FIG. 67(c)

EP 4 502 779 A1

Central display screen

Front passenger screen

Video 1

13:08                                    45:25

Music        AI Life    Huawei Video    Gallery

Contacts      Phone      Messaging      Settings

Driver loudspeaker or vehicle loudspeaker

FIG. 68(a)

Central display screen

Front passenger screen

↩ Video 1

13:08

8:00

13:08   45:25

🔊 Driver loudspeaker

🔊 Front passenger loudspeaker

FIG. 68(b)

EP 4 502 779 A1

171

Central display screen

Front passenger screen

← Video 1

Music    AI Life    Huawei Video    Gallery

Contacts    Phone    Messaging    Settings

8:00

8:00

13:08    45:25

Driver loudspeaker

EP 4 502 779 A1

FIG. 69(a)

Central display screen

Front passenger screen

Video 1

8:00

13:08                    45:25

8:00

Music    AI Life    Huawei Video    Gallery

Contacts    Phone    Messaging    Settings

Driver loudspeaker

Front passenger
loudspeaker

FIG. 69(b)

EP 4 502 779 A1

Central display screen

Front passenger screen

🛜

🔋 **8:00**

← Video 1

● ●
● ●

❚❚

13:08

13:08                                            45:25

Driver loudspeaker

Front passenger
loudspeaker

Theatre mode

Rear-row left
loudspeaker

Rear-row right
loudspeaker

FIG. 70(a)

EP 4 502 779 A1

FIG. 70(b)

A control device displays navigation content on a source display, and plays, by using a first audio output apparatus, a navigation audio corresponding to the navigation content — S7101

A control device displays other content on a target display, and plays, by using a second audio output apparatus, an audio corresponding to the other content — S7100

The control device shares, to the target display in response to a received first sharing operation, the navigation content displayed on the source display — S7102

The control device stops displaying the navigation content on the source display, and displays the navigation content on the target display — S7103

The control device continues to play, by using the first audio output apparatus, the navigation audio corresponding to the navigation content — S7104

The control device continues to play, by using the second audio output apparatus, the audio corresponding to the other content, or the control device stops playing, by using the second audio output apparatus, the audio corresponding to the other content — S7105

The control device returns, to the source display in response to a received second sharing operation, the navigation content displayed on the target display — S7106

The control device displays the navigation content on the source display, and stops displaying the navigation content on the target display — S7107

The control device continues to play, by using the first audio output apparatus, the navigation audio corresponding to the navigation content, and continues to play, by using the second audio output apparatus, the audio corresponding to the other content — S7108

FIG. 71

FIG. 72A(a)

Central display screen

Front passenger screen

| Music | AI Life | Huawei Video | Gallery |
| Contacts | Phone | Messaging | Settings |

8:00

8:00

500 m to XX road

XX road

YY road

Play the navigation audio through the driver loudspeaker

Pause playing the video audio through the front passenger loudspeaker

FIG. 72A(b)

EP 4 502 779 A1

Central display screen

Front passenger screen

8:03

Music  AI Life  Huawei Video  Gallery

Contacts  Phone  Messaging  Settings

8:03

300 m to XX road

XX road

YY road

Play the navigation audio through the driver loudspeaker

Pause playing the video audio through the front passenger loudspeaker

FIG. 72B(a)

EP 4 502 779 A1

Central display screen

| 8:03 | 8:03 |

300 m to XX road

XX road

Video 1

YY road

13:08      45:25

Play the navigation audio through the driver loudspeaker

Play the video audio through the front passenger loudspeaker

FIG. 72B(b)

EP 4 502 779 A1

A control device displays first content on a source display in full screen, displays second content in a floating window on the source display, and plays, by using a third audio output apparatus, audios corresponding to the first content and the second content; and the control device displays third content on a target display, and plays, by using a fourth audio output apparatus, an audio corresponding to the third content — S7301

The control device shares, to the target display in response to a received third sharing operation, the floating window displayed on the source display — S7302

The control device displays the first content on the source display in full screen, and displays the third content and the floating window on the target display — S7303

The control device continues to play the audios corresponding to the first content and the second content by using the third audio output apparatus — S7304

The control device continues to play the audio corresponding to the third content by using the fourth audio output apparatus, or the control device stops playing the audio corresponding to the third content by using the fourth audio output apparatus — S7305

The control device displays a floating window in full screen on the target display in response to a received window adjustment operation — S7306

The control device plays, by using the third audio output apparatus, the audio corresponding to the first content, and plays, by using the fourth audio output apparatus, the audio corresponding to the second content — S7307

FIG. 73

Central display screen

Floating window

Front passenger screen

8:00

←  500 m to XX road

XX road

← Local song
Song

⊙ Play all (4)

Song 1

Song 2

Song 3

Song 4

YY road

♪ Song 1 ⏸ ▶ ⇶

8:00

← Video 1

13:08                          45:25

EP 4 502 779 A1

Play the navigation audio and music
through the driver loudspeaker

Play the video audio through
the front passenger loudspeaker

FIG. 74A

Central display screen

Front passenger screen

.ıll 📶  ⬛ 8:00

← 500 m to XX road

XX road

YY road

⏸ 13:08

.ıll 📶  ⬛ 8:00

← Video 1

← Local song  🔍 ∷
Song
⊙ Play all (4)  ☰

Song 1  ılıl
Song 2
Song 3
Song 4

♪ Song 1 ⏸ ▶ ⇥    45:25

🔊 Play the navigation audio and music through the driver loudspeaker

🔊 Play the video audio through the front passenger loudspeaker

FIG. 74B

EP 4 502 779 A1

Central display screen

Front passenger screen

.ıll 📶    8:00

⬅ 500 m to XX road

XX road

YY road

Play the navigation audio through the driver loudspeaker

.ıll 📶    8:00

← Local song
Song

▶ Play all (4)

Song 1

Song 2

Song 3

Song 4

♪ Song 1            ⏸ ▶ ⋮♪

Play music through the front passenger loudspeaker

FIG. 74C

EP 4 502 779 A1

Central display screen

Front passenger screen

500 m to XX road

XX road

YY road

Incoming call notification control

Video 1

13:08                    45:25

Play the navigation audio and the notification audio through the driver loudspeaker

Play the video audio through the front passenger loudspeaker

FIG. 75A(a)

EP 4 502 779 A1

Central display screen

Front passenger screen

.ıll 🤝 ⬛ 8:00

⬅ 500 m to XX road

XX road

YY road

Play the navigation audio and the notification
audio through the driver loudspeaker

.ıll 🤝 ⬛ 8:00

← Video 1

45:25

Play the video audio through the
front passenger loudspeaker

FIG. 75A(b)

Central display screen

Front passenger screen

8:00

500 m to XX road

XX road

YY road

8:00

Invite you to make a video chat

Hang up                    Hang up

Play the navigation audio through
the driver loudspeaker

Play the notification audio through
the front passenger loudspeaker

EP 4 502 779 A1

187

FIG. 75B(a)

Front passenger screen

8:00

More

Hang up

Switch

Play the call audio through the front passenger loudspeaker

Central display screen

8:00

500 m to XX road

XX road

YY road

Play the navigation audio through the driver loudspeaker

FIG. 75B(b)

When displaying first content on a first display, an electronic device plays a first audio corresponding to the first content by using a first audio output apparatus, where the first display is any display of a plurality of displays located in a first space area, the first audio output apparatus is associated with a first sound zone, the first sound zone is a candidate sound zone associated with the first display in a plurality of candidate sound zones, and each candidate sound zone in the plurality of candidate sound zones is associated with one or more audio output apparatuses in the first space area

S7601

The electronic device does not display the first content on the first display and displays the first content on a second display in response to a received first operation, where the second display is included in the plurality of displays

S7602

In response to the received first operation, the electronic device does not play the first audio by using the first audio output apparatus and plays the first audio by using a second audio output apparatus; or continues to play the first audio by using the first audio output apparatus; or plays the first audio by using a part or all of audio output apparatuses of a specified type in the first space area, where the second audio output apparatus is associated with a second sound zone, and the second sound zone is a candidate sound zone associated with the second display in the plurality of candidate sound zones

S7603

FIG. 76

When displaying first content on a first display, an electronic device plays a first audio corresponding to the first content by using a first audio output apparatus, where the first display is any display of a plurality of displays located in a first space area, the first audio output apparatus is associated with a first sound zone, the first sound zone is a candidate sound zone associated with the first display in a plurality of candidate sound zones, and each candidate sound zone in the plurality of candidate sound zones is associated with one or more audio output apparatuses in the first space area

S7701

The electronic device displays the first content on the first display and displays the first content on a second display in response to a received first operation; or displays first sub-content on the first display and displays second sub-content on a second display in response to a received second operation, where the first content includes the first sub-content and the second sub-content, and the second display is included in the plurality of displays

S7702

The electronic device plays the first audio by using a second audio output apparatus and a third audio output apparatus; or plays the first audio by using an audio output apparatus of a specified type in the first space area, where the second audio output apparatus is associated with the first sound zone, the third audio output apparatus is associated with a second sound zone, and the second sound zone is a candidate sound zone associated with the second display in the plurality of candidate sound zones

S7703

FIG. 77

7800

Electronic device

Display — 7801

Processor — 7803

— 7804

Memory — 7802

FIG. 78

## INTERNATIONAL SEARCH REPORT

International application No.

**PCT/CN2023/107991**

### A.    CLASSIFICATION OF SUBJECT MATTER

G06F 3/14(2006.01)i

According to International Patent Classification (IPC) or to both national classification and IPC

### B.    FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI; 汽车, 显示屏, 跨屏, 投屏, 意图, 显示方式, 显示类型; automobile, display screen, cross screen, projection screen, intent, display manner, display type

### C.    DOCUMENTS CONSIDERED TO BE RELEVANT

| Category* | Citation of document, with indication, where appropriate, of the relevant passages | Relevant to claim No. |
|---|---|---|
| X | CN 114003154 A (IM MOTORS TECHNOLOGY CO., LTD.) 01 February 2022 (2022-02-01)<br>    description, paragraphs 4-110, and figures 1-9 | 1-63 |
| A | CN 110708086 A (HUAWEI TECHNOLOGIES CO., LTD.) 17 January 2020 (2020-01-17)<br>    entire document | 1-63 |
| A | CN 112416280 A (HUBEI ECARX TECHNOLOGY CO., LTD.) 26 February 2021 (2021-02-26)<br>    entire document | 1-63 |
| A | CN 113741840 A (HUAWEI TECHNOLOGIES CO., LTD.) 03 December 2021 (2021-12-03)<br>    entire document | 1-63 |

☐ Further documents are listed in the continuation of Box C.    ☑ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **10 October 2023** | **20 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| CN | 114003154 | A | 01 February 2022 | None | | | |
| CN | 110708086 | A | 17 January 2020 | WO | 2021037084 | A1 | 04 March 2021 |
| | | | | CN | 110708086 | B | 14 September 2021 |
| CN | 112416280 | A | 26 February 2021 | CN | 112416280 | B | 17 May 2022 |
| CN | 113741840 | A | 03 December 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210911043X
- CN 202210912601
- CN 202211716573